(19) Europäisches Patentamt
European Patent Office
Office européen des brevets

(11) EP 0 807 137 B1

(12) EUROPÄISCHE PATENTSCHRIFT

(45) Veröffentlichungstag und Bekanntmachung des Hinweises auf die Patenterteilung:
**04.08.1999 Patentblatt 1999/31**

(21) Anmeldenummer: **96900594.1**

(22) Anmeldetag: **18.01.1996**

(51) Int Cl.[6]: **C08G 61/00**

(86) Internationale Anmeldenummer:
**PCT/EP96/00195**

(87) Internationale Veröffentlichungsnummer:
**WO 96/23829 (08.08.1996 Gazette 1996/36)**

(54) **POLYMERISIERBARE ZUSAMMENSETZUNG, VERFAHREN ZUR HERSTELLUNG VERNETZTER POLYMERE UND VERNETZBARE POLYMERE**

POLYMERISABLE COMPOSITION, PROCESS FOR PRODUCING CROSS-LINKED POLYMERS, AND CROSS-LINKABLE POLYMERS

COMPOSITION POLYMERISABLE, PROCEDE DE PRODUCTION DE POLYMERES RETICULES, ET POLYMERES RETICULABLES

(84) Benannte Vertragsstaaten:
**AT BE CH DE ES FR GB IT LI NL SE**

(30) Priorität: **31.01.1995 CH 26195**

(43) Veröffentlichungstag der Anmeldung:
**19.11.1997 Patentblatt 1997/47**

(73) Patentinhaber: **Ciba Specialty Chemicals Holding Inc.**
**4057 Basel (CH)**

(72) Erfinder:
- **MÜHLEBACH, Andreas**
  **CH-1782 Belfaux (CH)**
- **HAFNER, Andreas**
  **CH-3177 Laupen (CH)**
- **VAN DER SCHAAF, Paul, Adriaan**
  **CH-1700 Fribourg (CH)**

(56) Entgegenhaltungen:
**EP-A- 0 467 115**

- **MACROMOLECULAR CHEMISTRY AND PHYSICS, Bd. 195, 1994, BASEL CH, Seiten 2875-2885, XP000461355 GRUTKE S. ET ALL.: "Poly(phenylene oxide) macromonomers for graft copolymer synthesis via ring-opening olefin metathesis polymerization."**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft eine Zusammensetzung aus ungesättigten Polymeren, in deren Polymerrückgrat ein gespanntes Cycloalkenylen gebunden ist, mit einem Einkomponenten-Katalysator für die thermisch oder durch aktinische Strahlung induzierte Metathesepolymerisation; ein Verfahren zur Polymerisation der Zusammensetzung; mit der Zusammensetzung oder der polymerisierten Zusammensetzung beschichtete Materialien und Formkörper aus den vernetzten Polymeren; und vernetzbare Polymere.

Die thermisch induzierte Ringöffnungs-Metathese-Polymerisation unter Verwendung katalytischer Mengen von Metallkatalysatoren ist schon seit längerem bekannt und vielfach in der Literatur beschrieben [siehe zum Beispiel Ivin, K.J., Olefin Metathesis 1-12, Academic Press, London (1983)]. So erhältliche Polymere werden industriell hergestellt und sind kommerziell erhältlich, zum Beispiel unter dem Handelsnamen Vestenamer®. Die industrielle Herstellung erfolgt unter Verwendung von hochreaktiven Zweikomponenten-Katalysatoren, in der Regel Übergangsmetallhalogeniden wie zum Beispiel $WCl_6$ und Metallalkylenen wie zum Beispiel Zink-, Aluminium- oder Zinnalkylen. Die Polymerisation beziehungsweise Gelierung setzt unmittelbar nach der Vereinigung eines Cycloolefins mit beiden Katalysatorkomponenten ein. Die Mischungen aus Cycloolefin und Katalysator weisen daher ausserordentlich kurze Topfzeiten auf, und sie eignen sich praktisch nur in Reaktionsinjektions-Formgebungsverfahren (RIM-Prozess). Nachteilig ist auch die starke Erhitzung des Reaktionsgemisches durch die Reaktionswärme, die sehr hohe technische Anforderungen an eine kontrollierte Reaktionstemperatur stellt. Die Einhaltung einer Polymerspezifikation ist daher schwierig.

In der WO 93/13171 werden luft- und wasserstabile Einkomponenten- und Zweikomponenten-Katalysatoren auf der Basis von Carbonylgruppen enthaltenden Molybdän- und Wolframverbindungen sowie Ruthenium- und Osmiumverbindungen mit mindestens einem Polyenliganden für die thermische Metathesepolymerisation und eine photoaktivierte Metathesepolymerisation von gespannten Cycloolefinen, besonders Norbornen beschrieben. Andere polycyclische - vor allen Dingen nicht-kondensierte polycyclische Cycloolefine werden nicht erwähnt. Die verwendeten Einkomponenten-Katalysatoren der Rutheniumverbindungen, nämlich $[Ru(Cumen)Cl_2]_2$ und $[(C_6H_6)Ru(CH_3CN)_2Cl]^+PF_6^-$ können zwar durch UV-Bestrahlung aktiviert werden; die Lagerstabilität der Zusammensetzungen mit Norbornen sind jedoch völlig unzureichend. Diese Katalysatoren vermögen die bekannten Zweikomponenten-Katalysatoren nur unzureichend zu ersetzen.

Demonceau et al. [Demonceau, A., Noels, A.F., Saive, E., Hubert, A.J., J. Mol. Catal. 76:123-132 (1992)] beschreiben (p-Cumen)$RuCl_2P(C_6H_{11})_3$, $(C_6H_5)_3]_3PRuCl_2$ und $(C_6H_5)_3]_3PRuHCl$ als thermische Katalysatoren für die ringöffnende Metathesepolymerisation von Norbornen, einem kondensierten Polycycloolefin. Diese Katalysatoren haben sich auf Grund der zu geringen Aktivität bei der industriellen Herstellung nicht durchsetzen können. Es wird daher vorgeschlagen, die Aktivität durch den Zusatz von Diazoestern zu steigern. Es wird auch erwähnt, dass lediglich (p-Cumen)$RuCl_2P(C_6H_{11})_3$ Norbornen in relativ kurzer Zeit bei 60°C zu polymerisieren vermag. Als weiteres Monomer wird noch Cycloocten erwähnt. Andere Cycloolefine für die Metathesepolymerisation werden nicht erwähnt.

Petasis und Fu [Petasis, N. A., Fu, D., J. Am. Chem. Soc. 115:7208-7214 (1993)] beschreiben die thermische ringöffnende Metathesepolymerisation von Norbornen unter Verwendung von Biscyclopentadienyl-bis(trimethylsilyl) methyl-titan(IV) als thermisch aktiven Katalysator. Andere Cycloolefine für die Metathesepolymerisation werden nicht erwähnt.

Andere reaktivere Einkomponenten-Katalysatoren sind noch nicht bekannt geworden. Es ist ferner auch nicht bekannt, Polymere mit einem gespannten Cycloalkenylen im Polymerrückgrat zur Herstellung vernetzter Polymere zu verwenden.

Es wurde nun gefunden, dass sich Polymere mit im Polymerrückgrat gebundenen gespannten Cycloalkenylenresten unter Einwirkung von besonders Einkomponenten-Katalysatoren hervorragend zur Herstellung vernetzter Polymere eignen. Die Zusammensetzungen sind lagerstabil und je nach verwendeten Katalysatoren sogar luft- und sauerstoffunempfindlich, was eine Verarbeitung ohne besondere Schutzmassnahmen erlaubt. Die Verarbeitung ist einfach und die Verarbeitungsmöglichkeiten sind vielfältig, weil keine besonderen Vorkehrungen wegen einer zu hohen Reaktivität getroffen werden müssen. Die Polymere eignen sich sowohl zur Herstellung von massiven Formkörpern als auch Beschichtungen mit besonders hohen Haftfestigkeiten. Ferner können die Polymere zur Herstellung von Abbildungen mittels Bestrahlung unter einer Photomaske und anschliessende Entwicklung der unbelichteten Anteile mit einem geeigneten Lösungsmittel verwendet werden.

Ein erster Gegenstand der Erfindung ist eine Zusammensetzung, enthaltend (a) katalytische Mengen eines Einkomponenten-Katalysators für die Metathesepolymerisation und (b) mindestens ein Polymer mit im Polymerrückgrat gebundenen gespannten Cycloalkenylenresten alleine oder in Mischung mit gespannten Cycloolefinen.

In einer bevorzugten Ausführungsform handelt es sich bei den Polymeren um solche mit wiederkehrenden Struktureinheiten der Formel (a) im Polymerrückgrat,

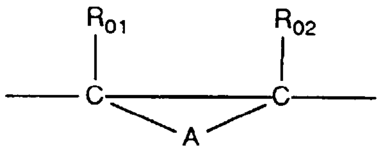

(a),

worin $R_{01}$ und $R_{02}$ unabhängig voneinander H oder $C_1$-$C_6$-Alkyl darstellen, oder $R_{01}$ und $R_{02}$ zusammen eine Bindung bedeuten, und A zusammen mit der C-C-Gruppe einen unsubstituierten oder substituierten gespannten Cycloolefinring bildet. Die Struktureinheiten der Formel (a) können direkt oder über Brückengruppen, bevorzugt gleiche Brückengruppen verbunden sein.

$R_{01}$ und $R_{02}$ enthalten als Alkyl bevorzugt 1 bis 4 C-Atome; bei dem Alkyl handelt es sich bevorzugt um Methyl oder Ethyl. Besonders bevorzugt stellen $R_{01}$ und $R_{02}$ H dar.

Bei den Substituenten für den Cycloolefinring kann es sich zum Beispiel um $C_1$-$C_8$- und bevorzugt $C_1$-$C_4$-Alkyl oder -Alkoxy wie zum Beispiel Methyl, Ethyl, n- oder i-Propyl, n-, i- oder t-Butyl, Methoxy, Ethoxy oder Propyloxy; $C_1$-$C_4$-Halogenalkyl oder -alkoxy wie zum Beispiel Trifluormethyl, Trichlormethyl, Perfluorethyl, Bis(trifluormethyl)methyl, Trifluormethoxy oder Bis(trifluormethyl)methoxy; Halogen wie zum Beispiel F, Cl oder $B_r$, -CN; -$NH_2$; Sekundäramino mit 2 bis 18 C-Atomen; Tertiäramino mit 3 bis 18 C-Atomen; -C(O)-$OR_{03}$ oder -C(O)-$NRO_{03}R_{04}$, worin $R_{03}$ H, $C_1$-$C_{18}$-Alkyl, Phenyl oder Benzyl bedeutet, und $R_{04}$ unabhängig die Bedeutung von $R_{03}$ hat, handeln.

Bei dem gespannten Cycloolefinring kann es sich um monocyclische oder polycyclische kondensierte und/ oder überbrückte Ringsysteme, zum Beispiel mit 2bis 6, bevorzugt 2 bis 4, und besonders bevorzugt 2 oder 3 Ringen handeln, die unsubstituiert oder substituiert sind und Heteroatome wie zum Beispiel O, S, N oder Si in einem oder mehreren Ringen und/oder kondensierte aromatische oder heteroaromatische Ringe wie zum Beispiel o-Phenylen, o-Naphthylen, o-Pyridinylen oder o-Pyrimidinylen enthalten können. Die einzelnen cyclischen Ringe können 3 bis 16, bevorzugt 4 bis 12 und besonders bevorzugt 5 bis 8 Ringglieder enthalten. Die cyclischen Olefine können weitere nichtaromatische Doppelbindungen enthalten, je nach Ringgrösse bevorzugt 2 bis 4 solcher zusätzlichen Doppelbindungen.

Ankondensierte alicyclische Ringe enthalten bevorzugt 3 bis 8, besonders bevorzugt 4 bis 7 und insbesondere bevorzugt 5 oder 6 Ring-C-Atome. Bei ankondensierten Aromaten handelt es sich bevorzugt um Naphthylen und besonders um Phenylen.

In einer bevorzugten Ausführungsform bedeuten in Formel (a)

$R_{01}$ und $R_{02}$ zusammen eine Bindung und A unsubstituiertes oder substituiertes $C_1$-$C_{12}$-Alkylen, bevorzugt $C_2$-$C_6$-Alkylen; unsubstituiertes oder substituiertes $C_2$-$C_{12}$-Heteroalkylen, bevorzugt $C_3$-$C_6$-Heteroalkylen mit mindestens einem Heteroatom aus der Gruppe O, S und N; unsubstituiertes oder substituiertes $C_5$-$C_{12}$-Cycloalkylen, bevorzugt $C_5$-$C_7$-Cycloalkylen; unsubstituiertes oder substituiertes $C_4$-$C_{12}$-Heterocycloalkylen, bevorzugt $C_4$-$C_7$-Heterocycloalkylen mit mindestens einem Heteroatom aus der Gruppe O, S und N; unsubstituiertes oder substituiertes $C_2$-$C_{12}$-Alkenylen, bevorzugt $C_2$-$C_6$-Alkenylen; unsubstituiertes oder substituiertes $C_3$-$C_{12}$-Heteroalkenylen, bevorzugt $C_3$-$C_6$-Heteroalkenylen mit mindestens einem Heteroatom aus der Gruppe O, S und N; unsubstituiertes oder substituiertes $C_5$-$C_{12}$-Cycloalkenylen, bevorzugt $C_5$-$C_7$-Cycloalkenylen; oder unsubstituiertes oder substituiertes $C_4$-$C_{12}$-Heterocycloalkenylen, bevorzugt $C_4$-$C_7$-Heterocycloalkenylen mit mindestens einem Heteroatom aus der Gruppe O, S und N; oder

$R_{01}$ und $R_{02}$ unabhängig voneinander H oder $C_1$-$C_6$-Alkyl und A unsubstituiertes oder substituiertes $C_5$-$C_{12}$-Cycloalkenylen, bevorzugt $C_5$-$C_7$-Cycloalkenylen; unsubstituiertes oder substituiertes $C_4$-$C_{12}$-Heterocycloalkenylen, bevorzugt $C_4$-$C_7$-Heterocycloalkenylen mit mindestens einem Heteroatom aus der Gruppe O, S und N; oder unsubstituiertes oder substituiertes $C_5$-$C_{12}$-Cycloalkdienylen, bevorzugt $C_5$-$C_7$-Cycloalkdienylen; oder $R_{01}$ zusammen mit einem endständigen C-Atom des Restes A eine Doppelbindung; $R_{02}$ H oder $C_1$-$C_6$-Alkyl; und A unsubstituiertes oder substituiertes $C_1$-$C_{12}$-Alkylen, bevorzugt $C_2$-$C_6$-Alkylen, unsubstituiertes oder substituiertes $C_3$-$C_{12}$-Heteroalkylen, bevorzugt $C_3$-$C_6$-Heteroalkylen mit mindestens einem Heteroatom aus der Gruppe O, S und N; unsubstituiertes oder substituiertes $C_5$-$C_{12}$-Cycloalkylen, bevorzugt $C_5$-$C_7$-Cycloalkylen; unsubstituiertes oder substituiertes $C_4$-$C_{12}$-Heterocycloalkylen, bevorzugt $C_4$-$C_7$-Heterocycloalkylen mit mindestens einem Heteroatom aus der Gruppe O, S und N; unsubstituiertes oder substituiertes $C_2$-$C_{12}$-Alkenylen, bevorzugt $C_2$-$C_6$-Alkenylen; unsubstituiertes oder substituiertes $C_3$-$C_{12}$-Heteroalkenylen, bevorzugt $C_3$-$C_6$-Heteroalkenylen mit mindestens einem Heteroatom aus der Gruppe O, S und N; unsubstituiertes oder substituiertes $C_5$-$C_{12}$-Cycloalkenylen, bevorzugt $C_5$-$C_7$-Cycloalkenylen; oder unsubstituiertes oder substituiertes $C_4$-$C_{12}$-Heterocycloalkenylen, bevorzugt $C_4$-$C_7$-Heterocycloalkenylen mit mindestens einem Heteroatom aus der Gruppe O, S und N; oder

$R_{01}$ und $R_{02}$ je zusammen mit einem endständigen C-Atom des Restes A je eine Doppelbindung, und A unsubstituiertes oder substituiertes $C_3$-$C_{12}$-Alkylen, bevorzugt $C_3$-$C_6$-Alkylen; unsubstituiertes oder substituiertes $C_3$-$C_{12}$-Heteroalkylen, bevorzugt $C_3$-$C_6$-Heteroalkylen mit mindestens einem Heteroatom aus der Gruppe O, S und N; unsubstituiertes

oder substituiertes $C_5$-$C_{12}$-Cycloalkylen, bevorzugt $C_5$-$C_7$-Cycloalkylen; oder unsubstituiertes oder substituiertes $C_4$-$C_{12}$-Heterocycloalkylen, bevorzugt $C_4$-$C_7$-Heterocycloalkylen mit mindestens einem Heteroatom aus der Gruppe O, S und N; wobei an das Alkylen, Heteroalkylen, Cycloalkylen, Heterocycloalkylen, Alkenylen, Heteroalkenylen, Cycloalkenylen, Heterocycloalkenylen, Alkdienylen, Heteroalkdienylen, Cycloalkdienylen und Heterocycloalkdienylen gegebenenfalls Phenylen, $C_4$-$C_8$-Cycloalkylen oder $C_4$-$C_8$-Heterocycloalkylen ankondensiert ist.

Es ist dem Fachmann bekannt, dass Cyclohexen nur schwer oder gar nicht durch Metathese polymerisiert werden kann. Cyclohexenreste der Formel (a) sind daher nicht bevorzugt. Bevorzugt sind Struktureinheiten der Formel (a), in der $R_{01}$ und $R_{02}$ zusammen keine Doppelbindung bilden.

Besonders bevorzugt bedeuten in Formel (a) $R_{01}$ und $R_{02}$ zusammen eine Bindung und A unsubstituiertes oder substituiertes $C_2$-$C_6$-Alkylen, unsubstituiertes oder substituiertes $C_3$-$C_7$-Cycloalkylen, unsubstituiertes oder substituiertes $C_2$-$C_6$-Alkenylen, unsubstituiertes oder substituiertes $C_5$-$C_7$-Cycloalkenylen; oder

$R_{01}$ und $R_{02}$ unabhängig voneinander H oder $C_1$-$C_4$-Alkyl und A unsubstituiertes oder substituiertes $C_5$-$C_7$-Cycloalkenylen; oder

$R_{01}$ zusammen mit einem endständigen C-Atom des Restes A eine Doppelbindung; $R_{02}$ H oder $C_1$-$C_4$-Alkyl; und A unsubstituiertes oder substituiertes $C_2$-$C_6$-Alkenylen, unsubstituiertes oder substituiertes $C_5$-$C_7$-Cycloalkylen, unsubstituiertes oder substituiertes $C_2$-$C_6$-Alkenylen oder unsubstituiertes oder substituiertes $C_5$-$C_7$-Cycloalkenylen; oder $R_{01}$ und $R_{02}$ je zusammen mit einem endständigen C-Atom des Restes A eine Doppelbindung und A unsubstituiertes oder substituiertes $C_3$-$C_6$-Alkylen, unsubstituiertes oder substituiertes $C_5$-$C_7$-Cycloalkylen.

Das Polymerrückgrat der erfindungsgemäss zu verwendenden Polymere kann unterschiedlich aufgebaut sein. Es kann sich um Homo- oder Copolymere handeln, wobei Strukturelemente der Formel (a) mindestens zu 5 Mol-%, bevorzugt 5 bis 100 Mol-%, bevorzugter 5 bis 80 Mol-%, noch bevorzugter 10 bis 70 Mol-%, besonders bevorzugt 10 bis 60 Mol-%, und insbesondere bevorzugt 20 bis 50 Mol-% enthalten sind, bezogen auf das Polymer. Bei den Polymeren kann es sich um statistische Copolymere oder Blockcopolymere handeln.

Die in der erfindungsgemässen Zusammensetzung verwendeten Polymere umfassen Oligomere und Polymere. Die Anzahl sich wiederholender Struktureinheiten kann demgemäss 2 bis 10000, bevorzugt 5 bis 5000, besonders bevorzugt 10 bis 1000 und insbesondere bevorzugt 20 bis 500 betragen.

Eine Gruppe von Polymeren, die für die erfindungsgemässen Zusammensetzungen in Frage kommen, besteht zum Beispiel aus den Homo- und Copolymeren der linearen Polyepoxide, Polyester, Polyamide, Polyesteramide, Polyurethane und Polyharnstoffe, in denen die bivalenten Diepoxid-, Dicarbonsäure- oder Diisocyanatreste, oder in denen die bivalenten Diol- oder Diaminreste oder beide dieser Reste gespannte Cycloolefinreste enthalten, und die im Falle der Copolymeren von diesen bivalenten Resten verschiedene Diepoxid-, Dicarbonsäure- oder Diisocyanat-, Diol- oder Diaminreste enthalten. Der gespannte Cycloolefinring entspricht bevorzugt der Formel (a), einschliesslich der Bevorzugungen.

Die Polyepoxide können aus Diepoxiden als Comonomeren ($\alpha$) mit bevorzugt 6 bis 40 und besonders bevorzugt 8 bis 30 C-Atomen und Diolen als Comonomeren ($\beta$) mit bevorzugt 2 bis 200, bevorzugter 2 bis 100 und besonders bevorzugt 2 bis 50 C-Atomen aufgebaut sein. Diepoxide mit einem gespannten Cycloolefinring enthalten bevorzugt 6 bis 40 und besonders bevorzugt 10 bis 30 C-Atome. Bei den Diepoxiden handelt es sich bevorzugt um die einfach herstellbaren Diglycidylether. Bei den monomeren Diepoxiden kann es sich zum Beispiel um die Diglycidylether von aliphatischen, cycloaliphatischen, aromatischen oder araliphatischen Diolen handeln. Diole mit einem gespannten Cycloolefinring enthalten bevorzugt 5 bis 40 und besonders bevorzugt 7 bis 30 C-Atome. Bei den Diolen kann es sich zum Beispiel um aliphatische, cycloaliphatische, aromatische oder araliphatische Diole handeln. Diole und Diepoxide sind dem Fachmann geläufig und werden hier nicht aufgezählt. Unter den Diepoxiden sind die Diglycidylether und Diglycidylester bevorzugt. Diepoxide und Diole mit einem gespannten Cycloolefinring enthalten bevorzugt ein Strukturelement der Formel (a), einschliesslich der Bevorzugungen.

Die Polyepoxide können zum Beispiel wiederkehrende Strukturelemente ausgewählt aus der Gruppe von Strukturelementen der Formeln (b), (c), (d) und (e)

$$[-CH_2-CH(OH)-CH_2-O-R_{05}-O-CH_2-CH(OH)-CH_2-O- \quad (b),$$

$$-R_{06}-O- \quad (c),$$

$$[-CH_2-CH(OH)-CH_2-O-R_{07}-O-CH_2-CH(OH)-CH_2-O- \quad (d),$$

$-R_{08}$-O- (e),

enthalten, mit der Massgabe, dass mindestens Strukturelemente der Formeln (b) oder (c) oder beide enthalten sind, worin $R_{05}$ und $R_{06}$ unabhängig voneinander ein bivalenter Rest eines gespannten Cycloolefins oder ein bivalenter Rest mit einem gespannten Cycloolefin, $R_{07}$ ein um die Glycidyloxygruppen verminderter bivalenter Rest eines Diglycidylethers und $R_{08}$ ein um die Hydroxylgruppe verminderter bivalenter Rest eines Diols sind.

Bezogen auf 1 Mol des Polymers können je bis zu 100 Mol-% der Strukturelemente der Formeln (b) und (c) im Polymer enthalten sein. Sind Strukturelemente der Formeln (b) und (d) beziehungsweise (c) und (e) zugegen, so sind vorteilhafte Mischverhältnisse 5 bis 95, bevorzugt 10 bis 80 Mol-% Strukturelemente der Formeln (b) beziehungsweise (c) und 95 bis 5, bevorzugt 90 bis 20 Mol-% der Strukturelemente der Formeln (c) beziehungsweise (e), bezogen auf 1 Mol des Polymers.

Die Polyepoxide stellen lineare Polyether dar und sind auf verschiedene Weise zugänglich, zum Beispiel entweder durch die Umsetzung der Diepoxide mit den Diolen oder durch Diels-Alder Reaktion von Polyepoxiden mit olefinisch ungesättigten Diepoxid- und/oder Diolstruktureinheiten mit offenkettigen oder bevorzugt cyclischen 1,3-Dienen unter Bildung gespannter Cycloolefinringe.

Bei $R_{05}$ und $R_{06}$ kann es sich zum Beispiel um ein- oder zweifach olefinisch ungesättigtes $C_5$-$C_8$-Cycloalkylen oder kondensiertes polycyclisches, bevorzugt bi- oder tricyclisches $C_7$-$C_{18}$-Cycloalkylen handeln. Beispiele sind Cyclopentenylen, Cycloheptenylen und Cyclooctenylen. In einer besonders bevorzugten Ausführungsform stellen $R_{05}$ und $R_{06}$ unabhängig voneinander einen Norbornenrest der Formel ($nr_1$) oder ($nr_2$) dar

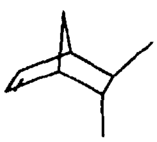 ($nr_1$) 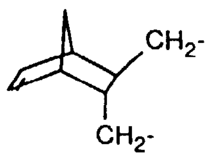 ($nr_2$).

Bei $R_{07}$ und $R_{08}$ handelt es sich bevorzugt um $C_2$-$C_{18}$-, bevorzugt $C_2$-$C_{12}$-Alkylen, Polyoxaalkylen mit 2 bis 50, bevorzugt 2 bis 10 Oxaalkyleneinheiten und 2 bis 6, bevorzugt 2 bis 4 C-Atomen im Oxyalkylen, $C_3$-$C_{12}$-, bevorzugt $C_5$-$C_8$-Cycloalkylen, $C_5$-$C_8$-Cycloalkylen-$CH_2$-, -$CH_2$-($C_5$-$C_8$-Cycloalkylen)-$CH_2$-, $C_6$-$C_{14}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18, bevorzugt 1 bis 12 C-Atomen, oder $C_5$-$C_7$-Cycloalkyliden. Einige Beispiele sind Ethylen, Propylen, Butylen, Di-, Tri- und Tetraoxaethylen, Cyclopentylen, Cyclohexylen, Cyclohexylen-$CH_2$-, -$CH_2$-Cyclohexylen-$CH_2$-, Phenylen, -$C_6H_4$-O-$C_6H_4$-, -$C_6H_4$-$CH_2$-$C_6H_4$-, -$C_6H_4$-$CH(CH_3)$-$C_6H_4$-, -$C_6H_4$-$C(CH_3)_2$-$C_6H_4$- und -$C_6H_4$-$C_6H_{10}$-$C_6H_4$-.

Bei den Polyepoxiden handelt es sich um neue Polymere, die ebenfalls ein Gegenstand der Erfindung sind.

Die Polyester können gleiche oder verschiedene Strukturelemente ausgewählt aus der Gruppe von Strukturelementen der Formeln (f), (g), (h) und (i) enthalten, wobei wenigstens die Strukturelemente der Formeln (f) oder (g) oder beide zugegen sein müssen,

-C(O)-$R_{09}$-C(O)- (f),

-O-$R_{010}$-O- (g),

-C(O)-$R_{011}$-C(O)- (h),

-O-$R_{012}$-O- (i),

worin $R_{09}$ und $R_{010}$ unabhängig voneinander einen bivalenten Rest eines gespannten Cycloolefins oder einen bivalenten Rest mit einem gespannten Cycloolefin, $R_{011}$ einen um die Carboxylgruppen verminderter bivalenten Rest einer Dicarbonsäure und $R_{012}$ einen um die Hydroxylgruppe verminderten bivalenten Rest eines Diols bedeuten.

Bezogen auf 1 Mol des Polymers können je bis zu 100 Mol-% der Strukturelemente der Formeln (f) und (g)

im Polymer enthalten sein. Sind Strukturelemente der Formeln (f) und (h) beziehungsweise (g) und (i) zugegen, so sind vorteilhafte Mischverhältnisse 5 bis 95, bevorzugt 10 bis 80 Mol-% Strukturelemente der Formeln (f) beziehungsweise (h) und 95 bis 5, bevorzugt 90 bis 20 Mol-% der Strukturelemente der Formeln (g) beziehungsweise (i).

Die Polyester sind bevorzugt linear und entweder durch Veresterungs- oder Umesterungsverfahren der entsprechenden Monomeren zugänglich oder durch Diels-Alder Reaktion von Polyestern mit olefinisch ungesättigten Dicarbonsäure- und/oder Diolstruktureinheiten mit offenkettigen oder bevorzugt cyclischen 1,3-Dienen unter Bildung gespannter Cycloolefinringe. Bevorzugt verwendet man für die Diels-Alder Reaktion mono-, di- oder tricyclische Diene.

Bei $R_{09}$ und $R_{010}$ kann es sich zum Beispiel um ein- oder zweifach olefinisch ungesättigtes $C_5$-$C_8$-Cycloalkylen oder kondensiertes polycyclisches, bevorzugt bi- oder tricyclisches $C_7$-$C_{18}$-Cycloalkylen handeln. Beispiele sind Cyclopentenylen, Cycloheptenylen, Cyclooctenylen und besonders Norbornenreste der Formeln ($nr_1$) und ($nr_2$).

Bei $R_{011}$ handelt es sich bevorzugt um $C_2$-$C_{18}$-, bevorzugt $C_2$-$C_{12}$-Alkylen oder -Alkenylen, $C_3$-$C_{12}$-, bevorzugt $C_5$-$C_8$-Cycloalkylen oder -Cycloalkenylen, $C_5$-$C_8$-Cycloalkylen-$CH_2$-, -$CH_2$-($C_5$-$C_8$-Cycloalkylen)-$CH_2$-, $C_6$-$C_{18}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18, bevorzugt 1 bis 12 C-Atomen, oder $C_5$-$C_7$-Cycloalkyliden. Einige Beispiele sind Ethylen, Propylen, Butylen, Hexylen, Cyclopentylen, Cyclohexylen, Cyclohexylen-$CH_2$-, -$CH_2$-Cyclohexylen-$CH_2$-, Phenylen, Naphthylen, -$C_6H_4$-$CH_2$-$C_6H_4$-, -$C_6H_4$-$C_6H_4$-, -$C_6H_4$-$SO_2$-$C_6H_4$-, -$C_6H_4$-CO-$C_6H_4$- und -$C_6H_4$-O-$C_6H_4$-. Bevorzugt ist $R_{011}$ $C_2$-$C_8$-Alkylen, Cyclohexylen oder o-, m- oder p-Phenylen.

Bei $R_{012}$ kann es sich bevorzugt um $C_2$-$C_{18}$-, bevorzugt $C_2$-$C_{12}$-Alkylen, Polyoxaalkylen mit 2 bis 50, bevorzugt 2 bis 10 Oxaalkyleneinheiten und 2 bis 6, bevorzugt 2 bis 4 C-Atomen im Oxyalkylen, $C_3$-$C_{12}$-, bevorzugt $C_5$-$C_8$-Cycloalkylen, $C_5$-$C_8$-Cycloalkylen-$CH_2$-, -$CH_2$-($C_5$-$C_8$-Cycloalkylen)-$CH_2$-, $C_6$-$C_{14}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18, bevorzugt 1 bis 12 C-Atomen, oder $C_5$-$C_7$-Cycloalkyliden handeln. Einige Beispiele sind Ethylen, Propylen, Butylen, Hexylen, Di-, Tri- und Tetraoxaethylen, Cyclopentylen, Cyclohexylen, Cyclohexylen-$CH_2$-, -$CH_2$-Cyclohexylen-$CH_2$-, Phenylen, -$C_6H_4$-$CH_2$-$C_6H_4$-, -$C_6H_4$-$CH(CH_3)$-$C_6H_4$-, -$C_6H_4$-$C(CH_3)_2$-$C_6H_4$-, -$C_6H_4$-$C_6H_{10}$-$C_6H_4$- und -$C_6H_4$-O-$C_6H_4$-. Besonders bevorzugt ist $R_{012}$ $C_2$-$C_6$-Alkylen, das insbesondere linear ist.

Bei den Polyestern handelt es sich um neue Polymere, die ebenfalls ein Gegenstand der Erfindung sind.

Die Polyamide können gleiche oder verschiedene Strukturelemente ausgewählt aus der Gruppe von Strukturelementen der Formeln (j), (k), (l) und (m) enthalten, wobei wenigstens die Strukturelemente der Formeln (j) oder (k) oder beide zugegen sein müssen,

$$-C(O)-R_{013}-C(O)- \quad (j),$$

$$-NH-R_{014}-NH \quad (k),$$

$$-C(O)-R_{015}-C(O)- \quad (l),$$

$$-NH-R_{016}-NH- \quad (m),$$

worin $R_{013}$ und $R_{014}$ unabhängig voneinander einen bivalenten Rest eines gespannten Cycloolefins oder einen bivalenten Rest mit einem gespannten Cycloolefin, $R_{015}$ einen um die Carboxylgruppen verminderten bivalenten Rest einer Dicarbonsäure und $R_{016}$ einen um die Aminogruppen verminderten bivalenten Rest eines Diamins bedeuten.

Bezogen auf 1 Mol des Polymers können je bis zu 100 Mol-% der Strukturelemente der Formeln (j) und (k) im Polymer enthalten sein. Sind Strukturelemente der Formeln (j) und (l) beziehungsweise (k) und (m) zugegen, so sind vorteilhafte Mischverhältnisse 5 bis 95, bevorzugt 10 bis 80 Mol-% Strukturelemente der Formeln (j) beziehungsweise (1) und 95 bis 5, bevorzugt 90 bis 20 Mol-% der Strukturelemente der Formeln (k) beziehungsweise (m).

Die Polyamide sind bevorzugt linear und entweder durch Amidierungs- oder Umamidierungsverfahren der entsprechenden Monomere zugänglich, oder durch Diels-Alder Reaktion von Polyamiden mit olefinisch ungesättigten Dicarbonsäure- und/oder Diaminstruktureinheiten mit offenkettigen oder bevorzugt cyclischen 1,3-Dienen unter Bildung gespannter Cycloolefinringe. Bevorzugt verwendet man für die Diels-Alder Reaktion mono-, di- oder tricyclische Diene.

Bei $R_{013}$ und $R_{014}$ kann es sich zum Beispiel um ein- oder zweifach olefinisch ungesättigtes $C_5$-$C_8$-Cycloalkylen oder kondensiertes polycyclisches, bevorzugt bi- oder tricyclisches $C_7$-$C_{18}$-Cycloalkylen handeln. Beispiele sind Cyclopentenylen, Cycloheptenylen, Cyclooctenylen und besonders Norbornenreste der Formeln ($nr_1$) und ($nr_2$).

Bei $R_{015}$ handelt es sich bevorzugt um $C_2$-$C_{18}$-, bevorzugt $C_2$-$C_{12}$-Alkylen oder -Alkenylen, $C_3$-$C_{12}$-, bevorzugt $C_5$-$C_8$-Cycloalkylen oder -Cycloalkenylen, $C_5$-$C_8$-Cycloalkylen-$CH_2$-, -$CH_2$-($C_5$-$C_8$-Cycloalkylen)-$CH_2$-, $C_6$-$C_{18}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18, bevorzugt 1 bis 12 C-Atomen, oder $C_5$-$C_7$-Cycloalkyliden. Einige Beispiele sind Ethylen, Propylen, Butylen, Hexylen, Cyclopentylen, Cyclohexylen, Cyclohexylen-$CH_2$-, -$CH_2$-Cyclohexylen-$CH_2$-, Phenylen, Naphthylen, -$C_6H_4$-$CH_2$-$C_6H_4$-, -$C_6H_4$-$C_6H_4$-, -$C_6H_4$-$SO_2$-$C_6H_4$-, -$C_6H_4$-CO-$C_6H_4$- und -$C_6H_4$-O-$C_6H_4$-. Bevorzugt ist $R_{015}$ $C_2$-$C_8$-Alkylen, Cyclohexylen oder o-, m- oder p-Phenylen.

Bei $R_{016}$ kann es sich bevorzugt um $C_2$-$C_{18}$-, bevorzugt $C_2$-$C_{12}$-Alkylen, $C_3$-$C_{12}$-, bevorzugt $C_5$-$C_8$-Cycloalkylen, $C_5$-$C_8$-Cycloalkylen-$CH_2$-, -$CH_2$-($C_5$-$C_8$-Cycloalkylen)-$CH_2$-, $C_6$-$C_{14}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18, bevorzugt 1 bis 12 C-Atomen, oder $C_5$-$C_7$-Cycloalkyliden handeln. Einige Beispiele sind Ethylen, Propylen, Butylen, Hexylen, Di-, Tri- und Tetraoxaethylen, Cyclopentylen, Cyclohexylen, Cyclohexylen-$CH_2$-, -$CH_2$-Cyclohexylen-$CH_2$-, Phenylen, -$C_6H_4$-$CH(CH_3)$-$C_6H_4$-, -$C_6H_4$-O-$C_6H_4$-, -$C_6H_4$-$CH_2$-$C_6H_4$-, -$C_6H_4$-$C(CH_3)_2$-$C_6H_4$- und -$C_6H_4$-$C_6H_{10}$-$C_6H_4$-. Besonders bevorzugt ist $R_{016}$ $C_2$-$C_6$-Alkylen, das insbesondere linear ist.

Die Polyamide können auch Struktureinheiten von 4 bis 12-gliedrigen Lactamen wie zum Beispiel ε-Caprolactam enthalten.

Bei den Polyamiden handelt es sich um neue Polymere, die ebenfalls ein Gegenstand der Erfindung sind.

Polyesteramide sind Mischpolymere mit Diaminen und Diolen, die zum Beispiel die zuvor für die Polyester und Polyamide erwähnten Strukturelemente in jeder Kombination enthalten können.

Bei den Polyesteramiden handelt es sich um neue Polymere, die ebenfalls ein Gegenstand der Erfindung sind.

Die Polyurethane und Polyharnstoffe können gleiche oder verschiedene Strukturelemente ausgewählt aus der Gruppe von Strukturelementen der Formeln (n), (o), (p) und (q) enthalten, wobei wenigstens die Strukturelemente der Formeln (n) oder (o) oder beide zugegen sein müssen,

$$\text{-C(O)-NH-}R_{017}\text{-NH-C(O)-} \qquad (n),$$

$$\text{-}X_{02}\text{-}R_{018}\text{-}X_{02}\text{-} \qquad (o),$$

$$\text{-C(O)-NH-}R_{019}\text{-NH-C(O)-} \qquad (p),$$

$$\text{-}X_{02}\text{-}R_{020}\text{-}X_{02}\text{-} \qquad (q),$$

worin $R_{017}$ und $R_{018}$ unabhängig voneinander einen bivalenten Rest eines gespannten Cycloolefins oder einen bivalenten Rest mit einem gespannten Cycloolefin, $R_{019}$ einen um die Cyanatgruppen verminderten bivalenten Rest eines Diisocyanats und $R_{020}$ einen um die Amino- oder Hydroxylgruppen verminderten bivalenten Rest eines Diamins oder eines Diols bedeuten, und die $X_{02}$ unabhängig voneinander -O- oder -NH- darstellen.

Die Polyurethane und -harnstoffe sind bevorzugt linear und entweder durch Additionspolymerisation der entsprechenden Monomere zugänglich oder durch Diels-Alder Reaktion von Polyurethanen beziehungsweise Polyharnstoffen mit olefinisch ungesättigten Diisocyanat, Diol- und/oder Diaminstruktureinheiten mit offenkettigen oder bevorzugt cyclischen 1,3-Dienen unter Bildung gespannter Cycloolefinringe. Bevorzugt verwendet man für die Diels-Alder Reaktion mono-, di- oder tricyclische Diene.

Bezogen auf 1 Mol des Polymers können je bis zu 100 Mol-% der Strukturelemente der Formeln (n) und (o) im Polymer enthalten sein. Sind Strukturelemente der Formeln (n) und (o) beziehungsweise (p) und (q) zugegen, so sind vorteilhafte Mischverhältnisse 5 bis 95, bevorzugt 10 bis 80 Mol-% Strukturelemente der Formeln (n) beziehungsweise (p) und 95 bis 5, bevorzugt 90 bis 20 Mol-% der Strukturelemente der Formeln (o) beziehungsweise (q).

Bei $R_{017}$ und $R_{018}$ kann es sich zum Beispiel um ein- oder zweifach olefinisch ungesättigtes $C_5$-$C_8$-Cycloalkylen oder kondensiertes polycyclisches, bevorzugt bi- oder tricyclisches $C_7$-$C_{18}$-Cycloalkylen handeln. Beispiele sind Cyclopentenylen, Cycloheptenylen, Cyclooctenylen und besonders Norbornenreste der Formeln ($nr_1$) und ($nr_2$).

Bei $R_{019}$ handelt es sich bevorzugt um $C_2$-$C_{18}$-, bevorzugt $C_2$-$C_{12}$-Alkylen oder -Alkenylen, $C_3$-$C_{12}$-, bevorzugt $C_5$-$C_8$-Cycloalkylen oder -Cycloalkenylen, $C_5$-$C_8$-Cycloalkylen-$CH_2$-, -$CH_2$-($C_5$-$C_8$-Cycloalkylen)-$CH_2$-, $C_6$-$C_{18}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18, bevorzugt 1 bis 12 C-Atomen, oder $C_5$-$C_7$-Cycloalkyliden. Einige Beispiele sind Ethylen, Propylen, Butylen, Hexylen, Cyclopentylen, Cyclohexylen, Isophoronylen, Cyclohexylen-$CH_2$-, -$CH_2$-Cyclohexylen-$CH_2$-, Phe-

nylen, Naphthylen, Toluylen, Xylylen, $-C_6H_4-C_6H_4-$, $-C_6H_4-CH_2-C_6H_4-$, $-C_6H_4-SO_2-C_6H_4-$, $-C_6H_4-CO-C_6H_4-$ und $-C_6H_4-O-C_6H_4-$.

Bei $R_{020}$ kann es sich bevorzugt um $C_2$-$C_{18}$-, bevorzugt $C_2$-$C_{12}$-Alkylen, Polyoxaalkylen mit 2 bis 50, bevorzugt 2 bis 10 Oxaalkyleneinheiten und 2 bis 6, bevorzugt 2 bis 4 C-Atomen im Oxyalkylen, $C_3$-$C_{12}$-, bevorzugt $C_5$-$C_8$-Cycloalkylen, $C_5$-$C_8$-Cycloalkylen-$CH_2$-, $-CH_2-(C_5$-$C_8$-Cycloalkylen)-$CH_2$-, $C_6$-$C_{14}$-Arylen, Bisphenylen, Benzylen, Xylylen, $-C_6H_4-X_{01}-C_6H_4-$ mit $X_{01}$ gleich O, S, SO, $SO_2$, CO, $CO_2$, NH, N($C_1$-$C_4$-Alkyl), Alkyliden mit 1 bis 18, bevorzugt 1 bis 12 C-Atomen, oder $C_5$-$C_7$-Cycloalkyliden handeln. Einige Beispiele sind Ethylen, Propylen, Butylen, Hexylen, Di-, Tri- und Tetraoxaethylen, Cyclopentylen, Cyclohexylen, Cyclohexylen-$CH_2$-, $-CH_2$-Cyclohexylen-$CH_2$-, Phenylen, $-C_6H_4-CH_2-C_6H_4-$, $-C_6H_4-CH(CH_3)-C_6H_4-$, $-C_6H_4-C(CH_3)_2-C_6H_4-$, $-C_6H_4-C_6H_{10}-C_6H_4-$ und $-C_6H_4-O-C_6H_4-$. Besonders bevorzugt ist $R_{020}$ $C_2$-$C_6$-Alkylen, das insbesondere linear ist.

Bei den Polyurethanen und Polyharnstoffen handelt es sich um neue Polymere, die ebenfalls ein Gegenstand der Erfindung sind.

Erfindungsgemäss bevorzugt sind Polymerisate mit einem Kohlenstoffrückgrat, von denen es unterschiedliche Ausführungsformen zu erwähnen gibt.

In einer Ausführungsform kann es sich um im wesentlichen oder vollständig lineare Metathesepolymerisate von kondensierten mindestens bicyclischen cycloaliphatischen Dienen handeln, die zwei olefinische Doppelbindungen in unterschiedlichen Ringen enthalten. Die einzelnen Ringe können 3 bis 12, bevorzugt 5 bis 8 Ring-C-Atome enthalten. Die Polymere enthalten beispielsweise wiederkehrende Strukturelemente der Formel (r)

$$=CH-R_{021}-CH= \qquad (r)$$

worin $R_{021}$ $C_2$-$C_{10}$-, bevorzugt $C_3$-$C_6$-Alkylen bedeutet, an das ein Cycloalkenylen mit insgesamt 5 bis 8 C-Atomen direkt oder über ein weiteres ankondensiertes Cycloalkylen mit 5 bis 8 C-Atomen ankondensiert ist. Bevorzugte Beispiele sind lineares Polynorbornadien mit wiederkehrenden Strukturelementen der Formel (r')

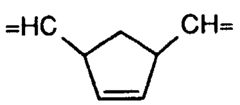

(r'),

oder lineares Polydicyclopentadien mit wiederkehrenden Strukturelementen der Formel (r")

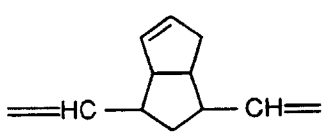

(r''),

oder Copolymere mit diesen beiden wiederkehrenden Strukturelementen.

Ferner sind lineare Copolymere mit einem wiederkehrenden Strukturelement der Formel (r), bevorzugt je einem oder beiden der obigen Strukturelemente (r') und (r") und Strukturelementen der Formel (r'")

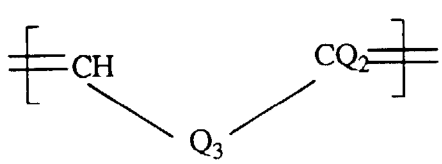

(r''')

eines gespannten Cycloolefins geeignet, worin

$Q_3$ ein lineares oder verzweigtes $C_1$-$C_{18}$-Alkylen ist, das, gegebenenfalls mit Halogen, =O, -CN, $-NO_2$, -COOM,

-$SO_3M$, -$PO_3M$, -$COO(M_1)_{1/2}$, -$SO_3(M_1)_{1/2}$, -$PO_3(M_1)_{1/2}$, $C_1$-$C_{20}$-Alkyl, $R_1R_2R_3Si$-$(O)_u$-, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_4$-X- substituiert ist ; oder bei dem zwei benachbarte C-Atome mit -CO-O-CO- oder -CO-$NR_5$-CO- substituiert sind; oder bei dem gegebenenfalls an benachbarten Kohlenstoffatomen ein alicyclischer, aromatischer oder heteroaromatischer Ring ankondensien ist, welcher unsubstituiert oder mit Halogen, -CN, -$NO_2$, $R_6R_7R_8Si$-$(O)_u$-, -COOM, -$SO_3M$, -$PO_3M$, -$COO(M_1)_{1/2}$, -$SO_3(M_1)_{1/2}$, -$PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;

X und $X_1$ unabhängig voneinander für -O-, -S-, -CO-, -SO-, -$SO_2$-, -O-C(O)-, -C(O)-O-, -C(O)-$NR_5$-, -$NR_{10}$-C(O)-, -$SO_2$-O- oder -O-$SO_2$- stehen;

$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;

$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;

$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;

$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;

M für ein Alkalimetall und $M_1$ für ein Erdalkalimetall stehen; und u für 0 oder 1 steht;

wobei der mit $Q_3$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;

$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;

$X_2$ -C(O)-O- oder -C(O)-$NR_{12}$- ist;

$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, -$NO_2$, -CN oder Halogen substituiert sind, und wobei die Heteroatome der vorgenannten Heterocycloalkyl-, Heteroaryl- und Heteroaralkylgruppen aus der Gruppe -O-, -S-, -$NR_9$- und -N= ausgewählt sind; und

$R_9$ Wasserstoff, $C_1$-$C_{12}$-Alkyl, Phenyl oder Benzyl darstellt. $Q_2$ stellt besonders bevorzugt H dar.

In einer anderen Ausführungsform handelt es sich bei den Polymeren mit einem Kohlenstoffrückgrat um Copolymere von gespannten Cycloolefinen mit kondensierten mindestens bicyclischen cycloaliphatischen Dienen, die wenigstens zwei olefinische Doppelbindungen in unterschiedlichen Ringen enthalten, und ethylenisch ungesättigten Comonomeren. Die einzelnen Ringe können 3 bis 12, bevorzugt 5 bis 8 Ring-C-Atome enthalten. Die Polymere enthalten beispielsweise wiederkehrende Strukturelemente der Formel (r) und der Formel (s),

$$=CH\text{-}R_{021}\text{-}CH= \qquad (r)$$

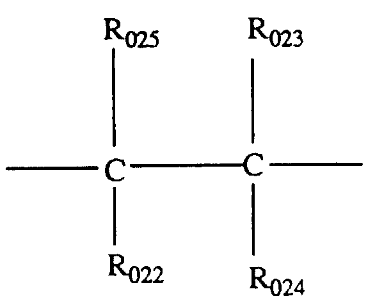

(s),

worin

$R_{021}$ $C_2$-$C_{10}$-, bevorzugt $C_2$-$C_4$-Alkylen bedeutet, an das ein Alkenylen mit 2 bis 6, bevorzugt 2 bis 5 C-Atomen

direkt oder über einen ankondensierten Cycloalkylenring mit 5 bis 8 C-Atomen gebunden ist;

$R_{022}$ H, F, $C_1$-$C_{12}$-Alkyl, -COOH, -C(O)O-$C_1$-$C_{12}$-Alkyl, -C(O)-NH-$C_1$-$C_{12}$-Alkyl oder -C(O)-$NH_2$, bevorzugt H, F, $C_1$-$C_4$-Alkyl, -COOH oder -C(O)-$C_1$-$C_6$-Alkyl bedeutet;

$R_{023}$ H, F, Cl, CN oder $C_1$-$C_{12}$-Alkyl, bevorzugt H, F, Cl oder $C_1$-$C_4$-Alkyl darstellt;

$R_{024}$ für H, F, Cl, CN, OH, $C_1$-$C_{12}$-Alkyl, $C_1$-$C_{12}$-Alkoxy, unsubstituiertes oder mit OH, Cl, Br, $C_1$-$C_4$-Alkyl, $C_1$-$C_4$-Alkoxy, -C(O)O$C_1$-$C_{12}$-Alkyl, -C(O)-$NH_2$, -$SO_3$H, -COOH, C(O)-NH-$C_1$-$C_{12}$-Alkyl oder -$SO_3$-$C_1$-$C_{12}$-Alkyl substituiertes Phenyl, -C(O)OH, -C(O)O-$C_2$-$C_{12}$-Hydroxyalkyl, -C(O)O-$C_1$-$C_{12}$-Alkyl, -C(O)-$NH_2$ oder -C(O)-NH-$C_1$-$C_{12}$-Alkyl, bevorzugt für H, F, Cl, CN, OH, $C_1$-$C_4$-Alkyl, $C_1$-$C_4$-Alkoxy, unsubstituiertes oder mit OH, Cl, Br, $C_1$-$C_4$-Alkyl, $C_1$-$C_4$-Alkoxy, -COOH, -C(O)O$C_1$-$C_{14}$-Alkyl, -C(O)-$NH_2$, C(O)-NH-$C_1$-$C_4$-Alkyl, -$SO_3$H oder -$SO_3$-$C_1$-$C_4$-Alkyl substituiertes Phenyl, -COOH, -C(O)O-$C_1$-$C_4$-Alkyl, -C(O)O-$C_2$-$C_6$-Hydroxyalkyl, -C(O)-NH-$C_1$-$C_4$-Alkyl oder -C(O)-$NH_2$ steht; und

$R_{025}$ H, F oder $C_1$-$C_{12}$-Alkyl, bevorzugt H oder F darstellt.

Bevorzugte Beispiele für wiederkehrende Strukturelemente der Formel (r) sind Strukturelemente der Formel (r') und (r").

Die Strukturelemente der Formel (r) können in einer Menge von 5 bis 100, bevorzugt 10 bis 80, und besonders bevorzugt 20 bis 60 Mol-% enthalten sein, bezogen auf 1 Mol Polymer.

Gespannte Cycloolefine, die als Comonomere in der erfindungsgemässen Zusammensetzung enthalten sein können, sind in grosser Vielzahl bekannt.

Bei den cyclischen Olefinen kann es sich um monocyclische oder polycyclische kondensierte und/oder überbrückte Ringsysteme, zum Beispiel mit zwei bis vier Ringen, handeln, die unsubstituiert oder substituiert sind und Heteroatome wie zum Beispiel O, S, N oder Si in einem oder mehreren Ringen und/oder kondensierte aromatische oder heteroaromatische Ringe wie zum Beispiel o-Phenylen, o-Naphthylen, o-Pyridinylen oder o-Pyrimidinylen enthalten können. Die einzelnen cyclischen Ringe können 3 bis 16, bevorzugt 3 bis 12 und besonders bevorzugt 3 bis 8 Ringglieder enthalten. Die cyclischen Olefine können weitere nichtaromatische Doppelbindungen enthalten, je nach Ringgrösse bevorzugt 2 bis 4 solcher zusätzlichen Doppelbindungen. Bei den Ringsubstituenten handelt es sich um solche, die inert sind, das heisst, die die chemische Stabilität und die Thermostabilität der Katalysatoren nicht beeinträchtigen. Bei den Cycloolefinen handelt es sich um gespannte Ringe beziehungsweise Ringsysteme.

Wenn die cyclischen Olefine mehr als eine Doppelbindung enthalten, zum Beispiel 2 bis 4 Doppelbindungen, können sich abhängig von den Reaktionsbedingungen, dem gewählten Monomer und der Katalysatormenge, auch vernetzte Polymerisate bilden.

Ankondensierte alicyclische Ringe enthalten bevorzugt 3 bis 8, besonders bevorzugt 4 bis 7 und insbesondere bevorzugt 5 oder 6 Ring-C-Atome.

In einer bevorzugten Ausführungsform entsprechen die comonomeren gespannten Cycloolefine der Formel I

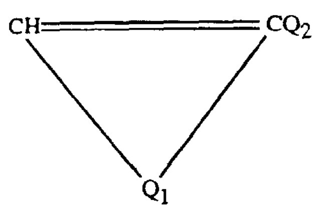

(I),

worin

$Q_1$ ein Rest mit mindestens einem Kohlenstoffatom ist, der zusammen mit der -CH=C$Q_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, -$NO_2$, $R_1R_2R_3$Si-$(O)_u$-, -COOM, -$SO_3$M, -$PO_3$M, -COO$(M_1)_{1/2}$, -$SO_3(M_1)_{1/2}$, -$PO_3(M_1)_{1/2}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_4$-X- substituiert ist; oder bei dem zwei benachbarte C-Atome mit -CO-O-CO-oder -CO-$NR_5$-CO- substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, -$NO_2$, $R_6R_7R_8$Si-$(O)_u$-, -COOM, -$SO_3$M, -$PO_3$M, -COO$(M_1)_{1/2}$, -$SO_3(M_1)_{1/2}$, -$PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;

$X$ und $X_1$ unabhängig voneinander für -O-, -S-, -CO-, -SO-, $-SO_2-$, -O-C(O)-, -C(O)-O-, $-C(O)-NR_5-$, $-NR_{10}-C(O)-$, $-SO_2-O-$ oder $-O-SO_2-$ stehen;
$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;
$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;
$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;
$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;
M für ein Alkalimetall und $M_1$ für ein Erdalkalimetall stehen; und
u für 0 oder 1 steht;

wobei der mit $Q_1$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}-X_2-$ darstellt;
$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;
$X_2$ -C(O)-O- oder $-C(O)-NR_{12}-$ ist;
$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, $-NO_2$, -CN oder Halogen substituiert sind, und wobei die Heteroatome der vorgenannten Heterocycloalkyl-, Heteroaryl- und Heteroaralkylgruppen aus der Gruppe -O-, -S-, $-NR_9-$ und -N= ausgewählt sind; und

$R_9$ Wasserstoff, $C_1$-$C_{12}$-Alkyl, Phenyl oder Benzyl darstellt.

Ankondensierte alicyclische Ringe enthalten bevorzugt 3 bis 8, besonders bevorzugt 4 bis 7 und insbesondere bevorzugt 5 oder 6 Ring-C-Atome.

Ist in den Verbindungen der Formel I ein asymmetrisches Zentrum vorhanden, so hat dies zur Folge, daß die Verbindungen in optisch isomeren Formen auftreten können. Einige Verbindungen der Formel I können in tautomeren Formen (z.B. Keto-Enol-Tautomerie) vorkommen. Liegt eine aliphatische C=C-Doppelbindung vor, so kann auch geometrische Isomerie (E-Form oder Z-Form) auftreten. Ferner sind auch Exo-Endo-Konfigurationen möglich. Die Formel I umfaßt somit alle möglichen Stereoisomeren, die in Form von Enantiomeren, Tautomeren, Diastereomeren, E/Z-Isomeren oder deren Gemische vorliegen.

In den Definitionen der Substituenten können die Alkyl-, Alkenyl- und Alkinylgruppen geradkettig oder verzweigt sein. Dasselbe gilt auch für den bzw. jeden Alkylteil von Alkoxy-, Alkylthio-, Alkoxycarbonyl- und von weiteren Alkyl-enthaltenden Gruppen. Diese Alkylgruppen enthalten bevorzugt 1 bis 12, bevorzugter 1 bis 8 und besonders bevorzugt 1 bis 4 C-Atome. Diese Alkenyl- und Alkinylgruppen enthalten bevorzugt 2 bis 12, bevorzugter 2 bis 8 und besonders bevorzugt 2 bis 4 C-Atome.

Alkyl umfaßt beispielsweise Methyl, Ethyl, Isopropyl, n-Propyl, n-Butyl, iso-Butyl, sekButyl, ten-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Hydroxyalkyl umfaßt beispielsweise Hydroxymethyl, Hydroxyethyl, 1-Hydroxyisopropyl, 1-Hydroxy-n-Propyl, 2-Hydroxy-n-Butyl, 1-Hydroxy-iso-Butyl, 1-Hydroxy-sek-Butyl, 1-Hydroxy-tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Alkane, wie zum Beispiel der Isopropyl-, n-Propyl-, n-Butyl-, iso-Butyl-, sek-Butyl-, tert-Butyl-, und der verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylradikale.

Alkenyl umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl, n-Octadec-2-enyl, n-Octadec-4-enyl.

Beim Cycloalkyl handelt es sich bevorzugt um $C_5$-$C_8$-Cycloalkyl, besonders um $C_5$- oder $C_6$-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Cyanoalkyl umfaßt beispielsweise Cyanomethyl (Methylnitril), Cyanoethyl (Ethylnitril), 1-Cyanoisoprcpyl, 1-Cyano-n-Propyl, 2-Cyano-n-Butyl, 1-Cyano-iso-Butyl, 1-Cyano-sek-Butyl, 1-Cyano-tert-Butyl sowie die verschiedenen isomeren Cyanopentyl- und -hexylreste.

Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, Phenbutyl oder α,α-Dimethylbenzyl handeln.

Aryl enthält bevorzugt 6 bis 10 C-Atome. Es kann sich beispielsweise um Phenyl, Pentalin, Inden, Naphthalin, Azulin oder Anthracen handeln.

Heteroaryl enthält bevorzugt 4 oder 5 C-Atome und ein oder zwei Heteroatome aus der Gruppe O, S und N. Es kann sich beispielsweise um Pyrrol, Furan, Thiophen, Oxazol, Thiazol, Pyridin, Pyrazin, Pyrimidin, Pyridazin, Indol, Purin oder Chinolin handeln.

Heterocycloalkyl enthält bevorzugt 4 oder 5 C-Atome und ein oder zwei Heteroatome aus der Gruppe O, S und N. Es kann sich beispielsweise um Oxiran, Azirin, 1,2-Oxathiolan, Pyrazolin, Pyrrolidin, Piperidin, Piperazin, Morpholin, Tetrahydrofuran oder Tetrahydrothiophen handeln.

Alkoxy ist beispielsweise Methoxy, Ethoxy, Propyloxy, i-Propyloxy, n-Butyloxy, i-Butyloxy, sek.-Butyloxy und t-Butyloxy.

Unter Alkalimetall ist im Rahmen der vorliegenden Erfindung Lithium, Natrium, Kalium, Rubidium und Cäsium, insbesondere Lithium, Natrium und Kalium zu verstehen.

Unter Erdalkalimetall ist im Rahmen der vorliegenden Erfindung Beryllium, Magnesium, Calcium, Strontium und Barium, insbesondere Magnesium und Calcium zu verstehen.

In den obigen Definitionen ist unter Halogen, Fluor, Chlor, Brom und Jod vorzugsweise Fluor, Chlor und Brom zu verstehen.

Für die erfindungsgemäße Zusammensetzung besonders gut geeignete Verbindungen der Formel I sind jene, worin $Q_2$ Wasserstoff bedeutet.

Ferner sind für die Polymerisation Verbindungen der Formel I bevorzugt, worin der alicyclische Ring, den $Q_1$ zusammen mit der $-CH=CQ_2-$ Gruppe bildet, 3 bis 16, bevorzugter 3 bis 12 und besonders bevorzugt 3 bis 8 Ringatome aufweist, und wobei es sich um ein monocyclisches, bicyclischen tricyclisches oder tetracyclisches Ringsystem handeln kann.

Mit besonderem Vorteil sind in der erfindungsgemässen Zusammensetzung Verbindungen der Formel I enthalten, worin

$Q_1$ ein Rest mit mindestens einem Kohlenstoffatom ist, der zusammen mit der $-CH=CQ_2$-Gruppe einen 3- bis 20-gliedrigen alicyclischen Ring bildet, welcher gegebenenfalls ein oder mehrere Heteroatome ausgewählt aus der Gruppe Silicium, Sauerstoff, Stickstoff und Schwefel enthält; und der unsubstituiert oder mit Halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_4$-X- substituiert ist; oder bei dem zwei benachbarte C-Atome in diesem Rest $Q_1$ mit -CO-O-CO- oder $-CO-NR_5-CO-$ substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_{13}$-$X_1$-substituiert ist;

X und $X_1$ unabhängig voneinander für -O-, -S-, -CO-, -SO-, $-SO_2-$, -O-C(O)-, -C(O)-O-, $-C(O)-NR_5-$, $-NR_{10}-C(O)-$, $-SO_2-O-$ oder $-O-SO_2-$ stehen;

$R_1$, $R_2$ und $R_3$ unabhängig voneinander $C_1$-$C_6$-Alkyl, $C_1$-$C_6$-Perfluoralkyl, Phenyl oder Benzyl bedeuten;

M für ein Alkalimetall und $M_1$ für ein Erdalkalimetall stehen;

$R_4$ und $R_{13}$ unabhängig voneinander $C_1$-$C_{12}$-Alkyl, $C_1$-$C_{12}$-Halogenalkyl, $C_1$-$C_{12}$-Hydroxyalkyl, $C_3$-$C_8$-Cycloalkyl, $C_6$-$C_{12}$-Aryl, $C_7$-$C_{12}$-Aralkyl bedeuten;

$R_5$ und $R_{10}$ unabhängig voneinander Wasserstoff, $C_1$-$C_6$-Alkyl, Phenyl oder Benzyl bedeutet, wobei die Alkylgruppen ihrerseits unsubstituiert oder mit $C_1$-$C_6$-Alkoxy oder $C_3$-$C_6$-Cycloalkyl substituiert sind;

$R_6$, $R_7$ und $R_8$ unabhängig voneinander $C_1$-$C_6$-Alkyl, $C_1$-$C_6$-Perfluoralkyl, Phenyl oder Benzyl darstellen;

u für 0 oder 1 steht;

wobei der mit $Q_1$ gebildete alicyclische Ring gegebenenfalls weitere nichtaromatische Doppelbindungen enthält;

$Q_2$ Wasserstoff, $C_1$-$C_{12}$-Alkyl, $C_1$-$C_{12}$-Halogenalkyl, $C_1$-$C_6$-Alkoxy, Halogen, -CN, $R_{11}$-$X_2$- bedeutet;

$R_{11}$ $C_1$-$C_{12}$-Alkyl, $C_1$-$C_{12}$-Halogenalkyl, $C_1$-$C_{12}$-Hydroxyalkyl, $C_3$-$C_6$-Cycloalkyl, $C_6$-$C_{12}$-Aryl oder $C_7$-$C_{12}$-Aralkyl darstellt;

$X_2$ -C(O)-O- oder $-C(O)-NR_{12}-$ ist; und

$R_{12}$ Wasserstoff, $C_1$-$C_6$-Alkyl, Phenyl oder Benzyl bedeutet;

wobei die Cycloalkyl-, Heterocycloalkyl-, Aryl-, Heteroaryl-, Aralkyl- und Heteroaralkylgruppen unsubstituiert oder mit $C_1$-$C_6$-Alkyl, $C_1$-$C_6$-Alkoxy, $-NO_2$, -CN oder Halogen substituiert sind, und wobei die Heteroatome der Heterocycloalkyl-, Heteroaryl- und Heteroaralkylgruppen aus der Gruppe -O-, -S-, $-NR_9$- und -N= ausgewählt sind; und

$R_9$ Wasserstoff, $C_1$-$C_6$-Alkyl, Phenyl oder Benzyl bedeutet.

Aus dieser Gruppe sind diejenigen Verbindungen der Formel I bevorzugt, worin

$Q_1$ ein Rest mit mindestens einem Kohlenstoffatom ist, der zusammen mit der $-CH=CQ_2$-Gruppe einen 3- bis 10-gliedrigen alicyclischen Ring bildet, der gegebenenfalls ein Heteroatom ausgewählt aus der Gruppe Silicium, Sauerstoff, Stickstoff und Schwefel enthält, und der unsubstituiert oder mit Halogen, -CN, $-NO_2$, $R_1R_2R_3Si$-, -COOM, $-SO_3M$, $-PO_3M$, $-COO(M_1)_{1/2}$ $-SO_3(M_1)_{1/2}$, $-PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_4$-X- substituiert ist; oder bei dem an benachbarten Kohlenstoffatomen gegebenenfalls ein alicyclischer, aromatischer oder heteroaromatischer Ring ankondensiert ist, welcher unsubstituiert oder durch Halogen, -CN, $-NO_2$, $R_6R_7R_8Si$-, -COOM, $-SO_3M$, $-PO_3M$, -COO $(M_1)_{1/2}$, $-SO_3(M_1)_{1/2}$, $-PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_{13}$-$X_1$- substituiert ist;
$R_1$, $R_2$ und $R_3$ unabhängig voneinander $C_1$-$C_4$-Alkyl, $C_1$-$C_4$-Perfluoralkyl, Phenyl oder Benzyl bedeuten;
M für ein Alkalimetall und $M_1$ für ein Erdalkalimetall stehen;
$R_4$ und $R_{13}$ unabhängig voneinander $C_1$-$C_6$-Alkyl, $C_1$-$C_6$-Halogenalkyl, $C_1$-$C_6$-Hydroxyalkyl oder $C_3$-$C_6$-Cycloalkyl bedeuten;
X und $X_1$ unabhängig voneinander für -O-, -S-, -CO-, -SO- oder $-SO_2$- stehen;
$R_6$, $R_7$ und $R_8$ unabhängig voneinander $C_1$-$C_4$-Alkyl, $C_1$-$C_4$-Perfluoralkyl, Phenyl oder Benzyl darstellen;
und $Q_2$ Wasserstoff bedeutet.

Insbesondere eignet sich die erfindungsgemäße Zusammensetzung zur Polymerisation von Norbornen und Norbornenderivaten. Von diesen Norbornenderivaten sind diejenigen besonders bevorzugt, die entweder der Formel II

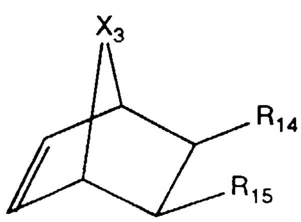

(II),

worin

$X_3$ $-CHR_{16}$-, Sauerstoff oder Schwefel;
$R_{14}$ und $R_{15}$ unabhängig voneinander Wasserstoff, -CN, Trifluormethyl, $(CH_3)_3Si$-O-, $(CH_3)_3Si$- oder $-COOR_{17}$; und
$R_{16}$ und $R_{17}$ unabhängig voneinander Wasserstoff, $C_1$-$C_{12}$-Alkyl, Phenyl oder Benzyl bedeuten;

oder der Formel III

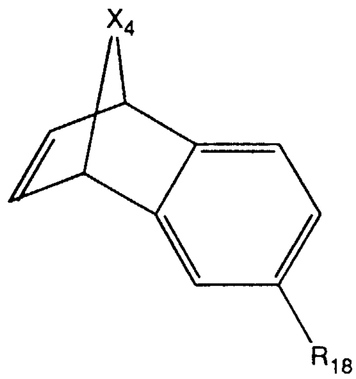

(III)

worin

$X_4$ -$CHR_{19}$-, Sauerstoff oder Schwefel;
$R_{19}$ Wasserstoff, $C_1$-$C_{12}$-Alkyl, Phenyl oder Benzyl; und
$R_{18}$ Wasserstoff, $C_1$-$C_6$-Alkyl oder Halogen bedeuten;

oder der Formel IV

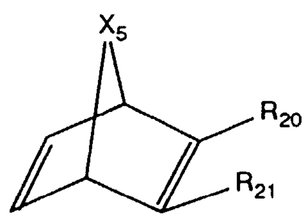

(IV),

worin

$X_5$ -$CHR_{22}$-, Sauerstoff oder Schwefel;
$R_{22}$ Wasserstoff, $C_1$-$C_{12}$-Alkyl, Phenyl oder Benzyl;
$R_{20}$ und $R_{21}$ unabhängig voneinander Wasserstoff, CN, Trifluormethyl, $(CH_3)_3Si$-O-, $(CH_3)_3Si$- oder -$COOR_{23}$; und
$R_{23}$ Wasserstoff, $C_1$-$C_{12}$-Alkyl, Phenyl oder Benzyl bedeuten;

oder der Formel V entsprechen,

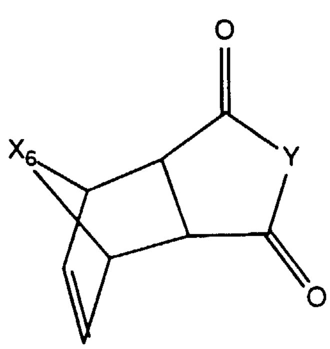

(V),

worin

$X_6$ -$CHR_{24}$-, Sauerstoff oder Schwefel;
$R_{24}$ Wasserstoff, $C_1$-$C_{12}$-Alkyl, Phenyl oder Benzyl;

Y Sauerstoff oder >N-$R_{25}$; und
$R_{25}$ Wasserstoff, Methyl, Ethyl oder Phenyl bedeuten.

Folgende Verbindungen der Formel I sind besonders gut geeignet, wobei bi- und polycyclische Systeme durch Diels-Alder-Reaktionen zugänglich sind:

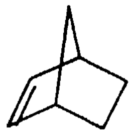 (1), 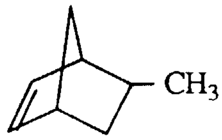 (2), 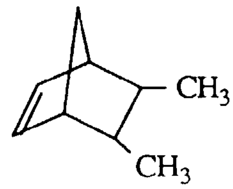 (3),

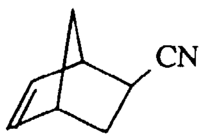 (4), 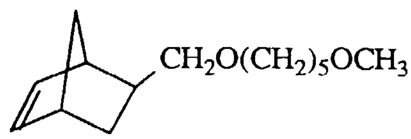 (5),

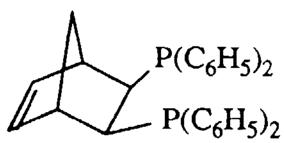 (6), 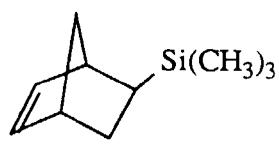 (7),

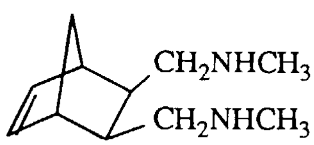 (8), 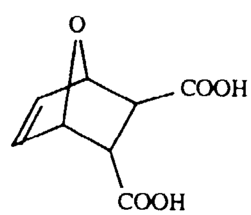 (9),

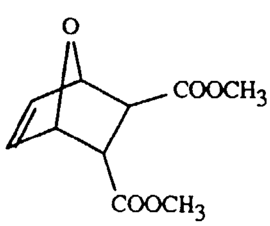 (10), 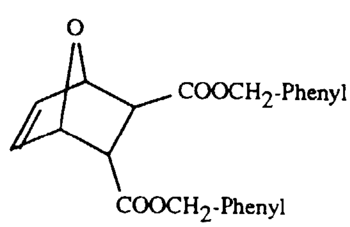 (11),

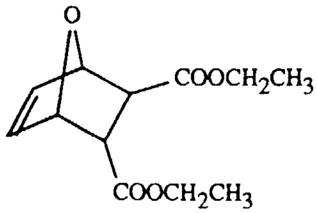 (12), 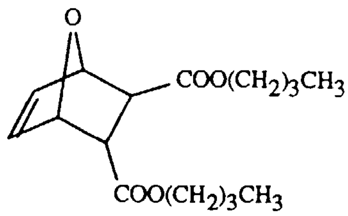 (13),

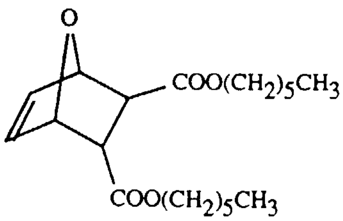 (14), 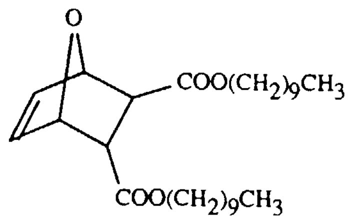 (15),

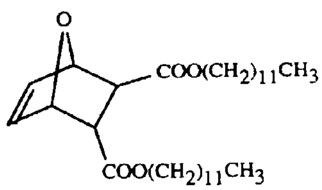 (16), 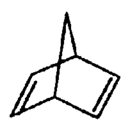 (17),

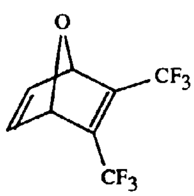 (18), 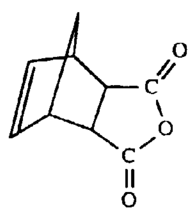 (19), 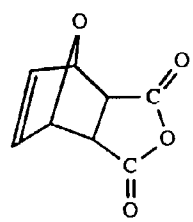 (20),

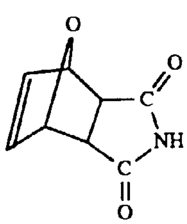 (21), 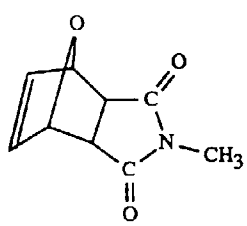 (22),

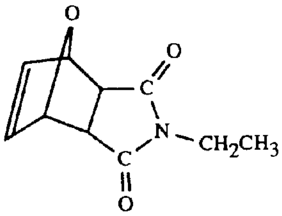 (23), 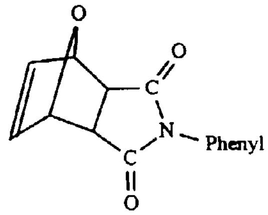 (24),

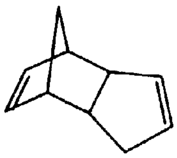 (25), 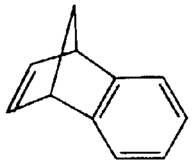 (26), 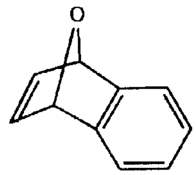 (27),

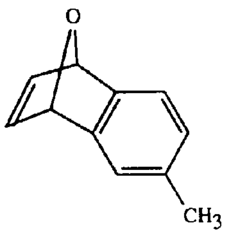 (28), 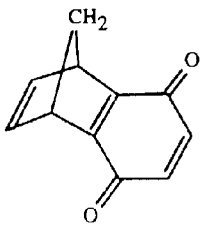 (29), 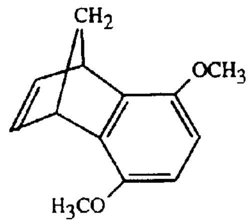 (30),

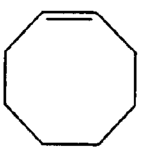 (31), 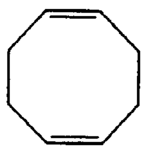 (32), 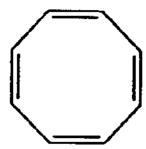 (33),

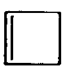 (34), 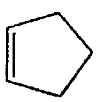 (35), 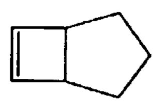 (36),

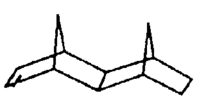 (37), 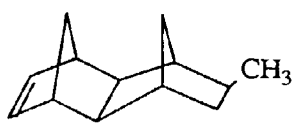 (38),

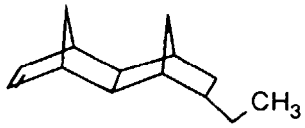 (39), 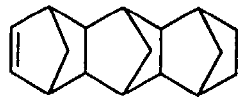 (40),

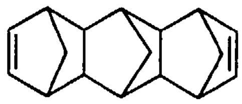 (41), 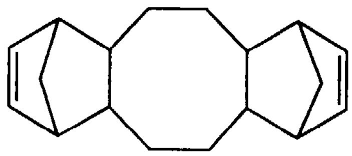 (42),

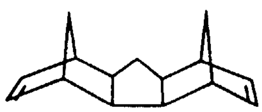 (43), 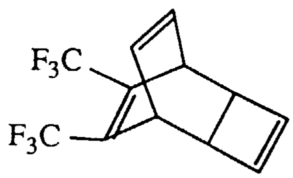 (44),

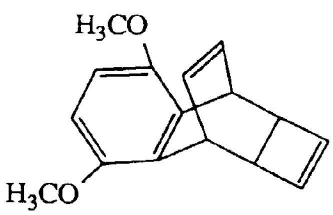 (45), 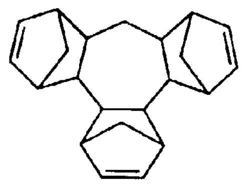 (46),

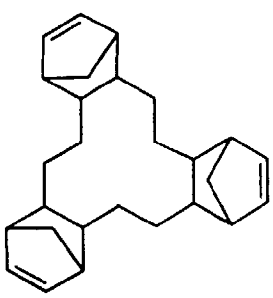 (47) und 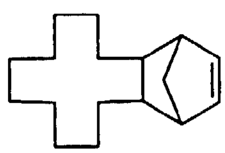 (48).

Bei den comonomeren polyfunktionellen gespannten Cycloolefinen kann es sich um Verbindungen der Formel (f1) handeln,

$$(T)_n\text{-}U \qquad (f1),$$

worin T den Rest eines gespannten Cycloolefins bedeutet, U für eine direkte Bindung oder eine n-wertige Brückengruppe steht, und n eine ganze Zahl von 2 bis 8 darstellt.

Bei den cyclischen Olefinen kann es sich um monocyclische oder polycyclische kondensierte und/oder überbrückte Ringsysteme, zum Beispiel mit zwei bis vier Ringen handeln, die unsubstituiert oder substituiert sind und Heteroatome wie zum Beispiel O, S, N oder Si in einem oder mehreren Ringen und/oder kondensierte alicyclische, aromatische oder heteroaromatische Ringe wie zum Beispiel o-Cyclopentylen, o-Phenylen, o-Naphthylen, o-pyridinylen oder o-Pyrimidinylen enthalten können. Die einzelnen cyclischen Ringe können 3 bis 16, bevorzugt 3 bis 12 und besonders bevorzugt 3 bis 8 Ringglieder enthalten. Die cyclischen Olefine können weitere nichtaromatische Doppelbindungen enthalten, je nach Ringgrösse bevorzugt 2 bis 4 solcher zusätzlichen Doppelbindungen. Bei den Ringsubstituenten handelt es sich um solche, die inert sind, das heisst, die die chemische Stabilität der Einkomponenten-Katalysatoren nicht beeinträchtigen.

Ankondensierte alicyclische Ringe enthalten bevorzugt 3 bis 8, besonders bevorzugt 4 bis 7 und insbesondere bevorzugt 5 oder 6 Ring-C-Atome.

In einer bevorzugten Ausführungsform entsprechen die Reste T in Formel (f1) Cycloolefinresten der Formel (f2)

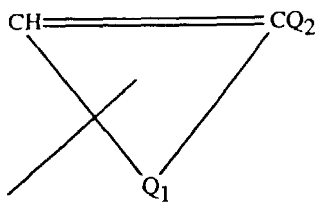

(f2),

worin $Q_1$ und $Q_2$ die zuvor angegebenen Bedeutungen haben, einschliesslich der Bevorzugungen.

Die Stellung der Doppelbindung im Ring der Formel (f2) zur freien Bindung hängt im wesentlichen von der Ringgrösse und Herstellungsmethode der Verbindungen der Formel I ab.

Besonders bevorzugt handelt es sich bei dem Cycloalkenylrest der Formel (f2) um unsubstituiertes oder substituiertes Cyclopropenyl, Cyclobutenyl, Cyclopentenyl, Cycloheptenyl, Cyclooctenyl, Cyclopentadienyl, Cyclohexadienyl, Cycloheptadienyl, Cyclooctadienyl und Norbornenyl oder Norbornenylderivate wie zum Beispiel 7-Oxa-2,2,2-cyclohepten sowie die entsprechenden Benzoderivate. Substituenten sind bevorzugt $C_1$-$C_4$-Alkyl und $C_1$-$C_4$-Alkoxy.

Insbesondere geeignet sind als Reste der Formel (f2) Norbornenyl und Norbornenylderivate. Von diesen Norbornenylderivaten sind diejenigen besonders bevorzugt, die entweder der Formel (f3)

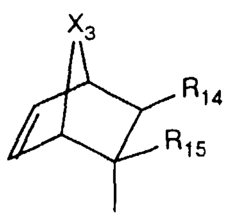

(f3),

worin

$X_3$ -$CHR_{16}$-, Sauerstoff oder Schwefel;
$R_{14}$ und $R_{15}$ unabhängig voneinander Wasserstoff, -CN, Trifluormethyl, $(CH_3)_3Si$-O-, $(CH_3)_3Si$- oder -$COOR_{17}$; und
$R_{16}$ und $R_{17}$ unabhängig voneinander Wasserstoff, $C_1$-$C_{12}$-Alkyl, Phenyl oder Benzyl bedeuten;

oder der Formel (f4) entsprechen

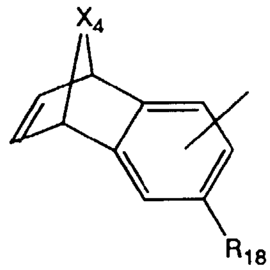

(f4),

worin

$X_4$ $-CHR_{19}-$, Sauerstoff oder Schwefel;
$R_{19}$ Wasserstoff, $C_1$-$C_{12}$-Alkyl, Phenyl oder Benzyl; und
$R_{18}$ Wasserstoff, $C_1$-$C_6$-Alkyl oder Halogen bedeuten.

Besonders bevorzugt handelt es sich bei dem Cycloalkenylrest T in der Formel (f1) um Norbornenyl der Formel ($nr_4$)

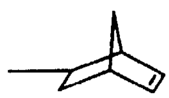

($nr_4$).

In Formel (f1) steht n bevorzugt für eine ganze Zahl von 2 bis 6, besonders bevorzugt 2 bis 4 und insbesondere bevorzugt 2 oder 3.
In Formel (t) bedeutet U bevorzugt eine n-wertige Brückengruppe.
Als zweiwertige Brückengruppen kommen zum Beispiel solche der Formel (f5) in Frage,

$$-X_5-R_{028}-X_6- \qquad (f5),$$

worin

$X_5$ und $X_6$ unabhängig voneinander eine direkte Bindung, -O-, $-CH_2$-O-, -C(O)O-, -O(O)C-, $-CH_2$-O(O)C-, -C(O)-$NR_{029}$-, $-R_{029}$N-(O)C-, -NH-C(O)-$NR_{029}$-, -O-C(O)-NH-, $-CH_2$-O-C(O)-NH- oder -NH-C(O)-O- bedeuten, und
$R_{028}$ $C_2$-$C_{18}$-Alkylen, unsubstituiertes oder mit $C_1$-$C_4$-Alkyl oder $C_1$-$C_4$-Alkoxy substituiertes $C_5$-$C_8$-Cycloalkylen, unsubstituiertes oder mit $C_1$-$C_4$-Alkyl oder $C_1$-$C_4$-Alkoxy substituiertes $C_6$-$C_{18}$-Arylen oder $C_7$-$C_{19}$-Aralkylen, oder Polyoxaalkylen mit 2 bis 12 Oxaalkyleneinheiten und 2 bis 6 C-Atomen im Alkylen darstellt, und
$R_{029}$ H oder $C_1$-$C_6$-Alkyl ist.

$R_{028}$ enthält als Alkylen bevorzugt 2 bis 12 und besonders bevorzugt 2 bis 8 C-Atome. Das Alkylen kann linear oder verzweigt sein. Bevorzugtes Cycloalkylen ist Cyclopentylen und besonders Cyclohexylen. Einige Beispiele für Arylen sind Phenylen, Naphthylen, Biphenylen, Biphenylenether und Anthracenylen. Ein Beispiel für Aralkylen ist Benzylen. Das Polyoxaalkylen enthält bevorzugt 2 bis 6 und besonders bevorzugt 2 bis 4 Einheiten, und bevorzugt 2 oder 3 C-Atome im Alkylen.
In einer bevorzugten Ausführungsform stehen in Formel (f5)

a) $X_5$ und $X_6$ für eine direkte Bindung und $R_{028}$ für $C_2$-$C_{18}$-Alkylen, bevorzugter $C_2$-$C_{12}$-Alkylen, oder
b) $X_5$ und $X_6$ für -O-, $-CH_2$-O-, -C(O)O-, -O(O)C-, $-CH_2$-O(O)C-, $-CH_2$-O-C(O)-NH-, -C(O)-$NR_{029}$- oder -O-C(O)-NH- und

$R_{028}$ für $C_2$-$C_{12}$-Alkylen, unsubstituiertes oder mit $C_1$-$C_4$-Alkyl oder $C_1$-$C_4$-Alkoxy substituiertes Phenylen, Naphthylen oder Benzylen, oder für $-R_{030}$-(O-$R_{030}$)$_x$-$OR_{030}$-, worin x eine Zahl von 2 bis 4 ist und $R_{030}$ $-C_2$-$C_4$-Alkylen bedeutet.

Einige Beispiele für Verbindungen der Formel (f1) mit einer zweiwertigen Brückengruppe sind

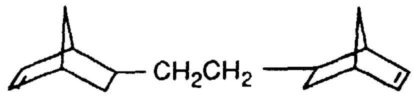 (43)

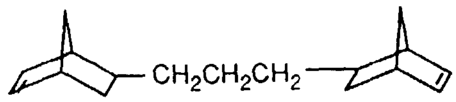 (44),

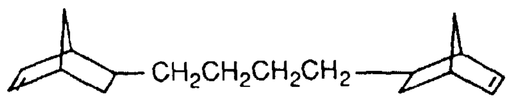 (45),

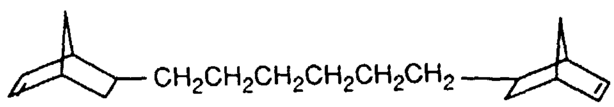 (46),

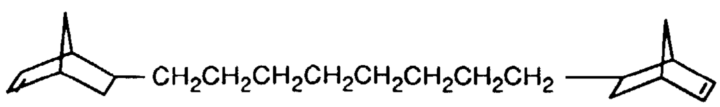 (47),

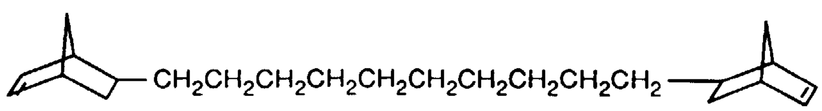 (48),

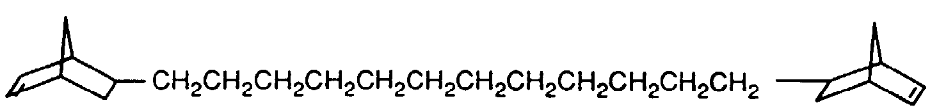 (49)

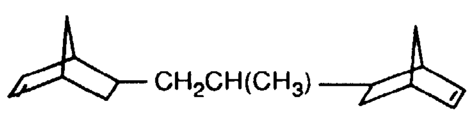 (50),

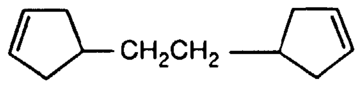 (51),

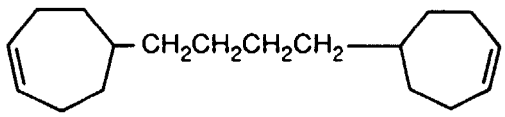 (52),

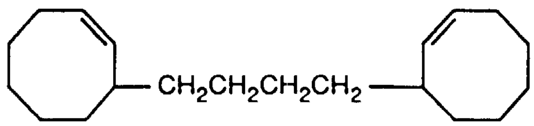 (53),

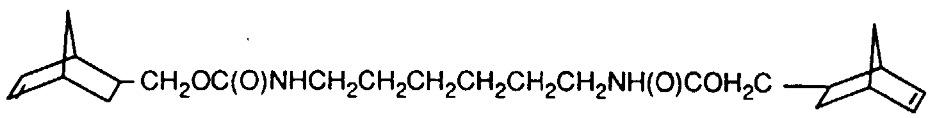 (54),

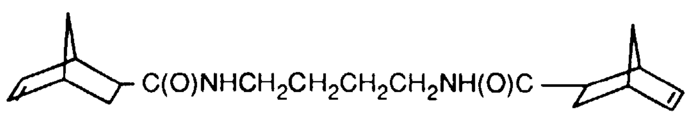 (55),

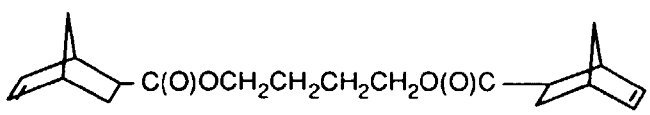 (56),

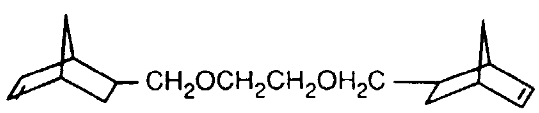 (57),

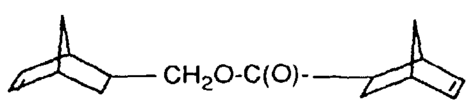 (58)

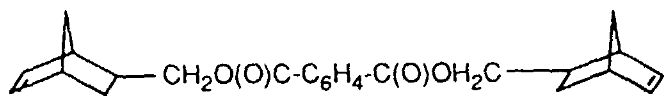
(59),

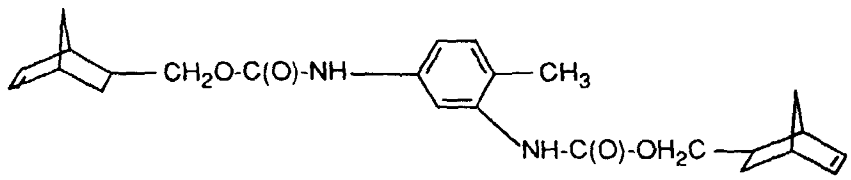
(60)

und

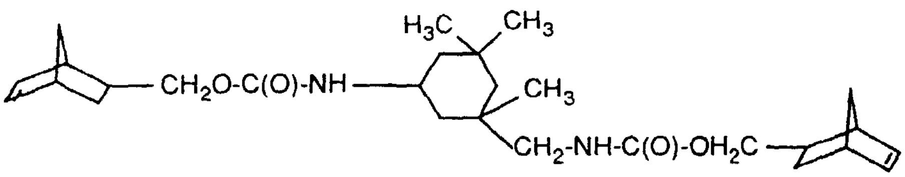
(61).

Die Verbindungen der Formel (f1) mit einer Brückengruppe der Formel (f5), die eine reine Kohlenwasserstoffbrücke darstellt, sind zum Beispiel mittels Diels-Alder Reaktion eines cyclischen Diens mit einem linearen oder verzweigten aliphatischen Dien erhältlich (siehe auch EP 287,762), wobei oft Stoffgemische entstehen, die entweder direkt weiterverwendet oder zuvor mittels üblicher Methoden getrennt werden. Verbindungen der Formel (f1) mit einer Brückengruppe der Formel (f5), worin $X_5$ und $X_6$ keine direkte Bindung darstellen, sind aus den entsprechenden Halogeniden oder Dihalogeniden, Alkoholen oder Diolen, Aminen oder Diaminen, Carbonsäuren oder Dicarbonsäuren, oder Isocyanaten oder Diisocyanaten in an sich bekannter Weise über Veretherungs-, Veresterungs- beziehungsweise Amidierungsreaktionen erhältlich.

Als dreiwertige Brückengruppen kommen zum Beispiel solche der Formel (f6) in Frage,

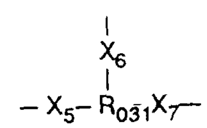
(f6),

worin

$X_5$, $X_6$ und $X_7$ -O-, $-CH_2$-O-, -C(O)O-, -O(O)C-, $-CH_2$-O(O)C-, -C(O)-$NR_{029}$-, -$R_{029}$N-(O)C-, -NH-C(O)-$NR_{029}$-, -O-C(O)-NH-, $-CH_2$-O-C(O)-NH- oder -NH-C(O)-O- bedeuten, und

$R_{031}$ einen dreiwertigen aliphatischen Kohlenwasserstoffrest mit 3 bis 20, bevorzugt 3 bis 12 C-Atomen, einen dreiwertigen unsubstituierten oder mit $C_1$-$C_4$-Alkyl oder $C_1$-$C_4$-Alkoxy substituierten cycloaliphatischen Rest mit 3 bis 8, vorzugsweise 5 oder 6 Ring-C-Atomen, oder einen dreiwertigen unsubstituierten oder mit $C_1$-$C_4$-Alkyl oder $C_1$-$C_4$-Alkoxy substituierten aromatischen Rest mit 6 bis 18, vorzugsweise 6 bis 12 C-Atomen, einen unsubstituierten oder mit $C_1$-$C_4$-Alkyl oder $C_1$-$C_4$-Alkoxy substituierten dreiwertigen araliphatischen Rest mit 7 bis 19, bevorzugt 7 bis 12 C-Atomen, oder einen unsubstituierten oder mit $C_1$-$C_4$-Alkyl oder $C_1$-$C_4$-Alkoxy substituierten dreiwertigen heteroaromatischen Rest mit 3 bis 13 C-Atomen und 1 bis 3 Heteroatomen aus der Gruppe -O-, -N- und -S- darstellt, und

$R_{031}$ H oder $C_1$-$C_6$-Alkyl ist.

In einer bevorzugten Ausführungsform stellen $X_5$, $X_6$ und $X_7$ -O-, $-CH_2$-O-, -C(O)O-, -O(O)C-, $-CH_2$-O(O)C-, -C(O)-$NR_{029}$-, -O-C(O)-NH- oder $-CH_2$-O-C(O)-NH- dar.

Bevorzugte Reste $R_{031}$ leiten sich zum Beispiel von Triolen wie Glycerin, Trimethylolpropan, Butantriol, Pentantriol, Hexantriol, Trihydroxycyclohexan, Trihydroxybenzol und Cyanursäure; Triaminen wie Diethylentriamin; Tricarbonsäuren wie Cyclohexantricarbonsäure oder Trimellithsäure; und Triisocyanaten wie Benzoltriisocyanat oder Cyanurtriisocyanat ab.

Einige Beispiele für Verbindungen der Formel (fI) mit einer dreiwertigen Brückengruppe sind

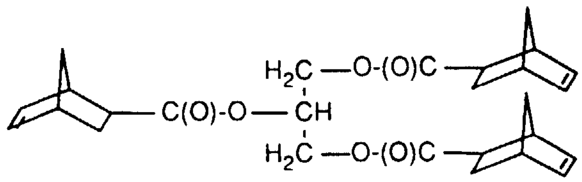
(62),

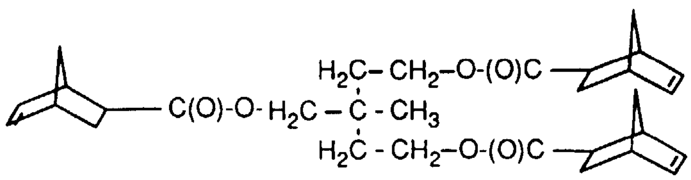
(63),

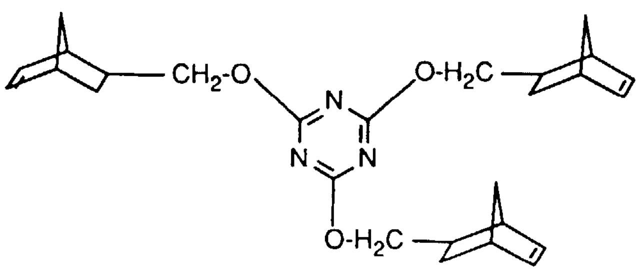
(64),

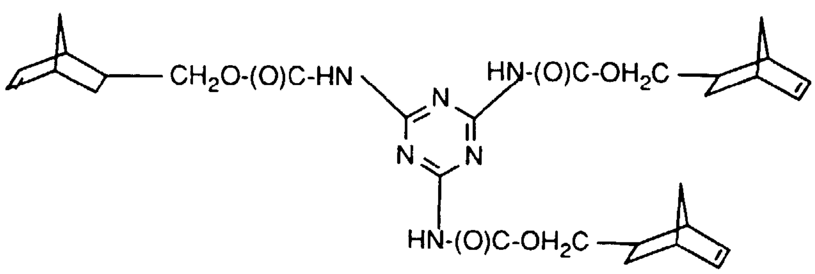
(65)

und

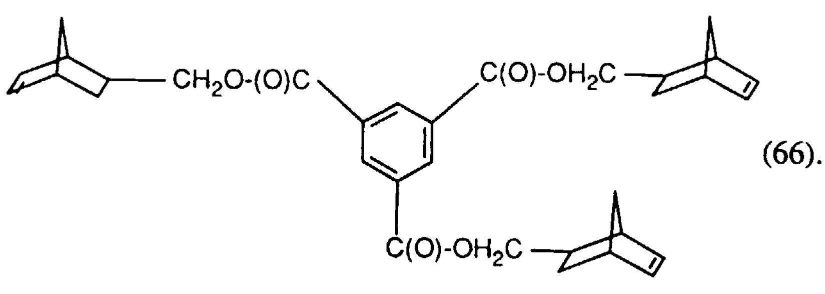
(66).

Als vierwertige Brückengruppen kommen zum Beispiel solche der Formel (f7) in Frage,

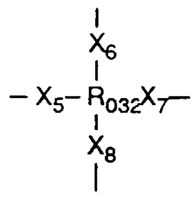

(f7),

worin

$X_5$, $X_6$, $X_7$ und $X_8$ -C(O)O-, $-CH_2$-O(O)C- oder -C(O)-$NR_{029}$- bedeuten, und
$R_{032}$ einen vierwertigen aliphatischen Kohlenwasserstoffrest mit 4 bis 20, bevorzugt 4 bis 12 C-Atomen, einen vierwertigen unsubstituierten oder mit $C_1$-$C_4$-Alkyl oder $C_1$-$C_4$-Alkoxy substituierten cycloaliphatischen Rest mit 4 bis 8, vorzugsweise 5 oder 6 Ring-C-Atomen, oder einen vierwertigen unsubstituierten oder mit $C_1$-$C_4$-Alkyl oder $C_1$-$C_4$-Alkoxy substituierten aromatischen Rest mit 6 bis 18, vorzugsweise 6 bis 12 C-Atomen, einen vierwertigen unsubstituierten oder mit $C_1$-$C_4$-Alkyl oder $C_1$-$C_4$-Alkoxy substituierten araliphatischen Rest mit 7 bis 19, bevorzugt 7 bis 12 C-Atomen, oder einen vierwertigen unsubstituierten oder mit $C_1$-$C_4$-Alkyl oder $C_1$-$C_4$-Alkoxy substituierten heteroaromatischen Rest mit 3 bis 13 C-Atomen und 1 bis drei Heteroatomen aus der Gruppe -O-, -N- und -S- darstellt, und
$R_{029}$ H oder $C_1$-$C_6$-Alkyl ist.

Einige Beispiele von tetrafunktionellen Verbindungen, von denen sich $R_{032}$ ableiten kann, sind Pentaerythrit, Pyromellithsäure und 3,4,3',4'-Biphenyltetracarbonsäure.

Als Herstellungsmethoden können die gleichen Methoden angewendet werden wie zur Herstellung der zuvorgenannten Verbindungen mit einem zwei- oder dreiwertigen Rest.

Beispiele für Verbindungen der Formel (fl) mit einer vierwertigen Brückengruppe sind

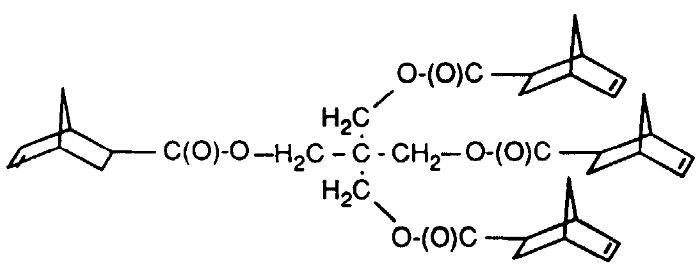

(67)

und

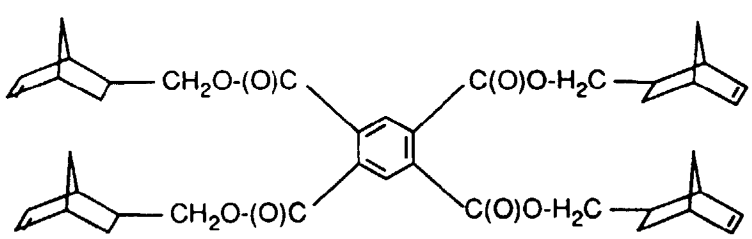

(68).

Als Beispiel für mehr als vierwertige Verbindungen, von denen sich die Brückengruppe ableiten kann, seien Polyole wie Dipentaerythrit oder Hexahydroxyhexan genannt, die mit entsprechenden Cycloolefinmonocarbonsäuren umgesetzt werden können.

Erfindungsgemäss besonders bevorzugt werden Polymere und Comonomere verwendet, die nur Kohlenstoff und Wasserstoff enthalten. Ganz besonders bevorzugt ist Norbornen als Comonomer in Mengen von zum Beispiel 20

bis 60 Gew.-% enthalten.

Die comonomeren Cycloolefine können in einer Menge von 0,01 bis 99 Gew.-%, bevorzugt 0,1 bis 95 Gew.-%, besonders bevorzugt 1 bis 90 Gew.-%, und insbesondere bevorzugt 5 bis 80 Gew.-% enthalten sein, bezogen auf die in der Zusammensetzung vorhandenen Polymeren und Monomeren.

Die erfindungsgemässe Zusammensetzung kann Lösungsmittel enthalten, besonders wenn sie zur Herstellung von Beschichtungen verwendet wird.

Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactam, ε-Caprclactarn, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Die Wahl der Lösungsmittel richtet sich hauptsächlich nach den Eigenschaften der Einkomponenten-Katalysatoren, die durch die verwendeten Lösungsmittel nicht desaktiviert werden dürfen. Ruthenium- und Osmiumkatalysatoren können zusammen mit polaren protischen Lösungsmitteln wie zum Beispiel Wasser oder Alkanolen verwendet werden. Diese Katalysatoren sind auch luft-, sauerstoff- und feuchtigkeitsunempfindlich, und entsprechende vernetzbare Zusammensetzungen können ohne besondere Schutzvorkehrungen verarbeitet werden. Bei den anderen Einkomponenten-Katalysatoren empfiehlt sich der Ausschluss von Sauerstoff und Feuchtigkeit. Die Zusammensetzungen sind lagerstabil, wobei wegen der Lichtempfindlichkeit eine Lagerung im Dunkeln zu empfehlen ist.

Die erfindungsgemässe Zusammensetzung kann Formulierungshilfstoffe und Zusätze zur Verbesserung der physikalischen bzw. mechanischen Eigenschaften enthalten. Als solche sind die oben als Lösungsmittel angegebenen Verbindungen geeignet. Bekannte Hilfsstoffe sind Stabilisatoren wie zum Beispiel Antioxidantien und Lichtschutzmittel, Weichmacher, Farbstoffe, Pigmente, Tixotropiemittel, Zähigkeitsverbesserer, Antistatika, Gleitmittel und Entformungshilfsmittel.

Die erfindungsgemässen Zusammensetzungen können selbst dann polymerisiert werden, wenn sie Füllstoffe oder Verstärkerfüllstoffe auch in höheren Mengen enthält. Diese Füllstoffe können in Mengen von 0,1 bis 90 Gew.-%, bevorzugt 0,5 bis 80 Gew.-%, bevorzugter 1 bis 70 Gew.-%, besonders bevorzugt 5 bis 60 Gew.-% und besonders bevorzugt 10 bis 50 Gew.-% enthalten sein, bezogen auf die anwesenden Monomeren.

Geeignete Verstärkerfüllstoffe sind besonders solche mit einem Längen- zu Breitenverhältnis von mindestens 2. Häufig handelt es sich um faser- oder nadelförmige Füllstoffe. Einige Beispiele sind Kunststoffasern, Kohlenstoffasern, Glasfasern, silikatische Fasern wie Asbest, Whisker und Holzfasern.

Geeignete Füllstoffe sind Metallpulver, Holzmehl, Glaspulver, Glaskugeln, Halbmetallund Metalloxide wie zum Beispiel $SiO_2$ (Aerosile, Quarz), Korund und Titanoxid, Halbmetall- und Metallnitride wie zum Beispiel Siliziumnitrid, Bornitrid und Aluminiumnitrid, Halbmetall- und Metallcarbide (SiC), Metallcarbonate (Dolomit, $CaCO_3$), Metallsulfate (Baryt, Gips), Gesteinsmehle und natürliche oder synthetische Mineralien hauptsächlich aus der Silikatreihe wie zum Beispiel Talk, Wollastonit, Bentonit und andere.

Katalytische Mengen für den Einkomponentenkatalysator bedeutet im Rahmen der vorliegenden Erfindung bevorzugt eine Menge von 0,001 bis 20 Mol-%, bevorzugter 0,01 bis 15 Mol-%, besonders bevorzugt 0,01 bis 10 Mol-%, und ganz besonders bevorzugt 0,01 bis 5 Mol-%, bezogen auf die Menge des Monomers. Auf Grund der hohen photokatalytischen Aktivität bei Phosphingruppen enthaltenden Ruthenium- und Osmiumkatalysatoren sind in diesem Fall Mengen von 0,001 bis 2 Gew.-% ganz besonders bevorzugt.

Vorteilhaft enthalten die erfindungsgemässen Zusammensetzungen die nachfolgenden neuen thermischen und/oder photochemischen Einkomponenten-Katalysatoren:

1. Strahlungsaktivierbare, thermostabile Ruthenium- oder Osmiumverbindungen, die mindestens einen photolabilen an das Ruthenium- oder Osmiumatom gebundenen Liganden besitzen, und deren restliche Koordinationsstellen mit nicht-photolabilen Liganden abgesättigt sind.

Thermostabilität bedeutet im Rahmen der Erfindung, dass die photokatalytisch aktiven Metallverbindungen unter Erwärmen keine aktiven Spezies für die Ringöffnungs-Metathese-Polymerisation bilden. Der Katalysator kann zum Beispiel bei Raumtemperatur bis leicht erhöhter Temperatur wie etwa + 40°C innerhalb von Wochen unter Lichtausschluß keine Ringöffnungs-Metathese-Polymerisation initiieren. Während dieser Zeit wird nur eine unbedeutende

Menge an Monomer (weniger als 0,2 Gew.-%) umgesetzt. Die Thermostabilität kann zum Beispiel bestimmt werden, indem man eine Toluol-Lösung mit 20 Gew.-% Monomer und 0,33 Gew.-% Metallkatalysator bei 50°C 96 Stunden in der Dunkelheit lagert und eine eventuell gebildete Polymermenge, erkennbar am Viskositätsaufbau und durch Ausfällen in einem Fällungsmittel, beispielsweise Ethanol, Filtration und Trocknen quantitativ bestimmbar, nicht mehr als 0,5 Gew.-% und bevorzugt nicht mehr als 0,2 Gew.-% beträgt.

Als Liganden für die erfindungsgemäss zu verwendenden Ruthenium- und Osmiumverbindungen werden organische oder anorganische Verbindungen, Atome oder Ionen bezeichnet, die an ein Metallzentrum koordiniert sind.

Photolabiler Ligand bedeutet im Rahmen der vorliegenden Erfindung, daß bei Bestrahlung des Katalysators durch Licht im sichtbaren oder ultravioletten Spektralbereich der Ligand vom Katalysator dissoziiert und eine katalytisch aktive Spezies für die Metathesepolymerisation bildet. Erfindungsgemäß bevorzugt sind nicht-ionische photolabile Liganden.

Bei den photolabilen Liganden kann es sich zum Beispiel um Stickstoff ($N_2$), um unsubstituierte oder mit OH, $C_1$-$C_4$-Alkyl, $C_1$-$C_4$-Alkoxy, $C_6$-$C_{12}$-Aryl oder Halogen substituierte monocyclische, polycyclische oder kondensierte Arene mit 6 bis 24, bevorzugt 6 bis 18 und besonders bevorzugt 6 bis 12 C-Atomen oder um unsubstituierte oder mit $C_1$-$C_4$-Alkyl, $C_1$-$C_4$-Alkoxy oder Halogen substituierte monocyclische Heteroarene, kondensierte Heteroarene oder kondensierte Aren-Heteroarene mit 3 bis 22, bevorzugt 4 bis 16 und besonders 4 bis 10 C-Atomen und 1 bis 3 Heteroatomen ausgewählt aus der Gruppe O, S und N; oder um unsubstituierte oder mit $C_1$-$C_4$-Alkyl, $C_1$-$C_4$-Alkoxy oder Halogen substituierte aliphatische, cycloaliphatische, aromatische oder araliphatische Nitrile mit 1 bis 22, bevorzugt 1 bis 18, besonders bevorzugt 1 bis 12 und ganz besonders bevorzugt 1 bis 7 C-Atomen handeln. Die bevorzugten Substituenten sind Methyl, Ethyl, Methoxy, Ethoxy, Fluor, Chlor und Brom. Die Arene und Heteroarene sind bevorzugt mit ein oder zwei Resten substituiert und besonders bevorzugt unsubstituiert. Unter den Heteroarenen sind die elektronenreichen Heteroarene bevorzugt. Die Arene und Heteroarene können sowohl n- als auch $\sigma$-gebunden sein; im letzten Fall handelt es sich dann um die entsprechenden Aryl- und Heteroarylreste. Das Aryl enthält bevorzugt 6 bis 18, besonders bevorzugt 6 bis 12 C-Atome. Das Heteroaryl enthält bevorzugt 4 bis 16 C-Atome.

Einige Beispiele für Arene und Heteroarene sind Benzol, p-Cumen, Biphenyl, Naphthalin, Anthracen, Acenaphthen, Fluoren, Phenanthren, Pyren, Chrysen, Fluoranthren, Furan, Thiophen, Pyrrol, Pyridin, $\gamma$-PyTan, $\gamma$-Thiopyran, Pyrimidin, Pyrazin, Indol, Cumaron, Thionaphthen, Carbazol, Dibenzofuran, Dibenzothiophen, Pyrazol, Imidazol, Benzimidazol, Oxazol, Thiazol, Isoxazol, Isothiazol, Chinolin, Isochinolin, Acridin, Chromen, Phenazin, Phenoxazin, Phenothiazin, Triazine, Thianthren und Purin. Bevorzugte Arene und Heteroarene sind Benzol, Naphthalin, Thiophen und Benzthiophen. Ganz besonders bevorzugt ist das Aren Benzol und das Heteroaren Thiophen.

Die Nitrile können zum Beispiel mit Methoxy, Ethoxy, Fluor oder Chlor substituiert sein; bevorzugt sind die Nitrile unsubstituiert. Die Alkylnitrile sind bevorzugt linear. Einige Beispiele für Nitrile sind Acetonitril, Propionitril, Butyronitril, Pentylnitril, Hexylnitril, Cyclopentyl- und Cyclohexylnitril, Benzonitril, Methylbenzonitril, Benzylnitril und Naphthylnitril. Bei den Nitrilen handelt es sich bevorzugt um lineare $C_1$-$C_4$-Alkylnitrile oder Benzonitril. Von den Alkylnitrilen ist Acetonitril besonders bevorzugt.

In einer bevorzugten Untergruppe handelt es sich bei den photolabilen Liganden um $N_2$, unsubstituiertes oder mit ein bis drei $C_1$-$C_4$-Alkyl substituiertes Benzol, Thiophen, Benzonitril oder Acetonitril.

Nicht-photolabiler Ligand (auch als stark koordinierender Ligand bezeichnet) bedeutet im Rahmen der vorliegenden Erfindung, daß der Ligand bei Bestrahlung des Katalysators im sichtbaren oder nahen ultravioletten Spektralbereich nicht oder nur in unwesentlichem Ausmaß vom Katalysator dissoziiert.

Bei den nicht-photolabilen Liganden kann es sich zum Beispiel um die Heteroatome O, S oder N enthaltende und solvatisierende anorganische und organische Verbindungen, die häufig auch als Lösungsmittel verwendet werden, oder um unsubstituiertes oder mit $C_1$-$C_4$-Alkyl, $C_1$-$C_4$-Alkoxy, $(C_1$-$C_4$-$Alkyl)_3Si$ oder $(C_1$-$C_4$-$Alkyl)_3SiO$- substituiertes Cyclopentadienyl oder Indenyl handeln. Beispiele für solche Verbindungen sind $H_2O$, $H_2S$, $NH_3$; gegebenenfalls halogenierte, besonders fluorierte oder chlorierte aliphatische oder cycloaliphatische Alkohole oder Merkaptane mit 1 bis 18, bevorzugt 1 bis 12 und besonders bevorzugt 1 bis 6 C-Atomen, aromatische Alkohole oder Thiole mit 6 bis 18, bevorzugt 6 bis 12 C-Atomen, araliphatische Alkohole oder Thiole mit 7 bis 18, bevorzugt 7 bis 12 C-Atomen; aliphatische, cycloaliphatische, araliphatische oder aromatische Ether, Thioether, Sulfoxide, Sulfone, Ketone, Aldehyde, Carbonsäureester, Lactone, gegebenenfalls N-$C_1$-$C_4$-mono- oder -dialkylierte Carbonsäureamide mit 2 bis 20, bevorzugt 2 bis 12 und besonders 2 bis 6 C-Atomen, und gegebenenfalls N-$C_1$-$C_4$-alkyliene Lactame; aliphatische, cycloaliphatische, araliphatische oder aromatische, primäre, sekundäre und tertiäre Amine mit 1 bis 20, bevorzugt 1 bis 12 und besonders bevorzugt 1 bis 6 C-Atomen; und gegebenenfalls substituierte Cyclopentadienyle wie zum Beispiel Cyclopentadienyl, Indenyl, ein- oder mehrfach methylierte oder trimethylsilylierte Cyclopentadienyle oder Indenyle.

Beispiele für solche nicht-photolabilen Liganden sind Methanol, Ethanol, n- und i-Propanol, n-, i- und t-Butanol, 1,1,1-Trifluorethanol, Bistrifluormethylmethanol, Tristrifluormethylrnethanol, Pentanol, Hexanol, Methyl- oder Ethylmerkaptan, Cyclopentanol, Cyclohexanol, Cyclohexylmerkaptan, Phenol, Methylphenol, Fluorphenol, Phenylmerkaptan, Benzylmerkaptan, Benzylalkohol, Diethylether, Dimethylether, Diisopropylether, Di-n- oder Di-t-butylether, Tetrahydrofuran, Tetrahydropyran, Dioxan, Diethylthioether, Tetrahydrothiophen, Dimethylsulfoxid, Diethylsulfoxid, Tetra-

und Pentamethylensulfoxid, Dimethylsulfon, Diethylsulfon, Tetra- und Pentamethylensulfon, Aceton, Methylethylketon, Diethylketon, Phenylmethylketon, Methylisobutylketon, Benzylmethylketon, Acetaldehyd, Propionaldehyd, Trifluoracetaldehyd, Benzaldehyd, Essigsäureethylester, Butyrolacton, Dimethylformamid, Dimethylacetamid, Pyrrolidon und N-Methylpyrrolidon, Indenyl, Cyclopentadienyl, Methyl- oder Dimethyl- oder Pentamethylcyclopentadienyl und Trimethylsilylcyclopentadienyl.

Die primären Amine können der Formel $R_{25}NH_2$, die sekundären Amine der Formel $R_{25}R_{26}NH$ und die tertiären Amine der Formel $R_{25}R_{26}R_{27}N$ entsprechen, worin $R_{25}$ $C_1$-$C_{18}$-Alkyl, unsubstituiertes oder mit $C_1$-$C_4$-Alkyl oder $C_1$-$C_4$-Alkoxy substituiertes $C_5$-oder $C_6$-Cycloalkyl, oder unsubstituiertes oder mit $C_1$-$C_4$-Alkyl oder $C_1$-$C_4$-Alkoxy substituiertes $C_6$-$C_{18}$-Aryl oder $C_7$-$C_{12}$-Aralkyl darstellt, $R_{26}$ unabhängig die Bedeutung von $R_{25}$ hat oder $R_{25}$ und $R_{26}$ gemeinsam Tetramethylen, Pentamethylen, 3-Oxa-1,5-pentylen oder $-CH_2-CH_2-NH-CH_2-CH_2-$ oder $-CH_2-CH_2-N(C_1$-$C_4$-Alkyl)$-CH_2-CH_2-$ bedeuten, $R_{25}$ und $R_{26}$ unabhängig voneinander die zuvor angegebenen Bedeutungen haben und $R_{27}$ unabhängig die Bedeutung von $R_{25}$ hat. Das Alkyl enthält bevorzugt 1 bis 12 und besonders bevorzugt 1 bis 6 C-Atome. Das Aryl enthält bevorzugt 6 bis 12 C-Atome und das Aralkyl enthält bevorzugt 7 bis 9 C-Atome. Beispiele für Amine sind Methyl-, Dimethyl-, Trimethyl-, Ethyl-, Diethyl-, Triethyl-, Methyl-ethyl-, Dimethyl-ethyl, n-Propyl-, Di-n-propyl-, Tri-n-butyl-, Cyclohexyl-, Phenyl- und Benzylamin, sowie Pyrrolidin, N-Methylpyrrolidin, Piperidin, Piperazin, Morpholin und N-Methylmorpholin. In einer bevorzugten Untergruppe handelt es sich bei den nicht-photolabilen Liganden um $H_2O$, $NH_3$ und unsubstituierte oder teilweise oder vollständig fluorierte $C_1$-$C_4$-Alkanole. Ganz besonders bevorzugt sind $H_2O$, $NH_3$, Cyclopentadienyl, Methanol und Ethanol.

Bei den erfindungsgemäss zu verwendenden Ruthenium- und Osmiumverbindungen kann es sich um ein- oder mehrkernige, zum Beispiel solche mit zwei oder drei Metallzentren handeln. Die Metallatome können hierbei über eine Brückengruppe oder Metall-Metall-Bindungen verbunden sein. Unter den Verbindungen mit mehr Metallzentren sind solche der Formel VIIIa oder VIIIb

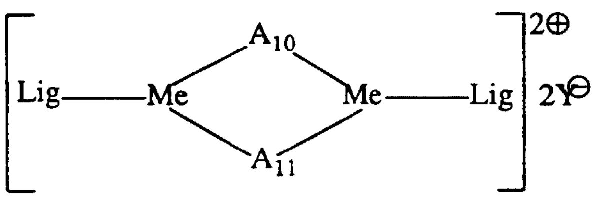

(VIIIa)

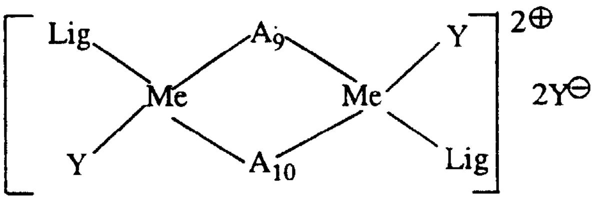

(VIIIb)

bevorzugt, worin Lig für einen photolabilen Liganden und Me für Ru oder Os stehen, $A_9$, $A_{10}$ und $A_{11}$ eine bivalente Brückengruppe darstellen, und $Y^{\ominus}$ ein einwertiges nicht koordinierendes Anion bedeutet. Die Brückengruppe ist bevorzugt ionisch und besonders bevorzugt ein Halogenid, ganz besonders bevorzugt Chlorid, Bromid oder Iodid. Bei dem photolabilen Liganden handelt es sich bevorzugt um gleiche oder verschiedene Arene und $Y^{\ominus}$ kann die nachfolgend aufgeführten Anionen und ganz besonders Chlorid, Bromid oder Iodid darstellen. Ein Beispiel für solche Komplexe ist $[C_6H_6Ru(Cl)_3RuC_6H_6]Cl$. Bevorzugte erfindungsgemäße Katalysatoren entsprechen der Formel IX

$$[(Me^{+n})(L_1^{z1})_m(L_2^{z2})_o(L_3^{z3})_p(L_4^{z4})_q(L_5^{z5})_r(L_6^{z6})_s](L_7^{z7})_t \quad (IX)$$

worin

Me Ruthenium oder Osmium;
n 0, 1, 2, 3, 4, 5, 6, 7 oder 8;
$L_1$ einen photolabilen Liganden;
$L_2$, $L_3$, $L_4$, $L_5$ und $L_6$ unabhängig voneinander einen nicht-photolabilen oder einen photolabilen Liganden;
m 1,2,3,4,5,oder 6;
o, p, q, r, und s unabhängig voneinander 0, 1, 2, 3, 4 oder 5;

$z_1$, $z_2$, $z_3$, $z_4$, $z_5$, $z_6$ und $z_7$ unabhängig voneinander -4, -3, -2, -1, 0, +1 oder +2; und
$L_7$ ein nicht koordinierendes Kation oder Anion bedeuten;

wobei die Summe von m + o + p + q + r + s eine ganze Zahl von 2 bis 6 und t den Quotienten aus $(n + m \bullet z_1 + o \bullet z_2 + p \bullet z_3 + q \bullet z_4 + r \bullet z_5 + s \bullet z_6)/z_7$ bedeutet

In der Formel IX steht $L_7$ bevorzugt für Halogen (zum Beispiel Cl, Br und I), das Anion einer Sauerstoffsäure, $BF_4$, $PF_6$, $SiF_6$ oder $AsF_6$.

Bei den Anionen von Sauerstoffsäuren kann es sich zum Beispiel um Sulfat, Phosphat, Perchlorat, Perbromat, Periodat, Antimonat, Arsenat, Nitrat, Carbonat, das Anion einer $C_1$-$C_8$-Carbonsäure wie zum Beispiel Formiat, Acetat, Propionat, Butyrat, Benzoat, Phenylacetat, Mono-, Di- oder Trichlor- oder -fluoracetat, Sulfonate wie zum Beispiel Methylsulfonat, Ethylsulfonat, Propylsulfonat, Butylsulfonat, Trifluormethylsulfonat (Triflat), gegebenenfalls mit $C_1$-$C_4$-Alkyl, $C_1$-$C_4$-Alkoxy oder Halogen, besonders Fluor, Chlor oder Brom substituiertes Phenylsulfonat oder Benzylsulfonat, wie zum Beispiel Tosylat, Mesylat, Brosylat, p-Methoxy- oder p-Ethoxyphenylsulfonat, Pentafluorphenylsulfonat oder 2,4,6-Triisopropylsulfonat, und Phosphonate wie zum Beispiel Methylphosphonat, Ethylphosphonat, Propylphosphonat, Butylphosphonat, Phenylphosphonat, p-Methylphenylphosphonat oder Benzylphosphonat handeln.

Vorzugsweise steht in der Formel IX Me für Ruthenium, besonders für $Ru^{2+}$.

Eine besonders hervorzuhebende Gruppe von Verbindungen der Formel IX ist jene, worin die Liganden $L_1$, $L_2$, $L_3$, $L_4$, $L_5$ und $L_6$ unabhängig voneinander unsubstituierte oder mit $C_1$-$C_4$-Alkyl, $C_1$-$C_4$-Alkoxy oder Halogen substituierte aliphatische, cycloaliphatische, aromatische oder araliphatische Nitrile mit 1 bis 22 C-Atomen oder $C_6$-$C_{18}$-Aryl bedeuten; oder $L_1$, $L_2$ und $L_3$ gemeinsam unsubstituierte oder mit -OH, $C_1$-$C_4$-Alkyl, $C_1$-$C_4$-Alkoxy, $C_6$-$C_{12}$-Aryl oder Halogen substituierte monocyclische, polycyclische oder kondensierte Arene mit 6 bis 24, bevorzugt 6 bis 18 und besonders bevorzugt 6 bis 12 C-Atomen oder unsubstituierte oder mit -OH, $C_1$-$C_4$-Alkyl, $C_1$-$C_4$-Alkoxy oder Halogen substituierte monocyclische Heteroarene, kondensierte Heteroarene oder kondensierte Aren-Heteroarene mit 4 bis 22 C-Atomen und 1 bis 3 Heteroatomen ausgewählt aus der Gruppe O, S und N darstellen, und $L_4$, $L_5$ und $L_6$ gemeinsam die gleiche Bedeutung haben, oder einzeln unabhängig voneinander $N_2$ oder besagtes Nitril oder besagtes $C_6$-$C_{18}$-Aryl darstellen.

Eine bevorzugte Untergruppe der obigen Verbindungen der Formel IX sind solche, worin die Liganden $L_1$, $L_2$, $L_3$, $L_4$, $L_5$ und $L_6$ unabhängig voneinander $N_2$, $C_1$-$C_{20}$-Alkylnitril, $C_6$-$C_{12}$-Arylnitril, $C_7$-$C_{12}$-Aralkylnitril, $C_6$-$C_{12}$-Aryl oder $L_1$, $L_2$ und $L_3$ je gemeinsam die Gruppen $A_1$ oder $A_2$ bedeuten

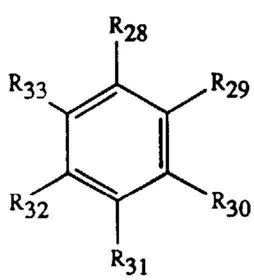 $(A_1)$, 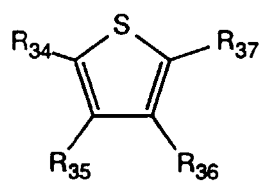 $(A_2)$;

worin

$R_{28}$, $R_{29}$, $R_{30}$, $R_{31}$, $R_{32}$, $R_{33}$, $R_{34}$, $R_{35}$, $R_{36}$ und $R_{37}$ unabhängig voneinander Wasserstoff, $C_1$-$C_{20}$-Alkyl, $C_1$-$C_{20}$-Alkoxy, Aryl oder $SiR_{38}R_{39}R_{40}$, wobei bei den Gruppen $A_1$ und $A_2$ an benachbarten Kohlenstoffatomen ein aromatischer oder heteroaromatischer Ring, dessen Heteroatome aus Sauerstoff, Schwefel und Stickstoff ausgewählt sind, ankondensiert sein kann, bedeuten; und $R_{38}$, $R_{39}$ und $R_{40}$ unabhängig voneinander $C_1$-$C_{12}$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl, vorzugsweise $C_1$-$C_8$-Alkyl, Phenyl oder Benzyl, besonders bevorzugt $C_1$-$C_4$-Alkyl, Phenyl oder Benzyl bedeuten, und
$L_4$, $L_5$ und $L_6$ ebenfalls gemeinsam diese Bedeutung haben oder je einzeln $N_2$, besagte Nitrile oder besagtes $C_6$-$C_{12}$-Aryl darstellen, oder ein Aren oder Heteroaren bedeuten.

Aus dieser hervorzuhebenden Gruppe von Verbindungen der Formel IX sind diejenigen bevorzugt, worin $L_1$, $L_2$, $L_3$, $L_4$, $L_5$ und $L_6$ unabhängig voneinander $C_1$-$C_{12}$-Alkylnitril, $C_6$-$C_{12}$-Arylnitril oder $L_1$, $L_2$ und $L_3$ je gemeinsam die Gruppen $A_1$ oder $A_2$ bedeuten und $L_4$, $L_5$ und $L_6$ ebenfalls gemeinsam diese Bedeutung haben oder je einzeln $N_2$, besagte Nitrile oder besagtes Aren oder Heteroaren der Formeln $A_1$ und $A_2$ darstellen, worin $R_{28}$, $R_{29}$, $R_{30}$, $R_{31}$, $R_{32}$, $R_{33}$, $R_{34}$, $R_{35}$, $R_{36}$ und $R_{37}$ unabhängig voneinander für Wasserstoff, $C_1$-$C_6$-Alkyl, $C_1$-$C_6$-Alkoxy, $SiR_{38}R_{39}R_{40}$ oder

Phenyl stehen, wobei bei den Gruppen $A_1$ und $A_2$ an benachbarten Kohlenstoffatomen ein Benzolring ankondensiert sein kann, und $R_{38}$, $R_{39}$ und $R_{40}$ Methyl, Ethyl oder Phenyl sind.

In einer ganz besonders bevorzugten Ausführungsform des erfindungsgemäßen Verfahrens entspricht der verwendete Katalysator der Formel IX, worin

$L_1$, $L_2$, $L_3$, $L_4$, $L_5$ und $L_6$ unabhängig voneinander Methylnitril, Ethylnitril oder Phenylnitril, oder $L_1$, $L_2$ und $L_3$ je gemeinsam die Gruppen $A_1$ oder $A_2$ bedeuten und $L_4$, $L_5$ und $L_6$ ebenfalls gemeinsam diese Bedeutung haben oder je einzeln besagte Nitrile darstellen, worin $R_{28}$, $R_{29}$, $R_{30}$, $R_{31}$, $R_{32}$, $R_{33}$, $R_{34}$, $R_{35}$, $R_{36}$ und $R_{37}$ unabhängig voneinander für Wasserstoff, Methyl, Methoxy oder Phenyl stehen, wobei bei den Gruppen $A_1$ und $A_2$ an benachbarten Kohlenstoffatomen ein Benzolring ankondensiert sein kann.

Eine andere besonders bevorzugte Untergruppe der Verbindungen der Formel IX sind solche, worin $L_1$, $L_2$ und $L_3$ gemeinsam unsubstituierte oder mit $C_1$-$C_4$-Alkyl, $C_1$-$C_4$-Alkoxy, $C_6$-$C_{12}$-Aryl oder Halogen substituierte monocyclische, polycyclische oder kondensierte Arene mit 6 bis 24, bevorzugt 6 bis 18 und besonders bevorzugt 6 bis 12 C-Atomen oder unsubstituierte oder mit $C_1$-$C_4$-Alkyl, $C_1$-$C_4$-Alkoxy oder Halogen substituierte monocyclische Heteroarene, kondensierte Heteroarene oder kondensierte Aren-Heteroarene mit 4 bis 22, bevorzugt 4 bis 16 und besonders 4 bis 10 C-Atomen und 1 bis 3 Heteroatomen ausgewählt aus der Gruppe O, S und N darstellen, und $L_4$, $L_5$ und $L_6$ einen nicht-photolabilen Liganden bedeuten, wobei die vorherigen Bevorzugungen auch hier gelten.

$L_1$, $L_2$ und $L_3$ stellen in dieser Untergruppe bevorzugt Benzol oder Naphthalin dar, und der nicht-photolabile Ligand bedeutet bevorzugt $H_2O$, $NH_3$, unsubstituiertes oder mit Fluor substituiertes $C_1$-$C_4$-Alkanol oder -Alkanthiol, aliphatische Ether, Thioether, Sulfoxide oder Sulfone mit 2 bis 8 C-Atomen, Dimethylformamid oder N-Methylpyrrolidon.

In einer weiteren bevorzugten Untergruppe von Verbindungen der Formel X handelt es sich um Ruthenium- und Osmiumverbindungen der Formel X

$$[L_1Me(L_8)_5]^{2\oplus}[Y_1^{x\ominus}]_{2/x} \qquad (X),$$

worin $L_1$ ein photolabiler Ligand und $L_8$ ein nicht-photolabiler Ligand sind, Me Ru oder Os bedeutet, $Y_1$ ein nicht koordinierendes Anion darstellt und x für die Zahlen 1, 2 oder 3 steht. Für die photolabilen Liganden, nicht-photolabilen Liganden, Me und $Y_1$ gelten die vorher aufgeführten Bevorzugungen. Besonders bevorzugt ist $L_1$ $N_2$ oder ein Nitril wie zum Beispiel $C_1$-$C_4$-Alkylnitril (Acetonitril), Benzonitril oder Benzylnitril, $L_8$ $NH_3$ oder ein Amin mit 1 bis 12 C-Atomen, $Y_1$ ein nicht koordinierendes Anion und x die Zahl 1 oder 2.

Für die vorliegende Erfindung besonders geeignete Katalysatoren sind (tos bedeutet Tosylat und tis bedeutet 2,4,6-Triisopropylphenylsulfonat): $Ru(CH_3CN)_6(tos)_2$, $Ru(CH_3CH_2CN)_6(tos)_2$, $Ru(CH_3CN)_6(CF_3SO_3)_2$, $Ru(CH_3CH_2CN)_6(CF_3SO_3)_2$, $Ru(C_6H_6)_2(tos)_2$, $[Ru(C_6H_6)(C_6H_5OCH_3)](BF_4)_2$, $[Ru(C_6H_6)(C_6H_5$i-propyl$)](BF_4)_2$, $[Ru(C_6H_6)$(1,3,5-trimethylphenol)$](BF_4)_2$, $[Ru(C_6H_6)$(hexamethylbenzol)$](BF_4)_2$, $[Ru(C_6H_6)$(biphenyl)$](BF_4)_2$, $[Ru(C_6H_6)$(chrysen)$](BF_4)_2$, $[Ru(C_6H_6)$(naphtalin)$](BF_4)_2$, [Ru(cyclopentadienyl)(4-methylcumyl)]$PF_6$, [Ru(cyanophenyl)$_6$](tos)$_2$, [Ru(cyanophenyl)$_6$]$(CF_3SO_3)_2$, $[Ru(C_6H_6)$(tetramethylthiophen)$_3$](tos)$_2$, $[Ru(C_6H_6)(CH_3CN)_3]$(tos)$_2$, $[Ru(C_6H_6)$(tetramethylthiophen)$_3](CF_3SO_3)_2$, $[Ru(C_6H_6)(CH_3CN)_3](CF_3SO_3)_2$, $[Ru(C_6H_6)(CH_3OH)_3]$(tos)$_2$, $[Ru(C_6H_6)(CH_3OH)_3]$(tis)$_2$, $[Os(NH_3)_5N_2](PF_6)_2$, $[Ru(NH_3)_5N_2](PF_6)_2$, $[Ru(NH_3)_5(CH_3CN)]BF_4$, $[Ru(C_6H_6(NH_3)_3]$(tis)$_2$, $[Ru(C_6H_6$(Tetrahydrothiophen)$_3](CF_3SO_3)_2$, $[Ru((CH_3)_2S)_3C_6H_6]$(tos)$_2$, [Ru(Dimethylsulfoxid)$_3C_6H_6](PF_6)_2$, [Ru(Dimethylformamid)$_3C_6H_6](PF_6)_2$, $[Ru(C_6H_6)Cl_2]_2$ und $[Os(C_6H_6)Cl_2]_2$.

Erfindungsgemäß zu verwendende Ruthenium- und Osmium-Katalysatoren sind entweder bekannt und teilweise im Handel erhältlich oder analog bekannter Verfahren herstellbar. Derartige Katalysatoren und ihre Herstellung werden beispielsweise in Gilkerson, W.R., Jackson, M.D., J. Am. Chem. Soc. 101:4096-411 (1979), Bennett, M.A., Matheson, T.W., J. Organomet. Chem. 175:87-93 (1979), Moorehouse, S., Wilkinson, G., J. Chem. Soc.; Dalton Trans., 2187-2190 (1974) und Luo, S., Rauchfuss, T.B., Wilson, S.R., J. Am. Chem. Soc. 114:8515-8520 (1992) beschrieben.

2. Thermisch oder mit Strahlung aktivierbare thermostabile Molybdän(VI)- oder Wolfram(VI)verbindungen, die mindestens zwei Methylgruppen oder zwei monosubstituierte Methylgruppen am Metall gebunden haben, wobei der Substituent kein Wasserstoffatom in $\alpha$-Stellung enthält.

Die übrigen Valenzen des Molybdän- und Wolframs sind bevorzugt mit thermostabilen Neutralliganden abgesättigt, die in grosser Vielzahl bekannt sind. Die Zahl der Neutralliganden kann auch die stöchiometrisch mögliche Zahl überschreiten (Solvate). Thermostabilität ist vorn erläutert worden. Bei Temperaturen über 50°C, zum Beispiel 60 bis 300°C, werden diese Molybdän- und Wolframverbindungen auch thermisch aktiviert.

Bei den erfindungsgemäss zu verwendenden Molybdän- und Wolframverbindungen kann es sich um solche handeln, die ein Metallatom oder zwei über eine Einfach-, Doppel- oder Dreifachbindung verbundene Metallatome enthalten. Die am Metall gebundene Methylgruppe oder monosubstituierte Methylgruppe ist mindestens zweimal, besonders bevorzugt zwei- bis sechsmal und insbesondere bevorzugt zwei- bis viermal als Ligand gebunden. Dieser Ligand entspricht bevorzugt der Formel XI,

$$-CH_2-R \qquad (XI),$$

worin R H, $-CF_3$, $-SiR_{38}R_{39}R_{40}$, $-CR_{41}R_{42}R_{43}$, unsubstituiertes oder mit $C_1$-$C_6$-Alkyl oder $C_1$-$C_6$-Alkoxy substituiertes $C_6$-$C_{16}$-Aryl oder $C_4$-$C_{15}$-Heteroaryl mit 1 bis 3 Heteroatomen aus der Gruppe O, S und N darstellt; und $R_{41}$, $R_{42}$ und $R_{43}$ unabhängig voneinander $C_1$-$C_{10}$- Alkyl bedeuten, das unsubstituiert oder mit $C_1$-$C_{10}$-Alkoxy substituiert ist, oder $R_{41}$ und $R_{42}$ diese Bedeutung haben und $R_{43}$ $C_6$-$C_{10}$-Aryl oder $C_4$-$C_9$-Hetercaryl ist, das unsubstituiert oder mit $C_1$-$C_6$-Alkyl oder $C_1$-$C_6$-Alkoxy substituiert ist; und
$R_{38}$, $R_{39}$ und $R_{40}$ die oben angegebenen Bedeutungen haben.

Bedeuten $R_{38}$ bis $R_{43}$ Alkyl, so kann dieses linear oder verzweigt sein und bevorzugt 1 bis 8 und besonders bevorzugt 1 bis 4 C-Atome enthalten. Bedeuten $R_{38}$ bis $R_{43}$ Aryl, so handelt es sich bevorzugt um Phenyl oder Naphthyl.
Bedeutet R in Formel XI Aryl, so handelt es sich bevorzugt um Phenyl oder Naphthyl. Bedeutet R in Formel XI Heteroaryl, so handelt es sich bevorzugt um Pyridinyl, Furanyl, Thiophenyl oder Pyrrolyl.
Bevorzugte Substituenten für $R_{38}$ bis $R_{43}$ sind im Rahmen der Definitionen Methyl, Ethyl, Methoxy und Ethoxy. Beispiele für die Reste $R_{38}$ bis $R_{43}$ sind zuvor unter den Verbindungen der Formel I angegeben worden.
In einer bevorzugten Ausführungsform bedeutet die Gruppe R in Formel XI H, $-C(CH_3)_3$, $-C(CH_3)_2C_6H_5$, unsubstituiertes oder mit Methyl, Ethyl, Methoxy oder Ethoxy substituiertes Phenyl, $-CF_3$ oder $-Si(CH_3)_3$.
Die übrigen Valenzen der Mo(VI)- und W(VI)-Atome sind gegebenenfalls mit gleichen oder verschiedenen Liganden aus der Gruppe =O, $=N-R_{44}$, sekundäre Amine mit 2 bis 18 C-Atomen, $R_{45}O$-, $R_{45}S$-, Halogen, gegebenenfalls substituiertes Cyclopentadienyl, überbrücktes Biscyclopentadienyl, tridentate monoanionische Liganden und Neutralliganden wie zum Beispiel Ethem, Nitrilen, CO und tertiären Phosphinen und Aminen abgesättigt, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxycthyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Benzyl oder Phenylethyl darstellen; und $R_{44}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)anüno, Di($C_1$-$C_6$-alkyl)amino-$C_1$-$C_3$-alkyl, oder Halogen substituiertes Phenyl, oder unsubstituiertes oder mit $C_1$-$C_6$-Alkyl, $C_1$-$C_6$-Alkoxy, $C_1$-$C_6$-Alkoxymethyl-, $C_1$-$C_6$-Alkoxyethyl- oder Halogen substituiertes Benzyl oder Phenylethyl bedeutet.
Sekundäre Amine sind bevorzugt solche der Formel $R_{46}R_{47}N$-, worin $R_{46}$ und $R_{47}$ unabhängig voneinander lineares oder verzweigtes $C_1$-$C_{18}$-Alkyl; $C_5$- oder $C_6$-Cycloalkyl; unsubstituiertes oder mit $C_1$-$C_6$-Alkoxy, oder Halogen substituiertes Benzyl oder Phenylethyl oder $(C_1$-$C_6$-alkyl$)_3$Si; oder $R_{46}$ und $R_{47}$ zusammen Tetramethylen, Pentamethylen oder 3-Oxapentan-1,5-diyl bedeuten. Das Alkyl enthält bevorzugt 1 bis 12 und besonders bevorzugt 1 bis 6 C-Atome. Einige Beispiele sind Dimethyl-, Diethyl-, Di-n-propyl-, Di-i-propyl-, Di-n-butyl-, Methyl-ethyl-, Dibenzyl-, Benzylmethyl-, Diphenyl-, Phenylmethylamino und Di(trimethylsilyl)amino.
Halogen als Ligand oder Substituent ist bevorzugt F oder Cl und besonders bevorzugt Cl.
Das Cyclopentadienyl kann unsubstituiert oder mit ein bis fünf $C_1$-$C_4$-Alkyl, besonders Methyl, oder -Si($C_1$-$C_4$-Alkyl), besonders $-Si(CH_3)_3$ substituiert sein. Überbrückte Cyclopentadienyle sind besonders solche der Formel $R_{48}$-A-$R_{48}$, worin $R_{48}$ unsubstituiertes oder mit ein bis fünf $C_1$-$C_4$-Alkyl, besonders Methyl, oder -Si($C_1$-$C_4$-Alkyl), besonders $-Si(CH_3)_3$ substituiertes Cyclopentadienyl darstellt und A für $-CH_2$-, $-CH_2$-$CH_2$-, $-Si(CH_3)_2$-, $-Si(CH_3)_2$-Si $(CH_3)_2$- oder $-Si(CH_3)_2$-O-$Si(CH_3)_2$- steht.
Bei Ethern als Neutralliganden kann es sich um Dialkylether mit 2 bis 8 C-Atomen oder cyclische Ether mit 5 oder 6 Ringgliedern handeln. Einige Beispiele sind Diethylether, Methylethylether, Diethylether, Di-n-propylether, Di-i-propylether, Di-n-butylether, Ethylenglykoldimethylether, Tetrahydroforan und Dioxan.
Bei Nitrilen als Neutralliganden kann es sich um aliphatische oder aromatische Nitrile mit 1 bis 12, vorzugsweise 1 bis 8 C-Atomen handeln. Einige Beispiele sind Acetonitril, Propionitril, Butylnitril, Benzonitril und Benzylnitril.
Bei tertiären Aminen und Phosphinen als Neutralliganden kann es sich um solche mit 3 bis 24, vorzugsweise 3 bis 18 C-Atomen handeln. Einige Beispiele sind Trimethylamin und -phosphin, Triethylamin und -phosphin, Tri-n-propylamin und -phosphin, Tri-n-butylamin und -phosphin, Triphenylamin und -phosphin, Tricyclohexylamin und -phosphin, Phenyldimethylamin und -phosphin, Benzyldimethylamin und -phosphin, 3,5-Dimethylphenyl-dimethylamin und -phosphin.
Bei den tridentaten monoanionischen Liganden kann es sich zum Beispiel um Hydro(tris-pyrazol-1-yl)borate oder Alkyl(trispyrazol-1-yl)borate, die unsubstituiert oder mit ein bis drei $C_1$-$C_4$-Alkyl substituiert sind [siehe Trofimenko, S., Chem. Rev., 93:943-980 (1993)], oder um $[C_5(R'_5)Co(R_{50}R_{51}P{=}O)_3]^{\ominus}$, worin R' H oder Methyl und $R_{50}$ sowie $R_{51}$

unabhängig voneinander $C_1$-$C_4$-Alkyl, $C_1$-$C_4$-Alkoxy oder Phenyl bedeuten [siehe Kläui, W., Angew. Chem. 102: 661-670 (1990)], handeln.

Bei Halogen als Substituent für die Reste $R_{44}$ und $R_{45}$ handelt es sich bevorzugt um Fluor und besonders bevorzugt um Chlor. Die Substituenten Alkyl, Alkoxy oder Alkoxy im Alkoxymethyl oder -ethyl enthalten bevorzugt 1 bis 4 und besonders 1 oder 2 C-Atome. Beispiele sind Methyl, Ethyl, n- und i-Propyl, n-, i- und t-Butyl, Methoxy, Ethoxy, n- und i-Propyloxy und n-, i- und t-Butyloxy.

$R_{44}$ und $R_{45}$ enthalten als Alkyl bevorzugt 1 bis 12, besonders bevorzugt 1 bis 8, und insbesondere bevorzugt 1 bis 4 C-Atome. Bevorzugt handelt es sich um verzweigtes Alkyl. Einige Beispiele für $R_{44}$ sind Methoxy, Ethoxy, n- und i-Propyloxy, n-, i- und t-Butyloxy, Hexafluor-i-propyloxy und Hexa- sowie Perfluorbutyloxy.

Einige Beispiele für substituiertes Phenyl und Benzyl für $R_{44}$ und $R_{45}$ sind p-Methylphenyl oder Benzyl, p-Fluor- oder p-Chlorphenyl oder -benzyl, p-Ethylphenyl oder -benzyl, p-n- oder i-Propylphenyl oder -benzyl, p-i-Butylphenyl oder -benzyl, 3-Methylphenyl oder -benzyl, 3-i-Propylphenyl oder -benzyl, 2,6-Dimethylphenyl oder -benzyl, 2,6-Di-i-propylphenyl oder -benzyl, 2,6-Di-n- oder -t-butylphenyl und -benzyl. $R_{45}$ steht besonders bevorzugt für unsubstituiertes oder mit $C_1$-$C_4$-Alkyl oder $C_1$-$C_4$-Alkoxy substituiertes Phenyl.

In einer bevorzugten Ausführungsform entsprechen die Molybdän- und Wolframverbindungen besonders einer der Formeln XII bis XIIc

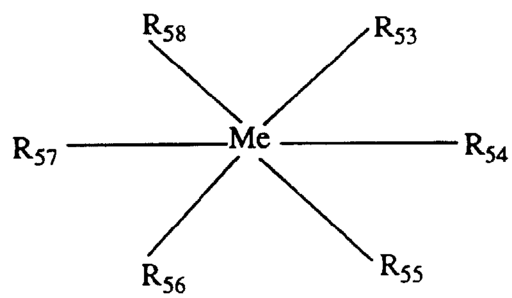

(XII),

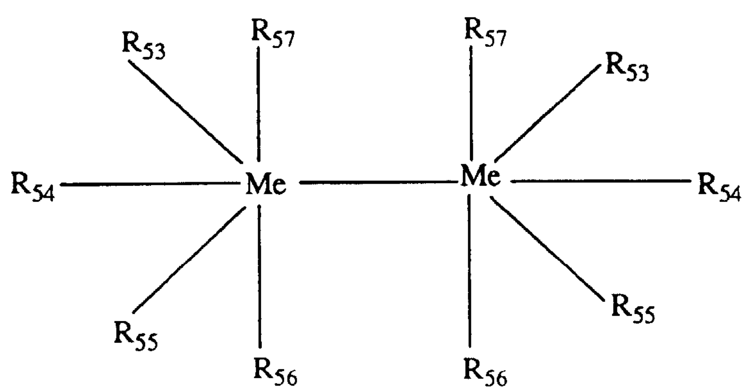

(XIIa),

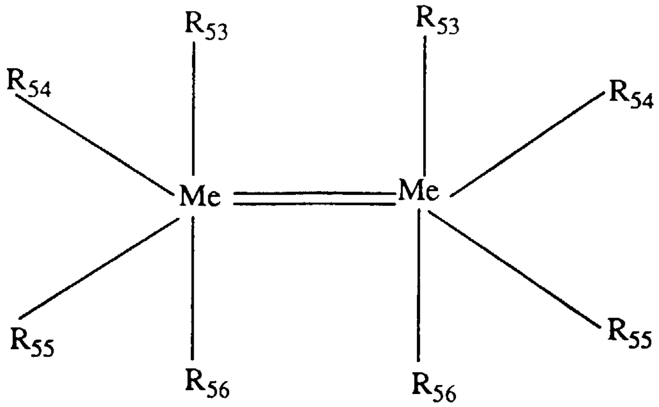

(XIIb),

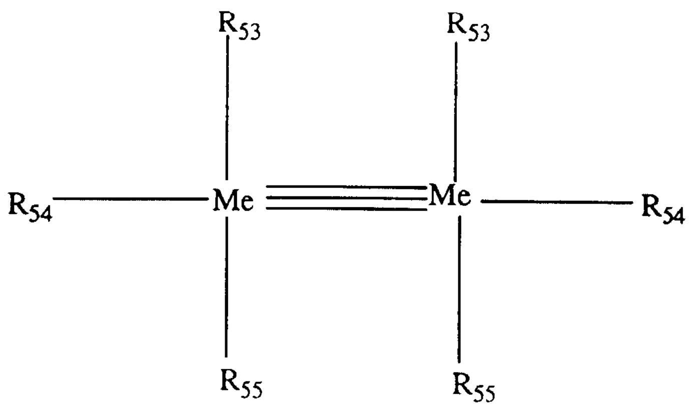

(XIIc),

worin

Me für Mo(VI) oder W(VI) steht;
mindestens zwei, bevorzugt 2 bis 4, der Reste $R_{53}$ bis $R_{58}$ einen Rest $-CH_2-R$ der Formel XI bedeuten, worin R die oben angegebenen Bedeutungen hat;
je zwei der übrigen Reste von $R_{53}$ bis $R_{58}$ =O oder $=N-R_{44}$ bedeuten, und $R_{44}$ die oben angegebenen Bedeutungen hat; und/oder
die übrigen Reste von $R_{53}$ bis $R_{58}$ Sekundäramino mit 2 bis 18 C-Atomen, $R_{45}O-$ oder $R_{45}S-$, Halogen, Cyclopentadienyl oder überbrücktes Biscyclopentadienyl oder einen Neutralliganden bedeuten, worin $R_{45}$ die oben angegebenen Bedeutungen hat. Für die Reste R, $R_{44}$ und $R_{45}$ gelten die zuvor angegebenen Bevorzugungen.

In einer besonders bevorzugten Ausführungsform werden in der erfindungsgemässen Zusammensetzung Molybdän- oder Wolframverbindungen der Formel XII verwendet, worin

a) $R_{53}$ bis $R_{58}$ einen Rest der Formel XI $-CH_2-R$ bedeuten, oder
b) $R_{53}$ und $R_{54}$ einen Rest der Formel XI $-CH_2-R$ darstellen, $R_{55}$ und $R_{56}$ zusammen den Rest $=N-R_{44}$ bedeuten, und $R_{57}$ und $R_{58}$ zusammen unabhängig voneinander $R_{45}-O-$ oder Halogen darstellen, oder
c) $R_{53}$ und $R_{54}$ zusammen und $R_{55}$ und $R_{56}$ zusammen den Rest $=N-R_{44}$ bedeuten, und $R_{57}$ und $R_{58}$ einen Rest der Formel XI $-CH_2-R$ darstellen,

wobei R, $R_{44}$ und $R_{45}$ die voranstehenden Bedeutungen haben. Für R, $R_{44}$ und $R_{45}$ gelten die voranstehenden Bevorzugungen.

Unter den Verbindungen der Formel XIIc sind besonders jene bevorzugt, worin $R_{53}$, $R_{54}$ und $R_{55}$ einen Rest der Formel XI darstellen, wobei es sich bei dem Rest der Formel XI besonders bevorzugt um $-CH_2-Si(C_1-C_4-Alkyl)_3$ handelt.

Ganz besonders bevorzugt werden in der erfindungsgemässen Zusammensetzung Molybdän- oder Wolframverbindungen der Formeln XIII, XIIIa oder XIIIb verwendet,

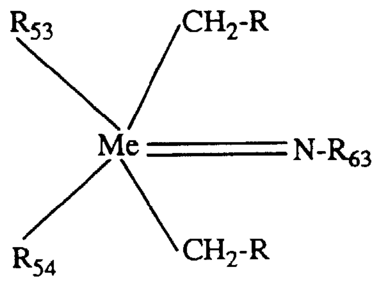

(XIII),

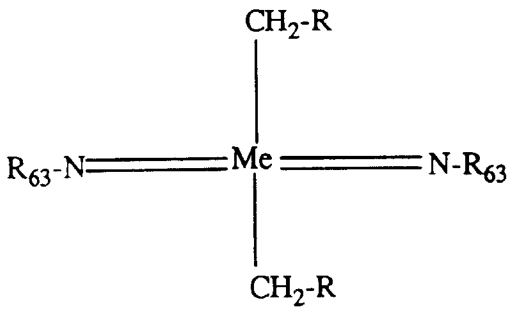

(XIIIa),

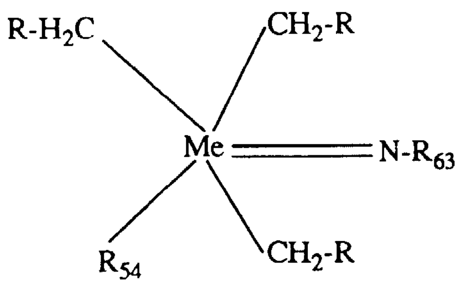

(XIIIb),

worin

Me für Mo(VI) oder W(VI) steht,
R H, $-C(CH_3)_3$, $-C(CH_3)_2-C_6H_5$, $-C_6H_5$ oder $-Si(C_1-C_4\text{-Alkyl})_3$ darstellt,
$R_{63}$ Phenyl oder mit 1 bis 3 $C_1$-$C_4$-Alkyl oder $C_1$-$C_4$-Alkoxy substituiertes Phenyl bedeutet,
$R_{53}$ unsubstituiertes oder mit Fluor substituiertes lineares oder verzweigtes $C_1$-$C_4$-Alkoxy darstellt, und
$R_{54}$ die gleiche Bedeutung wie $R_{53}$ hat oder für F, Cl oder Br steht. $R_{53}$ stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpopyloxy und Nonafluorpropyloxy. Bei $R_{54}$ handelt es sich bevorzugt um Cl.

Einige Beispiele für Molybdän- und Wolframverbindungen sind: $W(=N-C_6H_5)(OC(CH_3)_3)(Cl)[(CH_2Si(CH_3)_3)]_2$, $[(CH_3)_3SiCH_2]_3Mo{\equiv}Mo[CH_2Si(CH_3)_3]_3$, $W(=N-C_6H_5)(OC(CF_3)_2CH_3)_2[(CH_2Si(CH_3)_3)]_2$, $W(=NC_6H_5)[CH_2Si(CH_3)_3]_3Cl$, Mo(=N-2,6-dimethyl$C_6H_5)_2[(CH_2-C_6H_5)]_2$, $W[2,6-(CH_3)_2C_6H_3N]_2(CH_2-C_6H_5)_2$, Mo(=N-2,6-diisopropyl$C_6H_3)_2[(CH_2-C_6H_5)]_2$, Mo(=N-2,6-diisopropyl$C_6H_3)_2[(CH_2C(CH_3)_2-C_6H_5)]_2$ und Mo(=N-2,6-dimethyl$C_6H_3)_2(CH_3)_2$(Tetrahydrofuran).

Die erfindungsgemäss zu verwendenden Molybdän- und Wolfram-Katalysatoren sind bekannt oder nach bekannten und analogen Verfahren ausgehend von den Metallhalogeniden mittels Grignardreaktionen herstellbar [siehe zum Beispiel Huq, F., Mowat, W., Shortland, A., Skapski, A.C., Wilkinson, G., J. Chem. Soc., Chem. Commun. 1079-1080 (1971) oder Schrock, R.R., Murdzeck, J.S., Bazan, G.C., Robbins, J., DiMare, M., O'Regan, M., J. Am.

Chem. Soc., 112:3875-3886 (1990)].

3. Thermostabile Titan(IV), Niob(V)-, Tantal(V)-, Molybdän(VI)- oder Wolfram(VI)verbindungen, in der eine Silylmethylgruppe und mindestens ein Halogen am Metall gebunden sind. Diese Einkomponentenkatalysatoren sind besonders photokatalytisch aktiv.

Bei den erfindungsgemäss zu verwendenden Titan(IV)-, Niob(V)- und Tantal(V)verbindungen handelt es sich um solche, die ein Metallatom enthalten. Bei den erfindungsgemäss zu verwendenden Molybdän(VI)- und Wolfram (VI)verbindungen kann es sich um solche handeln, die ein Metallatom oder zwei über eine Einfach-, Doppel- oder Dreifachbindung verbundene Metallatome enthalten. Die übrigen Valenzen des Titans, Niobs, Tantals, Molybdäns und Wolframs sind bevorzugt mit thermostabilen Neutralliganden abgesättigt, wobei die Definition der Thermostabilität eingangs gegeben wurde. Bei dem an das Metallatom gebundenen Halogen handelt es sich bevorzugt um F, Cl, Br und I, bevorzugter um F, Cl und Br und besonders bevorzugt um F oder Cl. Der Silylmethylligand entspricht bevorzugt der Formel XIV,

$$-CH_2-SiR_{38}R_{39}R_{40} \qquad (XIV),$$

worin

$R_{38}$, $R_{39}$ und $R_{40}$ unabhängig voneinander $C_1$-$C_{18}$-Alkyl, $C_5$- oder $C_6$-Cycloalkyl oder unsubstituiertes oder mit $C_1$-$C_6$-Alkyl oder $C_1$-$C_6$-Alkoxy substituiertes Phenyl oder Benzyl bedeuten.

Bedeuten $R_{38}$ bis $R_{40}$ Alkyl, so kann dieses linear oder verzweigt sein und bevorzugt 1 bis 12, besonders bevorzugt 1 bis 8 und insbesondere 1 bis 4 C-Atome enthalten. Besonders bevorzugtes Alkyl ist Methyl und Ethyl.

Bevorzugte Substituenten für $R_{38}$ bis $R_{40}$ als Phenyl und Benzyl sind im Rahmen der Definitionen Methyl, Ethyl, Methoxy und Ethoxy.

In einer bevorzugten Ausführungsform bedeuten in der Gruppe der Formel XIV $R_{38}$ bis $R_{40}$ $C_1$-$C_4$-Alkyl, Phenyl oder Benzyl.

Einige Beispiele für die Gruppe der Formel XIV sind $-CH_2-Si(CH_3)_3$, $-CH_2-Si(C_2H_5)_3$, $-CH_2-Si(n-C_3H_7)_3$, $-CH_2-Si(n-C_4H_9)_3$, $-CH_2-Si(CH_3)_2(n-C_4H_9)$, $-CH_2-Si(CH_3)_2(t-C_4H_9)$, $-CH_2-Si(CH_3)_2(C_2H_5)$, $-CH_2-Si(CH_3)_2[C(CH_3)_2CH(CH_3)_2]$, $-CH_2-Si(CH_3)_2(n-C_{12}H_{25})$, $-CH_2-Si(CH_3)_2(n-C_{18}H_{37})$, $-CH_2-Si(C_6H_5)_3$, $-CH_2-Si(CH_2-C_6H_5)_3$, $-CH_2-Si(C_6H_5)(CH_3)_2$ und $-CH_2-Si(CH_2-C_6H_5)(CH_3)_2$. Ganz besonders bevorzugt ist $-CH_2-Si(CH_3)_3$.

Die übrigen Valenzen der Ti(IV), Nb(V)-, Ta(V)-, Mo(VI)- und W(VI)-Atome sind gegebenenfalls mit gleichen oder verschiedenen neutralen Liganden abgesättigt, beispielsweise ausgewählt aus der Gruppe bestehend aus =O, $=N-R_{44}$, sekundären Aminen mit 2 bis 18 C-Atomen, $R_{45}O$-, $R_{45}S$-, Halogen, gegebenenfalls substituiertem Cyclopentadienyl, überbrücktem Biscyclopentadienyl, tridentaten monoanionischen Liganden und Neutralliganden wie zum Beispiel Ethern, Nitrilen, CO und tertiären Phosphinen und Aminen, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Benzyl oder Phenylethyl darstellen; und $R_{44}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl, oder Halogen substituiertes Phenyl, oder unsubstituiertes oder mit $C_1$-$C_6$-Alkyl, $C_1$-$C_6$-Alkoxy, $C_1$-$C_6$-Alkoxymethyl-, $C_1$-$C_6$-Alkoxyethyl- oder Halogen substituiertes Benzyl oder Phenylethyl bedeutet, mit der Massgabe, dass im Fall der Titanverbindungen der Ligand nicht =0 oder $=N-R_{44}$ ist.

Die Bedeutungen und Bevorzugungen von $R_{44}$ und $R_{45}$, von sekundären Aminen, von Halogen als weiterem Liganden an den Metallatomen oder als Substituent, von Cyclopentadienyl, Ethern, Nitrilen, tertiären Aminen und Phosphinen als Neutralliganden und von tridentaten monoanionischen Liganden sind zuvor angegeben worden. Ebenfalls zuvor angegeben worden sind die Bedeutungen und Bevorzugungen von Alkyl, Alkoxy oder Alkoxy als Substituenten im Alkoxymethyl oder -ethyl.

In einer bevorzugten Ausführungsform entsprechen die Metallverbindungen besonders den Formeln XV, XVa oder XVb,

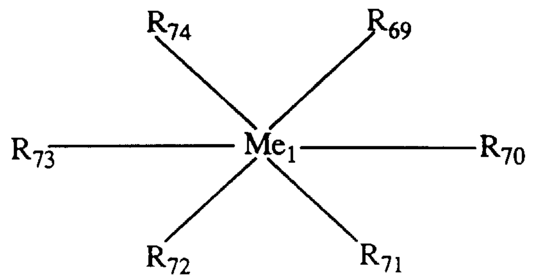

(XV),

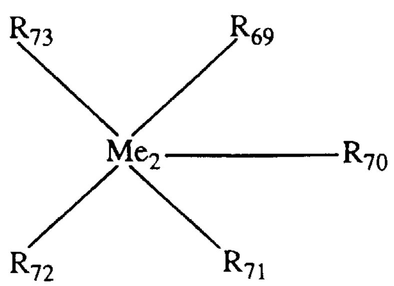

(XVa),

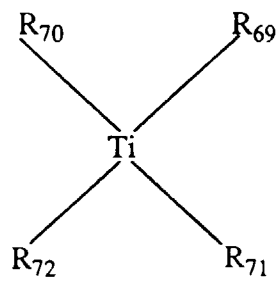

(XVb),

worin

$Me_1$ für Mo(VI) oder W(VI) steht;

$Me_2$ für Nb(V) oder Ta(V) steht;

einer der Reste $R_{69}$ bis $R_{74}$ einen Rest $-CH_2-SiR_{38}R_{39}R_{40}$ der Formel XIV bedeutet; wenigstens einer der Reste $R_{69}$ bis $R_{74}$ F, Cl oder Br darstellt;

$R_{38}$, $R_{39}$ und $R_{40}$ unabhängig voneinander $C_1$-$C_6$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten;

in Formel XV zwei oder jeweils zwei und in Formel XVa zwei der übrigen Reste von $R_{69}$ bis $R_{74}$ je zusammen =O oder $=N-R_{44}$ bedeuten, und $R_{44}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt, und

die übrigen Reste Sekundäramino mit 2 bis 18 C-Atomen, $R_{45}O$- oder $R_{45}S$-, Halogen, unsubstituiertes oder substituiertes Cyclopentadienyl oder überbrücktes Biscyclopentadienyl oder einen Neutralliganden bedeuten, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen; oder

in den Formeln XV, XVa und XVb die übrigen Reste unabhängig voneinander Sekundäramino mit 2 bis 18 C-Atomen, $R_{45}O$- oder $R_{45}S$-, Halogen, unsubstituiertes oder substituiertes Cyclopentadienyl oder überbrücktes Biscyclopentadienyl oder einen Neutralliganden bedeuten, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

Für die Reste $R_{69}$ bis $R_{74}$ gelten die zuvor angegebenen Bevorzugungen.

In einer besonders bevorzugten Ausführungsform werden im erfindungsgemässen Verfahren Metallverbindungen der Formeln XV, XVa oder XVb verwendet, worin $R_{69}$ einen Rest der Formel XIV $-CH_2-SiR_{38}R_{39}R_{40}$ und $R_{70}$F, Cl oder Br darstellen; und

(a) in Formel XV $R_{71}$ und $R_{72}$ sowie $R_{73}$ und $R_{74}$ jeweils zusammen den Rest $=N-R_{44}$ bedeuten, oder $R_{71}$ und $R_{72}$ zusammen den Rest $=N-R_{44}$ bedeuten, und $R_{73}$ und $R_{74}$ unabhängig voneinander unsubstituiertes oder substituiertes Cyclopentadienyl, $R_{45}$-O- oder Halogen darstellen, oder

b) in Formel XVa $R_{71}$ und $R_{72}$ zusammen den Rest $=N-R_{44}$ bedeuten, und $R_{44}$ unsubstituiertes oder substituiertes Cyclopentadienyl, $R_{45}$-O- oder Halogen bedeuten, oder in Formel XVa $R_{71}$, $R_{72}$ und $R_{73}$ unabhängig voneinander unsubstituiertes oder substituiertes Cyclopentadienyl, $R_{45}$-O- oder Halogen bedeuten, oder

c) in Formel XVb $R_{71}$ und $R_{72}$ unabhängig voneinander unsubstituiertes oder substituiertes Cyclopentadienyl, $R_{45}$-O- oder Halogen bedeuten,

wobei $R_{38}$ bis $R_{44}$ die voranstehenden Bedeutungen haben. Für $R_{38}$, $R_{39}$, $R_{40}$, $R_{44}$ und $R_{45}$ gelten die voranstehenden Bevorzugungen.

Ganz besonders bevorzugt werden im erfindungsgemässen Verfahren Metallverbindungen der Formeln XVI, XVIa, XVIb, XVIc oder XVId verwendet,

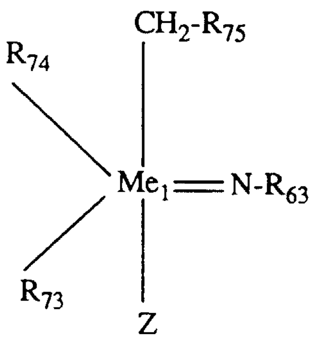 (XVI),

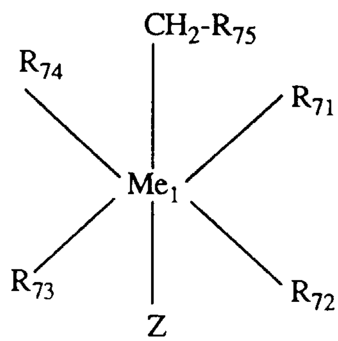 (XVIa),

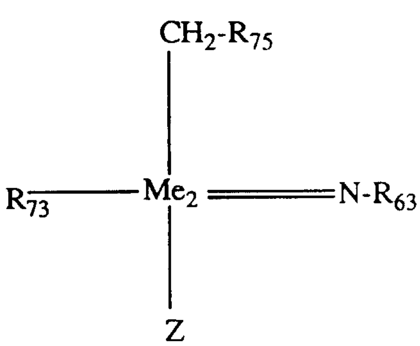 (XVIb),

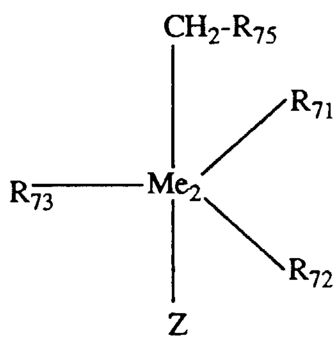 (XVIc),

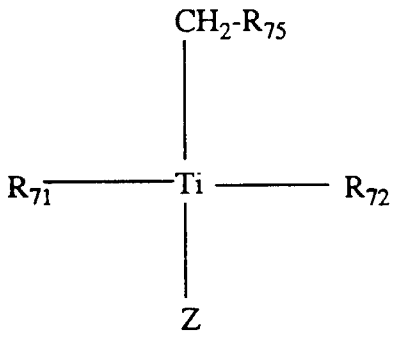

(XVId),

worin

$Me_1$ für Mo(VI) oder W(VI) steht;
$Me_2$ für Nb(V) oder Ta(V) steht;
$R_{75}$ -Si($C_1$-$C_4$-Alkyl)$_3$ darstellt;
Z für Cl oder Br steht;
$R_{63}$ Phenyl oder mit 1 bis 3 $C_1$-$C_4$-Alkyl oder $C_1$-$C_4$-Alkoxy substituiertes Phenyl bedeutet,

(a) $R_{73}$ und $R_{74}$ in Formel XVI zusammen die Gruppe =$NR_{63}$ oder einzeln unabhängig voneinander F, Cl, Br, unsubstituiertes oder mit Fluor substituiertes lineares oder verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen;
(b) $R_{71}$, $R_{72}$, $R_{73}$ und $R_{74}$ in Formel XVIa unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl bedeuten;
(c) $R_{73}$ in Formel XVIb F, Cl, Br, unsubstituiertes oder mit Fluor substituiertes lineares oder verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellt;
(d) $R_{71}$, $R_{72}$ und $R_{73}$ in Formel XVIc unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen; und
(e) $R_{71}$ und $R_{72}$ in Formel XVId unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen. Das Alkoxy stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpopyloxy und Nonafluorpropyloxy. Bei dem Phenyloxyrest handelt es sich besonders um in den 2,6-Stellungen mit $C_1$-$C_4$-Alkyl substituiertes Phenyloxy, zum Beispiel 2,6-Dimethylphenyloxy. Beispiele für substituierte Cyclopentadienylreste sind Mono- bis Pentamethylcyclopentadienyl und Trimethylsilylcyclopentadienyl. $R_{63}$ stellt bevorzugt Phenyl oder mit $C_1$-$C_4$-Alkyl substituiertes Phenyl dar, besonders Phenyl, 3,5-Dimethyl-, 2,6-Dimethyl-, 3,5-Diethyl- und 2,6-Diethylphenyl.

Ganz besonders bevorzugte Verbindungen im erfindungsgemässen Verfahren sind solche der Formeln XVII, XVIIa, XVIIb, XVIIc und XVIId

$$(R_{63}\text{-}N{=})_2Me_1X_aCH_2Si(CH_3)_3 \quad \text{(XVII)},$$

$$(R_{63}\text{-}N{=})R_{71}Me_1X_a(OR_{62})CH_2Si(CH_3)_3 \quad \text{(XVIIa)},$$

$$R_{72}R_{73}Me_2X_a(OR_{62})CH_2Si(CH_3)_3 \quad \text{(XVIIb)},$$

$$R_{63}\text{-}N{=}Me_2X_a(OR_{62})CH_2Si(CH_3)_3 \qquad \text{(XVIIc),}$$

$$R_{71}\text{-}TiX_a(OR_{62})CH_2Si(CH_3)_3 \qquad \text{(XVIId),}$$

worin

$Me_1$ für Mo(VI) oder W(VI) steht;
$Me_2$ für Nb(V) oder Ta(V) steht;
$X_a$ für F oder Cl steht;
$R_{63}$ Phenyl oder mit 1 oder 2 $C_1$-$C_4$-Alkylgruppen substituiertes Phenyl bedeutet;
$R_{62}$ verzweigtes gegebenenfalls teilweise oder vollständig mit Fluor substituiertes $C_3$-oder $C_4$-Alkyl oder Phenyloxy oder mit 1 bis 3 Methyl- oder Ethylgruppen substituiertes Phenyloxy darstellt;
$R_{72}$ und $R_{73}$ unabhängig voneinander unsubstituiertes oder mit 1 bis 5 Methylgruppen substituiertes Cyclopentadienyl, $X_a$ oder $R_{62}O$- bedeuten; und
$R_{71}$ unsubstituiertes oder mit 1 bis 5 Methylgruppen substituiertes Cyclopentadienyl, $X_a$ oder $R_{72}O$- darstellt.

Einige Beispiele für Titan(IV)-, Niob(V)-, Tantal(V)-, Molybdän(VI)- und Wolfram(VI)-verbindungen sind [Cp bedeutet Cyclopentadienyl und Me bedeutet Nb(V) oder Ta(V)]: $Ti[CH_2Si(CH_3)_3]Cl_3$, $Ti[CH_2Si(CH_3)_3]Br_3$, $Cp_2Ti[CH_2Si(CH_3)_3]Cl$, $(CH_3)_2Ti[CH_2Si(CH_3)_3]Cl$, $Cp_2Ti[CH_2Si(CH_3)_3]Br$, $Cp_2Ti[CH_2Si(CH_3b]I$, $CpTi[CH_2Si(CH_3)_3][CH_3]Cl$, $CpTi[CH_2Si(CH_3)_3]Br_2$, $[(CH_3)_2CHO]_2Ti[CH_2Si(CH_3)_3]Cl$, $[(CF_3)_2CHO]_2Ti[CH_2Si(CH_3)_3]Cl$, $[(CF_3)_2CHO]CpTi[CH_2Si(CH_3)_3]Cl$, $[(CH_3)_2CHO]CpTi[CH_2Si(CH_3)_3]Cl$, $(C_6H_5O)CpTi[CH_2Si(CH_3)_3]Cl$, (2,6-Dimethyl-$C_6H_5O$)$CpTi[CH_2Si(CH_3)_3]Cl$, (2,6-Dimethyl-$C_6H_5O)_2Ti[CH_2Si(CH_3)_3]Cl$, (2,6-Dimethyl-$C_6H_5O)Ti[CH_2Si(CH_3)_3]_2Br$, $[(CH_3)_3CO]CpTi[CH_2Si(CH_3)_3]Cl$, $[(CF_3)_2(CH_3)CO]CpTi[CH_2Si(CH_3)_3]Cl$, $Me(=N\text{-}C_6H_5)[OCH(CH_3)_2][(CH_2Si(CH_3)_3]Cl$, $Cp_2Me[(CH_2Si(CH_3)_3]Cl_2$, $Me(=N\text{-}C_6H_5)[OCH(CF_3)_2][(CH_2Si(CH_3)_3]Cl$, $Ta[CH_2Si(CH_3)_3]_3Cl_2$, Me(=N-2,6-diisopropyl$C_6H_3)[(CH_2Si(CH_3)_3]Cl_2$, Me(=N-2,6-diisopropyl$C_6H_3)[(CH_3)_2CHO][(CH_2Si(CH_3)_3]Cl$, Me(=N-2,6-dimethyl$C_6H_3$)(2,6-Dimethyl-$C_6H_5O)[CH_2Si(CH_3)_3]Cl$, Me(=N-2,6-dimethyl$C_6H_3)((CF_3)_2CHO)[CH_2Si(CH_3)_3]Cl$, (=N-2,6-dimethyl$C_6H_3)CpMe[(CH_2Si(CH_3)_3]Cl$, $(C_6H_5O)_2CpMe[(CH_2Si(CH_3)_3]Cl$, (=N-3,5-dimethyl$C_6H_3$)Me[2,6-dimethyl$C_6H_3O)][(CH_2Si(CH_3)_3)]Cl$, $CpMe[OCH(CH_3)_2]_2[(CH_2Si(CH_3)_3]Br$, $CpMe[OCH(CH_3)_2[(CH_2Si(CH_3)_3]Cl$, $CpMe[OCH(CF_3)_2]_2[(CH_2Si(CH_3)_3]Cl$, $Cp_2Me$(Methyl)$[(CH_2Si(CH_3)_3]Cl$, $Cp_2Me[OCH(CH_3)_2][(CH_2Si(CH_3)_3]Cl$, $[OCH(CH_3)_2]_2Me[CH_2Si(CH_3)_3]Cl_2$, Me(2,6-Dimethylphenyloxy)$(CH_3O)_2[(CH_2Si(CH_3)_3]Cl$, $Me[CH_2Si(CH_3)_3][OCH(CH_3)](CF_3O)_2Cl$, $W(=N\text{-}C_6H_5)[(OC(CH_3)_3][CH_2\text{-}Si(CH_3)_3]Cl_2$, (2,6-Diisopropylphenyloxy)$_2Me[CH_2Si(CH_3)_3]Cl_2$, $Cp_2Me[OC(CH_3)_3][(CH_2Si(CH_3)_3]Cl$, $CpMe[OC(CH_3)(CF_3)_2]_2[(CH_2Si(CH_3)_3]Cl$, $MO_2[(CH_2\text{-}Si(CH_3)_3)(OCH_2C(CH_3)_3)Cl]_2$, Mo(=N-2,6-diisopropyl$C_6H_3)_2[CH_2\text{-}Si(CH_3)_3]Cl$, $W(=N\text{-}C_6H_5)[(OC(CH_3)_3]_2[CH_2\text{-}Si(CH_3)_3]Cl$, $Mo(=N\text{-}C_6H_5)_2[CH_2\text{-}Si(CH_3)_3]Cl$, Mo(=N-2,6-diisopropyl$C_6H_3)[(OCH_2C(CH_3)_3]_2[CH_2\text{-}Si(CH_3)_3]Cl$.

Die erfindungsgemäss zu verwendenden Titan-, Niob-, Tantal-. Molybdän- und Wolframverbindungen sind bekannt oder nach bekannten und analogen Verfahren ausgehend von gegebenenfalls entsprechend substituierten Metallhalogeniden mittels Grignardreaktionen herstellbar [Schrock, R.R., Murdzeck, J.S., Bazan, G.C., Robbins, J., DiMare, M., O'Regan, M., J. Am. Chem. Soc., 112:3875-3886 (1990)].

4. Weitere geeignete photoaktive Einkomponentenkatalysatoren sind Niob(V)- oder Tantal(V)verbindungen, die mindestens zwei Methylgruppen oder zwei monosubstituierte Methylgruppen am Metall gebunden haben, wobei der Substituent kein Wasserstoffatom in $\alpha$-Stellung enthält. Diese Verbindungen sind auch thermische Katalysatoren.

Die erfindungsgemäss zu verwendenden Niob(V)- und Tantal(V)verbindungen enthalten ein Metallatom. Die am Metall gebundene Methylgruppe oder monosubstituierte Methylgruppe ist mindestens zweimal, besonders bevorzugt zwei- bis fünfmal und insbesondere bevorzugt zwei- oder dreimal als Ligand gebunden. Dieser Ligand entspricht bevorzugt der Formel XI

$$-CH_2\text{-}R \qquad \text{(XI),}$$

worin R die zuvor angegebenen Bedeutungen und Bevorzugungen hat.

Die übrigen Valenzen des Niob- und Tantalatoms sind bevorzugt mit thermostabilen Neutralliganden abgesättigt, die in grosser Vielzahl bekannt sind. Die Zahl der Neutralliganden kann auch die stöchiometrisch mögliche Zahl überschreiten (Solvate). Die Definition der Thermostabilität wurde eingangs gegeben.

Die übrigen Valenzen der Nb(V)- und Ta(V)-Atome sind gegebenenfalls mit gleichen oder verschiedenen neutralen Liganden abgesättigt, beispielsweise ausgewählt aus der Gruppe bestehend aus =O, =N-$R_{44}$, sekundären

Aminen mit 2 bis 18 C-Atomen, $R_{45}O$-, $R_{45}S$-, Halogen, gegebenenfalls substituiertem Cyclopentadienyl, überbrücktem Biscyclopentadienyl, tridentaten monoanionischen Liganden und Neutralliganden wie zum Beispiel Ethern, Nitrilen, CO und tertiären Phosphinen und Aminen, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Benzyl oder Phenylethyl darstellen; und $R_{44}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)anüno, Di($C_1$-$C_6$-alkyl)amino-$C_1$-$C_3$-alkyl, oder Halogen substituiertes Phenyl, oder unsubstituiertes oder mit $C_1$-$C_6$-Alkyl, $C_1$-$C_6$-Alkoxy, $C_1$-$C_6$-Alkoxymethyl-, $C_1$-$C_6$-Alkoxyethyl- oder Halogen substituiertes Benzyl oder Phenylethyl bedeutet.

Die Bedeutungen und Bevorzugungen von $R_{44}$ und $R_{45}$, von sekundären Aminen, von Halogen als weiterem Liganden an den Metallatomen oder als Substituent, von Cyclopentadienyl, Ethern, Nitrilen, tertiären Aminen und Phosphinen als Neutralliganden und von tridentaten monoanionischen Liganden sind zuvor angegeben worden. Ebenfalls zuvor angegeben worden sind die Bedeutungen und Bevorzugungen von Alkyl, Alkoxy oder Alkoxy als Substituenten im Alkoxymethyl oder -ethyl.

In einer bevorzugten Ausführungsform entsprechen die Niob- und Tantalverbindungen besonders der Formel XVIII,

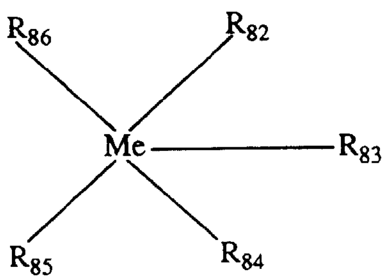

(XVIII),

worin

Me für Nb(V) oder Ta(V) steht,

mindestens zwei, bevorzugt 2 oder 3, der Reste $R_{82}$ bis $R_{86}$ einen Rest -$CH_2$-R der Formel XI bedeuten, worin R die zuvor angegebenen Bedeutungen und Bevorzugungen hat; zwei der übrigen Reste von $R_{82}$ bis $R_{86}$ zusammen =0 oder =N-$R_{44}$ bedeuten, und $R_{44}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt; und/oder

die übrigen Reste von $R_{82}$ bis $R_{86}$ unabhängig voneinander Sekundäramino mit 2 bis 18 C-Atomen, $R_{45}O$- $R_{45}S$-, Halogen, Cyclopentadienyl oder überbrücktes Biscyclopentadienyl oder einen Neutralliganden bedeuten, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

In einer besonders bevorzugten Ausführungsform werden Niob- und Tantalverbindungen der Formel XVIII verwendet, worin

a) $R_{82}$ bis $R_{86}$ je einen Rest der Formel XI -$CH_2$-R bedeuten, oder

b) $R_{82}$ und $R_{83}$ je einen Rest der Formel XI -$CH_2$-R darstellen, $R_{84}$ und $R_{85}$ zusammen den Rest =N-$R_{44}$ bedeuten und $R_{86}$ unsubstituiertes oder substituiertes Cyclopentadienyl, $R_{45}$-O- oder Halogen darstellt, oder

c) $R_{82}$, $R_{83}$ und $R_{84}$ je einen Rest der Formel XI -$CH_2$-R darstellen, und $R_{85}$ und $R_{86}$ zusammen den Rest =N-$R_{44}$

bedeuten, oder

$R_{82}$, $R_{83}$, $R_{84}$ und $R_{85}$ einen Rest der Formel XI $-CH_2-R$ darstellen und $R_{86}$ unsubstituiertes oder substituiertes Cyclopentadienyl, $R_{45}$-O- oder Halogen bedeutet,

wobei R, $R_{44}$ und $R_{45}$ die voranstehenden Bedeutungen haben. Für R, $R_{44}$ und $R_{45}$ gelten die voranstehenden Bevorzugungen.

Ganz besonders bevorzugt werden im erfindungsgemässen Verfahren Niob- und Tantalverbindungen der Formeln IXX, IXXa oder IXXb verwendet,

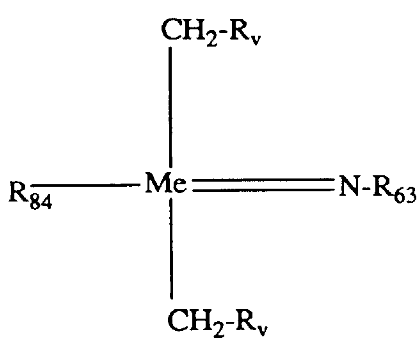 (IXX), 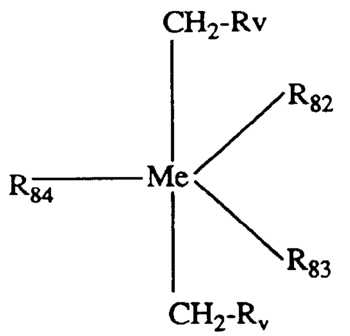 (IXXa),

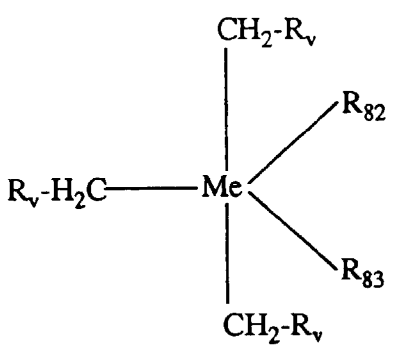 (IXXb),

worin

Me für Nb(V) oder Ta(V) steht,

$R_v$ H, $-C(CH_3)_3$, $-C(CH_3)_2-C_6H_5$, $-C_6H_5$ oder $-Si(C_1-C_4\text{-Alkyl})_3$ darstellt,

$R_{63}$ Phenyl oder mit 1 bis 3 $C_1$-$C_4$-Alkyl oder $C_1$-$C_4$-Alkoxy substituiertes Phenyl bedeutet,

$R_{84}$ in Formel IXX die Gruppe $-CH_2-R$ oder F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellt;

$R_{82}$, $R_{83}$ und $R_{84}$ in Formel IXXa unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl bedeuten; und

$R_{82}$ und $R_{83}$ in Formel IXXb unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen. Das Alkoxy stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpopyloxy oder Nonafluorpropyloxy.

Einige Beispiele für Niob(V)- und Tantal(V)verbindungen sind [Cp bedeutet Cyclopentadienyl und Me bedeutet Nb(V) oder Ta(V)]:

$Me[CH_2Si(CH_3)_3]_5$, $Cp_2Me[(CH_2C(CH_3)_2-C_6H_5)]_3$, $Me(=N\text{-}2,6\text{-dimethyl}C_6H_3)(CH_3)_3$, $Me(=N-C_6H_5)[OC(CH_3)_3][(CH_2Si(CH_3)_3)]_2$, $Me(=N\text{-}2,6\text{-diisopropyl}C_6H_3)[(CH_2-C_6H_5)]_3$, $Me(=N-C_6H_5)[OCCH_3(CF_3)_2][(CH_2Si(CH_3)_3)]_2$, CpMe[OCCH3

$(CF_3)_2]_2[(CH_2\text{-}C_6H_5)]_2$, Me(=N-2,6-diisoprcpyl$C_6H_3$)$[(CH_2C(CH_3)_2\text{-}C_6H_5)]_2Cl$, $Cp_2Me(CH_3)_2[OCH(CH_3)_2]$, Me(=N-2,6-dimethyl$C_6H_3$)$[(CH_2\text{-}C_6H_5)]_3$, $CpMe[OCH(CH_3)_2]_2[(CH_2Si(CH_3)_3)]_2$, $Cp_2Me[(CH_2\text{-}C_6H_5)]_3$, $Me[CH_2Si(CH_3)_3]_3Cl_2$, $Me[CH_2Si(CH_3)_3]_3[OCH_2C(CH_3)_3]_2$, $Cp_2Me$[3,5-dimethyl$C_6H_3O$)]$[(CH_2Si(CH_3)_3)]_2$, Me(2,6-Diisopropylphenyloxy)$_2$ $(CH_3)_3$, $Cp_2Me(CH_3)_3$, Me(2,6-Dimethylphenyloxy)$_2(CH_3)_3$, $Me[CH_2Si(CH_3)_3]_3[OCH(CH_3)]_2$, $CpMe[OC(CH_3)_3]_2[(CH_2\text{-}C_6H_5)]_2$ und $Cp_2Me[(CH_2Si(CH_3)_3)]_3$.

Die erfindungsgemäss zu verwendenden Niob- und Tantalverbindungen sind bekannt oder nach bekannten und analogen Verfahren ausgehend von den gegebenenfalls substituierten Metallhalogeniden über Grignardreaktionen und/oder Substitutionsreaktionen herstellbar [Schrock, R.R., Murdzeck, J.S., Bazan, G.C., Robbins, J., DiMare, M., O'Regan, M., J. Am. Chem. Soc., 112:3875-3886 (1990)].

5. Weitere geeignete photoaktive Einkomponentenkatalysatoren sind Titan(IV)verbindungen, die mindestens zwei Methylgruppen oder zwei monosubstituierte Methylgruppen am Metall gebunden enthalten, wobei der Substituent kein Wasserstoffatom in $\alpha$-Stellung enthält. Diese Verbindungen sind auch thermische Katalysatoren.

Die erfindungsgemäss zu verwendenden Titan(IV)verbindungen enthalten ein Metallatom. Die am Metall gebundene Methylgruppe oder monosubstituierte Methylgruppe ist mindestens zweimal, besonders bevorzugt zwei- bis viermal und insbesondere bevorzugt zwei- oder dreimal als Ligand gebunden. Dieser Ligand entspricht bevorzugt der Formel XI,

$$-CH_2\text{-}R \qquad (XI),$$

worin R die zuvor genannten Bedeutungen und Bevorzugungen hat.

Die übrigen Valenzen des Titanatoms sind bevorzugt mit thermostabilen Neutralliganden abgesättigt, die in grosser Vielzahl bekannt sind. Die Zahl der Neutralliganden kann auch die stöchiometrisch mögliche Zahl überschreiten (Solvate). Die Definition der Thermostabilität wurde eingangs gegeben.

Die übrigen Valenzen der Ti(IV)-Atome sind gegebenenfalls mit gleichen oder verschiedenen neutralen Liganden abgesättigt, beispielsweise ausgewählt aus der Gruppe bestehend aus sekundären Aminen mit 2 bis 18 C-Atomen, $R_{45}O$-, $R_{45}S$-, Halogen, gegebenenfalls substituiertem Cyclopentadienyl, überbrücktem Biscyclopentadienyl, tridentaten monoanionischen Liganden und Neutralliganden wie zum Beispiel Ethern, Nitrilen, CO und tertiären Phosphinen und Aminen, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Benzyl oder Phenylethyl darstellen.

Die Bedeutungen und Bevorzugungen von $R_{45}$, von sekundären Aminen, von Halogen als weiterem Liganden an den Metallatomen oder als Substituent, von Cyclopentadienyl, Ethern, Nitrilen, tertiären Aminen und Phosphinen als Neutralliganden und von tridentaten monoanionischen Liganden sind zuvor angegeben worden. Ebenfalls zuvor angegeben worden sind die Bedeutungen und Bevorzugungen von Alkyl, Alkoxy oder Alkoxy als Substituenten im Alkoxymethyl oder -ethyl.

In einer bevorzugten Ausführungsform entsprechen die Titan(IV)verbindungen besonders der Formel XX,

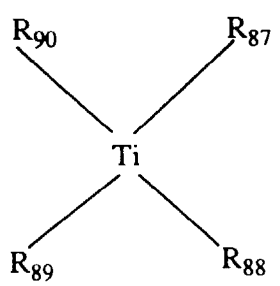

(XX),

worin

mindestens zwei, bevorzugt 2 oder 3 der Reste $R_{87}$ bis $R_{90}$ einen Rest $-CH_2$-R der Formel XI bedeuten, worin R die zuvor genannten Bedeutungen und Bevorzugungen hat; und die übrigen Reste $R_{87}$ bis $R_{90}$ Sekundäramino mit 2 bis 18 C-Atomen, $R_{45}O$-, $R_{45}S$-, Halogen, Cyclopentadienyl oder überbrücktes Biscyclopentadienyl oder einen Neutralliganden bedeuten, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen

substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di ($C_1$-$C_6$-alkyl)amino-$C_1$-$C_3$-alkyl oder Halogen substituiertes Benzyl oder Phenylethyl darstellen.

In einer besonders bevorzugten Ausführungsform werden im erfindungsgemässen Verfahren Titan(IV)verbindungen der Formel XX verwendet, worin

a) $R_{87}$ bis $R_{90}$ einen Rest der Formel XI $-CH_2-R$ bedeuten, oder
b) $R_{87}$ und $R_{58}$ einen Rest der Formel XI $-CH_2-R$ darstellen, und $R_{89}$ und $R_{90}$ unabhängig voneinander unsubstituiertes oder substituiertes Cyclopentadienyl, $R_{45}$-O- oder Halogen bedeuten, oder
c) $R_{87}$, $R_{88}$ und $R_{89}$ einen Rest der Formel XI $-CH_2-R$ darstellen, und $R_{90}$ unsubstituiertes oder substituiertes Cyclopentadienyl, $R_{45}$-O- oder Halogen bedeutet,

wobei R und $R_{45}$ die voranstehenden Bedeutungen haben. Für R und $R_{45}$ gelten die voranstehenden Bevorzugungen.

Ganz besonders bevorzugt werden im erfindungsgemässen Verfahren Titan(IV)verbindungen der Formeln XXIa oder XXIb verwendet,

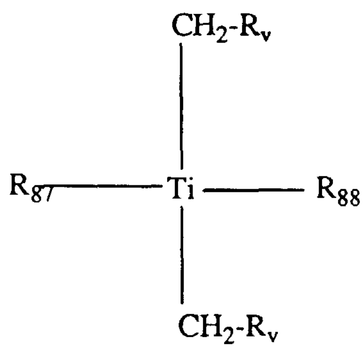
(XXIa),

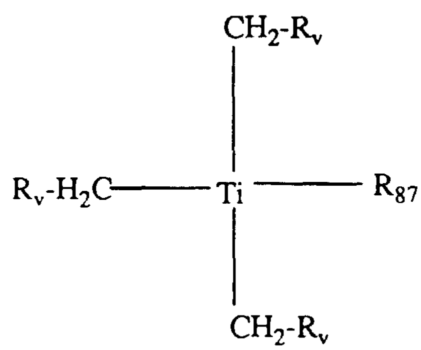
(XXIb),

worin
$R_v$ H, $-C(CH_3)_3$, $-C(CH_3)_2-C_6H_5$, $-C_6H_5$ oder $-Si(C_1-C_4\text{-Alkyl})_3$ darstellt, und $R_{87}$ und $R_{88}$ unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen. Das Alkoxy stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpropyloxy und Nonafluorpropyloxy.

In einer bevorzugten Ausführungsform der Erfindung enthalten die Titan(IV)verbindungen ein an das Titan gebundenes Halogenatom, besonders Cl oder Br, wenn in der Gruppe $-CH_2-R$ der Rest R für $-SiR_{38}R_{39}R_{40}$ steht. Ganz besonders bevorzugt sind dann die Verbindungen der Formel XXII,

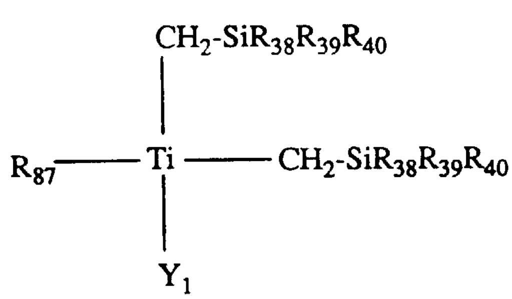
(XXII),

worin

$Y_1$ für F, Cl oder Br steht,

$R_{38}$, $R_{39}$ und $R_{40}$ unabhängig voneinander $C_1$-$C_{18}$-Alkyl, $C_5$- oder $C_6$-Cycloalkyl oder unsubstituiertes oder mit $C_1$-$C_6$-Alkyl oder $C_1$-$C_6$-Alkoxy substituiertes Phenyl oder Benzyl bedeuten; und

$R_{57}$ die Gruppe $-CH_2-SiR_{38}R_{39}R_{40}$, F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellt. $R_{38}$, $R_{39}$ und $R_{40}$ bedeuten bevorzugt $C_1$-$C_4$-Alkyl, Phenyl oder Benzyl, und $R_{87}$ stellt bevorzugt Cl, unsubstituiertes oder mit Fluor substituiertes $C_3$- oder $C_4$-Alkyl oder unsubstituiertes oder mit $C_1$-$C_4$-Alkyl oder $C_1$-$C_4$-Alkoxy substituiertes Phenyl oder Benzyl dar.

Einige Beispiele für Titan(IV)verbindungen sind [Cp bedeutet Cyclopentadienyl]: $Ti[CH_2Si(CH_3)_3]_4$, $Ti[OCH(CF_3)_2]_2[(CH_2Si(CH_3)_3)]_2$, $CpTi[(CH_2C(CH_3)_2-C_6H_5)]_2Cl$, $CpTi[(CH_2-C_6H_5)]_3$, $TiCl_2[CH_2Si(CH_3)_3)]_2$, $[OCH(CF_3)_2]Ti[(CH_2-C_6H_5)]_3$, $CpBrTi[(CH_2C(CH_3)_2-C_6H_5)]_2$, $CpTi[2,6\text{-dimethyl}C_6H_3O)][(CH_2Si(CH_3)_3)]_2$, $Ti[OCH(CH_3)_2]_2[(CH_2-C_6H_5)]_2$, $ClTi[OCH(CH_3)_2][(CH_2Si(CH_3)_3)]_2$, $CpTi[OCH(CF_3)_2][(CH_2-C_6H_5)]_2$, $CpTi(Methyl)_3$, $CpTi(Methyl)_2[OCH(CH_3)_2]$, $Ti[CH_2Si(CH_3)_3]_2Br_2$, $Ti(2,6\text{-Dimethylphenyloxy})_2(CH_3)_2$, $Cp_2Ti(CH_3)_2$, $Ti[CH_2Si(CH_3)_3]_3[OCH(CH_3)]$ und $Ti(2,6\text{-Diisopropylphenyloxy})_2(CH_3)_2$.

Die erfindungsgemäss zu verwendenden Titan(IV)verbindungen sind bekannt oder nach bekannten und analogen Verfahren ausgehend von den Metallhalogeniden über Grignardreaktionen oder andere bekannte Substitutionsreaktionen herstellbar [siehe Clauss, K., Bestian, H., Justus Liebigs Ann. Chem. 654:8-19 (1962)].

6. Andere geeignete photokatalytisch aktive Verbindungen sind Ruthenium- oder Osmiumverbindungen, die mindestens eine Phosphingruppe, mindestens einen photolabilen Liganden, und gegebenenfalls Neutralliganden an das Metallatom gebunden enthalten, wobei insgesamt 2 bis 5 Liganden gebunden sind, und die Säureanionen zum Ladungsausgleich enthalten. Insgesamt bedeutet im Rahmen der Erfindung die Summe der Phosphingruppen, photolabilen Liganden und Neutralliganden. Die Neutralliganden werden auch als nicht-photolabile Liganden bezeichnet. Insgesamt sind bevorzugt 2 bis 4, und besonders bevorzugt 2 oder 3 Liganden gebunden.

Die Osmiumverbindungen sind auch thermisch wirksame Katalysatoren. Auch die Rutheniumverbindungen sind thermische Katalysatoren, wenn die Phosphingruppe keine linearen Alkyl- oder Alkoxygruppen enthält, sondern raumerfüllende Gruppen, zum Beispiel sekundäre und tertiäre Alkyl- oder Alkoxygruppen (i-Propyl, i- und t-Butyl), oder Cycloalkylgruppen, oder unsubstituierte oder mit 1 bis 3 $C_1$-$C_4$-Alkyl oder -Alkoxy substituierte Phenylgruppen oder Phenyloxygruppen.

Bei der Phosphingruppe handelt es sich bevorzugt um tertiäre Phosphine und Phosphite mit 3 bis 40, bevorzugter 3 bis 30 und besonders bevorzugt 3 bis 24 C-Atomen.

Die übrigen Valenzen des Rutheniums und Osmiums sind bevorzugt mit thermostabilen Neutralliganden abgesättigt, die in grosser Vielzahl bekannt sind. Die Zahl der Neutralliganden kann auch die stöchiometrisch mögliche Zahl überschreiten (Solvate).

Bei den erfindungsgemäss zu verwendenden Ruthenium- und Osmiumverbindungen kann ein Monophosphin ein bis dreimal und bevorzugt zwei oder dreimal, und ein Diphosphin einmal an das Metallatom gebunden sein. In den Ruthenium- und Osmiumkatalysatoren sind bevorzugt 1 bis 2 photolabile Liganden gebunden. Die Phosphinliganden entsprechen bevorzugt den Formeln XXIII und XXIIIa,

$$PR_{91}R_{92}R_{93} \qquad (XXIII),$$

$$R_{91}R_{92}P\text{-}Z_1\text{-}PR_{91}R_{92} \qquad (XXIIIa),$$

worin $R_{91}$, $R_{92}$ und $R_{93}$ unabhängig voneinander H, $C_1$-$C_{20}$-Alkyl, $C_1$-$C_{20}$-Alkoxy, unsubstituiertes oder mit $C_1$-$C_6$-Alkyl, $C_1$-$C_6$-Halogenalkyl oder $C_1$-$C_6$-Alkoxy substituiertes $C_4$-$C_{12}$-Cycloalkyl oder Cycloalkoxy, oder unsubstituiertes oder mit $C_1$-$C_6$-Alkyl, $C_1$-$C_6$-Halogenalkyl oder $C_1$-$C_6$-Alkoxy substituiertes $C_6$-$C_{16}$-Aryl oder $C_6$-$C_{16}$-Aryloxy, oder unsubstituiertes oder mit $C_1$-$C_6$-Alkyl, $C_1$-$C_6$-Halogenalkyl oder $C_1$-$C_6$-Alkoxy substituiertes $C_7$-$C_{16}$-Aralkyl oder $C_7$-$C_{16}$-Aralkyloxy darstellen; die Reste $R_{91}$ und $R_{92}$ gemeinsam unsubstituiertes oder mit $C_1$-$C_6$-Alkyl, $C_1$-$C_6$-Halogenalkyl oder $C_1$-$C_6$-Alkoxy substituiertes Tetra- oder Pentamethylen, oder Tetra- oder Pentamethylendioxyl bedeuten, oder unsubstituiertes oder mit $C_1$-$C_6$-Alkyl, $C_1$-$C_6$-Halogcnalkyl oder $C_1$-$C_6$-Alkoxy substituiertes und mit 1 oder 2 1,2-Phenylen kondensiertem Tetra- oder Pentamethylen, oder Tetra- oder Pentamethylendioxyl darstellen, oder unsubstituiertes oder mit $C_1$-$C_6$-Alkyl, $C_1$-$C_6$-lialogenikyl oder $C_1$-$C_6$-Alkoxy substituiertes und in den 1,2- und 3,4-Stellungen mit 1,2-Phenylen kondensiertes Tetramethylendioxyl darstellen, und $R_{93}$ die zuvor angegebene Bedeutung hat; und

$Z_1$ lineares oder verzweigtes, unsubstituiertes oder mit $C_1$-$C_4$-Alkoxy substituiertes $C_2$-$C_{12}$-Alkylen, unsubstituiertes

oder mit $C_1$-$C_4$-Alkyl oder $C_1$-$C_4$-Alkoxy substituiertes 1,2- oder 1,3-Cycloalkylen mit 4 bis 8 C-Atomen, oder unsubstituiertes oder mit $C_1$-$C_4$-Alkyl oder $C_1$-$C_4$-Alkoxy substituiertes 1,2 oder 1,3-Heterocycloalkylen mit 5 oder 6 Ringgliedern und einem Heteroatom aus der Gruppe O oder N bedeutet.

Bei den Resten $R_{91}$, $R_{92}$ und $R_{93}$ handelt es sich bevorzugt um gleiche Reste.

Sofern $R_{91}$, $R_{92}$ und $R_{93}$ substituiert sind, handelt es sich bei den Substituenten bevorzugt um $C_1$-$C_4$-Alkyl, $C_1$-$C_4$-Halogenalkyl oder $C_1$-$C_4$-Alkoxy. Halogen bedeutet bevorzugt Cl und besonders bevorzugt F. Beispiele für bevorzugte Substituenten sind Methyl, Methoxy, Ethyl, Ethoxy und Trifluormethyl. $R_{91}$, $R_{92}$ und $R_{93}$ sind bevorzugt mit 1 bis 3 Substituenten substituiert.

$R_{91}$, $R_{92}$ und $R_{93}$ kann als Alkyl linear oder verzweigt sein und bevorzugt 1 bis 12, bevorzugter 1 bis 8, und besonders bevorzugt 1 bis 6 C-Atome enthalten. Beispiele für Alkyl sind Methyl, Ethyl, n- und i-Propyl, n-, i- und t-Butyl, die Isomeren von Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl und Eicosyl. Bevorzugte Beispiele sind Methyl, Ethyl, n-und i-Propyl, n-,i- und t-Butyl, 1-, 2- oder 3-Pentyl und 1-, 2-, 3- oder 4-Hexyl.

$R_{91}$, $R_{92}$ und $R_{93}$ kann als Alkoxy linear oder verzweigt sein und bevorzugt 1 bis 12, bevorzugter 1 bis 8, und besonders bevorzugt 1 bis 6 C-Atome enthalten. Beispiele für Alkoxy sind Methoxy, Ethoxy, n- und i-Propyloxy, n-, i- und t-Butyloxy, die Isomeren von Pentyloxy, Hexyloxy, Heptyloxy, Octyloxy, Nonyloxy, Decyloxy, Undecyloxy, Dodecyloxy, Tridecyloxy, Tetradecyloxy, Pentadecyloxy, Hexadecyloxy, Heptadecyloxy, Octadecyloxy und Eicosyloxy. Bevorzugte Beispiele sind Methoxy, Ethoxy, n- und i-Propyloxy, n-, i- und t-Butyloxy, 1-, 2- oder 3-Pentyloxy und 1-, 2-, 3- oder 4-Hexyloxy.

Bedeuten $R_{91}$, $R_{92}$ und $R_{93}$ Cycloalkyl, so handelt es sich bevorzugt um $C_5$-$C_8$-Cycloalkyl, und besonders bevorzugt um $C_5$- oder $C_6$-Cycloalkyl. Einige Beispiele sind Cyclobutyl, Cycloheptyl, Cyclooctyl und besonders Cyclopentyl und Cyclohexyl. Beispiele für substituiertes Cycloalkyl sind Methyl-, Dimethyl-, Trimethyl-, Methoxy-, Dimethoxy-, Trimethoxy-, Trifluormethyl-, Bistrifluormethyl und Tristrifluormethylcyclopentyl und -cyclohexyl.

Bedeuten $R_{91}$, $R_{92}$ und $R_{93}$ Cycloalkyloxy, so handelt es sich bevorzugt um $C_5$-$C_8$-Cycloalkyloxy, und besonders bevorzugt um $C_5$- oder $C_6$-Cycloalkyloxy. Einige Beispiele sind Cyclobutyloxy, Cycloheptyloxy, Cyclooctyloxy und besonders Cyclopentyloxy und Cyclohexyloxy. Beispiele für substituiertes Cycloalkyl sind Methyl-, Dimethyl-, Trimethyl-, Methoxy-, Dimethoxy-, Trimethoxy-, Trifluormethyl-, Bistrifluormethyl und Tristrifluormethylcyclopentyloxy und -cyclohexyloxy.

Bedeuten $R_{91}$, $R_{92}$ und $R_{93}$ Aryl, so handelt es sich bevorzugt um $C_6$-$C_{12}$-Aryl und besonders bevorzugt um Phenyl oder Naphthyl. Beispiele für substituiertes Aryl sind Methyl-, Dimethyl-, Trimethyl-, Methoxy-, Dimethoxy-, Trimethoxy-, Trifluormethyl-, Bistrifluormethyl und Tristrifluormethylphenyl.

Bedeuten $R_{91}$, $R_{92}$ und $R_{93}$ Aryloxy, so handelt es sich bevorzugt um $C_6$-$C_{12}$-Aryloxy und besonders bevorzugt um unsubstituiertes oder substituiertes Phenyloxy oder Naphthyloxy. Beispiele für substituiertes Aryloxy sind Methyl-, Dimethyl-, Trimethyl-, Methylisopropyl-, Isopropyl-, Diisopropyl-, Triisopropyl-, Tertiärbutyl-, Methyltertiärbutyl-, Ditertiärbutyl-, Tritertiärbutyl-, Methoxy-, Dimethoxy-, Trimethoxy-, Trifluormethyl-, Bistrifluormethyl und Tristrifluormethylphenyloxy.

Bedeuten $R_{91}$, $R_{92}$ und $R_{93}$ Aralkyl, so handelt es sich bevorzugt um $C_7$-$C_{13}$-Aralkyl, wobei die Alkylengruppe im Aralkyl bevorzugt Methylen darstellt. Besonders bevorzugt stellt das Aralkyl Benzyl dar. Beispiele für substituiertes Aralkyl sind Methyl-, Dimethyl-, Trimethyl-, Methoxy-, Dimethoxy-, Trimethoxy-, Trifluormethyl-, Bistrifluormethyl und Tristrifluormethylbenzyl.

Bedeuten $R_{91}$, $R_{92}$ und $R_{93}$ Aralkyloxy, so handelt es sich bevorzugt um unsubstituiertes oder substituiertes $C_7$-$C_{13}$-Aralkyloxy, wobei die Alkylengruppe im Aralkyloxy bevorzugt Methylen darstellt Besonders bevorzugt stellt das Aralkyloxy unsubstituiertes oder substituiertes Benzyloxy dar. Beispiele für substituiertes Aralkyloxy sind Methyl-, Dimethyl-, Trimethyl-, Methoxy-, Dimethoxy-, Trimethoxy-, Trifluormethyl-, Bistrifluormethyl und Tristrifluormethylbenzyloxy.

Beispiele für an das P-Atom gebundenes, gegebenenfalls substituiertes beziehungsweise kondensiertes Tetra- oder Pentamethylen sind

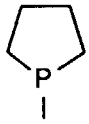 , 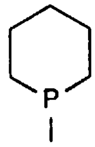 , 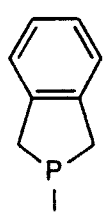 und 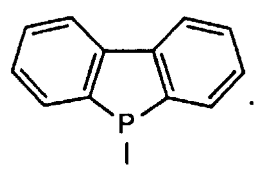 .

Andere geeignete Phosphine sind mit einer =PRa-Gruppe überbrückte Cycloaliphate mit 6 bis 8 Ringkohlen-

stoffatomen, zum Beispiel

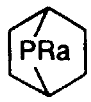 , 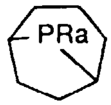 , 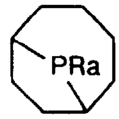 und 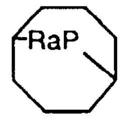 ,

worin Ra $C_1$-$C_6$-Alkyl, Cyclohexyl, Benzyl, unsubstituiertes oder mit 1 oder 2 $C_1$-$C_4$-Alkyl substituiertes Phenyl bedeutet.

Bei $Z_1$ als linearem oder verzweigtem Alkylen handelt es sich bevorzugt um 1,2-Alkylen oder 1,3-Alkylen mit vorzugsweise 2 bis 6 C-Atomen, zum Beispiel um Ethylen, 1,2-Propylen oder 1,2-Butylen.

Beispiele für $Z_1$ als Cycloalkylen sind 1,2- und 1,3-Cyclopentylen und 1,2- oder 1,3-Cyclohexylen. Beispiele für $Z_1$ als Heterocycloalkylen sind 1,2- und 1,3-Pyrrolidin, 1,2- und 1,3-Piperidin, und 1,2- und 1,3-Tetrahydrofuran.

In einer bevorzugten Ausführungsform entsprechen die Phosphinliganden der Formel XXIII, worin $R_{91}$, $R_{92}$ und $R_{93}$ unabhängig voneinander H, $C_1$-$C_6$-Alkyl, unsubstituiertes oder mit $C_1$-$C_4$-Alkyl substituiertes Cyclopentyl oder Cyclohexyl, oder unsubstituiertes oder mit $C_1$-$C_4$-Alkyl, $C_1$-$C_4$-Alkoxy oder Trifluormethyl substituiertes Phenyl oder unsubstituiertes oder mit $C_1$-$C_4$-Alkyl, $C_1$-$C_4$-Alkoxy oder Trifluormethyl substituiertes Benzyl darstellen. Besonders bevorzugte Beispiele für Phosphinliganden der Formel XXIII sind $(C_6H_5)_3P$, $(C_6H_5CH_2)_3P$, $(C_5H_{11})_3P$, $(CH_3)_3P$, $(C_2H_5)_3P$, (n-$C_3H_7)_3P$, (i-$C_3H_7)_3P$, (n-$C_4H_9)_3P$, $(C_6H_5)_2HP$, $(C_6H_5CH_2)_2HP$, $(C_5H_{11})_2HP$, $(C_2H_5)_2HP$, (n-$C_3H_7)_2HP$, (i-$C_3H_7)_2HP$, (n-$C_4H_9)_2HP$, $(C_6H_5)H_2P$, (n-$C_4H_9)H_2P$, $(C_6H_5CH_2)H_2P$, $(C_5H_{11})H_2P$, $(CH_3)H_2P$, $(CH_3)_2HP$, $(C_2H_5)H_2P$, (n-$C_3H_7)H_2P$, (i-$C_3H_7)H_2P$, $PH_3$, (2-Methyl-$C_6H_4)_3P$, (3-$CH_3$-$C_6H_4)_3P$, (4-$C_2H_5$-$C_6H_4)_3P$, (4-$CH_3$-$C_6H_4)_3P$, (2,4-Di-$CH_3$-$C_6H_3)_3P$, (2,6-Di-$CH_3$-$C_6H_3)_3P$, (2-$C_2H_5$-$C_6H_4)_3P$, (3-$C_2H_5$-$C_6H_4)_3P$, (2-n-$C_3H_7$-$C_6H_4)_3P$, (3-n-$C_3H_7$-$C_6H_4)_3P$, (4-n-$C_3H_7$-$C_6H_4)_3P$, (2-i-$C_3H_7$-$C_6H_4)_3P$, (3-i-$C_3H_7$-$C_6H_4)_3P$, (4-i-$C_3H_7$-$C_6H_4)_3P$, (2-n-$C_4H_9$-$C_6H_4)_3P$, (3-n-$C_4H_9$-$C_6H_4)_3P$, (4-n-$C_4H_9$-$C_6H_4)_3P$, (2-i-$C_4H_9$-$C_6H_4)_3P$, (3-i-$C_4H_9$-$C_6H_4)_3P$, (4-i-$C_4H_9$-$C_6H_4)_3P$, (2-t-$C_4H_9$-$C_6H_4)_3P$, (3-t-$C_4H_9$-$C_6H_4)_3P$, (4-t-$C_4H_9$-$C_6H_4)_3P$, (2-$CH_3$-6-t-$C_4H_9$-$C_6H_3)_3P$, (3-$CH_3$-6-t-$C_4H_9$-$C_6H_3)_3P$, (3-$CH_3$-6-t-$C_4H_9$-$C_6H_3)_3P$, (2,6-Di-t-$C_4H_9$-$C_6H_3)_3P$, (2,3-Di-t-$C_4H_9$-$C_6H_3)_3P$, $(C_6H_{11})_3P$, $(C_6H_{11})_2HP$, $(C_5H_9)P$, $(C_5H_9)_2HP$ und (2,4-Di-t-$C_4H_9$-$C_6H_2)_3P$.

In einer anderen bevorzugten Ausführungsform entsprechen die Phosphinliganden der Formel XXIII, worin $R_{91}$, $R_{92}$ und $R_{93}$ unabhängig voneinander H, $C_1$-$C_6$-Alkoxy, unsubstituiertes oder mit $C_1$-$C_4$-Alkyl substituiertes Cyclopentyloxy oder Cyclohexyloxy, oder unsubstituiertes oder mit $C_1$-$C_4$-Alkyl, $C_1$-$C_4$-Alkoxy oder Trifluormethyl substituiertes Phenyloxy oder Phenyl oder unsubstituiertes oder mit $C_1$-$C_4$-Alkyl, $C_1$-$C_4$-Alkyl, $C_1$-$C_4$-Alkoxy oder Trifluormethyl substituiertes Benzyloxy darstellen.

Beispiele für Phosphite sind $(CH_3O)_3P$, $(C_2H_5O)_3P$, (n-$C_3H_7O)_3P$, (i-$C_3H_7O)_3P$, (n-$C_4H_9O)_3P$, (i-$C_4H_9O)_3P$, (t-$C_4H_9O)_3P$, $(C_6H_5O)_3P$, (3-$CH_3$-6-t-$C_4H_9$-$C_6H_3O)_3P$, (2-$CH_3$-$C_6H_4O)_3P$, (3-$CH_3$-$C_6H_4O)_3P$, (4-$CH_3$-$C_6H_4O)_3P$, (2,4-Di-$CH_3$-$C_6H_3O)_3P$, (2,6-Di-$CH_3$-$C_6H_3O)_3P$, (2-$C_2H_5$-$C_6H_4O)_3P$, (3-$C_2H_5$-$C_6H_4O)_3P$, (4-$C_2H_5$-$C_6H_4O)_3P$, (2-n-$C_3H_7$-$C_6H_4O)_3P$, (3-n-$C_3H_7$-$C_6H_4O)_3P$, (4-n-$C_3H_7$-$C_6H_4O)_3P$, (2-i-$C_3H_7$-$C_6H_4O)_3P$, (3-i-$C_3H_7$-$C_6H_4O)_3P$, (4-i-$C_3H_7$-$C_6H_4O)_3P$, (2-n-$C_4H_9$-$C_6H_4O)_3P$, (3-n-$C_4H_9$-$C_6H_4O)_3P$, (4-n-$C_4H_9$-$C_6H_4O)_3P$, (2-i-$C_4H_9$-$C_6H_4O)_3P$, (3-i-$C_4H_9$-$C_6H_4O)_3P$, (4-i-$C_4H_9$-$C_6H_4O)_3P$, (2-$CH_3$-6-t-$C_4H_9$-$C_6H_3O)_3P$, (2,3-Di-t-$C_4H_9$-$C_6H_3O)_3P$, ((2,6-Di-t-$C_4H_9$-$C_6H_3O)_3P$, 3-t-$C_4H_9$-$C_6H_4O)_3P$, (3-$CH_3$-6-t-$C_4H_9$-$C_6H_3O)_3P$, (2,4-Di-t-$C_4H_9$-$C_6H_3O)_3P$, (4-t-$C_4H_9$-$C_6H_4O)_3P$, (2-t-$C_4H_9$-$C_6H_4O)_3P$, und Phosphite der Formel

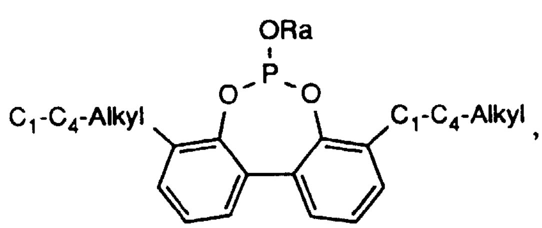 ,

worin Ra $C_1$-$C_6$-Alkyl, Cyclohexyl, Benzyl, unsubstituiertes oder mit 1 oder 2 $C_1$-$C_4$-Alkyl substituiertes Phenyl bedeutet.

Besonders bevorzugte Phosphine sind Tri-i-propylphosphin, Tri-t-butylphosphin, Tricyclopentylphosphin und Tricyclohexylphosphin.

Als Liganden für die erfindungsgemäss zu verwendenden Ruthenium- und Osmiumverbindungen werden

organische oder anorganische Verbindungen, Atome oder Ionen bezeichnet, die an ein Metallzentrum koordiniert sind.

Die Bedeutungen und Bevorzugungen von photolabilen Liganden und nicht-photolabilen Liganden (auch als stark koordinierende Liganden bezeichnet) sind zuvor genannt worden.

In einer bevorzugten Ausführungsform enthalten die erfindungsgemäss zu verwendenden Ru- und Os-Katalysatoren nur photolabile Liganden, Phosphingruppen und Anionen zum Ladungsausgleich. Ganz besonders bevorzugt sind die Katalysatoren, die eine Arengruppe als photolabilen Liganden, eine tertiäre Phosphingruppe und ein- oder zweiwertige Anionen zum Ladungsausgleich enthalten.

Geeignete Anionen von anorganischen oder organischen Säuren sind zum Beispiel Hydrid ($H^{\ominus}$), Halogenid (zum Beispiel $F^{\ominus}$, $Cl^{\ominus}$, $Br^{\ominus}$ und $I^{\ominus}$), das Anion einer Sauerstoffsäure, und $BF_4^{\ominus}$, $PF_6^{\ominus}$, $Sbf_6^{\ominus}$ oder $Asf_6^{\ominus}$. Es ist zu erwähnen, dass das zuvor erwähnte Cyclopentadienyl Ligand und Anion ist.

Weitere geeignete Anionen sind $C_1$-$C_{12}$-, bevorzugt $C_1$-$C_6$- und besonders bevorzugt $C_1$-$C_4$-Alkoholate, die insbesondere verzweigt sind, zum Beispiel der Formel $R_xR_yR_zC$-$O^{\ominus}$ entsprechen, worin $R_x$ H oder $C_1$-$C_{10}$-Alkyl, $R_y$ $C_1$-$C_{10}$-Alkyl und $R_z$ $C_1$-$C_{10}$-Alkyl oder Phenyl darstellen, und die Summe der C-Atome von $R_x$,$R_y$ und $R_z$ 11 beträgt. Beispiele sind besonders i-Propyloxy und t-Butyloxy.

Andere geeignete Anionen sind $C_3$-$C_{18}$-, bevorzugt $C_5$-$C_{14}$- und besonders bevorzugt $C_5$-$C_{12}$-Acetylide, die der Formel $R_w$-$C{\equiv}C^{\ominus}$ entsprechen können, worin $R_w$ $C_1$-$C_{16}$-Alkyl, bevorzugt $\alpha$-verzweigtes $C_3$-$C_{12}$-Alkyl, zum Beispiel der Formel $R_xR_yR_zC$-, bedeutet, oder unsubstituiertes oder mit 1 bis 3 $C_1$-$C_4$-Alkyl oder $C_1$-$C_4$-Alkoxy substituiertes Phenyl oder Benzyl darstellen. Einige Beispiele sind i-Propyl-, i- und t-Butyl-, Phenyl-, Benzyl-, 2-Methyl-, 2,6-Dimethyl-, 2-i-Propyl-, 2-i-Propyl-6-methyl-, 2-t-Butyl-, 2,6-Di-t-butyl- und 2-Methyl-6-t-butylphenylacetylid.

Die Bedeutungen und Bevorzugungen von Anionen von Sauerstoffsäuren sind zuvor genannt worden.

Besonders bevorzugt sind $H^{\ominus}$, $F^{\ominus}$, $Cl^{\ominus}$, $Br^{\ominus}$, $BF_4^{\ominus}$, $PF_6^{\ominus}$, $Sbf_6^{\ominus}$, $Asf_6^{\ominus}$, $CF_3SO_3^{\ominus}$, $C_6H_5$-$SO_3^{\ominus}$, 4-Methyl-$C_6H_5$-$SO_3^{\ominus}$, 2,6-Dimethyl-$C_6H_5$-$SO_3^{\ominus}$, 2,4,6-Trimethyl- $C_6H_5$-$SO_3^{\ominus}$ und 4-$CF_3$-$C_6H_5$-$SO_3^{\ominus}$ sowie Cyclopentadienyl ($Cp^{\ominus}$).

Die Anzahl der nicht-photolabilen Liganden hängt von der Anzahl der Phosphingruppen, der Grösse der nicht-photolabilen Liganden und der Anzahl der photolabilen Liganden ab.

In einer bevorzugten Ausführungsform entsprechen die Ruthenium- und Osmiumverbindungen besonders bevorzugt einer der Formeln XXIV bis XXIVf

$$R_{97}L_8Me^{2+}(Z^{n-})_{2/n} \quad (XXIV),$$

$$R_{97}L_9L_{10}Me^{2+}(Z^{n-})_{2/n} \quad (XXIVa),$$

$$(R_{97})_2L_9Me^{2+}(Z^{n-})_{2/n} \quad (XXIVb),$$

$$(R_{97})_3L_9Me^{2+}(Z^{n-})_{2/n} \quad (XXIVc),$$

$$R_{97}L_8L_9Me^{2+}(Z^{n-})_{2/n} \quad (XXIVd),$$

$$R_{97}L_9L_9Me^{2+}(Z^{n-})_{2/n} \quad (XXIVe),$$

$$R_{97}L_8L_{10}Me^{2+}(Z^{n-})_{2/n} \quad (XXIVf),$$

worin

$R_{97}$ ein tertiäres Phosphin der Formel XXIII oder XXIIIa ist;
Me für Ru oder Os steht;
n für die Zahlen 1, 2 oder 3 steht;
Z das Anion einer anorganischen oder organischen Säure ist;
(a) $L_8$ einen Aren- oder Heteroarenliganden bedeutet;
(b) $L_9$ einen von $L_8$ verschiedenen einwertigen photolabilen Liganden darstellt; und

(c) $L_{10}$ einen einwertigen nicht-photolabilen Liganden bedeutet

Für $R_{97}$, $L_8$, $L_9$ und $L_{10}$ gelten die zuvor für die einzelnen Bedeutungen angegebenen Bevorzugungen.

In den Formeln XXIV bis XXIVf steht n bevorzugt für 1 oder 2 und ganz besonders für 1. Für $R_{97}$ gelten die für die Phosphinliganden der Formel XXIII angegebenen Bevorzugungen, insbesondere handelt es sich um tertiäre Phosphine.

Ganz besonders bevorzugt werden im erfindungsgemässen Verfahren Ruthenium- und Osmiumverbindungen einer der Formeln XXV bis XXVf verwendet,

$$(R_{94}R_{95}R_{96}P)L_8Me^{2+}(Z^{1-})_2 \qquad \text{(XXV)},$$

$$(R_{94}R_{95}R_{96}P)_2L_9Me^{2+}(Z^{1-})_2 \qquad \text{(XXVa)},$$

$$(R_{94}R_{95}R_{96}P)L_9L_{10}Me^{2+}(Z^{1-})_2 \qquad \text{(XXVb)},$$

$$(R_{94}R_{95}R_{96}P)_3L_9Me^{2+}(Z^{1-})_2 \qquad \text{(XXVc)},$$

$$(R_{94}R_{95}R_{96}P)L_9L_9Me^{2+}(Z^{1-})_2 \qquad \text{(XXVd)},$$

$$(R_{94}R_{95}R_{96}P)L_8L_{10}Me^{2+}(Z^{1-})_2 \qquad \text{(XXVe)},$$

$$(R_{94}R_{95}R_{96}P)L_8(L_9)_mMe^{2+}(Z^{1-})_2 \qquad \text{(XXVf)},$$

worin

Me für Ru oder Os steht;
Z in Formeln XXV bis XXVe $H^\ominus$, Cyclopentadienyl, $Cl^\ominus$, $Br^\ominus$, $BF_4^\ominus$, $PF_6^\ominus$, $Sbf_6^\ominus$, $Asf_6^\ominus$, $CF_3SO_3^\ominus$, $C_6H_5$-$SO_3^\ominus$, 4-Methyl-$C_6H_5$-$SO_3^\ominus$ , 3,5-Dimethyl-$C_6H_5$-$SO_3^\ominus$, 2,4,6-Trimethyl-$C_6H_5$-$SO_3^\ominus$ und 4-$CF_3$-$C_6H_S$-$SO_3^\ominus$ und in Formel XXVf $H^\ominus$ , Cyclopentadienyl, $BF_4^\ominus$, $PF_6^\ominus$, $Sbf_6^\ominus$, $Asf_6^\ominus$, $CF_3SO_3^\ominus$, $C_6H_5$-$SO_3^\ominus$, 4-Methyl-$C_6H_5$-$SO_3^\ominus$, 2,6-Dimethyl-$C_6H_5$-$SO_3^\ominus$, 2,4,6-Trimethyl-$C_6H_5$-$SO_3^\ominus$ oder
4-$CF_3$-$C_6H_5$-$SO_3^\ominus$ bedeutet;
$R_{94}$, $R_{95}$ und $R_{96}$ unabhängig voneinander $C_1$-$C_6$-Alkyl, unsubstituiertes oder mit 1 bis 3 $C_1$-$C_4$-Alkyl substituiertes Cyclopentyl oder Cyclohexyl oder Cyclopentyloxy oder Cyclohexyloxy, oder unsubstituiertes oder mit 1 bis 3 $C_1$-$C_4$-Alkyl substituiertes Phenyl oder Benzyl oder Phenyloxy oder Benzyloxy darstellen;
$L_8$ unsubstituiertes oder mit 1 bis 3 $C_1$-$C_4$-Alkyl, $C_1$-$C_4$-Alkoxy, -OH, -F oder Cl substituiertes $C_6$-$C_{16}$-Aren oder $C_5$-$C_{16}$-Heteroaren darstellt;
$L_9$ $C_1$-$C_6$-Alkyl-CN, Benzonitril oder Benzylnitril bedeutet; und
$L_{10}$ $H_2O$ oder $C_1$-$C_6$-Alkanol ist.

Bevorzugte Arene und Heteroarene sind Benzol, Toluol, Xylol, Trimethylbenzol, Naphthalin, Biphenyl, Anthracen, Acenaphthen, Fluoren, Phenanthren, Pyren, Chrysen, Fluoranthren, Furan, Thiophen, Pyrrol, Pyridin, γ-Pyran, γ-Thiopyran, Pyrimidin, Pyrazin, Indol, Cumaron, Thionaphthen, Carbazol, Dibenzofuran, Dibenzothiophen, Pyrazol, Imidazol, Benzimidazol, Oxazol, Thiazol, Isoxazol, Isothiazol, Chinolin, Isochinolin, Acridin, Chromen, Phenazin, Phenoxazin, Phenothiazin, Triazine, Thianthren und Purin. Bevorzugtere Arene und Heteroarene sind Benzol, Naphthalin, Cumen, Thiophen und Benzthiophen. Ganz besonders bevorzugt ist das Aren Benzol oder ein mit $C_1$-$C_4$-Alkyl substituiertes Benzol wie zum Beispiel Toluol, Xylol, Isopropylbenzol, Tertiärbutylbenzol oder Cumen und das Heteroaren ist bevorzugt Thiophen.

Wenn die Herstellung der Ruthenium- und Osmiumkatalysatoren in Lösungsmitteln vorgenommen wird, die an ein Metallatom koordinieren können, wie zum Beispiel Alkanolen, so können sich solvatierte Ru/Os-Kationkomplexe bilden, die im Rahmen der Verwendung gemäss der Erfindung mitumfasst werden.

Einige Beispiele für gemäss der Erfindung zu verwendende Ruthenium- und Osmiumverbindungen sind [Tos ist gleich Tosylat]: $(C_6H_{11})_2HPRu(p\text{-}Cumen)Cl_2$, $(C_6H_{11})_3PRu(p\text{-}Cumen)Cl_2$, $(C_6H_{11})_3PRu(p\text{-}Cumen)(Tos)_2$, $(C_6H_{11})_3PRu(p\text{-}Cumen)Br_2$, $(C_6H_{11})_3PRu(p\text{-}Cumen)ClF$, $(C_6H_{11})_3PRu(C_6H_6)(Tos)_2$, $(C_6H_{11})_3PRu(CH_3\text{-}C_6H_5)(Tos)_2$, $(C_6H_{11})_3PRu(i\text{-}C_3H_7\text{-}C_6H_5)(Tos)_2$, $(C_6H_{11})_3PRu(Chrysen)(Tos)_2$, $(C_6H_{11})_3PRu(Biphenyl)(Tos)2$, $(C_6H_{11})_3PRu(Anthracen)(Tos)_2$, $(C_6H_{11})_3PRu(C_{10}H_8)(Tos)_2$, $(i\text{-}C_3H_7)_3PRu(p\text{-}Cumen)Cl_2$, $(CH_3)_3PRu(p\text{-}Cumen)Cl_2$, $(n\text{-}C_4H_9)_3PRu(p\text{-}Cumen)Cl_2$, $[(C_6H_{11})_3P]_2Ru(CH_3\text{-}CN)(Tos)_2$, $(C_6H_{11})_3PRu(CH_3\text{-}CN)(C_2H_3\text{-}OH)(Tos)_2$, $(C_6H_{11})_3PRu(p\text{-}Cumen)(CH_3\text{-}CN)_2(PF_6)_2$, $(C_6H_{11})_3PRu(p\text{-}Cumen)(CH_3\text{-}CN)_2(Tos)_2$, $(n\text{-}C_4H_9)_3PRu(p\text{-}Cumen)(CH_3\text{-}CN)_2(Tos)_2$, $(C_6H_{11})_3PRu(CH_3CN)Cl_2$, $(C_6H_{11})_3PRu(CH_3\text{-}CN)_2Cl_2$, $(C_6H_{11})_3PRu(p\text{-}Cumen)(C_2H_5OH)(BF_4)_2$, $(C_6H_{11})_3PRu(p\text{-}Cumen)(C_2H_5OH)_2(BF_4)_2$, $(C_6H_{11})_3PRu(p\text{-}Cumen)(C_2H_5OH)_2(PF_6)_2$, $(C_6H_{11})_3PRu(C_6H_6)(C_2H_5OH)_2(Tos)_2$, $(C_6H_{11})_3POs(p\text{-}Cumen)Cl_2$, $(i\text{-}C_3H_7)_3POs(p\text{-}Cumen)Cl_2$, $(CH_3)_3POs(p\text{-}Cumen)Cl_2$, $(C_6H_5)_3POs(p\text{-}Cumen)Cl_2$, $[(C_6H_{11})_3P]_3Ru(p\text{-}Cumen)Cl_2$ und $RuCl_2(p\text{-}Cumen)[(C_6H_{11})_2PCH_2CH_2P(C_6H_{11})_2]$.

Die erfindungsgemäss zu verwendenden Ruthenium- und Osmiumverbindungen sind bekannt oder nach bekannten und analogen Verfahren ausgehend von den Metallhalogeniden (zum Beispiel $MeX_3$ oder $[MeArenX_2]_2$ und Reaktion mit Phosphinen und Ligandenbildnern herstellbar.

7. Weitere geeignete Einkomponenten-Katalysatoren sind zweiwertig-kationische Ruthenium- oder Osmiumverbindungen mit einem Metallatom, woran 1 bis 3 tertiäre Phosphinliganden mit im Fall der Rutheniumverbindungen sterisch anspruchsvollen Substituenten, gegebenenfalls nicht-photolabile Neutralliganden und Anionen zum Ladungsausgleich gebunden sind, handelt, mit der Massgabe, dass in Ruthenium(trisphenylphosphin)dihalogeniden oder -hydrid-halogeniden die Phenylgruppen mit $C_1$-$C_{18}$-Alkyl, $C_1$-$C_{18}$-Halogenalkyl oder $C_1$-$C_{18}$-Alkoxy substituiert sind.

Die Ruthenium- und Osmiumverbindungen enthalten bevorzugt 2 oder 3 tertiäre Phosphingruppen. Unter Phosphingruppen werden im Rahmen der Erfindung tertiäre Phosphine und Phosphite verstanden. Die Anzahl zusätzlicher nicht photolabiler Neutralliganden richtet sich zum einen nach der Anzahl der Phosphin- und Phosphitliganden, und zum anderen nach der Wertigkeit der Neutralliganden. Einbindige oder zweibindige Neutralliganden sind bevorzugt.

In einer bevorzugten Ausführungsform enthalten die erfindungsgemäss zu verwendenden zweiwertig-kationischen Ruthenium- und Osmiumverbindungen 3 Phosphin- oder Phosphitgruppen und zwei einwertige Anionen zum Ladungsausgleich; oder 3 Phosphin- oder Phosphitgruppen, zwei einbindige oder einen zweibindigen nicht-photolabilen Neutralliganden, und zwei einwertige Anionen zum Ladungsausgleich; oder 2 Phosphin- oder Phosphitgruppen, einen monoanionischen, zusätzlich einbindigen nicht-photolabilen Neutralliganden, und ein einwertiges Anion zum Ladungsausgleich.

Die Bedeutungen und Bevorzugungen von nicht-photolabilen Liganden (auch als stark koordinierende Liganden bezeichnet) sind zuvor genannt worden.

Unter sterisch anspruchsvollen Substituenten werden im Rahmen der Erfindung solche verstanden, die die Ruthenium- und Osmiumatome sterisch abschirmen. So wurde überraschend gefunden, dass lineare Alkylgruppen als Substituenten in den Phosphin- und Phosphitliganden Rutheniumverbindungen ohne jede thermische Aktivität für die Metathesepolymerisation von gespannten Cycloolefinen ergeben. Es wurde auch beobachtet, dass bei Osmiumverbindungen überraschend lineare Alkylgruppen als Substituenten in den Phosphin- und Phosphitliganden eine ausgezeichnete thermokatalytische Aktivität für die Metathesepolymerisation von gespannten Cycloolefinen besitzen; bevorzugt verwendet man aber auch für die Osmiumverbindungen Phosphin- und Phosphitliganden mit sterisch anspruchsvollen Substituenten. Es wurde ferner gefunden, dass die sterische Abschirmung von Triphenylphosphinliganden bei Ruthenium-dihalogeniden und Ruthenium-hydridhalogeniden ungenügend ist und solche Katalysatoren nur eine mässige katalytische Aktivität für die Metathesepolymerisation von gespannten Cycloolefinen besitzen. Die katalytische Aktivität kann überraschend erheblich gesteigert werden, wenn die tertiären Phosphingruppen mit Alkyl oder Alkoxygruppen substituiertes Phenyl enthalten.

Die Bedeutungen und Bevorzugungen von Phosphinliganden sind zuvor genannt worden. Besonders bevorzugt handelt es sich bei $R_{91}$, $R_{92}$ und $R_{93}$ als Alkyl um O-verzweigtes Alkyl, zum Beispiel der Formel $-CR_bR_cR_d$, worin $R_b$ H oder $C_1$-$C_{12}$-Alkyl, $R_c$ $C_1$-$C_{12}$-Alkyl, und $R_d$ $C_1$-$C_{12}$-Alkyl oder unsubstituiertes oder mit $C_1$-$C_4$-Alkyl oder $C_1$-$C_4$-Alkoxy substituiertes Phenyl darstellen, und die Summe der C-Atome im Rest $-CR_bR_cR_d$ 3 bis 18 beträgt. Beispiele für Alkyl sind i-Propyl, i- und t-Butyl, 1-Methyl- oder 1,1-Dimethylprop-1-yl, 1-Methyl- oder 1,1-Dimethylbut-1-yl, 1-Methyl- oder 1,1-Dimethylpent-1-yl, 1-Methyl- oder 1,1-Dimethylhex-1-yl, 1-Methyl- oder 1,1-Dimethylheptl-1yl, 1-Methyl- oder 1,1-Dimethyloct-1-yl, 1-Methyl- oder 1,1-Dimethylnon-1-yl, 1-Methyl- oder 1,1-Dimethyldec-1-yl, 1-Methyl- oder 1,1-Dimethylundec-1-yl, 1-Methyl- oder 1,1-Dimethyldodcc-1-yl, 1-Methyl- oder 1,1-Dimethyltridec-1-yl, 1-Methyl- oder 1,1-Dimethyltetradec-1-yl, 1-Methyl- oder 1,1-Dimethylpentadec-1-yl, 1-Methyl- oder 1,1-Dimethylhexadec-1-yl, 1-Methylheptadec-1-yl, Phenyl-dimethyl-methyl. Bevorzugte Beispiele sind i-Propyl, i- und t-Butyl.

Bei den verwendeten Osmiumverbindungen kann $R_{91}$, $R_{92}$ und $R_{93}$ auch lineares Alkyl mit 1 bis 18, bevorzugt 1 bis 12, bevorzugter 1 bis 8, und besonders bevorzugt 1 bis 6 C-Atomen darstellen, zum Beispiel Methyl, Ethyl, n-Propyl, n-Butyl, n-Pentyl, n-Hexyl, n-Heptyl und n-Octyl.

$R_{91}$, $R_{92}$ und $R_{93}$ kann als Alkoxy 3 bis 12, bevorzugter 3 bis 8, und besonders bevorzugt 3 bis 6 C-Atome

enthalten. Besonders bevorzugt handelt es sich um $\alpha$-verzweigtes Alkoxy, zum Beispiel der Formel $-OCR_bR_cR_d$, worin $R_b$ H oder $C_1$-$C_{12}$-Alkyl, $R_c$ $C_1$-$C_{12}$-Alkyl, und $R_d$ $C_1$-$C_{12}$-Alkyl oder unsubstituiertes oder mit $C_1$-$C_4$-Alkyl oder $C_1$-$C_4$-Alkoxy substituiertes Phenyl darstellen, und die Summe der C-Atome im Rest $-CR_bR_cR_d$ 3 bis 18 beträgt. Beispiele für Alkoxy sind i-Propyloxy, i- und t-Butyloxy, 1-Methyl- oder 1,1-Dimethylprop-1-oxyl, 1-Methyl- oder 1,1-Dimethylbut-1-oxyl, 1-Methyl- oder 1,1-Dimethylpent-1-oxyl, 1-Methyl- oder 1,1-Dimethylhex-1-oxyl, 1-Methyl- oder 1,1-Dimethylhept-1-oxyl, 1-Methyl- oder 1,1-Dimethyloct-1-oxyl, 1-Methyl- oder 1,1-Dimethylnon-1-oxyl, 1-Methyl- oder 1,1-Dimethyldec-1-oxyl, 1-Methyl- oder 1,1-Dimethylundec-1-oxyl, 1-Methyl- oder 1,1-Dimethyldodec-1-oxyl, 1-Methyl- oder 1,1-Dimethyltridec-1-oxyl, 1-Methyl- oder 1,1-Dimethyltetradec-1-oxyl, 1-Methyl- oder 1,1-Dimethylpentadec-1-oxyl, 1-Methyl- oder 1,1-Dimethylhexadec-1-oxyl, 1-Methylheptadec-1-oxyl, Phenyl-dimethyl-methyl. Bevorzugte Beispiele sind i-Propyloxy, i- und t-Butyloxy.

Bei den verwendeten Osmiumverbindungen kann $R_{91}$, $R_{92}$ und $R_{93}$ auch lineares Alkoxy mit 1 bis 18, bevorzugt 1 bis 12, bevorzugter 1 bis 8, und besonders bevorzugt 1 bis 6 C-Atomen darstellen, zum Beispiel Methoxy, Ethoxy, n-Propyloxy, n-Butyloxy, n-Pentyloxy, n-Hexyloxy, n-Heptyloxy und n-Octyloxy.

Bedeuten $R_{91}$, $R_{92}$ und $R_{93}$ Cycloalkyl, so handelt es sich bevorzugt um $C_5$-$C_8$-Cycloalkyl, und besonders bevorzugt um $C_5$- oder $C_6$-Cycloalkyl. Einige Beispiele sind Cyclobutyl, Cycloheptyl, Cyclooctyl und besonders Cyclopentyl und Cyclohexyl, die bevorzugt unsubstituiert oder mit 1 bis 3 Alkyl-, Halogenalkyl- oder Alkoxygruppen substituiert sind.

Bedeuten $R_{91}$, $R_{92}$ und $R_{93}$ Cycloalkyloxy, so handelt es sich bevorzugt um $C_5$-$C_8$-Cycloalkyloxy, und besonders bevorzugt um $C_5$- oder $C_6$-Cycloalkyloxy. Einige Beispiele sind Cyclobutyloxy, Cycloheptyloxy, Cyclooctyloxy und besonders Cyclopentyloxy und Cyclohexyloxy, die bevorzugt unsubstituiert oder mit 1 bis 3 Alkyl-, Halogenalkyl- oder Alkoxygruppen substituiert sind.

In einer bevorzugten Ausführungsform entsprechen die Phosphinliganden der Formel XXIII, worin $R_{91}$, $R_{92}$ und $R_{93}$ unabhängig voneinander $\alpha$-verzweigtes $C_3$-$C_8$-Alkyl, unsubstituiertes oder mit $C_1$-$C_4$-Alkyl substituiertes Cyclopentyl oder Cyclohexyl, oder unsubstituiertes oder mit $C_1$-$C_4$-Alkyl, $C_1$-$C_4$-Alkyl $C_1$-$C_4$-Alkoxy oder Trifluormethyl substituiertes Phenyl darstellen. Besonders bevorzugte Beispiele für Phosphinliganden der Formel XXIII sind $(C_6H_5)_3P$, $(C_5H_9)_3P$, $(C_6H_{11})_3P$, $(i\text{-}C_3H_7)_3P$, $(i\text{-}C_4H_9)_3P$, $(t\text{-}C_4H_9)_3P$, $[C_2H_5\text{-}CH(CH_3)]_3P$, $[C_2H_5\text{-}C(CH_3)_2]_3P$, (2-Methylphenyl)$_3$P, (2,3-Dimethylphenyl)$_3$P, (2,4-Dimethylphenyl)$_3$P, (2,6-Dimethylphenyl)$_3$P, (2-Methyl-4-i-propylphenyl)$_3$P, (2-Methyl-3-i-propylphenyl)$_3$P, (2-Methyl-5-i-propylphenyl)$_3$P, (2,4-Di-t-butylphenyl)$_3$P, (2-Methyl-6-i-propylphenyl)$_3$P, (2-Methyl-3-t-butylphenyl)$_3$P, (2,5-Di-t-butylphenyl)$_3$P, (2-Methyl-4-t-butylphenyl)$_3$P, (2-Methyl-5-i-butylphenyl)$_3$P, (2,3-Di-t-butylphenyl)$_3$P und (2,6-Di-t-butylphenyl)$_3$P.

In einer anderen bevorzugten Ausführungsform entsprechen die Phosphitliganden der Formel XXIII, worin $R_{91}$, $R_{92}$ und $R_{93}$ unabhängig voneinander $\alpha$-verzweigtes $C_3$-$C_8$-Alkoxy, unsubstituiertes oder mit $C_1$-$C_4$-Alkyl substituiertes Cyclopentyloxy oder Cyclohexyloxy, oder unsubstituiertes oder mit $C_1$-$C_4$-Alkyl, $C_1$-$C_4$-Alkoxy oder Trifluormethyl substituiertes Phenyloxy darstellen. Beispiele für Phosphite sind vorn genannt worden.

Beispiele und Bevorzugungen für geeignete Anionen sind zuvor genannt worden. In einer bevorzugten Ausführungsform entsprechen die Ruthenium- und Osmiumverbindungen besonders bevorzugt den Formeln XXVI, XXVIa, XXVIb, XXVIc oder XXVId

$$Me^{2\oplus}(L_{11})_2(L_{12})(Y_1^{\ominus})_2 \quad \text{(XXVI),}$$

$$Me^{2\oplus}(L_{11})_3(Y_1^{\ominus})_2 \quad \text{(XXVIa),}$$

$$Me^{2\oplus}(L_{11})_2L_{13}(Y_1^{\ominus}) \quad \text{(XXVIb),}$$

$$Me^{2\oplus}(L_{11})_3L_{14}(Y_1^{\ominus})_2 \quad \text{(XXVIc),}$$

$$Me^{2\oplus}L_{11}(L_{12})_3(Y_1^{\ominus})_2 \quad \text{(XXVId),}$$

worin

Me für Ru oder Os steht;
$Y_1$ das Anion einer einbasigen Säure bedeutet;

$L_{11}$ ein Phosphin der Formel XXIII oder XXIIIa darstellt,
$L_{12}$ einen Neutralliganden bedeutet;
$L_{13}$ unsubstituiertes oder mit $C_1$-$C_4$-Alkyl substituiertes Cyclopentadienyl darstellt; und
$L_{14}$ für CO steht.

Für die einzelnen Bedeutungen von $L_{11}$, $L_{12}$, $L_{13}$ und $Y_1$ gelten die voranstehenden Bevorzugungen.
In einer besonders bevorzugten Ausführungsform stehen in Formel XXVI $L_{12}$ für ein $C_1$-$C_4$-Alkanol, in Formel XXVIb $Y_1$ für Cl oder Br, in Formel XXVIc $Y_1$ für H, und in den Formeln XXVI bis XXVIc $L_{11}$ für Tri-i-propylphosphin, Tricyclohexylphosphin, Triphenylphosphin oder in den Phenylgruppen mit 1 bis 3 $C_1$-$C_4$-Alkyl substituiertes Triphenylphosphin.
Einige Beispiele für gemäss der Erfindung zu verwendende Ruthenium- und Osmiumverbindungen sind $[(C_6H_{11})_3P]_2Ru(CH_3OH)_2(Tos)_2$, $[(C_6H_{11})_3P]_2RuCl_2$ und $[(C_6H_{11})_3P]_3Ru(CH_3OH)_2$.
Die erfindungsgemäss zu verwendenden Ruthenium- und Osmiumverbindungen sind bekannt oder nach bekannten und analogen Verfahren ausgehend von den Metallhalogeniden (zum Beispiel $MeX_3$, $[Me(Diolefin)X_2]_2$ oder $[MeArenX_2]_2$ und Reaktion mit Phosphinen und Ligandenbildnern herstellbar.
Die erfindungsgemässen Zusammensetzungen sind überraschend lagerstabil und können als solche in den Handel gebracht werden. Es ist aber auch möglich, die einzelnen Komponenten vor der Verarbeitung zusammen zu mischen. Bei Verwendung von luft- und/oder feuchtigkeitsempfindlichen Katalysatoren empfiehlt sich eine Lagerung unter Ausschluss von Luft und Feuchtigkeit. Da das neue Vernetzungsprinzip nicht auf einer radikalischen, anionischen oder kationischen Reaktion beruht, wird bei Durchführung der Polymerisation an Luft praktisch kein Reaktionsabbruch oder -verlangsam beobachtet, was erhebliche Vorteile bei der Verarbeitung bietet, zum Beispiel keine aufwendigen Schutzvorkehrungen. Ein grosser überraschender Vorteil ist die Möglichkeit der Verwendung lösungsmittelfreier Systeme bei flüssigen Polymeren mit niedrigem Molekulargewicht oder bei Lösungen mit reaktiven zur Metathesepolymerisation befähigten gespannten Cycloolefinen als Comonomeren.
Ein weiterer Gegenstand der Erfindung ist ein Verfahren zur Herstellung vernetzter Polymerisate durch Metathesepolymerisation, das dadurch gekennzeichnet ist, dass man eine Zusammensetzung aus

(a) einer katalytischen Menge eines Einkomponenten-Katalysators für die Metathesepolymerisation und
(b) mindestens ein Polymer mit im Polymerrückgrat gebundenen gespannten Cycloalkenylenresten alleine oder in Mischung mit gespannten Cycloolefinen,
(c) durch Erwärmen polymerisiert,
(d) durch Bestrahlung polymerisiert,
(e) durch Erwärmung und Bestrahlung polymerisiert,
(f) durch kurzzeitige Erwärmung den Einkomponenten-Katalysator aktiviert und die Polymerisation durch Bestrahlung beendet, oder
(g) durch kurzzeitige Bestrahlung den Einkomponenten-Katalysator aktiviert und die Polymerisation durch Erwärmen beendet.

Erwärmen kann eine Temperatur von 50 bis 300°C, bevorzugt 60 bis 250°C, besonders bevorzugt 60 bis 200°C, und insbesondere bevorzugt 60 bis 150°C bedeuten. Die Polymerisationszeiten hängen im wesentlichen von der Katalysatoraktivität ab und die Zeiten können von mehreren Sekunden bis zu Minuten und Stunden reichen.
Es ist beim erfindungsgemässen Verfahren nicht notwendig, die Bestrahlung der Reaktionsmischung über die gesamte Reaktionsdauer aufrechtzuerhalten. Ist die Polymerisation einmal photochemisch initiiert, erfolgt der weitere Reaktionsverlauf selbst im Dunkeln selbstständig. Vorteilhafterweise wird die Bestrahlung mit Licht der Wellenlänge im Bereich von 50 nm bis 1000 nm, bevorzugt im Bereich von 200 nm bis 500 nm und ganz besonders bevorzugt im UV-Bereich durchgeführt. Die Bestrahlungsdauer ist von der Art der Lichtquelle abhängig. Als Bestrahlungsquellen eignen sich zum Beispiel die Sonne, Laser-, Röntgen- und besonders UV-Strahlungsquellen. Vorzugsweise werden erfindungsgemäß UV-Laser oder UV-Lampen eingesetzt. Die Bestrahlung des Katalysators kann sowohl vor, während, als auch nach der Monomerenzugabe erfolgen.
Geeignete Bestrahlungszeiten sind von einer Sekunden bis zu mehreren Stunden, insbesondere Minuten bis zu Stunden. Die Reihenfolge der Zugabe von Monomeren und Katalysator ist unkritisch. Das Monomer kann sowohl vorgelegt als auch nach Einbringen des Katalysators zugegeben werden. Ebenso kann der Katalysator vorbestrahlt und anschliessend das Monomer zugegeben werden. Ferner kann auch die Katalysator und Monomer enthaltende Lösung bestrahlt werden.
Das erfindungsgemäße Verfahren wird unter Verwendung photoaktiver Katalysatoren bei Bestrahlung bevorzugt bei Raumtemperatur bis leicht erhöhter Temperatur durchgeführt. Eine Temperaturerhöhung dient in diesem Fall im wesentlichen der Erhöhung der Reaktionsgeschwindigkeit. Bei den zur Reaktionsbeschleunigung gewählten Temperaturen findet daher auch überwiegend eine Photopolymerisation statt. Es ist aber zu erwähnen, dass die Katalysatoren durch ausreichende Bestrahlung oder erhöhter Temperatur in thermoaktive Katalysatoren umgewandelt werden können. Es ist ferner anzumerken, dass einige Katalysatoren die Metathesepolymerisation sowohl thermisch als auch Bestrahlung zu initiieren vermögen.

Insbesondere wird das erfindungsgemäße Verfahren unter Bestrahlung bevorzugt bei Temperaturen von -20 bis +110°C, besonders bevorzugt 20 bis 80°C durchgeführt.

Die Bestrahlungsdauer hängt im wesentlichen von der gewünschten Reaktionsführung ab. Eine kurzzeitige Bestrahlung wird zum Beispiel dann gewählt, wenn man die Polymerisation nur durch Bestrahlung initiieren und durch Erhitzen beenden will. Kurzzeitig kann eine Bestrahlungszeit bis zu 60 Sekunden, bevorzugt 5 bis 60 Sekunden und besonders bevorzugt 10 bis 40 Sekunden bedeuten. Eine längere Bestrahlungszeit wird zum Beispiel dann gewählt, wenn man die Polymerisation überwiegend unter Bestrahlung durchführen und die endgültige Polymerisation nur durch Nachtempern beenden will.

Ein ganz besonderer und überraschender Vorteil des erfindungsgemässen Verfahrens besteht darin, dass verwendete Einkomponenten-Katalysatoren nach der Bestrahlung als thermische Katalysatoren wirken. Daraus ergibt sich die Möglichkeit, die Polymerisation nach einer kurzen Bestrahlungszeit durch Wärmezufuhr fortzusetzen und zu beenden, was in verschiedenen Bereichen der Herstellung von Formkörpern oder Beschichtungen wirtschaftliche und technische Vorteile bietet.

Mit dem erfindungsgemässen Verfahren können Werkstoffe zur spanabhebenden Herstellung von Formkörpern oder direkt Formkörper aller Art, sowie Beschichtungen und Reliefabbildungen hergestellt werden. Ein Gegenstand der Erfindung sind auch Formkörper aus vernetzten Metathesepolymerisaten der erfindungsgemässen Zusammensetzung.

Je nach verwendetem Monomer können die Polymere sehr verschiedene Eigenschaften aufweisen. Einige zeichnen sich durch sehr hohe Sauerstoffpermeabilität, tiefe Dielektrizitätskonstanten, gute Wärmestabilität und geringe Wasserabsorption aus. Andere haben hervorragende optische Eigenschaften wie zum Beispiel hohe Transparenz und niedrige Brechungsindices. Ferner ist insbesondere der geringe Schrumpf hervorzuheben. Daher können sie in sehr unterschiedlichen technischen Gebieten Verwendung finden.

Die erfindungsgemäßen Zusammensetzungen zeichnen sich als Schichten auf den Oberflächen von Trägermaterialien durch eine hohe Haftfestigkeit aus. Ferner zeichnen sich die beschichteten Materialien durch eine sehr hohe Oberflächenglätte und -glanz aus. Unter den guten mechanischen Eigenschaften ist insbesondere der geringe Schrumpf und die hohe Schlagzähigkeit hervorzuheben, aber auch die thermische Beständigkeit. Ferner ist die leichte Entformbarkeit bei der Verarbeitung in Formen und die hohe Lösungsmittelbeständigkeit zu erwähnen.

Diese Polymere eignen sich zur Herstellung von medizinischen Geräten, Implantaten oder Kontaktlinsen; zur Herstellung von elektronischen Bauteilen; als Bindemittel für Lacke; als photohärtbare Zusammensetzungen für den Modellbau oder als Klebstoffe zum Verkleben von Substraten mit niedrigen Oberflächenenergien (zum Beispiel Teflon, Polyethylen und Polypropylen, Silicongummi), sowie als photopolymerisierbare Zusammensetzung in der Stereolithographie. Die erfindungsgemäßen Zusammensetzungen können auch zur Herstellung von Lacken durch Photopolymerisation verwendet werden, wobei einerseits klare (transparente) und sogar pigmentierte Zusammensetzungen verwendet werden können. Es können sowohl Weiss- als auch Buntpigmente verwendet werden.

Die erfindungsgemäßen photohärtbaren Zusammensetzungen eignen sich besonders zur Herstellung von Schutzschichten und Reliefabbildungen. Ein weiterer Gegenstand der Erfindung ist eine Variante des erfindungsgemäßen Verfahrens zur Herstellung von beschichteten Materialien oder Reliefabbildungen auf Trägermaterialien, bei dem man eine erfindungsgemässe Zusammensetzung und gegebenenfalls Lösungsmittel als Schicht auf einem Träger aufbringt, zum Beispiel durch Tauch-, Streich-, Giess-, Walz-, Rakel- oder Schleudergießverfahren, gegebenenfalls das Lösungsmittel entfernt, und die Schicht zur Polymerisation bestrahlt oder erwärmt, oder die Schicht durch eine Photomaske bestrahlt und anschließend die nichtbestrahlten Anteile mit einem Lösungsmittel entfernt. Danach kann sich noch eine Temperung anschliessen. Mit diesem Verfahren können Oberflächen von Substraten modifiziert oder geschützt werden, oder es können zum Beispiel gedruckte Schaltungen, Druckplatten oder Druckwalzen hergestellt werden. Bei der Herstellung von gedruckten Schaltungen können die erfindungsgemäßen Zusammensetzungen auch als Lötstopplacke eingesetzt werden. Weitere Anwendungsmöglichkeiten sind die Herstellung von Siebdruckmasken, die Verwendung als strahlungshärtbare Druckfarben für den Offset-, Sieb- und Flexodruck. Die Scutzschichten auf Trägermaterialien eignen sich auf Grund der hohen Haftung und der geringen Wasseraufnahme ganz besonders für den Korrosionsschutz.

Gegenstand der vorliegenden Erfindung ist ferner ein beschichtetes Trägermaterial, das dadurch gekennzeichnet ist, daß auf einem Substrat eine Schicht aus einer erfindungsgemässen Zusammensetzung aufgebracht ist.

Gegenstand der vorliegenden Erfindung ist ebenfalls ein beschichtetes Substrat mit einer gehärteten Schicht aus einer erfindungsgemässen Zusammensetzung. Die ausserordentlich hohe Haftfestigkeit der Schichten sogar auf Metalloberflächen ist besonders hervorzuheben, selbst wenn es sich um reine Kohlenwasserstoffpolymerisate handelt.

Geeignete Substrate (Trägermaterialien) sind beispielsweise solche aus Glas, Mineralien, Keramiken, Kunststoffen, Holz, Halbmetallen, Metallen, Metalloxiden und Metallnitriden. Die Schichtdicken richten sich im wesentlichen

nach der gewünschten Verwendung und können z.B. 0,1 bis 1000 µm, bevorzugt 0,5 bis 500 µm, besonders bevorzugt 1 bis 100 µm betragen. Die beschichteten Materialien zeichnen sich durch eine hohe Haftfestigkeit und gute thermische und mechanische Eigenschaften aus.

Die Herstellung der erfindungsgemässen beschichteten Materialen kann nach bekannten Methoden wie zum Beispiel Streichen, Rakeln, Giessverfahren wie Vorhanggiessen oder Schleudergiessen erfolgen.

Die erfindungsgemässen Zusammensetzungen können auch als thermisch oder mittels Strahlung härtbare Klebstoffe zur festen Verbindung von unterschiedlichsten Materialien verwendet werden, wobei hervorragende Schälfestigkeiten erzielt werden können.

Die Polymerisate zeichnen sich neben den hohen Haftfestigkeiten, der hervorragenden Verarbeitbarkeit, den guten Oberflächeneigenschaften (Glätte, Glanz), der hohen Vernetzungsdichte und der Beständigkeit gegen Lösungsmittel und andere Flüssigkeiten besonders noch durch sehr gute physikalisch-mechanische Eigenschaften wie zum Beispiel hohe Temperaturbeständigkeit, Bruch- und Biegefestigkeit und Schlagzähigkeit und hervorragende elektrische Eigenschaften wie zum Beispiel niedrige Oberflächenspannungen und -ladungen (sehr niedrige $\varepsilon$- und tan $\delta$- Werte) aus. Ferner sind die hohe Sauerstoffpermeabilität und die geringe Wasseraufnahme zu erwähnen. Nur aus Kohlenstoff und Wasserstoff aufgebaute Polymere sind ökologisch besonders wertvoll, da sie zum Beispiel durch Pyrrolyse beziehungsweise ohne Bildung von schädlichen Nebenprodukten verbrannt werden können. Diese Polymeren sind auf Grund ihrer hervorragenden elektrischen Eigenschaften besonders für Anwendungen auf dem Gebiet der Elektrik und Elektronik besonders als Isoliermaterialien (zum Beispiel Spulenverguss) geeignet.

Die nachfolgenden Beispiele erläutern die Erfindung näher.

A) Herstellung von Polymeren mit gespannten Cycloolefinringen im Polymerrückgrat

Beispiel A1: Herstellung von

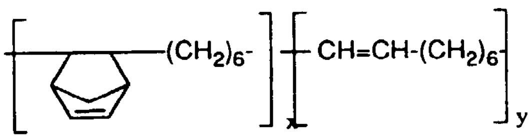

55,1 g (0,5 Mol) Vestenamer® 6213 (Metathesepolymerisiertes Cycloocten, Hüls AG) werden in 200 ml Toluol gelöst, mit 33,05 g (0,25 Mol) Dicyclopentadien vermischt und im Autoklaven 8h auf 190 °C erhitzt. Hierbei wird das Dicyclopentadien zu Cyclopentadien gespalten, das mit dem Vestenamer unter Bildung von Norbornengruppen reagiert. Die Reaktionsmischung wird anschliessend unter Rühren in Methanol/Aceton (1:1) gegossen, das ausgefällte Polymer abfiltriert und dann getrocknet. Ausbeute 50,4 g (76%). Elementaranalyse, % berechnet (gefunden): C 88,57 (88,38), H 11,43 (11,60). Die $^1$H-NMR Untersuchung ergibt, dass 35% der Doppelbindungen des Vestenamers zu Norborneneinheiten umgewandelt sind (x = 0,35 und y 0,65). $M_n$ = 8500 g/mol; $M_w$ = 170000 g/mol, bestimmt durch Gelpermeationschromatographie in Tetrahydrofuran mit Polystyrol-Standards.

Beispiel A2: Herstellung von

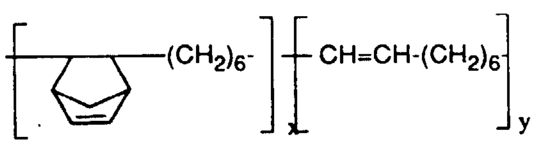

55,1 g (0,5 Mol) Vestenamer® L3000 (Metathese polymerisiertes Cycloocten mit niedrigem Molekulargewicht, Hüls AG, Marl) werden ohne Lösungsmittel mit 33,5 g (0,25 Mol) Dicyclopentadien vermischt und im Autoklaven 8 h auf 190° C erhitzt. Die Aufarbeitung und analytische Untersuchung des Reaktionsgemisches erfolgt analog Beispiel A1. Ausbeute 47,5 g (77%). Elementaranalyse, % berechnet (gefunden): C 88,57 (88,54), H 11,43 (11,32).
Die $^1$H-NMR Untersuchung ergibt, dass 28% der Doppelbindungen des Vestenamers zu Norborneneinheiten umgewandelt sind (x = 0,28 und y 0,72). $M_n$ = 500 g/mol; $M_w$ = 5000 g/mol.

Beipiel A3: Herstellung von linearem Polydicyclopentadien mit Strukturelementen

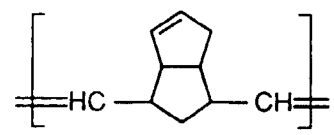

In 150 ml Toluol werden 0,25 g [W(N-$C_6H_5$)($CH_2Si(CH_3)_3)_2$($OC(CH_3)_3$)Cl] gelöst und 30 ml trockenes Dicyclopentadien zugegeben. Man bestrahlt 30 min mit einer 1000W Xenonlampe mit IR-Wasserfilter aus einer Entfernung von einem Meter. Danach versetzt man mit 1 ml Benzaldehyd und rührt noch 1h bei Raumtemperatur. Die Reaktionsmischung wird in 1,5 l Methanol eingetropft, das ausgefallene Polymer abfiltriert und im Vakuum bei Raumtemperatur getrocknet. Die Ausbeute an Rohprodukt beträgt 22,6 g. Das Rohprodukt wird mit 200 ml Toluol versetzt und 3 Tage bei Raumtemperatur gerührt. Man zentrifugiert die Mischung und dekantiert die Toluollösung ab, die anschliessend in 1,5 1 Methanol eingerührt wird. Das ausgefallene weisse Polymer wird abfiltriert und im Vakuum getrocknet. Die Ausbeute an Polymer beträgt 5,62 g (19%). Das Polymer ist sehr gut in Toluol löslich.

Beispiel A4: Herstellung von

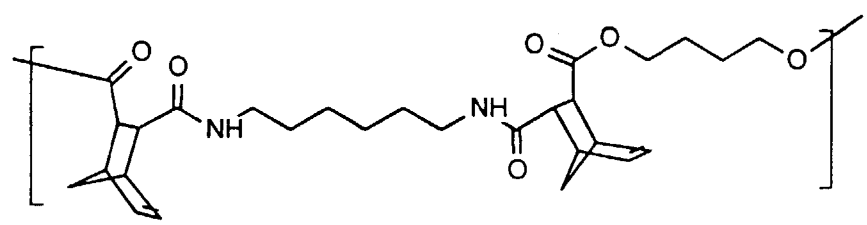

(a) 15,0 g (0,091 Mol) Norbornen-1,2-dicarbonsäureanhydrid werden in 200 ml Toluol bei 80°C gelöst Unter Rühren wird eine Lösung von 5,29 g (0,0455 Mol) 1,6-Diaminohexan in 50 ml Toluol zugetropft. Nach 30 Minuten bei 80°C wird abgekühlt und filtriert. Der Rückstand wird pulverisiert und 24h im Hochvakuum bei 40°C getrocknet. Ausbeute: 16,5 g (81,6 %). Schmelzpunkt: 164°C; IR (KBr): ν(C=O): 1635 $cm^{-1}$ (Amid) und 1695 $cm^{-1}$ (Carbonsäure); $^1$H-NMR (DMSO-$d_6$): u.a. 5,92-6,16 ppm: 4 Olefin-H der Norbornen-Einheiten; Elementaranalyse ($C_{24}H_{32}N_2O_6$): berechnet: C 64,85; H 7,26; N 6,30; gefunden: C 66,64; H 8,34; N 7,22

(b) 1,0 g (11 mMol) 1,4-Butandiol und 7,84 g (11 mMol) des in (a) erhaltenen Produktes werden in 50 ml Dimethylformamid gelöst. Man gibt unter $N_2$-Atmosphäre und Rühren 4,54 g (22 mMol) Dicyclohexyl-carbodiimid portionenweise zu und erhitzt 14 h auf 50°C. Nach dem Abkühlen wird filtriert und das Filtrat in 1 l Wasser ausgefällt. Nach der Filtration und Trocknung erhält man die Titelverbindung. Ausbeute: 4,2 g (84 %); GPC (THF, PS-Standards): $M_n$=5100 g/Mol; $M_w$=13000 g/Mol; Elementaranalyse ($(C_{28}H_{38}N_2O_6)_n$): berechnet: C 67,44; H 7,68; N 5,62; gefunden: C 66,88; H 7,70; N 5,87; löslich in DMSO, DMF, $CHCl_3$, THF, Dioxan

Beispiel A5: Herstellung von

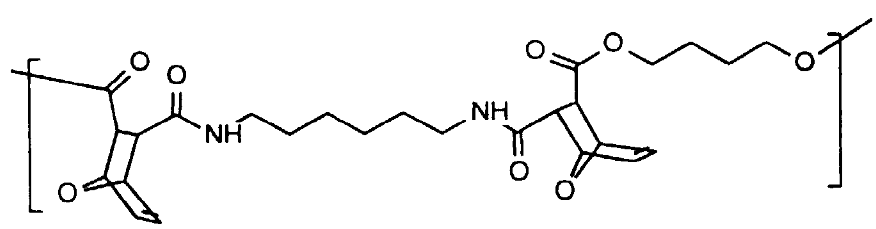

(a) 15,0 g (0,090 Mol) 7-Oxa-norbornen-1,2-dicarbonsäureanhydrid werden in 135 ml Dioxan bei 60°C gelöst. Unter Rühren wird eine Lösung von 5,23 g (0,045 Mol) 1,6-Diaminohexan in 50 ml Toluol zugetropft. Nach 30 Minuten bei 60°C wird abgekühlt und filtriert. Der Rückstand wird pulverisiert und 24h im Hochvakuum bei 40°C getrocknet. Ausbeute: 13,09 g (64,9 %). Schmelzpunkt: 120°C (zersetzt); IR (KBr): ν(C=O): 1632 $cm^{-1}$ (Amid) und 1700 $cm^{-1}$ (Carbonsäure); $^1$H-NMR (DMSO-$d_6$): u.a. 6,0-6,5 ppm: 4 Olefin-H der 7-Oxa-norbornen-Einheiten; Elementaranalyse ($C_{22}H_{28}N_2O_8$): berechnet: C 64,85; H 7,26; N 6,30; gefunden: C 66,64; H 8,34; N 7,22

(b) 1,0 g (11 mMol) 1,4-Butandiol und 5,0 g (11 mMol) des in (a) erhaltenen Produktes werden in 50 ml Dimethylformamid gelöst. Man gibt unter $N_2$-Atmosphäre und Rühren 4,54 g (22 mMol) Dicyclohexyl-carbodiimid portionenweise zu und erhitzt 14 h auf 50°C. Nach dem Abkühlen wird filtriert und das Filtrat im Rotationsverdampfer eingedampft. Nach Trocknung erhält man die Titelverbindung. Ausbeute: 5,2 g (94 %); GPC (THF, PS-Standards): $M_n$=7400 g/Mol; $M_w$=20800 g/Mol; Elementaranalyse $(C_{26}H_{34}N_2O_8)_n$: berechnet: C 62,14; H 6,82; N 5,57; gefunden: C 61,74; H 7,12; N 6,01; löslich in DMSO, DMF, $CHCl_3$, THF, Dioxan

B) Anwendungsbeispiele

Beispiel B1: Thermische Polymerisation

In 1 ml einer 20 %-igen Lösung des Polymers gemäss Beispiel $A_1$ in Chloroform werden (a) 5 mg Ru[p-Cumen][$P(C_6H_{11})_3]_3Cl_2$ oder (b) 5 mg Ru[$P(C_6H_{11})_3]_3(CH_3OH)_2$ gelöst. Es werden mit einem Rakel mit 100 µm Schlitzbreite Filme auf Glasplatten gegossen. Das Lösungsmittel wird 1 h bei Raumtemperatur verdampft und dann 1 h bei 50 °C im Vakuum getrocknet. Die beschichteten Platten sind lagerstabil. Die Schichten können mit Toluol abgelöst werden. Die beschichteten Glasplatten werden entweder 4 h bei 65°C oder 2 h bei 80°C erhitzt. Nach dem Abkühlen legt man die Platten in Wasser, wodurch ein transparenter, praktisch farbloser und freitragender Film von der Glasplatte abgelöst werden kann. Die Vernetzung wird durch die Unlöslichkeit und Quellbarkeit des Films in Toluol nachgewiesen. Die Filme weisen ein E-Modul von 2 MPa (Minimat-Zugprüfmaschine) auf. Dielektrizitätskonstanten (ε) und und Verlustfaktoren (tan δ) bei 30°C und verschiedenen Frequenzen (ν):

| ν | ε | tan δ (%) |
|---|---|---|
| 200 Hz | 2,8 | < 0,01 |
| 1000Hz | 2,7 | 0,01 |
| 10000 Hz | 2,7 | 0,015 |
| 100 kHz | 2,6 | 0,025 |
| 1 MHz | 2,5 | 0,03 |
| 10 MHz | 2,4 | 0,05 |
| 100 MHz | 2,3 | 0,05 |
| 1 GHz | 2,2 | nicht bestimmt |

Beispiel B2: Thermische Polymerisation

Analog Beispiel B1 werden in 1 g des Polymeren gemäss Beispiel A2 unter Erwärmen auf 60°C 5 mg Ru[p-Cumen][$P(C_6H_{11})_3]_3Cl_2$ als Katalysator gelöst und die lösungsmittelfreie Mischung mit einem Rakel warm auf eine erwärmte Glasplatte aufgetragen. Die beschichtete Platte wird 2 h bei 80 °C erhitzt. Nach dem Abkühlen wird ein leicht gelber transparenter und selbsttragender Film von der Glasplatte abgelöst. Der Film ist in Toluol unlöslich.

Beispiel B3: Thermische Polymerisation

Analog Beispiel B1 wird eine 5%-ige Lösung des Polymeren gemäss Beispiel A3 in Toluol mit 0,5 Gew.-% Ru[p-Cumen][$P(C_6H_{11})_3]_3Cl_2$ als Katalysator gelöst und die Mischung mit einem Rakel auf eine erwärmte Glasplatte mit einer Schichtdicke von 20 µm aufgetragen. Die beschichtete Platte wird 2 h bei 80 °C erhitzt. Nach dem Abkühlen wird ein transparenter und selbsttragender Film von der Glasplatte abgelöst, der in Toluol nur sehr leicht quillt.

Beispiel B4: Thermische Polymerisation

Es wird analog Beispiel B3 verfahren und ein Film auf einer Kupferfolie gebildet. Nach der Polymerisation haftet der Film ausgezeichnet auf der Kupferfolie. Die beschichtete Kupferfolie wird eine Woche lang in Wasser eingelegt; auch danach kann der Film nicht von der Kupferfolie abgelöst werden.

Beispiel B5: Photopolymerisation

Auf einer Si-Halbleiterplatte (Wafer) wird mittels Schleudergiessen (spincoating) mit einer 10 %-igen Lösung des Polymeren gemäss Beispiel A1 und und 1 Gew.-% (bezogen auf das Polymer) $Ta[CH_2-Si(CH_3)_3]_3Cl_2$ als Katalysator in Toluol eine etwa 1 µm dicke Schicht aufgetragen. Man belichtet 15 s mit einer Oriel 350W UV-Lampe unter einer Maske, erhitzt anschliessend 30 s bei 80 °C, und entwickelt dann mit Dichlormethan. Man erhält ein Reliefbild mit einer Auflösung von etwa 1 µm.

Beispiel B6: Photopolymerisation

Die gemäss Beispiel B5 verwendete Lösung wird mit einer Rakel (Schlitzbreite 500 µm) mit einer Schichtdicke von 50 µm auf ein mit Kupfer beschichtetes Epoxid-Laminat (Leiterplatte) aufgetragen. Man erwärmt dann 1 min auf 70 °C und belichtet anschliessend 3 min lang mit einer Höhnle 3000W UV-Lampe unter einer Leiterplattenmaske. Anschliessend erhitzt man 3 min auf 70 °C und entwickelt danach mit Methylenchlorid. Man erhält ein negatives Reliefbild mit hoher Auflösung.

Beispiel B7: Photopolymerisation

Auf einer Si-Halbleiterplatte (Wafer) wird mittels Schleudergiessen mit einer 10 %-igen Lösung des Polymeren gemäss Beispiel A3 und und 2 Gew.-% (bezogen auf das Polymer) $Ta[CH_2-Si(CH_3)_3]_3Cl_2$ als Katalysator in Toluol eine etwa 1 µm dicke Schicht aufgetragen. Man belichtet 5 s mit einer Oriel 350W UV-Lampe unter einer Resistmaske, erhitzt anschliessend 30 s bei 80 °C, und entwickelt dann mit Toluol. Man erhält ein Reliefbild mit einer Auflösung von etwa 0,7 µm.

Beispiel B8: Photopolymerisation

Auf einer Si-Halbleiterplatte (Wafer) wird mittels Schleudergiessen mit einer 10 %-igen Lösung des Polymeren gemäss Beispiel A4 und und 1 Gew.-% (bezogen auf das Polymer) $Ta[CH_2-Si(CH_3)_3]_3Cl_2$ in Dioxan eine etwa 1 µm dicke Schicht aufgetragen. Man belichtet 100 s mit einer Oriel 350W UV-Lampe unter einer Resistmaske und entwickelt dann mit Dioxan. Man erhält ein Reliefbild mit hoher Auflösung.

Beispiel B9: Photopolymerisation

Auf einer Si-Halbleiterplatte (Wafer) wird mittels Schleudergiessen mit einer 10 %-igen Lösung des Polymeren gemäss Beispiel A5 und und 1 Gew.-% (bezogen auf das Polymer) $Ta[CH_2-Si(CH_3)_3]_3Cl_2$ in Dioxan eine etwa 1 µm dicke Schicht aufgetragen. Man belichtet 100 s mit einer Oriel 350W UV-Lampe unter einer Resistmaske und entwickelt dann mit Dioxan. Man erhält ein Reliefbild mit hoher Auflösung.

Beispiel B10: Photovernetzung

0,5 g des Polymeren gemäss Beispiel A4 werden in 5 ml Dioxan zusammen mit 5 mg $[Ru(C_6H_6)_2](Tos)_2$ gelöst. Die Lösung wird auf eine Glasplatte gegossen und ein etwa 30 µm dicker Film mittels Rakel hergestellt. Man belichtet 3 Minuten unter einer UV-Lampe, wonach sich die klaren, transparenten Filme nicht mehr lösen lassen, insbesondere weder in DMSO noch in Dioxan.

Beispiel B11: Photovernetzung

0,5 g des Polymeren gemäss Beispiel A4 werden in 5 ml Dioxan zusammen mit 5 mg $[Ru(CH_3CN)_6](Tos)_2$ gelöst. Die Lösung wird auf eine Glasplatte gegossen und ein etwa 30 µm dicker Film mittels Rakel hergestellt. Man belichtet 3 Minuten unter einer UV-Lampe, wonach sich die klaren, transparenten Filme nicht mehr lösen lassen, insbesondere weder in DMSO noch in Dioxan.

Beispiel B12: Photovernetzung

0,5 g des Polymeren gemäss Beispiel A4 werden in 5 ml Dioxan zusammen mit 5 mg $[Ru(CH_3CH_2CN)_6](Tos)_2$ gelöst. Die Lösung wird auf eine Glasplatte gegossen und ein etwa 30 µm dicker Film mittels Rakel hergestellt. Man

belichtet 3 Minuten unter einer UV-Lampe, wonach sich die klaren, transparenten Filme nicht mehr lösen lassen, insbesondere weder in DMSO noch in Dioxan.

Beispiel B13: Photovernetzung

0,5 g des Polymeren gemäss Beispiel A5 werden in 5 ml Dioxan zusammen mit 5 mg $[Ru(C_6H_6)_2](Tos)_2$ gelöst. Die Lösung wird auf eine Glasplatte gegossen und ein etwa 30 µm dicker Film mittels Rakel hergestellt. Man belichtet 3 Minuten unter einer UV-Lampe, wonach sich die klaren, transparenten Filme nicht mehr lösen lassen, insbesondere weder in DMSO noch in Dioxan.

Beispiel B14: Photovernetzung

0,5 g des Polymeren gemäss Beispiel A5 werden in 5 ml Dioxan zusammen mit 5 mg $[Ru(CH_3CN)_6](Tos)_2$ gelöst. Die Lösung wird auf eine Glasplatte gegossen und ein etwa 30 µm dicker Film mittels Rakel hergestellt. Man belichtet 3 Minuten unter einer UV-Lampe, wonach sich die klaren, transparenten Filme nicht mehr lösen lassen, insbesondere weder in DMSO noch in Dioxan.

Beispiel B15: Photovernetzung

0,5 g des Polymeren gemäss Beispiel A5 werden in 5 ml Dioxan zusammen mit 5 mg $[Ru(CH_3CH_2CN)_6](Tos)_2$ gelöst. Die Lösung wird auf eine Glasplatte gegossen und ein etwa 30 µm dicker Film mittels Rakel hergestellt Man belichtet 3 Minuten unter einer UV-Lampe, wonach sich die klaren, transparenten Filme nicht mehr lösen lassen, insbesondere weder in DMSO noch in Dioxan.

Beispiel B16: Thermische Vernetzung

Auf einer Glasplatte wird mittels eines Rakels aus einer 10%igen Lösung des Polymeren gemäss Beispiel A4 in Dioxan zusammen mit 1 % (bezogen auf das Polymer) $RuCl_2$(p-Cumen)$P(C_6H_{11})_3$ und nachfolgendes Abdampfen des Lösungsmittels bei 80°C ein etwa 50 µm dicker Film hergestellt. Er wird durch 1h Erhitzen auf 120°C vernetzt. Nach Ablösung von der Glasplatte erhält man einen reissfesten Film, der sowohl in Dioxan als auch DMF unlöslich ist.

Beispiel B17: Thermische Vernetzung

Auf einer Glasplatte wird mittels eines Rakels aus einer 10%igen Lösung des Polymeren gemäss Beispiel A5 in Dioxan zusammen mit 1 % (bezogen auf das Polymer) $RuCl_2$(p-Cumen)$P(C_6H_{11})_3$ und nachfolgendes Abdampfen des Lösungsmittels bei 80°C ein etwa 50 µm dicker Film hergestellt. Er wird durch 1h Erhitzen auf 120°C vernetzt. Nach Ablösung von der Glasplatte erhält man einen reissfesten Film, der sowohl in Dioxan als auch DMF unlöslich ist.

Beispiel B18: Thermische Vernetzung

Auf einem Eisenblech wird eine 500 µm dicke Schicht aus einer 10 %igen Lösung des Polymers gemäss Beispiel A1 und 1 % $[(C_6H_{11})_3P]_2Ru(CH_3OH)_2(Tos)_2$ in Toluol aufgetragen. Nach dem Verdampfen des Toluols wird das Polymer lh bei 80°C vernetzt. Der entstehende Film ist unlöslich in $CH_2Cl_2$.

Beispiel B19: Thermische Vernetzung

Auf einem Eisenblech wird eine 500 µm dicke Schicht aus einer 10 %igen Lösung des Polymers gemäss Beispiel A1 und 1 % $[(C_6H_{11})_3P]_2RuCl_2$ in Toluol aufgetragen. Nach dem Verdampfen des Toluols wird das Polymer 1h bei 80°C vernetzt. Der entstehende Film ist unlöslich in $CH_2Cl_2$.

## Patentansprüche

1. Zusammensetzung, enthaltend katalytische Mengen eines Einkomponenten-Katalysators für die Metathesepolymerisation und mindestens ein Polymer mit im Polymerrückgrat gebundenen gespannten Cycloalkenylenresten allein oder in Mischung mit gespannten Cycloolefinen, dadurch gekennzeichnet, dass sie als Einkomponenten-Katalysator

(a) eine Ruthenium- oder Osmiumverbindung aus der Gruppe der Verbindungen $Ru(CH_3CN)_6(tos)_2$, $Ru(CH_3CH_2CN)_6(tos)_2$, $Ru(CH_3CN)_6(CF_3SO_3)_2$, $Ru(CH_3CH_2CN)_6(CF_3SO_3)_2$, $Ru(C_6H_6)_2(tos)_2$, $[Ru(C_6H_6)(C_6H_5OCH_3)](BF_4)_2$, $[Ru(C_6H_6)(C_6H_5$i-propyl$)](BF_4)_2$, $[Ru(C_6H_6)$(1,3,5-trimethylphenol)$](BF_4)_2$, $[Ru(C_6H_6)$(hexamethylbenzol)$](BF_4)_2$, $[Ru(C_6H_6)$(biphenyl)$](BF_4)_2$, $[Ru(C_6H_6)$(chrysen)$](BF_4)_2$, $[Ru(C_6H_6)$(naphtalin)$](BF_4)_2$, [Ru(cyclopentadienyl)(4-methylcumyl)]$PF_6$, [Ru(cyanophenyl)$_6$](tos)$_2$, [Ru(cyanophenyl)$_6$]$(CF_3SO_3)_2$, $[Ru(C_6H_6)$(tetramethylthiophen)$_3$](tos)$_2$, $[Ru(C_6H_6)(CH_3CN)_3](tos)_2$, $[Ru(C_6H_6)$(tetramethylthiophen)$_3](CF_3SO_3)_2$, $[Ru(C_6H_6)(CH_3CN)_3](CF_3SO_3)_2$, $[Ru(C_6H_6)(CH_3OH)_3](tos)_2$, $[Ru(C_6H_6)(CH_3OH)_3](tis)_2$, $[Os(NH_3)_5N_2](PF_6)_2$, $[Ru(NH_3)_5N_2](PF_6)_2$, $[Ru(NH_3)_5(CH_3CN)]BF_4$, $[Ru(C_6H_6(NH_3)_3](tis)_2$, $[Ru(C_6H_6$(Tetrahydrothiophen)$_3](CF_3SO_3)_2$, $[Ru((CH_3)_2S)_3C_6H_6](tos)_2$, [Ru(Dimethylsulfoxid)$_3C_6H_6](PF_6)_2$, [Ru(Dimethylformamid)$_3C_6H_6](PF_6)_2$, $[Ru(C_6H_6)Cl_2]_2$ und $[Os(C_6H_6)Cl_2]_2$ oder

(b) eine Molybdän(VI)- oder Wolfram(VI)verbindung enthält, die mindestens zwei Methylgruppen oder zwei monosubstituierte Methylgruppen am Metall gebunden hat, wobei der Substituent kein Wasserstoffatom in $\alpha$-Stellung enthält; oder

(c) eine Titan(IV)-, Niob(V)-, Tantal(V)-, Molybdän(VI)- oder Wolfram(VI)verbindung enthält, in der eine Silylmethylgruppe und mindestens ein Halogen am Metall gebunden sind; oder

(d) eine Niob(V)- oder Tantal(V)verbindung enthält, die mindestens zwei Methylgruppen oder zwei monosubstituierte Methylgruppen am Metall gebunden hat, wobei der Substituent kein Wasserstoffatom in $\alpha$-Stellung enthält; oder

(e) eine Titan(IV)verbindung, die mindestens zwei Methylgruppen oder zwei monosubstituierte Methylgruppen am Metall gebunden hat, wobei der Substituent kein Wasserstoffatom in $\alpha$-Stellung enthält; oder

(f) eine Ruthenium- oder Osmiumverbindung enthält, die mindestens eine Phosphingruppe, mindestens einen photolabilen Liganden, und gegebenenfalls Neutralliganden an das Metallatom gebunden haben, wobei insgesamt 2 bis 5 Liganden gebunden sind, und die Säureanionen zum Ladungsausgleich enthält; oder

(g) eine zweiwertig-kationische Ruthenium- oder Osmiumverbindung enthält, mit einem Metallatom, woran 1 bis 3 tertiäre Phosphinliganden mit im Fall der Rutheniumverbindung sterisch anspruchsvollen Substituenten, gegebenenfalls nicht-photolabile Neutralliganden und Anionen zum Ladungsausgleich gebunden sind, mit der Massgabe, dass in Ruthenium(trisphenylphosphin)dihalogeniden oder -hydrid-halogeniden die Phenylgruppen mit $C_1$-$C_{18}$-Alkyl, $C_1$-$C_{18}$-Halogenalkyl oder $C_1$-$C_{18}$-Alkoxy substituiert sind.

**2.** Zusammensetzung gemäss Anspruch 1, dadurch gekennzeichnet, dass es sich bei den Polymeren um solche mit wiederkehrenden Struktureinheiten der Formel (a) im Polymerrückgrat handelt,

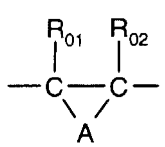

(a),

worin $R_{01}$ und $R_{02}$ unabhängig voneinander H oder $C_1$-$C_6$-Alkyl darstellen, oder $R_{01}$ und $R_{02}$ zusammen eine Bindung bedeuten, und A zusammen mit der C-C-Gruppe einen unsubstituierten oder substituierten gespannten Cycloolefinring bildet.

**3.** Zusammensetzung gemäss Anspruch 2, dadurch gekennzeichnet, dass die Struktureinheiten der Formel (a) direkt oder über Brückengruppen verbunden sind.

**4.** Zusammensetzung gemäss Anspruch 2, dadurch gekennzeichnet, dass $R_{01}$ und $R_{02}$ H darstellen.

**5.** Zusammensetzung gemäss Anspruch 2, dadurch gekennzeichnet, dass es sich bei den Substituenten für den Cycloolefinring um $C_1$-$C_8$-Alkyl oder -Alkoxy; $C_1$-$C_4$-Halogenalkyl oder -alkoxy; Halogen; -CN; $-NH_2$; Sekundäramino mit 2 bis 18 C-Atomen; Tertiäramino mit 3 bis 18 C-Atomen; -C(O)-$OR_{03}$ oder -C(O)-$NR_{03}R_{04}$ handelt, worin $R_{03}$ und $R_{04}$ unabhängig voneinander H, $C_1$-$C_{18}$-Alkyl, Phenyl oder Benzyl bedeuten.

**6.** Zusammensetzung gemäss Anspruch 2, dadurch gekennzeichnet, dass in Formel (a)

$R_{01}$ und $R_{02}$ zusammen eine Bindung und A unsubstituiertes oder substituiertes $C_1$-$C_{12}$-Alkylen; unsubstituiertes oder substituiertes $C_2$-$C_{12}$-Heteroalkylen mit mindestens einem Heteroatom aus der Gruppe O, S und N; unsubstituiertes oder substituiertes $C_5$-$C_{12}$-Cycloalkylen; unsubstituiertes oder substituiertes $C_4$-$C_{12}$-He-

terocycloalkylen mit mindestens einem Heteroatom aus der Gruppe O, S und N; unsubstituiertes oder substituiertes $C_2$-$C_{12}$-Alkenylen; unsubstituiertes oder substituiertes $C_3$-$C_{12}$-Heteroalkenylen mit mindestens einem Heteroatom aus der Gruppe O, S und N; unsubstituiertes oder substituiertes $C_5$-$C_{12}$-Cycloalkenylen; oder unsubstituiertes oder substituiertes $C_4$-$C_{12}$-Heterocycloalkenylen mit mindestens einem Heteroatom aus der Gruppe O, S und N; oder

$R_{01}$ und $R_{02}$ unabhängig voneinander H oder $C_1$-$C_6$-Alkyl und A unsubstituiertes oder substituiertes $C_5$-$C_{12}$-Cycloalkenylen; unsubstituiertes oder substituiertes $C_4$-$C_{12}$-Heterocycloalkenylen mit mindestens einem Heteroatom aus der Gruppe O, S und N; oder unsubstituiertes oder substituiertes $C_5$-$C_{12}$-Cycloalkdienylen; oder

$R_{01}$ zusammen mit einem endständigen C-Atom des Restes A eine Doppelbindung; $R_{02}$ H oder $C_1$-$C_6$-Alkyl; und A unsubstituiertes oder substituiertes $C_1$-$C_{12}$-Alkylen, unsubstituiertes oder substituiertes $C_3$-$C_{12}$-Heteroalkylen mit mindestens einem Heteroatom aus der Gruppe O, S und N; unsubstituiertes oder substituiertes $C_5$-$C_{12}$-Cycloalkylen; unsubstituiertes oder substituiertes $C_4$-$C_{12}$-Heterocycloalkylen mit mindestens einem Heteroatom aus der Gruppe O, S und N; unsubstituiertes oder substituiertes $C_2$-$C_{12}$-Alkenylen; unsubstituiertes oder substituiertes $C_3$-$C_{12}$-Heteroalkenylen mit mindestens einem Heteroatom aus der Gruppe O, S und N; unsubstituiertes oder substituiertes $C_5$-$C_{12}$-Cycloalkenylen; oder unsubstituiertes oder substituiertes $C_4$-$C_{12}$-Heterocycloalkenylen mit mindestens einem Heteroatom aus der Gruppe O, S und N; oder

$R_{01}$ und $R_{02}$ je zusammen mit einem endständigen C-Atom des Restes A je eine Doppelbindung, und A unsubstituiertes oder substituiertes $C_3$-$C_{12}$-Alkylen; unsubstituiertes oder substituiertes $C_3$-$C_{12}$-Heteroalkylen mit mindestens einem Heteroatom aus der Gruppe O, S und N; unsubstituiertes oder substituiertes $C_5$-$C_{12}$-Cycloalkylen; oder unsubstituiertes oder substituiertes $C_4$-$C_{12}$-Hetero-cycloalkylen mit mindestens einem Heteroatom aus der Gruppe O, S und N;

wobei an das Alkylen, Heteroalkylen, Cycloalkylen, Heterocycloalkylen, Alkenylen, Heteroalkenylen, Cycloalkenylen, Heterocycloalkenylen, Alkdienylen, Heteroalkdienylen, Cycloalkdienylen und Heterocycloalkdienylen gegebenenfalls Phenylen, $C_4$-$C_8$-Cycloalkylen oder $C_4$-$C_8$-Heterocycloalkylen ankondensiert ist.

**7.** Zusammensetzung gemäss Anspruch 6, dadurch gekennzeichnet, dass

$R_{01}$ und $R_{02}$ zusammen eine Bindung und A unsubstituiertes oder substituiertes $C_2$-$C_6$-Alkylen, unsubstituiertes oder substituiertes $C_3$-$C_7$-Cycloalkylen, unsubstituiertes oder substituiertes $C_2$-$C_6$Alkenylen, unsubstituiertes oder substituiertes $C_5$-$C_7$-Cycloalkenylen; oder

$R_{01}$ und $R_{02}$ unabhängig voneinander H oder $C_1$-$C_4$-Alkyl und A unsubstituiertes oder substituiertes $C_5$-$C_7$-Cycloalkenylen; oder

$R_{01}$ zusammen mit einem endständigen C-Atom des Restes A eine Doppelbindung; $R_{02}$ H oder $C_1$-$C_4$-Alkyl; und A unsubstituiertes oder substituiertes $C_2$-$C_6$-Alkenylen, unsubstituiertes oder substituiertes $C_5$-$C_7$-Cycloalkylen, unsubstituiertes oder substituiertes $C_2$-$C_6$-Alkenylen oder unsubstituiertes oder substituiertes $C_5$-$C_7$-Cycloalkenylen; oder

$R_{01}$ und $R_{02}$ je zusammen mit einem endständigen C-Atom des Restes A je eine Doppelbindung und A unsubstituiertes oder substituiertes $C_3$-$C_6$-Alkylen, unsubstituiertes oder substituiertes $C_5$-$C_7$-Cycloalkylen bedeuten.

**8.** Zusammensetzung gemäss Anspruch 1, dadurch gekennzeichnet, dass es sich bei den Polymeren um Homo- oder Copolymere handelt.

**9.** Zusammensetzung gemäss Anspruch 2, dadurch gekennzeichnet, dass die Strukturelemente der Formel (a) mindestens zu 5 Mol-% im Polymer enthalten sind, bezogen auf das Polymer.

**10.** Zusammensetzung gemäss Anspruch 9, dadurch gekennzeichnet, dass die Strukturelemente der Formel (a) zu 5 bis 100 Mol-% im Polymer enthalten sind.

**11.** Zusammensetzung gemäss Anspruch 1, dadurch gekennzeichnet, dass die Polymeren ausgewählt sind aus den Homo- und Copolymeren der linearen Polyepoxide, Polyester, Polyamide, Polyesteramide, Polyurethane und Polyharnstoffe, in denen die bivalenten Diepoxid-, Dicarbonsäure- oder Diisocyanatreste, oder in denen die bivalenten Diol- oder Diaminreste oder beide dieser Reste gespannte Cycloolefinreste enthalten, und die im Falle der Copolymeren von diesen bivalenten Resten verschiedene Diepoxid-, Dicarbonsäure- oder Diisocyanat-, Diol- oder Diaminreste enthalten.

**12.** Zusammensetzung gemäss Anspruch 11, dadurch gekennzeichnet, dass die Polyepoxide wiederkehrende Strukturelemente ausgewählt aus der Gruppe von Strukturelementen der Formeln (b), (c), (d) und (e)

$$[-CH_2-CH(OH)-CH_2-O-R_{05}-O-CH_2-CH(OH)-CH_2-O- \quad (b),$$

$$-R_{06}-O- \quad (c),$$

$$[-CH_2-CH(OH)-CH_2-O-R_{07}-O-CH_2-CH(OH)-CH_2-O- \quad (d),$$

$$-R_{08}-O- \quad (e),$$

enthalten, mit der Massgabe, dass mindestens Strukturelemente der Formeln (b) oder (c) oder beide enthalten sind, worin $R_{05}$ und $R_{06}$ unabhängig voneinander ein bivalenter Rest eines gespannten Cycloolefins oder ein bivalenter Rest mit einem gespannten Cycloolefin, $R_{07}$ ein um die Glycidyloxygruppen verminderter bivalenter Rest eines Diglycidylethers und $R_{08}$ ein um die Hydroxylgruppe verminderter bivalenter Rest eines Diols sind.

**13.** Zusammensetzung gemäss Anspruch 12, dadurch gekennzeichnet, dass $R_{05}$ und $R_{06}$ unabhängig voneinander ein- oder zweifach olefinisch ungesättigtes $C_5$-$C_8$-Cycloalkylen oder kondensiertes polycyclisches $C_7$-$C_{18}$-Cycloalkylen darstellen.

**14.** Zusammensetzung gemäss Anspruch 12, dadurch gekennzeichnet, dass $R_{05}$ und $R_{06}$ unabhängig voneinander einen Norbornenrest der Formeln ($nr_1$) oder ($nr_2$)

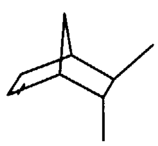 ($nr_1$) 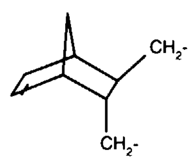 ($nr_2$)

darstellen.

**15.** Zusammensetzung gemäss Anspruch 12, dadurch gekennzeichnet, dass $R_{07}$ und $R_{08}$ $C_2$-$C_{18}$-Alkylen, Polyoxaalkylen mit 2 bis 50 Oxaalkyleneinheiten und 2 bis 6 C-Atomen im Oxyalkylen, $C_3$-$C_{12}$-Cycloalkylen, $C_5$-$C_8$-Cycloalkylen-$CH_2$-, -$CH_2$-($C_5$-$C_8$-Cycloalkylen)-$CH_2$-, $C_6$-$C_{14}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18 C-Atomen, oder $C_5$-$C_7$-Cycloalkyliden bedeuten.

**16.** Zusammensetzung gemäss Anspruch 11, dadurch gekennzeichnet, dass die Polyester gleiche oder verschiedene Strukturelemente ausgewählt aus der Gruppe von Strukturelementen der Formeln (f), (g), (h) und (i) enthalten, wobei wenigstens die Strukturelemente der Formeln (f) oder (g) oder beide zugegen sein müssen,

$$-C(O)-R_{09}-C(O)- \quad (f),$$

$$-O-R_{010}-O- \quad (g),$$

$$-C(O)-R_{011}-C(O)- \quad (h),$$

$$-O-R_{012}-O- \quad (i),$$

worin $R_{09}$ und $R_{010}$ unabhängig voneinander einen bivalenten Rest eines gespannten Cycloolefins oder einen bivalenten Rest mit einem gespannten Cycloolefin, $R_{011}$ einen um die Carboxylgruppen verminderter bivalenten Rest einer Dicarbonsäure und $R_{012}$ einen um die Hydroxylgruppe verminderten bivalenten Rest eines Diols bedeuten.

**17.** Zusammensetzung gemäss Anspruch 16, dadurch gekennzeichnet, dass $R_{09}$ und $R_{010}$ unabhängig voneinander ein- oder zweifach olefinisch ungesättigtes $C_5$-$C_8$-Cycloalkylen oder kondensiertes polycyclisches $C_7$-$C_{18}$-Cycloalkylen bedeuten.

**18.** Zusammensetzung gemäss Anspruch 16, dadurch gekennzeichnet, dass $R_{09}$ und $R_{010}$ unabhängig voneinander einen Norbornenrest der Formeln ($nr_1$) oder ($nr_2$)

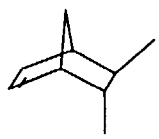 ($nr_1$) 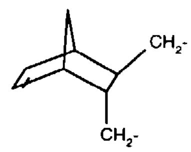 ($nr_2$)

darstellen.

**19.** Zusammensetzung gemäss Anspruch 16, dadurch gekennzeichnet, dass $R_{011}$ $C_2$-$C_{18}$-Alkylen oder -Alkenylen, $C_3$-$C_{12}$-Cycloalkylen oder -Cycloalkenylen, $C_5$-$C_8$-Cycloalkylen-$CH_2$-, -$CH_2$-($C_5$-$C_8$-Cycloalkylen)-$CH_2$-, $C_6$-$C_{18}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18 C-Atomen, oder $C_5$-$C_7$-Cycloalkyliden bedeutet.

**20.** Zusammensetzung gemäss Anspruch 16, dadurch gekennzeichnet, dass $R_{012}$ $C_2$-$C_{18}$-Alkylen, Polyoxaalkylen mit 2 bis 50 Oxaalkyleneinheiten und 2 bis 6 C-Atomen im Oxyalkylen, $C_3$-$C_{12}$-Cycloalkylen, $C_5$-$C_8$-Cycloalkylen-$CH_2$-, -$CH_2$-($C_5$-$C_8$-Cycloalkylen)-$CH_2$-, $C_6$-$C_{14}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18 C-Atomen, oder $C_5$-$C_7$-Cycloalkyliden bedeutet.

**21.** Zusammensetzung gemäss Anspruch 11, dadurch gekennzeichnet, dass die Polyamide gleiche oder verschiedene Strukturelemente ausgewählt aus der Gruppe von Strukturelementen der Formeln (j), (k), (l) und (m) enthalten, wobei wenigstens die Strukturelemente der Formeln (j) oder (k) oder beide zugegen sein müssen,

$$-C(O)-R_{013}-C(O)- \quad (j),$$

$$-NH-R_{014}-NH- \quad (k),$$

$$-C(O)-R_{015}-C(O)- \quad (l),$$

$$-NH-R_{016}-NH- \quad (m),$$

worin $R_{013}$ und $R_{014}$ unabhängig voneinander einen bivalenten Rest eines gespannten Cycloolefins oder einen bivalenten Rest mit einem gespannten Cycloolefin, $R_{015}$ einen um die Carboxylgruppen verminderten bivalenten Rest einer Dicarbonsäure und $R_{016}$ einen um die Aminogruppen verminderten bivalenten Rest eines Diamins bedeuten.

**22.** Zusammensetzung gemäss Anspruch 21, dadurch gekennzeichnet, dass $R_{013}$ und $R_{014}$ unabhängig voneinander ein- oder zweifach olefinisch ungesättigtes $C_5$-$C_8$-Cycloalkylen oder kondensiertes polycyclisches $C_7$-$C_{18}$-Cycloalkylen darstellen.

**23.** Zusammensetzung gemäss Anspruch 21, dadurch gekennzeichnet, dass $R_{013}$ und $R_{014}$ unabhängig voneinander einen Norbornenrest der Formeln ($nr_1$) oder ($nr_2$)

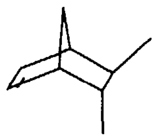 ($nr_1$) 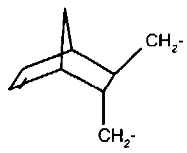 ($nr_2$)

bedeuten.

**24.** Zusammensetzung gemäss Anspruch 21, dadurch gekennzeichnet, dass $R_{015}$ $C_2$-$C_{18}$-Alkylen oder -Alkenylen, $C_3$-$C_{12}$-Cycloalkylen oder -Cycloalkenylen, $C_5$-$C_8$-Cycloalkylen-$CH_2$-, -$CH_2$-($C_5$-$C_8$-Cycloalkylen)-$CH_2$-, $C_6$-$C_{18}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18 C-Atomen, oder $C_5$-$C_7$-Cycloalkyliden bedeutet.

**25.** Zusammensetzung gemäss Anspruch 21, dadurch gekennzeichnet, dass $R_{016}$ $C_2$-$C_{18}$-Alkylen, $C_3$-$C_{12}$-Cycloalkylen, $C_5$-$C_8$-Cycloalkylen-$CH_2$-, -$CH_2$-($C_5$-$C_8$-Cycloalkylen)-$CH_2$-, $C_6$-$C_{14}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18 C-Atomen, oder $C_5$-$C_7$-Cycloalkyliden darstellt.

**26.** Zusammensetzung gemäss Anspruch 11, dadurch gekennzeichnet, dass die Polyurethane und Polyharnstoffe gleiche oder verschiedene Strukturelemente ausgewählt aus der Gruppe von Strukturelementen der Formeln (n), (o), (p) und (q) enthalten, wobei wenigstens die Strukturelemente der Formeln (n) oder (o) oder beide zugegen sein müssen,

$$-C(O)-NH-R_{017}-NH-C(O)- \quad (n),$$

$$-X_{02}-R_{018}-X_{02}- \quad (o),$$

$$-C(O)-NH-R_{019}-NH-C(O)- \quad (p),$$

$$-X_{02}-R_{020}-X_{02}- \quad (q),$$

worin $R_{017}$ und $R_{018}$ unabhängig voneinander einen bivalenten Rest eines gespannten Cycloolefins oder einen bivalenten Rest mit einem gespannten Cycloolefin, $R_{019}$ einen um die Cyanatgruppen verminderten bivalenten Rest eines Diisocyanats und $R_{020}$ einen um die Amino- oder Hydroxylgruppen verminderten bivalenten Rest eines Diamins oder eines Diols bedeuten, und die $X_{02}$ unabhängig voneinander -O- oder -NH- darstellen.

**27.** Zusammensetzung gemäss Anspruch 26, dadurch gekennzeichnet, dass $R_{017}$ und $R_{018}$ ein- oder zweifach olefinisch ungesättigtes $C_5$-$C_8$-Cycloalkylen oder kondensiertes polycyclisches $C_7$-$C_{18}$-Cycloalkylen darstellen.

**28.** Zusammensetzung gemäss Anspruch 27, dadurch gekennzeichnet, dass $R_{017}$ und $R_{018}$ unabhängig voneinander Cyclopentenylen, Cycloheptenylen, Cyclooctenylen oder Norbornenreste der Formeln ($nr_1$) oder ($nr_2$)

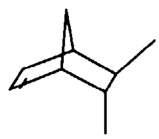 $(nr_1)$ 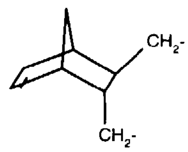 $(nr_2)$

bedeuten.

**29.** Zusammensetzung gemäss Anspruch 26, dadurch gekennzeichnet, dass $R_{019}$ $C_2$-$C_{18}$-Alkylen oder -Alkenylen, $C_3$-$C_{12}$-Cycloalkylen oder -Cycloalkenylen, $C_5$-$C_8$-Cycloalkylen-$CH_2$-, -$CH_2$-($C_5$-$C_8$-Cycloalkylen)-$CH_2$-, $C_6$-$C_{18}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18 C-Atomen, oder $C_5$-$C_7$-Cycloalkyliden darstellt.

**30.** Zusammensetzung gemäss Anspruch 26, dadurch gekennzeichnet, dass $R_{020}$ $C_2$-$C_{18}$-Alkylen, Polyoxaalkylen mit 2 bis 50 Oxaalkyleneinheiten und 2 bis 6 C-Atomen im Oxyalkylen, $C_3$-$C_{12}$-Cycloalkylen, $C_5$-$C_8$-Cycloalkylen-$CH_2$-, -$CH_2$-($C_5$-$C_8$-Cycloalkylen)-$CH_2$-, $C_6$-$C_{14}$-Arylen, Bisphenylen, Benzylen, Xylylen, -$C_6H_4$-$X_{01}$-$C_6H_4$- mit $X_{01}$ gleich O, S, SO, $SO_2$, CO, $CO_2$, NH, N($C_1$-$C_4$-Alkyl), Alkyliden mit 1 bis 18 C-Atomen, oder $C_5$-$C_7$-Cycloalkyliden bedeutet.

**31.** Zusammensetzung gemäss Anspruch 1, dadurch gekennzeichnet, dass es sich bei den Polymeren um solche mit einem Kohlenstoffrückgrat handelt.

**32.** Zusammensetzung gemäss Anspruch 31, dadurch gekennzeichnet, dass es sich bei den Polymeren um im wesentlichen oder vollständig lineare Metathesepolymerisate von kondensierten mindestens bicyclischen cycloaliphatischen Dienen handelt, die zwei olefinische Doppelbindungen in unterschiedlichen Ringen enthalten.

**33.** Zusammensetzung gemäss Anspruch 31, dadurch gekennzeichnet, dass die Polymere wiederkehrende Strukturelemente der Formel (r) enthalten,

$$=CH\text{-}R_{021}\text{-}CH= \qquad (r)$$

worin $R_{021}$ $C_2$-$C_{10}$-Alkylen bedeutet, an das ein Cycloalkenylen mit insgesamt 5 bis 8 C-Atomen direkt oder über ein weiteres ankondensiertes Cycloalkylen mit 5 bis 8 C-Atomen ankondensiert ist.

**34.** Zusammensetzung gemäss Anspruch 31, dadurch gekennzeichnet, dass das Polymer ein lineares Polynorbornadien mit wiederkehrenden Strukturelementen der Formel (r') darstellt,

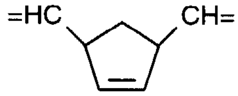 (r'),

oder lineares Polydicyclopentadien mit wiederkehrenden Strukturelementen der Formel (r") darstellt,

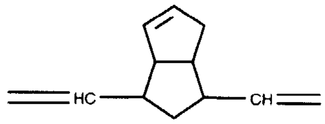 (r"),

oder dass es sich um Copolymere mit diesen beiden wiederkehrenden Strukturelementen handelt.

**35.** Zusammensetzung gemäss Anspruch 34, dadurch gekennzeichnet, dass es sich bei dem Polymer um ein lineares Copolymer mit einem wiederkehrenden Strukturelement der Formel (r), je einem oder beiden der Strukturelemente (r') und (r") und Strukturelementen der Formel (r''')

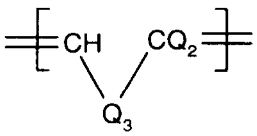

(r''')

eines gespannten Cycloolefins handelt, worin

$Q_3$ ein lineares oder verzweigtes $C_1$-$C_{18}$-Alkylen ist, das, gegebenenfalls mit Halogen, =O, -CN, -$NO_2$, -COOM, -$SO_3$M, -$PO_3$M, -COO$(M_1)_{1/2}$, -$SO_3(M_1)_{1/2}$, -$PO_3(M_1)_{1/2}$, $C_1$-$C_{20}$-Alkyl, $R_1R_2R_3$Si-$(O)_{u}$-, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder R4-X- substituiert ist ; oder bei dem zwei benachbarte C-Atome mit -CO-O-CO- oder -CO-$NR_5$-CO- substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, -$NO_2$, $R_6R_7R_8$Si-$(O)_u$-, -COOM, -$SO_3$M, -$PO_3$M, -COO$(M_1)_{1/2}$, -$S0_3$ $(M_1)_{1/2}$, -$PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;
X und $X_1$ unabhängig voneinander für -O-, -S-, -CO-, -SO-, -$SO_2$-, -O-C(O)-, -C(O)-O-, -C(O)-$NR_5$-, -$NR_{10}$-C (O)-, -$SO_2$-O- oder -O-$SO_2$- stehen;
$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;
$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;
$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;
$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;
M für ein Alkalimetall und $M_1$ für ein Erdalkalimetall stehen; und
u für 0 oder 1 steht;

wobei der mit $Q_3$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;
$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;
$X_2$ -C(O)-O- oder -C(O)-$NR_{12}$- ist;
$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, -$NO_2$, -CN oder Halogen substituiert sind, und wobei die Heteroatome der vorgenannten Heterocycloalkyl-, Heteroaryl- und Heteroaralkylgruppen aus der Gruppe -O-, -S-, -$NR_9$- und -N= ausgewählt sind; und

$R_9$ Wasserstoff, $C_1$-$C_{12}$-Alkyl, Phenyl oder Benzyl darstellt.

**36.** Zusammensetzung gemäss Anspruch 35, dadurch gekennzeichnet, dass $Q_2$ H darstellt.

**37.** Zusammensetzung gemäss Anspruch 31, dadurch gekennzeichnet, dass es sich bei den Polymeren mit einem Kohlenstoffrückgrat um Copolymere von gespannten Cycloolefinen mit kondensierten mindestens bicyclischen cycloaliphatischen Dienen, die wenigstens zwei olefinische Doppelbindungen in unterschiedlichen Ringen enthalten, und ethylenisch ungesättigten Comonomeren handelt.

**38.** Zusammensetzung gemäss Anspruch 37, dadurch gekennzeichnet, dass die Polymere wiederkehrende Strukturelemente der Formel (r) und der Formel (s) enthalten,

$$=CH-R_{021}-CH= \quad (r)$$

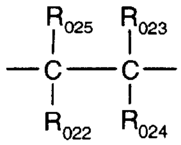

(s),

worin $R_{021}$ $C_2$-$C_{10}$-Alkylen bedeutet, an das ein Alkenylen mit 2 bis 6 C-Atomen direkt oder über einen ankondensierten Cycloalkylenring mit 5 bis 8 C-Atomen gebunden ist; $R_{022}$ H, F, $C_1$-$C_{12}$-Alkyl, -COOH, -C(O)O-$C_1$-$C_{12}$-Alkyl, -C(O)-$NH_2$ oder -C(O)-NH-$C_1$-$C_{12}$-Alkyl bedeutet; $R_{023}$ H, F, Cl, CN oder $C_1$-$C_{12}$-Alkyl darstellt; $R_{024}$ für H, F, Cl, CN, OH, $C_1$-$C_{12}$-Alkyl, $C_1$-$C_{12}$-Alkoxy, unsubstituiertes oder mit OH, Cl, Br, $C_1$-$C_4$-Alkyl, $C_1$-$C_4$-Alkoxy, -COOH, -C(O)O$C_1$-$C_{12}$-Alkyl, -C(O)-$NH_2$, C(O)-NH-$C_1$-$C_{12}$-Alkyl, -$SO_3$H oder -$SO_3$-$C_1$-$C_{12}$-Alkyl substituiertes Phenyl, -C(O)OH, -C(O)O-$C_2$-$C_{12}$-Hydroxyalkyl, -C(O)O-$C_1$-$C_{12}$-Alkyl, -C(O)-$NH_2$ oder -C(O)-NH-$C_1$-$C_{12}$-Alkyl steht; und $R_{025}$ H, F oder $C_1$-$C_{12}$-Alkyl darstellt.

**39.** Zusammensetzung gemäss Anspruch 38, dadurch gekennzeichnet, dass $R_{022}$ H, F, $C_1$-$C_4$-Alkyl, -COOH oder -C(O)-$C_1$-$C_6$-Alkyl bedeutet.

**40.** Zusammensetzung gemäss Anspruch 38, dadurch gekennzeichnet, dass $R_{023}$ für H, F, Cl oder $C_1$-$C_4$-Alkyl steht.

**41.** Zusammensetzung gemäss Anspruch 38, dadurch gekennzeichnet, dass $R_{024}$ H, F, Cl, CN, OH, $C_1$-$C_4$-Alkyl, $C_1$-$C_4$-Alkoxy, unsubstituiertes oder mit OH, Cl, Br, $C_1$-$C_4$-Alkyl, $C_1$-$C_4$-Alkoxy, -COOH, -C(O)O$C_1$-$C_{14}$-Alkyl, -C(O)-$NH_2$, C(O)-NH-$C_1$-$C_4$-Alkyl, -$SO_3$H oder -$SO_3$-$C_1$-$C_4$-Alkyl substituiertes Phenyl, -COOH, -C(O)O-$C_1$-$C_4$-Alkyl, -C(O)-$NH_2$, -C(O)O-$C_2$-$C_6$-Hydroxyalkyl oder -C(O)-NH-$C_1$-$C_4$-Alkyl darstellt.

**42.** Zusammensetzung gemäss Anspruch 38, dadurch gekennzeichnet, dass $R_{025}$ H oder F bedeutet.

**43.** Zusammensetzung gemäss Anspruch 37, dadurch gekennzeichnet, dass die Strukturelemente der Formel (r) ausgewählt sind aus den Strukturelementen der Formel (r') und (r''')

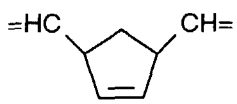

(r'),

und

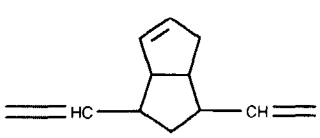

(r'').

**44.** Zusammensetzung gemäss Anspruch 31, dadurch gekennzeichnet, dass es sich bei den Polymeren mit einem Kohlenstoffrückgrat um Metathesepolymerisate oder Copolymere von gespannten Cycloolefinen mit einer Doppelbindung im Ring und olefinisch ungesättigten Comonomeren handelt, deren olefinische Doppelbindungen im Polymerrückgrat teilweise oder vollständig mit offenkettigen oder cyclischen 1,3-Dienen mit 4 bis 12 C-Atomen in einer Diels-Alder Reaktion zu Cycloalkenylenresten mit 6 bis 14 C-Atomen umgesetzt sind.

**45.** Zusammensetzung gemäss Anspruch 44, dadurch gekennzeichnet, dass 5 bis 80% der Doppelbindungen umgesetzt sind.

**46.** Zusammensetzung gemäss Anspruch 44, dadurch gekennzeichnet, dass die Metathesepolymerisate wiederkehrende Strukturelemente der Formel (t) enthalten,

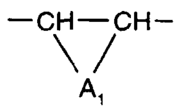

(t),

worin $A_1$ mono- oder bicyclisches $C_5$-$C_8$-Cycloalkenylen bedeutet.

**47.** Zusammensetzung gemäss Anspruch 46, dadurch gekennzeichnet, dass das Strukturelement der Formel (t) Norborn-1,2-enylen der Formel ($nr_3$)

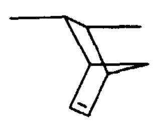

($nr_3$)

darstellt.

**48.** Zusammensetzung gemäss Anspruch 44, dadurch gekennzeichnet, dass das Metathesepolymer wiederkehrende Struktureinheiten der Formel (u)

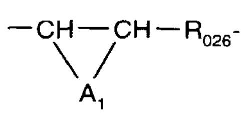

(u),

und wiederkehrende Strukturelemente der Formel (w)

$$-CH{=}CH{-}R_{026}- \qquad (w),$$

enthält,
worin $A_1$ zusammen mit der -CH-CH-Gruppe für bicyclisches $C_5$-$C_8$-Cycloalkenylen steht und $R_{026}$ $C_1$-$C_{12}$-Alkylen darstellt,
und gegebenenfalls wiederkehrenden Strukturelementen der Formel (s),

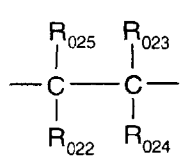

(s),

worin $R_{022}$ H, F, $C_1$-$C_{12}$-Alkyl, -COOH, -C(O)O-$C_1$-$C_{12}$-Alkyl, -C(O)-$NH_2$ oder -C(O)-NH-$C_1$-$C_{12}$-Alkyl bedeutet; $R_{023}$ H, F, Cl, CN oder $C_1$-$C_{12}$-Alkyl darstellt; $R_{024}$ für H, F, Cl, CN, OH, $C_1$-$C_{12}$-Alkyl, $C_1C_{12}$-Alkoxy, unsubstituiertes oder mit OH, Cl, Br, $C_1$-$C_4$-Alkyl, $C_1$-$C_4$-Alkoxy, -COOH, -C(O)O$C_1$-$C_{12}$-Alkyl, -C(O)-$NH_2$, C(O)-N H-$C_1$-$C_{12}$-Alkyl, -$SO_3$H oder -$SO_3$-$C_1$-$C_{12}$-Alkyl substituiertes Phenyl, -C(O)OH, -C(O)O-$C_2$-$C_{12}$-Hydroxyalkyl, -C(O)O-$C_1$-$C_{12}$-Alkyl, -C(O)-$NH_2$ oder -C(O)-NH-$C_1$-$C_{12}$-Alkyl steht; und $R_{025}$ H, F oder $C_1$-$C_{12}$-Alkyl darstellt.

**49.** Zusammensetzung gemäss Anspruch 31, dadurch gekennzeichnet, dass es sich bei den Polymeren mit einem

Kohlenstoffrückgrat um Homo- und Copolymerisate von 1,3-Dienen und gegebenenfalls olefinisch ungesättigten Monomeren handelt, deren olefinische Doppelbindungen im Polymerrückgrat teilweise oder vollständig mit offenkettigen oder cyclischen 1,3-Dienen mit 4 bis 12 C-Atomen in einer Diels-Alder Reaktion zu Cycloalkenylenresten mit 6 bis 14 C-Atomen umgesetzt sind.

**50.** Zusammensetzung gemäss Anspruch 49, dadurch gekennzeichnet, dass 5 bis 80% der Doppelbindungen umgesetzt sind.

**51.** Zusammensetzung gemäss Anspruch 49, dadurch gekennzeichnet, dass die 1,3-Diene ausgewählt sind aus der Gruppe 1,3-Butadien, Isopren und Chloropren.

**52.** Zusammensetzung gemäss Anspruch 49, dadurch gekennzeichnet, dass die Polymere wiederkehrende Strukturelemente der Formel (t) enthalten,

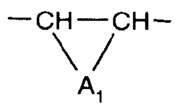

(t),

worin $A_1$ mono- oder bicyclisches $C_5$-$C_8$-Cycloalkenylen bedeutet.

**53.** Zusammensetzung gemäss Anspruch 52, dadurch gekennzeichnet, dass das Strukturelement der Formel (t) Norborn-1,2-enylen der Formel ($nr_3$)

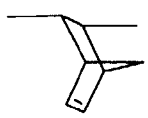

($nr_3$)

entspricht.

**54.** Zusammensetzung gemäss Anspruch 49, dadurch gekennzeichnet, dass das Polymer wiederkehrende Struktureinheiten der Formel (y)

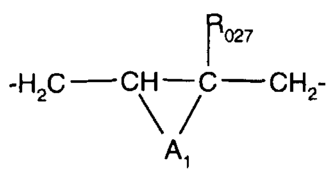

(y),

und wiederkehrende Strukturelemente der Formel (z)

$$-CH_2-CH=CR_{027}-CH_2- \quad (z),$$

enthält,
worin $A_1$ zusammen mit der $-CH-CR_{027}$-Gruppe für bicyclisches $C_5$-$C_8$-Cycloalkenylen steht und $R_{027}$ H, Cl oder $C_1$-$C_{12}$-Alkyl darstellt,
und gegebenenfalls wiederkehrenden Strukturelementen der Formel (s),

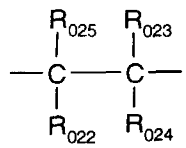

(s),

worin $R_{022}$ H, F, $C_1$-$C_{12}$-Alkyl, -COOH, -C(O)O-$C_1$-$C_{12}$-Alkyl, -C(O)-$NH_2$ oder -C(O)-NH-$C_1$-$C_{12}$-Alkyl bedeutet; $R_{023}$ H, F, Cl, CN oder $C_1$-$C_{12}$-Alkyl darstellt; $R_{024}$ für H, F, Cl, CN, OH, $C_1$-$C_{12}$-Alkyl, $C_1$-$C_{12}$-Alkoxy, unsubstituiertes oder mit OH, Cl, Br, $C_1$-$C_4$-Alkyl, $C_1$-$C_4$-Alkoxy, -COOH, -C(O)O$C_1$-$C_{12}$-Alkyl, -C(O)-$NH_2$, C(O)-NH-$C_1$-$C_{12}$-Alkyl, -$SO_3$H oder -$SO_3$-$C_1$-$C_{12}$-Alkyl substituiertes Phenyl, -C(O)OH, -C(O)O-$C_2$-$C_{12}$-Hydroxyalkyl, -C(O)O-$C_1$-$C_{12}$-Alkyl, -C(O)-$NH_2$ oder -C(O)-NH-$C_1$-$C_{12}$-Alkyl steht; und $R_{025}$ H, F oder $C_1$-$C_{12}$-Alkyl darstellt.

**55.** Zusammensetzung gemäss Anspruch 1, dadurch gekennzeichnet, dass die comonomeren gespannten Cycloolefine der Formel I entsprechen,

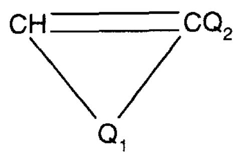

(I),

worin

$Q_1$ ein Rest mit mindestens einem Kohlenstoffatom ist, der zusammen mit der -CH=$CQ_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, -$NO_2$, $R_1R_2R_3$Si-$(O)_u$-, -COOM, -$SO_3$M, -$PO_3$M, -COO$(M_1)_{1/2}$, -$SO_3(M_1)_{1/2}$, -$PO_3(M_1)_{1/2}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_4$-X-substituiert ist; oder bei dem zwei benachbarte C-Atome mit -CO-O-CO- oder -CO-$NR_5$-CO- substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, -$NO_2$, $R_6R_7R_8$Si-$(O)_u$-, -COOM, -$SO_3$M, -$PO_3$M, -COO$(M_1)_{1/2}$, -SO3$(M_1)_{1/2}$, -$PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;
X und $X_1$ unabhängig voneinander für -O-, -S-, -CO-, -SO-, -$SO_2$-, -O-C(O)-, -C(O)-O-, -C(O)-$NR_5$-, -$NR_{10}$-C(O)-, -$SO_2$-O- oder -O-$SO_2$- stehen;
$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;
$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;
$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;
$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;
M für ein Alkalimetall und $M_1$ für ein Erdalkalimetall stehen; und
u für 0 oder 1 steht;

wobei der mit $Q_1$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;
$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;
$X_2$ -C(O)-O- oder -C(O)-$NR_{12}$- ist;
$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, -$NO_2$, -CN oder Halogen substituiert sind, und wobei die Heteroatome der vorgenannten Heterocycloalkyl-, Heteroaryl- und Heteroaralkylgruppen aus der Gruppe -O-, -S-, $-NR_9-$ und -N= ausgewählt sind; und

$R_9$ Wasserstoff, $C_1$-$C_{12}$-Alkyl, Phenyl oder Benzyl darstellt.

**56.** Zusammensetzung gemäss Anspruch 1, dadurch gekennzeichnet, dass sie comonomere polyfunktionelle gespannte Cycloolefine enthält, die der Formel (f1) entsprechen,

$$(T)_n\text{-}U \qquad (f1),$$

worin T den Rest eines gespannten Cycloolefins bedeutet, U für eine direkte Bindung oder eine n-wertige Brükkengruppe steht, und n eine ganze Zahl von 2 bis 8 darstellt.

**57.** Zusammensetzung gemäss Anspruch 56, dadurch gekennzeichnet, dass die Reste T Cycloolefinresten der Formel (f2) entsprechen,

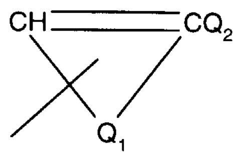

(f2),

worin

$Q_1$ ein Rest mit mindestens einem Kohlenstoffatom ist, der zusammen mit der $-CH=CQ_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, $-NO_2$, $R_1R_2R_3Si$-$(O)_u$-, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_4$-X-substituiert ist; oder bei dem zwei benachbarte C-Atome mit -CO-O-CO- oder $-CO-NR_5-CO-$ substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, $-NO_2$, $R_6R_7R_8Si$-$(O)_u$-, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;
X und $X_1$ unabhängig voneinander für -O-, -S-, -CO-, -SO-, $-SO_2-$, -O-C(O)-, -C(O)-O-, $-C(O)-NR_5-$, $-NR_{10}-C(O)-$, $-SO_2-O-$ oder $-O-SO_2-$ stehen;
$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;
$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;
$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;
$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;
M für ein Alkalimetall und $M_1$ für ein Erdalkalimetall stehen; und
u für 0 oder 1 steht;

wobei der mit $Q_1$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;
$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;
$X_2$ -C(O)-O- oder $-C(O)-NR_{12}-$ ist;
$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, $-NO_2$, -CN oder Halogen substituiert sind, und wobei die Heteroatome der vorgenannten Heterocycloalkyl-, Heteroaryl- und Heteroaralkylgruppen aus der Gruppe -O-, -S-, $-NR_9$- und -N= ausgewählt sind; und

$R_9$ Wasserstoff, $C_1$-$C_{12}$-Alkyl, Phenyl oder Benzyl darstellt.

**58.** Zusammensetzung gemäss Anspruch 56, dadurch gekennzeichnet, dass U

(a) eine zweiwertige Brückengruppe der Formel (f5)

$$-X_5-R_{028}-X_6- \quad (f5),$$

worin

$X_5$ und $X_6$ unabhängig voneinander eine direkte Bindung, -O-, $-CH_2$-O-, -C(O)O-, -O(O)C-, $-CH_2$-O(O)C-, $-C(O)-NR_{029}$-, $-R_{029}N$-(O)C-, $-NH-C(O)-NR_{029}$-, -O-C(O)-NH-, $-CH_2$-O-C(O)-NH- oder -NH-C(O)-O- bedeuten, und
$R_{028}$ $C_2$-$C_{18}$-Alkylen, unsubstituiertes oder mit $C_1$-$C_4$-Alkyl oder $C_1$-$C_4$-Alkoxy substituiertes $C_5$-$C_8$-Cycloalkylen, unsubstituiertes oder mit $C_1$-$C_4$-Alkyl oder $C_1$-$C_4$-Alkoxy substituiertes $C_6$-$C_{18}$-Arylen oder $C_7$-$C_{19}$-Aralkylen, oder
Polyoxaalkylen mit 2 bis 12 Oxaalkyleneinheiten und 2 bis 6 C-Atomen im Alkylen darstellt, und
$R_{029}$ H oder $C_1$-$C_6$-Alkyl ist; oder

(b) eine dreiwertige Brückengruppe der Formel (f6)

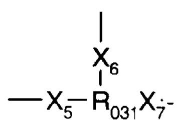
**(f6),**

worin

$X_5$, $X_6$ und $X_7$ -O-, $-CH_2$-O-, -C(O)O-, -O(O)C-, $-CH_2$-O(O)C-, $-C(O)-NR_{029}$-, $-R_{029}N$-(O)C-, $-NH-C(O)-NR_{029}$-, -O-C(O)-NH-, $-CH_2$-O-C(O)-NH- oder -NH-C(O)-O- bedeuten, und
$R_{031}$ einen dreiwertigen aliphatischen Kohlenwasserstoffrest mit 3 bis 20 C-Atomen, einen dreiwertigen unsubstituierten oder mit $C_1$-$C_4$-Alkyl oder $C_1$-$C_4$-Alkoxy substituierten cycloaliphatischen Rest mit 3 bis 8 Ring-C-Atomen, oder einen dreiwertigen unsubstituierten oder mit $C_1$-$C_4$-Alkyl oder $C_1$-$C_4$-Alkoxy substituierten aromatischen Rest mit 6 bis 18 C-Atomen, einen unsubstituierten oder mit $C_1$-$C_4$-Alkyl oder $C_1$-$C_4$-Alkoxy substituierten dreiwertigen araliphatischen Rest mit 7 bis 19 C-Atomen, oder einen unsubstituierten oder mit $C_1$-$C_4$-Alkyl oder $C_1$-$C_4$-Alkoxy substituierten dreiwertigen heteroaromatischen Rest mit 3 bis 13 C-Atomen und 1 bis drei Heteroatomen aus der Gruppe -O-, -N- und -S- darstellt, und
$R_{031}$ H oder $C_1$-$C_6$-Alkyl ist; oder

(c) eine vierwertige Brückengruppe der Formel (f7) ist,

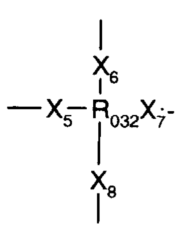
**(f7),**

worin

$X_5$, $X_6$, $X_7$ und $X_8$ -C(O)O-, $-CH_2$-O(O)C- oder -C(O)-$NR_{029}$- bedeuten, und
$R_{032}$ einen vierwertigen aliphatischen Kohlenwasserstoffrest mit 4 bis 20 C-Atomen, einen vierwertigen unsubstituierten oder mit $C_1$-$C_4$-Alkyl oder $C_1$-$C_4$-Alkoxy substituierten cycloaliphatischen Rest mit 4 bis 8 Ring-C-Atomen, oder einen vierwertigen unsubstituierten oder mit $C_1$-$C_4$-Alkyl oder $C_1$-$C_4$-Alkoxy substituierten aromatischen Rest mit 6 bis 18 C-Atomen, einen vierwertigen unsubstituierten oder mit $C_1$-$C_4$-Alkyl oder $C_1$-$C_4$-Alkoxy substituierten araliphatischen Rest mit 7 bis 19 C-Atomen, oder einen vierwertigen unsubstituierten oder mit $C_1$-$C_4$-Alkyl oder $C_1$-$C_4$-Alkoxy substituierten heteroaromatischen Rest mit 3 bis 13 C-Atomen und 1 bis drei Heteroatomen aus der Gruppe -O-, -N- und -S- darstellt, und
$R_{029}$ H oder $C_1$-$C_6$-Alkyl ist.

**59.** Zusammensetzung gemäss Anspruch 1, dadurch gekennzeichnet, dass sie Polymere und gegebenenfalls Monomere enthält, die nur aus Kohlenstoff und Wasserstoff aufgebaut sind.

**60.** Zusammensetzung gemäss Anspruch 1, dadurch gekennzeichnet, dass der Einkomponentenkatalysator in einer Menge von 0,001 bis 20 Mol-% enthalten ist, bezogen auf die Menge des Monomers.

**61.** Zusammensetzung gemäss Anspruch 60, dadurch gekennzeichnet, dass der Einkomponentenkatalysator in einer Menge von 0,01 bis 10 Mol-% enthalten ist, bezogen auf die Menge des Monomers.

**62.** Zusammensetzung gemäss Anspruch 1, dadurch gekennzeichnet, dass es sich bei den photolabilen Liganden um Stickstoff ($N_2$), um unsubstituierte oder mit OH, $C_1$-$C_4$-Alkyl, $C_1$-$C_4$-Alkoxy, $C_6$-$C_{12}$-Aryl oder Halogen substituierte monocyclische, polycyclische oder kondensierte Arene mit 6 bis 24 C-Atomen oder um unsubstituierte oder mit $C_1$-$C_4$-Alkyl, $C_1$-$C_4$-Alkoxy oder Halogen substituierte monocyclische Heteroarene, kondensierte Heteroarene oder kondensierte Aren-Heteroarene mit 3 bis 22 C-Atomen und 1 bis 3 Heteroatomen ausgewählt aus der Gruppe O, S und N; oder um unsubstituierte oder mit $C_1$-$C_4$-Alkyl, $C_1$-$C_4$-Alkoxy oder Halogen substituierte aliphatische, cycloaliphatische, aromatische oder araliphatische Nitrile mit 1 bis 22 C-Atomen handelt.

**63.** Zusammensetzung gemäss Anspruch 1, dadurch gekennzeichnet, dass es sich bei den nicht-photolabilen Liganden um $H_2O$, $H_2S$, $NH_3$; gegebenenfalls halogenierte, aliphatische oder cycloaliphatische Alkohole oder Merkaptane mit 1 bis 18 C-Atomen, aromatische Alkohole oder Thiole mit 6 bis 18 C-Atomen, araliphatische Alkohole oder Thiole mit 7 bis 18 C-Atomen; aliphatische, cycloaliphatische, araliphatische oder aromatische Ether, Thioether, Sulfoxide, Sulfone, Ketone, Aldehyde, Carbonsäureester, Lactone, gegebenenfalls N-$C_1$-$C_4$-mono- oder -dialkylierte Carbonsäureamide mit 2 bis 20 C-Atomen, und gegebenenfalls N-$C_1$-$C_4$-alkylierte Lactame; aliphatische, cycloaliphatische, araliphatische oder aromatische, primäre, sekundäre und tertiäre Amine mit 1 bis 20 C-Atomen; und gegebenenfalls substituierte Cyclopentadienyle handelt.

**64.** Zusammensetzung gemäss Anspruch 1, dadurch gekennzeichnet, dass die Molybdän- oder Wolframverbindung einer der Formeln XII bis XIIc entspricht

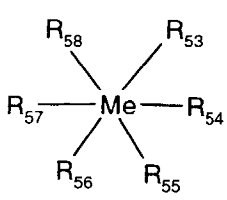

(XII),

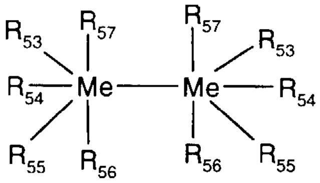

(XIIa),

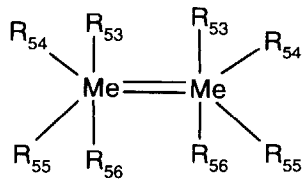

(XIIb),

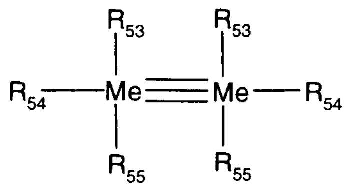

(XIIc),

worin

Me für Mo(VI) oder W(VI) steht;
mindestens zwei der Reste $R_{53}$ bis $R_{58}$ einen Rest $-CH_2-R$ der Formel XI gemäss Anspruch 66 bedeuten;
je zwei der übrigen Reste von $R_{53}$ bis $R_{58}$ =O oder $=N-R_{44}$ bedeuten, und $R_{44}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl, oder Halogen substituiertes Phenyl, oder unsubstituiertes oder mit $C_1$-$C_6$-Alkyl, $C_1$-$C_6$-Alkoxy, $C_1$-$C_6$-Alkoxymethyl-, $C_1$-$C_6$-Alkoxyethyl- oder Halogen substituiertes Benzyl oder Phenylethyl bedeutet; und/oder die übrigen Reste von $R_{53}$ bis $R_{58}$ Sekundäramino mit 2 bis 18 C-Atomen, $R_{45}O$- oder $R_{45}S$-, Halogen, Cyclopentadienyl oder überbrücktes Biscyclopentadienyl oder einen Neutralliganden bedeuten, worin $R_{45}$ unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Benzyl oder Phenylethyl darstellt.

**65.** Zusammensetzung gemäss Anspruch 1, dadurch gekennzeichnet, dass die Silylmethylgruppe der Formel XIV entspricht

$$-CH_2-SiR_{38}R_{39}R_{40} \qquad (XIV),$$

worin

$R_{38}$, $R_{39}$ und $R_{40}$ unabhängig voneinander $C_1$-$C_{18}$-Alkyl, $C_5$- oder $C_6$-Cycloalkyl oder unsubstituiertes oder mit $C_1$-$C_6$-Alkyl oder $C_1$-$C_6$-Alkoxy substituiertes Phenyl oder Benzyl bedeuten.

**66.** Zusammensetzung gemäss Anspruch 1, dadurch gekennzeichnet, dass die Titan-, Niob-, Tantal-, Molybdän- oder Wolframverbindung einer der Formeln XV, XVa oder XVb entsprechen

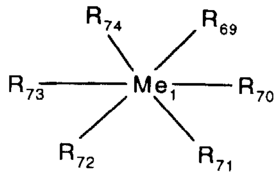

(XV),

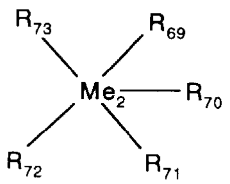

(XVa),

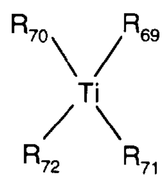

(XVb),

worin

$Me_1$ für Mo(VI) oder W(VI) steht;
$Me_2$ für Nb(V) oder Ta(V) steht;
einer der Reste $R_{69}$ bis $R_{74}$ einen Rest $-CH_2-SiR_{38}R_{39}R_{40}$ der Formel XIV gemäss Anspruch 68 bedeutet;
wenigstens einer der Reste $R_{69}$ bis $R_{74}$ F, Cl oder Br darstellt;
$R_{38}$, $R_{39}$ und $R_{40}$ unabhängig voneinander $C_1$-$C_6$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten;
in Formel XV zwei oder jeweils zwei und in Formel XVa zwei der übrigen Reste von $R_{69}$ bis $R_{74}$ je zusammen =O oder $=N-R_{44}$ bedeuten, und $R_{44}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt, und
die übrigen Reste Sekundäramino mit 2 bis 18 C-Atomen, $R_{45}O$- oder $R_{45}S$-, Halogen, unsubstituiertes oder substituiertes Cyclopentadienyl oder überbrücktes Biscyclopentadienyl oder einen Neutralliganden bedeuten, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di ($C_1$-$C_6$-alkyl)amino,
Di($C_1$-$C_6$-alkyl)amino-$C_1$-$C_3$-alkyl oder Halogen substituiertes Benzyl oder Phenylethyl darstellen; oder
in den Formeln XV, XVa und XVb die übrigen Reste unabhängig voneinander Sekundäramino mit 2 bis 18 C-Atomen, $R_{45}O$- oder $R_{45}S$-, Halogen, unsubstituiertes oder substituiertes Cyclopentadienyl oder überbrücktes Biscyclopentadienyl oder einen Neutralliganden bedeuten, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di ($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

**67.** Zusammensetzung gemäss Anspruch 1, dadurch gekennzeichnet, dass die Niob- oder Tantalverbindung der Formel XVIII entspricht

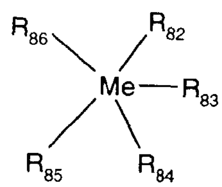

(XVIII),

worin

Me für Nb(V) oder Ta(V) steht,
mindestens zwei der Reste $R_{82}$ bis $R_{86}$ einen Rest $-CH_2-R$ der Formel XI gemäss Anspruch 66 bedeuten; zwei der übrigen Reste von $R_{82}$ bis $R_{86}$ zusammen =O oder $=N-R_{44}$ bedeuten, und $R_{44}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl,
Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt; und/oder die übrigen Reste von $R_{82}$ bis $R_{86}$ unabhängig voneinander Sekundäramino mit 2 bis 18 C-Atomen, $R_{45}O$-, $R_{45}S$-, Halogen, Cyclopentadienyl oder überbrücktes Biscyclopentadienyl oder einen Neutralliganden bedeuten, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di ($C_1$-$C_6$-alkyl)amino, Di($C_1$-$C_6$-alkyl)amino-$C_1$-$C_3$-alkyl oder Halogen substituiertes Benzyl oder Phenylethyl darstellen.

**68.** Zusammensetzung gemäss Anspruch 1, dadurch gekennzeichnet, dass die Titan(IV)verbindung der Formel XX entspricht

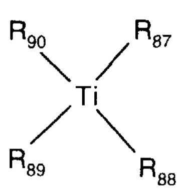

(XX),

worin

mindestens zwei der Reste $R_{87}$ bis $R_{90}$ einen Rest $-CH_2-R$ der Formel XI gemäss Anspruch 66 bedeuten; und die übrigen Reste $R_{87}$ bis $R_{90}$ Sekundäramino mit 2 bis 18 C-Atomen, $R_{45}O$-, $R_{45}S$-, Halogen, Cyclopentadienyl oder überbrücktes Biscyclopentadienyl oder einen Neutralliganden bedeuten, worin die $R_{45}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di ($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

**69.** Zusammensetzung gemäss Anspruch 1, dadurch gekennzeichnet, dass die Phosphinliganden den Formeln XXIII oder XXIIIa entsprechen

$$PR_{91}R_{92}R_{93} \qquad (XXIII),$$

$$R_{91}R_{92}P\text{-}Z_1\text{-}PR_{91}R_{92} \qquad \text{(XXIIIa)},$$

worin $R_{91}$, $R_{92}$ und $R_{93}$ unabhängig voneinander H, $C_1$-$C_{20}$-Alkyl, $C_1$-$C_{20}$-Alkoxy, unsubstituiertes oder mit $C_1$-$C_6$-Alkyl, $C_1$-$C_6$-Halogenalkyl oder $C_1$-$C_6$-Alkoxy substituiertes $C_4$-$C_{12}$-Cycloalkyl oder Cycloalkoxy, oder unsubstituiertes oder mit $C_1$-$C_6$-Alkyl, $C_1$-$C_6$-Halogenalkyl oder $C_1$-$C_6$-Alkoxy substituiertes $C_6$-$C_{16}$-Aryl oder $C_6$-$C_{16}$-Aryloxy, oder unsubstituiertes oder mit $C_1$-$C_6$-Alkyl, $C_1$-$C_6$-Halogenalkyl oder $C_1$-$C_6$-Alkoxy substituiertes $C_7$-$C_{16}$-Aralkyl oder $C_7$-$C_{16}$-Aralkyloxy darstellen; die Reste $R_{91}$ und $R_{92}$ gemeinsam unsubstituiertes oder mit $C_1$-$C_6$-Alkyl, $C_1$-$C_6$-Halogenalkyl oder $C_1$-$C_6$-Alkoxy substituiertes Tetra- oder Pentamethylen, oder Tetra- oder Pentamethylendioxyl bedeuten, oder unsubstituiertes oder mit $C_1$-$C_6$-Alkyl, $C_1$-$C_6$-Halogenalkyl oder $C_1$-$C_6$-Alkoxy substituiertes und mit 1 oder 2 1,2-Phenylen kondensiertem Tetra- oder Pentamethylen, oder Tetra- oder Pentamethylendioxyl darstellen, oder unsubstituiertes oder mit $C_1$-$C_6$-Alkyl, $C_1$-$C_6$-Halogenalkyl oder $C_1$-$C_6$-Alkoxy substituiertes und in den 1,2- und 3,4-Stellungen mit 1,2-Phenylen kondensiertes Tetramethylendioxyl darstellen, und Rg3 die zuvor angegebene Bedeutung hat; und

$Z_1$ lineares oder verzweigtes, unsubstituiertes oder mit $C_1$-$C_4$-Alkoxy substituiertes $C_2$-$C_{12}$-Alkylen, unsubstituiertes oder mit $C_1$-$C_4$-Alkyl oder $C_1$-$C_4$-Alkoxy substituiertes 1,2- oder 1,3-Cycloalkylen mit 4 bis 8 C-Atomen, oder unsubstituiertes oder mit $C_1$-$C_4$-Alkyl oder $C_1$-$C_4$-Alkoxy substituiertes 1,2 oder 1,3-Heterocycloalkylen mit 5 oder 6 Ringgliedern und einem Heteroatom aus der Gruppe O oder N bedeutet.

**70.** Zusammensetzung gemäss Anspruch 1, dadurch gekennzeichnet, dass die Ruthenium- oder Osmiumverbindung einer der Formeln XXV bis XXVf entspricht

$$(R_{94}R_{95}R_{96}P)L_8Me^{2+}(Z^{1-})_2 \qquad \text{(XXV)},$$

$$(R_{94}R_{95}R_{96}P)_2L_9Me^{2+}(Z^{1-})_2 \qquad \text{(XXVa)},$$

$$(R_{94}R_{95}R_{96}P)L_9L_{10}Me^{2+}(Z^{1-})_2 \qquad \text{(XXVb)},$$

$$(R_{94}R_{95}R_{96}P)_3L_9Me^{2+}(Z^{1-})_2 \qquad \text{(XXVc)},$$

$$(R_{94}R_{95}R_{96}P)L_9L_9Me^{2+}(Z^{1-})_2 \qquad \text{(XXVd)},$$

$$(R_{94}R_{95}R_{96}P)L_8L_{10}Me^{2+}(Z^{1-})_2 \qquad \text{(XXVe)},$$

$$(R_{94}R_{95}R_{96}P)L_8(L_9)_mMe^{2+}(Z^{1-})_2 \qquad \text{(XXVf)},$$

worin

Me für Ru oder Os steht;

Z in Formeln XXV bis XXVe $H^-$, Cyclopentadienyl, $Cl^-$, $Br^-$, $BF_4^-$, $PF_6^-$, $SbF_6^-$, $ASF_6^-$, $CF_3SO_3^-$, $C_6H_5$-$SO_3^-$, 4-Methyl-$C_6H_5$-$SO_3^-$, 3,5-Dimethyl-$C_6H_5$-$SO_3^-$, 2,4,6-Trimethyl-$C_6H_5$-$SO_3^-$ und 4-$CF_3$-$C_6H_5$-$SO_3^-$ und in Formel XXVf $H^-$, Cyclopentadienyl, $BF_4^-$, $PF_6^-$, $SbF_6^-$, $AsF_6^-$, $CF_3SO_3^-$, $C_6H_5$-$SO_3^-$, 4-Methyl-$C_6H_5$-$SO_3^-$, 2,6-Dimethyl-$C_6H_5$-$SO_3^-$, 2,4,6-Trimethyl-$C_6H_5$-$SO_3^-$ oder 4-$CF_3$-$C_6H_5$-$SO_3^-$ bedeutet;

$R_{94}$, $R_{95}$ und $R_{92}$ unabhängig voneinander $C_1$-$C_6$-Alkyl, unsubstituiertes oder mit 1 bis 3 $C_1$-$C_4$-Alkyl substituiertes Cyclopentyl oder Cyclohexyl oder Cyclopentyloxy oder Cyclohexyloxy, oder unsubstituiertes oder mit 1 bis 3 $C_1$-$C_4$-Alkyl substituiertes Phenyl oder Benzyl oder Phenyloxy oder Benzyloxy darstellen;

$L_8$ unsubstituiertes oder mit 1 bis 3 $C_1$-$C_4$-Alkyl, $C_1$-$C_4$-Alkoxy, -OH, -F oder Cl substituiertes $C_6$-$C_{16}$-Aren oder $C_5$-$C_{16}$-Heteroaren darstellt;

$L_9$ $C_1$-$C_6$-Alkyl-CN, Benzonitril oder Benzylnitril bedeutet; und

$L_{10}$ $H_2O$ oder $C_1$-$C_6$-Alkanol ist.

**71.** Zusammensetzung gemäss Anspruch 1, dadurch gekennzeichnet, dass die Ruthenium- oder Osmiumverbindung einer der Formeln XXVI, XXVIa, XXVIb, XXVIc und XXVId entspricht

$$Me^{2+}(L_{11})_2(L_{12})(Y_1^-)_2 \quad \text{(XXVI)},$$

$$Me^{2+}(L_{11})_3(Y_1^-)_2 \quad \text{(XXVIa)},$$

$$Me^{2+}(L_{11})_2L_{13}(Y_1^-) \quad \text{(XXVIb)},$$

$$Me^{2+}(L_{11})_3L_{14}(Y_1^-)_2 \quad \text{(XXVIc)},$$

$$Me^{2+}L_{11}(L_{12})_3(Y_1^-)_2 \quad \text{(XXVId)},$$

worin

Me für Ru oder Os steht;
$Y_1$ das Anion einer einbasigen Säure bedeutet;
$L_{11}$ ein Phosphin der Formel XXIII oder XXIIIa gemäss Anspruch 72 darstellt,
L12 einen Neutralliganden bedeutet;
$L_{13}$ unsubstituiertes oder mit $C_1$-$C_4$-Alkyl substituiertes Cyclopentadienyl darstellt; und $L_{14}$ für CO steht.

**72.** Verfahren zur Herstellung vernetzter Polymerisate durch Metathesepolymerisation, dadurch gekennzeichnet, dass man eine Zusammensetzung gemäss Anspruch 1 aus

(a) einer katalytischen Menge eines Einkomponenten-Katalysators für die Metathesepolymerisation und
(b) mindestens ein Polymer mit im Polymerrückgrat gebundenen gespannten Cycloalkenylenresten alleine oder in Mischung mit gespannten Cycloolefinen,
(c) durch Erwärmen polymerisiert,
(d) durch Bestrahlung polymerisiert,
(e) durch Erwärmung und Bestrahlung polymerisiert,
(f) durch kurzzeitige Erwärmung den Einkomponenten-Katalysator aktiviert und die Polymerisation durch Bestrahlung beendet, oder
(g) durch kurzzeitige Bestrahlung den Einkomponenten-Katalysator aktiviert und die Polymerisation durch Erwärmen beendet.

**73.** Verfahren gemäss Anspruch 72, dadurch gekennzeichnet, dass die Erwärmung bei einer Temperatur von 50 bis 300°C durchgeführt wird.

**74.** Vernetzte Metathesepolymerisate aus mindestens einem Polymer mit im Polymerrückgrat gebundenen gespannten Cycloalkenylenresten alleine oder in Mischung mit gespannten Cycloolefinen, hergestellt nach dem Verfahren gemäss Anspruch 72.

**75.** Beschichtetes Trägermaterial, dadurch gekennzeichnet, dass auf einem Substrat eine Schicht aus einer Zusammensetzung gemäss Anspruch 1 aufgebracht ist.

**76.** Beschichtetes Trägermaterial mit einer vernetzten Schicht aus einer Zusammensetzung gemäss Anspruch 1.

**77.** Formkörper aus vernetzten Metathesepolymeren aus mindestens einem Polymer mit im Polymerrückgrat gebundenen gespannten Cycloalkenylenresten alleine oder in Mischung mit gespannten Cycloolefinen, hergestellt nach dem Verfahren gemäss Anspruch 72.

**78.** Verfahren zur Herstellung von beschichteten Materialien oder Reliefabbildungen auf Trägermaterialien, bei dem

man eine Zusammensetzung gemäss Anspruch 1 und gegebenenfalls ein Lösungsmittel als Schicht auf einem Träger aufbringt, gegebenenfalls das Lösungsmittel entfernt, und die Schicht zur Polymerisation bestrahlt oder erwärmt, oder die Schicht durch eine Photomaske bestrahlt und anschließend die nichtbestrahlten Anteile mit einem Lösungsmittel entfernt, und das erhaltene Reliefbild gegebenenfalls nachtempert.

## Claims

1. A composition comprising catalytic amounts of a one-component catalyst for metathesis polymerization and at least one polymer with strained cycloalkenylene radicals bonded in the polymer backbone, alone or mixed with strained cycloolefins, which contains, as one-component catalyst

   (a) a ruthenium compound or osmium compound from the group of compounds $Ru(CH_3CN)_6(tos)_2$, $Ru(CH_3CH_2CN)_6(tos)_2$, $Ru(CH_3CN)_6(CF_3SO_3)_2$, $Ru(CH_3CH_2CN)_6(CF_3SO_3)_2$, $Ru(C_6H_6)_2(tos)_2$, $[Ru(C_6H_6)(C_6H_5OCH_3)](BF_4)_2$, $[Ru(C_6H_6)(C_6H_5\text{i-propyl})](BF_4)_2$, $[Ru(C_6H_6)(\text{1,3,5-trimethylphenol})](BF_4)_2$, $[Ru(C_6H_6)(\text{hexamethylbenzene})](BF_4)_2$, $[Ru(C_6H_6)(\text{biphenyl})](BF_4)_2$, $[Ru(C_6H_6)(\text{chrysene})](BF_4)_2$, $[Ru(C_6H_6)(\text{naphthalene})](BF_4)_2$, $[Ru(\text{cyclopentadienyl})(\text{4-methylcumyl})]PF_6$, $[Ru(\text{cyanophenyl})_6](tos)_2$, $[Ru(\text{cyanophenyl})_6](CF_3SO_3)_2$, $[Ru(C_6H_6)(\text{tetramethylthiophene})_3](tos)_2$, $[Ru(C_6H_6)(CH_3CN)_3](tos)_2$, $[Ru(C_6H_6)(\text{tetramethylthiophene})_3](CF_3SO_3)_2$, $(Ru(C_6H_6)(CH_3CN)_3](CF_3SO_3)_2$, $[Ru(C_6H_6)(CH_3OH)_3](tos)_2$, $[Ru(C_6H_6)(CH_3OH)_3](tis)_2$, $(Os(NH_3)_5N_2](PF_6)_2$, $[Ru(NH_3)_5N_2](PF_6)_2$, $[Ru(NH_3)_5(CH_3CN)]BF_4$, $[Ru(C_6H_6(NH_3)_3](tis)_2$, $[Ru(C_6H_6(\text{tetrahydrothiophene})_3](CF_3SO_3)_2$, $[Ru((CH_3)_2S)_3C_6H_6](tos)_2$, $[Ru(\text{dimethyl sulfoxide})_3C_6H_6](PF_6)_2$, $[Ru(\text{dimethylformamide})_3C_6H_6](PF_6)_2$, $[Ru(C_6H_6)Cl_2]_2$ and $[Os(C_6H_6)Cl_2]_2$ or

   (b) a molybdenum (VI) compound or tungsten(VI) compound which has at least two methyl groups or two monosubstituted methyl groups attached to the metal, the substituent containing no hydrogen atom in the α position; or

   (c) a titanium(IV), niobium(V), tantalum(V), molybdenum(VI) or tungsten(VI) compound in which a silylmethyl group and at least one halogen are attached to the metal; or

   (d) a niobium(V) compound or tantalum(V) compound which has at least two methyl groups or two monosubstituted methyl groups attached to the metal, the substituent containing no hydrogen atom in the α position; or

   (e) a titanium(IV) compound which has at least two methyl groups or two monosubstituted methyl groups attached to the metal, the substituent containing no hydrogen atom in the α position; or

   (f) a ruthenium compound or osmium compound which has at least one phosphine group, at least one photolabile ligand and, if desired, neutral ligands attached to the metal atom, a total of from 2 to 5 ligands being attached, and contains the acid anions for charge compensation; or

   (g) a divalently cationic ruthenium compound or osmium compound having a metal atom to which 1 to 3 tertiary phosphine ligands with, in the case of the ruthenium compound, sterically bulky substituents, if desired non-photolabile neutral ligands and anions for charge compensation are attached, with the proviso that in ruthenium (trisphenylphosphine) dihalides or hydride halides the phenyl groups are substituted by $C_1$-$C_{18}$alkyl, $C_1$-$C_{18}$haloalkyl or $C_1$-$C_{18}$alkoxy.

2. A composition according to claim 1, wherein the polymers are those with recurring structural units of the formula (a) in the polymer backbone

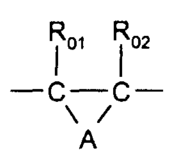

(a),

   in which $R_{01}$ and $R_{02}$ independently of one another are H or $C_1$-$C_6$alkyl, or $R_{01}$ and $R_{02}$ together are a bond, and A, together with the C-C group, forms an unsubstituted or substituted strained cycloolefin ring.

3. A composition according to claim 2, wherein the structural units of the formula (a) are bonded directly or via bridge groups.

4. A composition according to claim 2, wherein $R_{01}$ and $R_{02}$ are H.

**5.** A composition according to claim 2, wherein the substituents for the cycloolefin ring are $C_1$-$C_8$alkyl or -alkoxy; $C_1$-$C_4$haloalkyl or -alkoxy; halogen; -CN; -$NH_2$; secondary amino having 2 to 18 C atoms; tertiary amino having 3 to 18 C atoms; -C(O)-$OR_{03}$ or -C(O)-$NR_{03}R_{04}$, in which $R_{03}$ and $R_{04}$ independently of one another are H, $C_1$-$C_{18}$alkyl, phenyl or benzyl.

**6.** A composition according to claim 2, wherein in formula (a)

$R_{01}$ and $R_{02}$ together are a bond, and A is unsubstituted or substituted $C_1$-$C_{12}$alkylene; unsubstituted or substituted $C_2$-$C_{12}$heteroalkylene, with at least one heteroatom from the group consisting of O, S and N; unsubstituted or substituted $C_5$-$C_{12}$cycloalkylene; unsubstituted or substituted $C_4$-$C_{12}$heterocycloalkylene, with at least one heteroatom from the group consisting of O, S and N; unsubstituted or substituted $C_2$-$C_{12}$alkenylene; unsubstituted or substituted $C_3$-$C_{12}$heteroalkenylene, with at least one heteroatom from the group consisting of O, S and N; unsubstituted or substituted $C_5$-$C_{12}$cycloalkenylene; or unsubstituted or substituted $C_4$-$C_{12}$heterocycloalkenylene, with at least one heteroatom from the group consisting of O, S and N; or

$R_{01}$ and $R_{02}$ independently of one another are H or $C_1$-$C_6$alkyl and A is unsubstituted or substituted $C_5$-$C_{12}$-cycloalkenylene; unsubstituted or substituted $C_4$-$C_{12}$heterocycloalkenylene, with at least one heteroatom from the group consisting of O, S and N; or unsubstituted or substituted $C_5$-$C_{12}$cycloalkdienylene; or

$R_{01}$ is a double bond together with a terminal C atom of the radical A; $R_{02}$ is H or $C_1$-$C_6$alkyl; and A is unsubstituted or substituted $C_1$-$C_{12}$alkylene, unsubstituted or substituted $C_3$-$C_{12}$heteroalkylene, with at least one heteroatom from the group consisting of O, S and N; unsubstituted or substituted $C_5$-$C_{12}$cycloalkylene; unsubstituted or substituted $C_4$-$C_{12}$heterocycloalkylene, with at least one heteroatom from the group consisting of O, S and N; unsubstituted or substituted $C_2$-$C_{12}$alkenylene; unsubstituted or substituted $C_3$-$C_{12}$heteroalkenylene, with at least one heteroatom from the group consisting of O, S and N; unsubstituted or substituted $C_5$-$C_{12}$cycloalkenylene; or unsubstituted or substituted $C_4$-$C_{12}$heterocycloalkenylene, with at least one heteroatom from the group consisting of O, S and N; or

$R_{01}$ and $R_{02}$ are each a double bond together with in each case a terminal C atom of the radical A, and A is unsubstituted or substituted $C_3$-$C_{12}$alkylene;

unsubstituted or substituted $C_3$-$C_{12}$heteroalkylene, with at least one heteroatom from the group consisting of O, S and N; unsubstituted or substituted $C_5$-$C_{12}$ cycloalkylene; or unsubstituted or substituted $C_4$-$C_{12}$heterocycloalkylene, with at least one heteroatom from the group consisting of O, S and N;

it being possible for phenylene, $C_4$-$C_8$cycloalkylene or $C_4$-$C_8$heterocycloalkylene to be fused onto the alkylene, heteroalkylene, cycloalkylene, heterocycloalkylene, alkenylene, heteroalkenylene, cycloalkenylene, heterocycloalkenylene, alkdienylene, heteroalkdienylene, cycloalkdienylene and heterocycloalkdienylene.

**7.** A composition according to claim 6, wherein

$R_{01}$ and $R_{02}$ together are a bond, and A is unsubstituted or substituted $C_2$-$C_6$-alkylene, unsubstituted or substituted $C_3$-$C_7$cycloalkylene, unsubstituted or substituted $C_2$-$C_6$alkenylene or unsubstituted or substituted $C_5$-$C_7$cycloalkenylene; or

$R_{01}$ and $R_{02}$ independently of one another are H or $C_1$-$C_4$alkyl and A is unsubstituted or substituted $C_5$-$C_7$cycloalkenylene; or

$R_{01}$ is a double bond together with a terminal C atom of the radical A; $R_{02}$ is H or $C_1$-$C_4$alkyl; and A is unsubstituted or substituted $C_2$-$C_6$alkenylene, unsubstituted or substituted $C_5$-$C_7$cycloalkylene, unsubstituted or substituted $C_2$-$C_6$alkenylene or unsubstituted or substituted $C_5$-$C_7$cycloalkenylene; or

$R_{01}$ and $R_{02}$ each are a double bond together with in each case a terminal C atom of the radical A and A is unsubstituted or substituted $C_3$-$C_6$alkylene or unsubstituted or substituted $C_5$-$C_7$cycloalkylene.

**8.** A composition according to claim 1, wherein the polymers are homo- or copolymers.

**9.** A composition according to claim 2, wherein the polymer contains the structural elements of the formula (a) to the extent of at least 5 mol %, based on the polymer.

**10.** A composition according to claim 9, wherein the polymer contains the structural elements of the formula (a) to the extent of 5 to 100 mol %.

**11.** A composition according to claim 1, wherein the polymers are chosen from the homo- and copolymers of linear polyepoxides, polyesters, polyamides, polyesteramides, polyurethanes and polyureas in which the divalent diepoxide, dicarboxylic acid or diisocyanate radicals, or in which the divalent diol or diamine radicals, or both of these radicals, contain strained cycloolefin radicals, and which, in the case of the copolymers of these divalent radicals, contain different diepoxide, dicarboxylic acid or diisocyanate, diol or diamine radicals.

**12.** A composition according to claim 11, wherein the polyepoxides contain recurring structural elements chosen from the group of structural elements of the formulae (b), (c), (d) and (e)

$$[-CH_2-CH(OH)-CH_2-O-R_{05}-O-CH_2-CH(OH)-CH_2-O- \quad (b),$$

$$-R_{06}-O- \quad (c),$$

$$[-CH_2-CH(OH)-CH_2-O-R_{07}-O-CH_2-CH(OH)-CH_2-O- \quad (d),$$

$$-R_{08}-O- \quad (e),$$

with the proviso that they contain at least structural elements of the formulae (b) or (c) or both, in which $R_{05}$ and $R_{06}$ independently of one another are a divalent radical of a strained cycloolefin or a divalent radical with a strained cycloolefin, $R_{07}$ is a divalent radical of a diglycidyl ether reduced by the glycidyloxy groups and $R_{08}$ is a divalent radical of a diol reduced by the hydroxyl group.

**13.** A composition according to claim 12, wherein $R_{05}$ and $R_{06}$ independently of one another are mono- or diolefinically unsaturated $C_5$-$C_8$cycloalkylene or fused polycyclic $C_7$-$C_{18}$cycloalkylene.

**14.** A composition according to claim 12, wherein $R_{05}$ and $R_{06}$ independently of one another are a norbornene radical of the formulae ($nr_1$) or ($nr_2$)

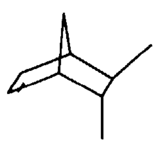 ($nr_1$) 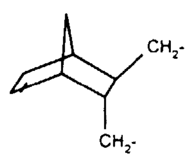 ($nr_2$).

**15.** A composition according to claim 12, wherein $R_{07}$ and $R_{08}$ are $C_2$-$C_{18}$alkylene, polyoxaalkylene having 2 to 50 oxaalkylene units and 2 to 6 C atoms in the oxyalkylene, $C_3$-$C_{12}$cycloalkylene, $C_5$-$C_8$cycloalkylene-$CH_2$-, -$CH_2$-($C_5$-$C_8$-cycloalkylene)-$CH_2$-, $C_6$-$C_{14}$arylene, bisphenylene, benzylene, xylylene or -$C_6H_4$-$X_{01}$-$C_6H_4$-, where $X_{01}$ is O, S, SO, $SO_2$, CO, $CO_2$, NH, N($C_1$-$C_4$alkyl) or alkylidene having 1 to 18 C atoms, or $C_5$-$C_7$cycloalkylidene.

**16.** A composition according to claim 11, wherein the polyesters contain identical or different structural elements chosen from the group of structural elements of the formulae (f), (g), (h) and (i), where at least the structural elements of the formulae (f) or (g) or both must be present

$$-C(O)-R_{09}-C(O)- \quad (f),$$

$$-O-R_{010}-O- \quad (g),$$

$$-C(O)-R_{011}-C(O)- \quad (h),$$

$$-O-R_{012}-O- \quad (i),$$

in which $R_{09}$ and $R_{010}$ independently of one another are a divalent radical of a strained cycloolefin or a divalent radical with a strained cycloolefin, $R_{011}$ is a divalent radical of a dicarboxylic acid reduced by the carboxyl groups and $R_{012}$ is a divalent radical of a diol reduced by the hydroxyl group.

**17.** A composition according to claim 16, wherein $R_{09}$ and $R_{010}$ independently of one another are mono- or diolefinically unsaturated $C_5$-$C_8$cycloalkylene or fused polycyclic $C_7$-$C_{18}$cycloalkylene.

**18.** A composition according to claim 16, wherein $R_{09}$ and $R_{010}$ independently of one another are a norbornene radical of the formulae ($nr_1$) or ($nr_2$)

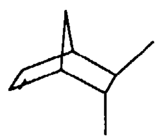 ($nr_1$) 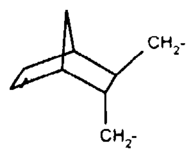 ($nr_2$).

**19.** A composition according to claim 16, wherein $R_{011}$ is $C_2$-$C_{18}$alkylene or -alkenylene, $C_3$-$C_{12}$cycloalkylene or -cycloalkenylene, $C_5$-$C_8$cycloalkylene-$CH_2$-, -$CH_2$-($C_5$-$C_8$cycloalkylene)-$CH_2$-, $C_6$-$C_{18}$arylene, bisphenylene, benzylene, xylylene or -$C_6H_4$-$X_{01}$-$C_6H_4$-, where $X_{01}$ is O, S, SO, $SO_2$, CO, $CO_2$, NH, N($C_1$-$C_4$alkyl) or alkylidene having 1 to 18 C atoms, or $C_5$-$C_7$cycloalkylidene.

**20.** A composition according to claim 16, wherein $R_{012}$ is $C_2$-$C_{18}$alkylene, polyoxaalkylene having 2 to 50 oxaalkylene units and 2 to 6 C atoms in the oxyalkylene, $C_3$-$C_{12}$cycloalkylene, $C_5$-$C_8$cycloalkylene-$CH_2$-, -$CH_2$-($C_5$-$C_8$cycloalkylene)-$CH_2$-, $C_6$-$C_{14}$arylene, bisphenylene, benzylene, xylylene or -$C_6H_4$-$X_{01}$-$C_6H_4$-, where $X_{01}$ is O, S, SO, $SO_2$, CO, $CO_2$, NH, N($C_1$-$C_4$alkyl) or alkylidene having 1 to 18 C atoms, or $C_5$-$C_7$cycloalkylidene.

**21.** A composition according to claim 11, wherein the polyamides contain identical or different structural elements chosen from the group of structural elements of the formulae (j), (k), (l) and (m), where at least the structural elements of the formulae (j) or (k) or both must be present

$$-C(O)-R_{013}-C(O)- \quad (j),$$

$$-NH-R_{014}-NH- \quad (k),$$

$$-C(O)-R_{015}-C(O)- \quad (l),$$

$$-NH-R_{016}-NH- \quad (m),$$

in which $R_{013}$ and $R_{014}$ independently of one another are a divalent radical of a strained cycloolefin or a divalent radical with a strained cycloolefin, $R_{015}$ is a divalent radical of a dicarboxylic acid reduced by the carboxyl groups and $R_{016}$ is a divalent radical of a diamine reduced by the amino groups.

**22.** A composition according to claim 21, wherein $R_{013}$ and $R_{014}$ independently of one another are mono- or diolefinically unsaturated $C_5$-$C_8$cycloalkylene or fused polycyclic $C_7$-$C_{18}$cycloalkylene.

**23.** A composition according to claim 21, wherein $R_{013}$ and $R_{014}$ independently of one another are a norbornene radical of the formulae ($nr_1$) or ($nr_2$)

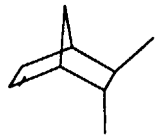 $(nr_1)$ 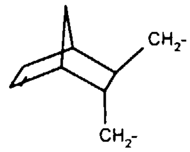 $(nr_2)$.

**24.** A composition according to claim 21, wherein $R_{015}$ is $C_2$-$C_{18}$alkylene or -alkenylene, $C_3$-$C_{12}$cycloalkylene or -cycloalkenylene, $C_5$-$C_8$cycloalkylene-$CH_2$-, -$CH_2$-($C_5$-$C_8$cycloalkylene)-$CH_2$-, $C_6$-$C_{18}$arylene, bisphenylene, benzylene, xylylene or -$C_6H_4$-$X_{01}$-$C_6H_4$-, where $X_{01}$ is O, S, SO, $SO_2$, CO, $CO_2$, NH, N($C_1$-$C_4$alkyl) or alkylidene having 1 to 18 C atoms, or $C_5$-$C_7$cycloalkylidene.

**25.** A composition according to claim 21, wherein $R_{016}$ is $C_2$-$C_{18}$alkylene, $C_3$-$C_{12}$cycloalkylene, $C_5$-$C_8$cycloalkylene-$CH_2$-, -$CH_2$-($C_5$-$C_8$cycloalkylene)-$CH_2$-, $C_6$-$C_{14}$arylene, bisphenylene, benzylene, xylylene or -$C_6H_4$-$X_{01}$-$C_6H_4$-, where $X_{01}$ is O, S, SO, $SO_2$, CO, $CO_2$, NH, N($C_1$-$C_4$alkyl) or alkylidene having 1 to 18 C atoms, or $C_5$-$C_7$cycloalkylidene.

**26.** A composition according to claim 11, wherein the polyurethanes and polyureas contain identical or different structural elements chosen from the group of structural elements of the formulae (n), (o), (p) and (q), where at least the structural elements of the formulae (n) or (o) or both must be present

$$-C(O)-NH-R_{017}-NH-C(O)- \quad (n),$$

$$-X_{02}-R_{018}-X_{02}- \quad (o),$$

$$-C(O)-NH-R_{019}-NH-C(O)- \quad (p),$$

$$-X_{02}-R_{020}-X_{02}- \quad (q),$$

in which $R_{017}$ and $R_{018}$ independently of one another are a divalent radical of a strained cycloolefin or a divalent radical with a strained cycloolefin, $R_{019}$ is a divalent radical of a diisocyanate reduced by the cyanate groups and $R_{020}$ is a divalent radical of a diamine or of a diol reduced by the amino or hydroxyl groups, and the $X_{02}$ independently of one another are -O- or -NH-.

**27.** A composition according to claim 26, wherein $R_{017}$ and $R_{018}$ are mono- or diolefinically unsaturated $C_5$-$C_8$cycloalkylene or fused polycyclic $C_7$-$C_{18}$-cycloalkylene.

**28.** A composition according to claim 27, wherein $R_{017}$ and $R_{018}$ independently of one another are cyclopentenylene, cycloheptenylene, cyclooctenylene or norbornene radicals of the formulae $(nr_1)$ or $(nr_2)$

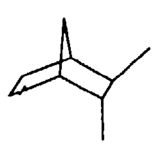 $(nr_1)$ 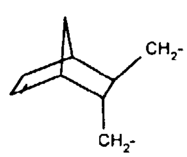 $(nr_2)$.

**29.** A composition according to claim 26, wherein $R_{019}$ is $C_2$-$C_{18}$alkylene or -alkenylene, $C_3$-$C_{12}$cycloalkylene or -cycloalkenylene, $C_5$-$C_8$cycloalkylene-$CH_2$-, -$CH_2$-($C_5$-$C_8$cycloalkylene)-$CH_2$-, $C_6$-$C_{18}$arylene, bisphenylene, benzylene, xylylene or -$C_6H_4$-$X_{01}$-$C_6H_4$-, where $X_{01}$ is O, S, SO, $SO_2$, CO, $CO_2$, NH, N($C_1$-$C_4$alkyl) or alkylidene having 1 to 18 C atoms, or $C_5$-$C_7$cycloalkylidene.

**30.** A composition according to claim 26, wherein $R_{020}$ is $C_2$-$C_{18}$alkylene, polyoxaalkylene having 2 to 50 oxaalkylene units and 2 to 6 C atoms in the oxyalkylene, $C_3$-$C_{12}$cycloalkylene, $C_5$-$C_8$cycloalkylene-$CH_2$-, -$CH_2$-($C_5$-$C_8$cycloalkylene)-$CH_2$-, $C_6$-$C_{14}$arylene, bisphenylene, benzylene, xylylene or -$C_6H_4$-$X_{01}$-$C_6H_4$-, where $X_{01}$ is O, S, SO, $SO_2$, CO, $CO_2$, NH, N($C_1$-$C_4$alkyl) or alkylidene having 1 to 18 C atoms, or $C_5$-$C_7$cycloalkylidene.

**31.** A composition according to claim 1, wherein the polymers are those having a carbon backbone.

**32.** A composition according to claim 31, wherein the polymers are essentially or completely linear metathesis polymers of fused at least bicyclic cycloaliphatic dienes which contain two olefinic double bonds in different rings.

**33.** A composition according to claim 31, wherein the polymers contain recurring structural elements of the formula (r)

$$=CH-R_{021}-CH= \qquad (r),$$

in which $R_{021}$ is $C_2$-$C_{10}$alkylene onto which a cycloalkenylene having a total of 5 to 8 C atoms is fused directly or via another fused-on cycloalkylene having 5 to 8 C atoms.

**34.** A composition according to claim 31, wherein the polymer is a linear polynorbornadiene with recurring structural elements of the formula (r')

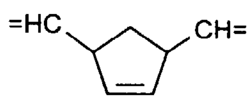

(r'),

or a linear polydicyclopentadiene with recurring structural elements of the formula (r")

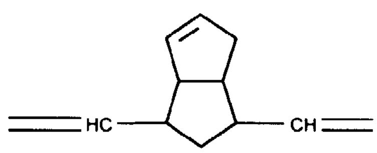

(r"),

or wherein it is a copolymer with these two recurring structural elements.

**35.** A composition according to claim 34, wherein the polymer is a linear copolymer with a recurring structural element of the formula (r), in each case one or both of the structural elements (r') and (r") and structural elements of the formula (r"')

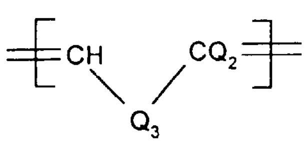

(r"')

of a strained cycloolefin, in which

$Q_3$ is a linear or branched $C_1$-$C_{18}$alkylene which is unsubstituted or substituted by halogen, =O,-CN, -$NO_2$, -COOM, -$SO_3$M, -$PO_3$M, -COO$(M_1)_{1/2}$, -$SO_3(M_1)_{1/2}$, -$PO_3(M_1)_{1/2}$, $C_1$-$C_{20}$alkyl, $R_1R_2R_3$Si-$(O)_u$-, $C_1$-$C_{20}$hydroxyalkyl, $C_1$-$C_{20}$haloalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_4$-X-; or in which two adjacent C atoms are substituted by -CO-O-CO- or -CO-$NR_5$-CO-; or in which, possibly at adjacent carbon atoms, an alicyclic, aromatic or heteroaromatic ring is fused on which is unsubstituted or substituted by halogen, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$alkyl, $C_1$-$C_{20}$haloalkyl, $C_1$-$C_{20}$hydroxyalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_{13}$-$X_1$-;
X and $X_1$ independently of one another are -O-, -S-, -CO-, -SO-, $-SO_2-$, -O-C(O)-, -C(O)-O-, $-C(O)-NR_5-$, $-NR_{10}-C(O)-$, $-SO_2-O-$ or $-O-SO_2-$;
$R_1$, $R_2$ and $R_3$ independently of one another are $C_1$-$C_{12}$alkyl, $C_1$-$C_{12}$perfluoroalkyl, phenyl or benzyl;
$R_4$ and $R_{13}$ independently are $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl, $C_7$-$C_{16}$aralkyl;
$R_5$ and $R_{10}$ independently of one another are hydrogen, $C_1$-$C_{12}$alkyl, phenyl or benzyl, the alkyl groups in turn being unsubstituted or substituted by $C_1$-$C_{12}$alkoxy or $C_3$-$C_8$cycloalkyl;
$R_6$, $R_7$ and $R_8$ independently of one another are $C_1$-$C_{12}$alkyl, $C_1$-$C_{12}$perfluoroalkyl, phenyl or benzyl;
M is an alkali metal and $M_1$ is an alkaline earth metal; and
u is 0 or 1 ;
the alicyclic ring formed with $Q_3$ possibly containing further non-aromatic double bonds;
$Q_2$ is hydrogen, $C_1$-$C_{20}$alkyl, $C_1$-$C_{20}$haloalkyl, $C_1$-$C_{12}$alkoxy, halogen, -CN, $R_{11}$-$X_2$-;
$R_{11}$ is $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl or $C_7$-$C_{16}$aralkyl;
$X_2$ is -C(O)-O- or $-C(O)-NR_{12}-$;
$R_{12}$ is hydrogen, $C_1$-$C_{12}$alkyl, phenyl or benzyl;
where the abovementioned cycloalkyl, heterocycloalkyl, aryl, heteroaryl, aralkyl and heteroaralkyl groups are unsubstituted or substituted by $C_1$-$C_{12}$alkyl,
$C_1$-$C_{12}$alkoxy, $-NO_2$, -CN or halogen and where the heteroatoms of the abovementioned heterocycloalkyl, heteroaryl and heteroaralkyl groups are chosen from the group consisting of -O-, -S-, $-NR_9-$ and -N=; and
$R_9$ is hydrogen, $C_1$-$C_{12}$alkyl, phenyl or benzyl.

**36.** A composition according to claim 35, wherein $Q_2$ is H.

**37.** A composition according to claim 31, wherein the polymers with a carbon backbone are copolymers of strained cycloolefins with fused at least bicyclic cycloaliphatic dienes which contain at least two olefinic double bonds in different rings, and ethylenically unsaturated comonomers.

**38.** A composition according to claim 37, wherein the polymers contain recurring structural elements of the formula (r) and of the formula (s)

$$=CH-R_{021}-CH= \qquad (r)$$

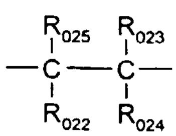

(s),

in which $R_{021}$ is $C_2$-$C_{10}$alkylene, onto which an alkenylene having 2 to 6 C atoms is bonded directly or via a fused-on cycloalkylene ring having 5 to 8 C atoms; $R_{022}$ is H, F, $C_1$-$C_{12}$alkyl, -COOH, -C(O)O-$C_1$-$C_{12}$alkyl, $-C(O)-NH_2$ or -C(O)-NH-$C_1$-$C_{12}$-alkyl; $R_{023}$ is H, F, Cl, CN or $C_1$-$C_{12}$alkyl; $R_{024}$ is H, F, Cl, CN, OH, $C_1$-$C_{12}$alkyl, $C_1$-$C_{12}$alkoxy, phenyl which is unsubstituted or substituted by OH, Cl, Br, $C_1$-$C_4$alkyl, $C_1$-$C_4$alkoxy, -COOH, -C(O)O$C_1$-$C_{12}$alkyl, $-C(O)-NH_2$, -C(O)-NH-$C_1$-$C_{12}$alkyl, $-SO_3H$ or $-SO_3$-$C_1$-$C_{12}$alkyl, -C(O)OH, -C(O)O-$C_2$-$C_{12}$hydroxyalkyl, -C(O)O-$C_1$-$C_{12}$alkyl, $-C(O)-NH_2$ or -C(O)-NH-$C_1$-$C_{12}$alkyl; and $R_{025}$ is H, F or $C_1$-$C_{12}$alkyl.

**39.** A composition according to claim 38, wherein $R_{022}$ is H, F, $C_1$-$C_4$alkyl, -COOH or -C(O)-$C_1$-$C_6$alkyl.

**40.** A composition according to claim 38, wherein $R_{023}$ is H, F, Cl or $C_1$-$C_4$alkyl.

**41.** A composition according to claim 38, wherein $R_{024}$ is H, F, Cl, CN, OH, $C_1$-$C_4$alkyl, $C_1$-$C_4$alkoxy, phenyl which is unsubstituted or substituted by OH, Cl, Br, $C_1$-$C_4$alkyl, $C_1$-$C_4$alkoxy, -COOH, -C(O)O$C_1$-$C_{14}$alkyl, $-C(O)-NH_2$, C

(O)-NH-$C_1$-$C_4$alkyl, -$SO_3H$ or -$SO_3$-$C_1$-$C_4$alkyl, -COOH, -C(O)O-$C_1$-$C_4$alkyl, -C(O)-$NH_2$, -C(O)O-$C_2$-$C_6$hydroxyalkyl or -C(O)-NH-$C_1$-$C_4$alkyl.

**42.** A composition according to claim 38, wherein $R_{025}$ is H or F.

**43.** A composition according to claim 37, wherein the structural elements of the formula (r) are chosen from the structural elements of the formula (r') and (r")

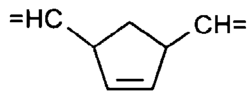

(r'),

and

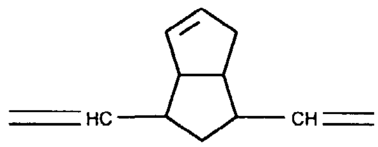

(r").

**44.** A composition according to claim 31, wherein the polymers with a carbon backbone are metathesis polymers or copolymers of strained cycloolefins with a double bond in the ring and olefinically unsaturated comonomers, of which the olefinic double bonds in the polymer backbone are reacted partly or completely with open-chain or cyclic 1,3-dienes having 4 to 12 C atoms in a Diels-Alder reaction to give cycloalkenylene radicals having 6 to 14 C atoms.

**45.** A composition according to claim 44, wherein 5 to 80% of the double bonds are reacted.

**46.** A composition according to claim 44, wherein the metathesis polymers contain recurring structural elements of the formula (t)

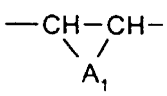

(t),

in which $A_1$ is mono- or bicyclic $C_5$-$C_8$cycloalkenylene.

**47.** A composition according to claim 46, wherein the structural element of the formula (t) is norborn-1,2-enylene of the formula ($nr_3$)

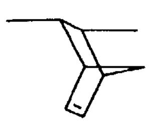

($nr_3$).

**48.** A composition according to claim 44, wherein the metathesis polymer contains recurring structural units of the formula (u)

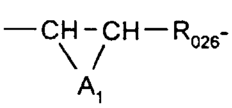

(u),

and recurring structural elements of the formula (w)

$$-CH{=}CH{-}R_{026}- \quad (w),$$

in which $A_1$, together with the -CH-CH- group, is bicyclic $C_5$-$C_8$cycloalkenylene and $R_{026}$ is $C_1$-$C_{12}$alkylene, and, if desired, recurring structural elements of the formula (s)

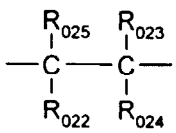

(s),

in which $R_{022}$ is H, F, $C_1$-$C_{12}$alkyl, -COOH, -C(O)O-$C_1$-$C_{12}$alkyl, -C(O)-$NH_2$ or -C(O)-NH-$C_1$-$C_{12}$alkyl; $R_{023}$ is H, F, Cl, CN or $C_1$-$C_{12}$alkyl; $R_{024}$ is H, F, Cl, CN, OH, $C_1$-$C_{12}$alkyl, $C_1$-$C_{12}$alkoxy, phenyl which is unsubstituted or substituted by OH, Cl, Br, $C_1$-$C_4$alkyl, $C_1$-$C_4$alkoxy, -COOH, -C(O)O$C_1$-$C_{12}$alkyl, -C(O)-$NH_2$, -C(O)-NH-$C_1$-$C_{12}$alkyl, -$SO_3$H or -$SO_3$-$C_1$-$C_{12}$alkyl, -C(O)OH, -C(O)O-$C_2$-$C_{12}$hydroxyalkyl, -C(O)O-$C_1$-$C_{12}$alkyl, -C(O)-$NH_2$ or -C(O)-NH-$C_1$-$C_{12}$alkyl; and $R_{025}$ is H, F or $C_1$-$C_{12}$-alkyl.

**49.** A composition according to claim 31, wherein the polymers with a carbon backbone are homo- and copolymers of 1,3-dienes and, if desired, olefinically unsaturated monomers, of which the olefinic double bonds in the polymer backbone are reacted partly or completely with open-chain or cyclic 1,3-dienes having 4 to 12 C atoms in a Diels-Alder reaction to give cycloalkenylene radicals having 6 to 14 C atoms.

**50.** A composition according to claim 49, wherein 5 to 80% of the double bonds are reacted.

**51.** A composition according to claim 49, wherein the 1,3-dienes are chosen from the group consisting of 1,3-butadiene, isoprene and chloroprene.

**52.** A composition according to claim 49, wherein the polymers contain recurring structural elements of the formula (t)

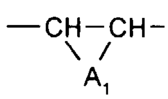

(t),

in which $A_1$ is mono- or bicyclic $C_5$-$C_8$cycloalkenylene.

**53.** A composition according to claim 52, wherein the structural element of the formula (t) corresponds to norborn-1,2-enylene of the formula ($nr_3$)

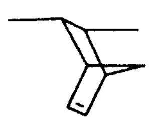

($nr_3$).

**54.** A composition according to claim 49, wherein the polymer contains recurring structural units of the formula (y)

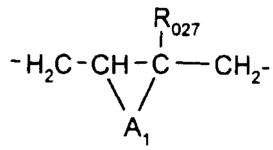

(y),

and recurring structural elements of the formula (z)

$$-CH_2-CH=CR_{027}-CH_2- \quad (z),$$

in which $A_1$, together with the $-CH-CR_{027}$ group, is bicyclic $C_5$-$C_8$cycloalkenylene and $R_{027}$ is H, Cl or $C_1$-$C_{12}$alkyl,
and, if desired, recurring structural elements of the formula (s)

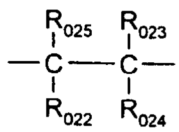

(s),

in which $R_{022}$ is H, F, $C_1$-$C_{12}$alkyl, -COOH, -C(O)O-$C_1$-$C_{12}$alkyl, -C(O)-$NH_2$ or -C(O)-NH-$C_1$-$C_{12}$alkyl; $R_{023}$ is H, F, Cl, CN or $C_1$-$C_{12}$alkyl; $R_{024}$ is H, F, Cl, CN, OH, $C_1$-$C_{12}$alkyl, $C_1$-$C_{12}$alkoxy, phenyl which is unsubstituted or substituted by OH, Cl, Br, $C_1$-$C_4$alkyl, $C_1$-$C_4$alkoxy, -COOH, -C(O)O$C_1$-$C_{12}$alkyl, -C(O)-$NH_2$, -C(O)-NH-$C_1$-$C_{12}$alkyl, -$SO_3$H or -$SO_3$-$C_1$-$C_{12}$alkyl, -C(O)OH, -C(O)O-$C_2$-$C_{12}$hydroxyalkyl, -C(O)O-$C_1$-$C_{12}$alkyl, -C(O)-$NH_2$ or -C(O)-NH-$C_1$-$C_{12}$alkyl; and $R_{025}$ is H, F or $C_1$-$C_{12}$alkyl.

**55.** A composition according to claim 1, wherein the comonomeric strained cycloolefins correspond to the formula I

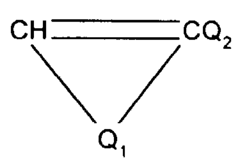

(I),

in which

$Q_1$ is a radical having at least one carbon atom which, together with the $-CH=CQ_2-$ group, forms an at least 3-membered alicyclic ring which may contain one or more heteroatoms chosen from the group consisting of silicon, phosporus, oxygen, nitrogen and sulfur; and which is unsubstituted or substituted by halogen, =O, -CN, -$NO_2$, $R_1R_2R_3Si$-$(O)_u$-, -COOM, -$SO_3$M, -$PO_3$M, -COO$(M_1)_{1/2}$, -$SO_3(M_1)_{1/2}$, -$PO_3(M_1)_{1/2}$, $C_1$-$C_{20}$-alkyl, $C_1$-$C_{20}$hydroxyalkyl, $C_1$-$C_{20}$haloalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_4$-X-; or in which two adjacent C atoms are substituted by -CO-O-CO- or -CO-$NR_5$-CO-; or in which an alicyclic, aromatic or heteroaromatic ring which is unsubstituted or substituted by halogen, -CN, -$NO_2$, $R_6R_7R_8Si$-$(O)_u$-, -COOM, -$SO_3$M, -$PO_3$M, -COO$(M_1)_{1/2}$, -$SO_3(M_1)_{1/2}$, -$PO_3(M_1)_{1/2}$, $C_1$-$C_{20}$alkyl, $C_1C_{20}$haloalkyl, $C_1$-$C_{20}$hydroxyalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_{13}$-$X_1$- may be fused onto adjacent carbon atoms of the alicyclic ring;

X and $X_1$ independently of one another are -O-, -S-, -CO-, -SO-, -$SO_2$-, -O-C(O)-, -C(O)-O-, -C(O)-$NR_5$-, -$NR_{10}$-C(O)-, -$SO_2$-O- or -O-$SO_2$-;

$R_1$, $R_2$ and $R_3$ independently of one another are $C_1$-$C_{12}$alkyl, $C_1$-$C_{12}$perfluoroalkyl, phenyl or benzyl;

$R_4$ and $R_{13}$ independently are $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl,

$C_7$-$C_{16}$aralkyl;
$R_5$ and $R_{10}$ independently of one another are hydrogen, $C_1$-$C_{12}$alkyl, phenyl or benzyl, where the alkyl groups in their turn are unsubstituted or substituted by $C_1$-$C_{12}$alkoxy or $C_3$-$C_8$cycloalkyl;
$R_6$, $R_7$ and $R_8$ independently of one another are $C_1$-$C_{12}$alkyl, $C_1$-$C_{12}$perfluoroalkyl, phenyl or benzyl;
M is an alkali metal and $M_1$ is an alkaline earth metal; and
u is 0 or 1;
where the alicyclic ring formed with $Q_1$ may contain further non-aromatic double bonds;
$Q_2$ is hydrogen, $C_1$-$C_{20}$alkyl, $C_1$-$C_{20}$haloalkyl,$C_1$-$C_{12}$alkoxy, halogen, -CN, $R_{11}$-$X_2$-;
$R_{11}$ is $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl or $C_7$-$C_{16}$aralkyl;
$X_2$ is -C(O)-O- or -C(O)-$NR_{12}$-;
$R_{12}$ is hydrogen, $C_1$-$C_{12}$alkyl, phenyl or benzyl;
where the abovementioned cycloalkyl, heterocycloalkyl, aryl, heteroaryl, aralkyl and heteroaralkyl groups are unsubstituted or substituted by $C_1$-$C_{12}$alkyl,
$C_1$-$C_{12}$alkoxy, $-NO_2$, -CN or halogen and where the heteroatoms of the abovementioned heterocycloalkyl, heteroaryl and heteroaralkyl groups are chosen from the group consisting of -O-, -S-, $-NR_9$- and -N=; and
$R_9$ is hydrogen, $C_1$-$C_{12}$alkyl, phenyl or benzyl.

**56.** A composition according to claim 1, which comprises comonomeric polyfunctional strained cycloolefins which correspond to the formula (f1)

$$(T)_n\text{-}U \qquad \text{(f1)},$$

in which T is the radical of a strained cycloolefin, U is a direct bond or an n-valent bridge group and n is an integer from 2 to 8.

**57.** A composition according to claim 56, wherein the radicals T correspond to cycloolefin radicals of the formula (f2)

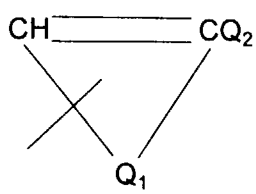

**(f2)**

in which

$Q_1$ is a radical having at least one carbon atom which, together with the -CH=$CQ_2$- group, forms an at least 3-membered alicyclic ring which may contain one or more heteroatoms chosen from the group consisting of silicon, phosporus, oxygen, nitrogen and sulfur; and which is unsubstituted or substituted by halogen, =O, -CN, $-NO_2$, $R_1R_2R_3Si$-$(O)_u$-, -COOM, $-SO_3M$, $-PO_3M$, $-COO(M_1)_{1/2}$ $-SO_3(M_1)_{1/2}$, $-PO_3(M_1)_{1/2}$, $C_1$-$C_{20}$-alkyl, $C_1$-$C_{20}$hydroxyalkyl, $C_1$-$C_{20}$haloalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_4$-X-; or in which two adjacent C atoms are substituted by -CO-O-CO- or -CO-$NR_5$-CO-; or in which an alicyclic, aromatic or heteroaromatic ring which is unsubstituted or substituted by halogen, -CN, $-NO_2$, $R_6R_7R_8Si$-$(O)_u$-, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$alkyl, $C_1$-$C_{20}$haloalkyl, $C_1$-$C_{20}$hydroxyalkyl, $C_1$-$C_6$cyanoalkyl, $C_3$-$C_8$cycloalkyl, $C_6$-$C_{16}$aryl, $C_7$-$C_{16}$aralkyl, $C_2$-$C_6$heterocycloalkyl, $C_3$-$C_{16}$heteroaryl, $C_4$-$C_{16}$heteroaralkyl or $R_{13}$-$X_1$- may be fused onto adjacent carbon atoms of the alicyclic ring;
X and $X_1$ independently of one another are -O-, -S-, -CO-, -SO-, $-SO_2$-, -O-C(O)-, -C(O)-O-, -C(O)-$NR_5$-, $-NR_{10}$-C(O)-, $-SO_2$-O- or -O-$SO_2$-;
$R_1$, $R_2$ and $R_3$ independently of one another are $C_1$-$C_{12}$alkyl, $C_1$-$C_{12}$perfluoroalkyl, phenyl or benzyl;
$R_4$ and $R_{13}$ independently are $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl, $C_7$-$C_{16}$aralkyl;
$R_5$ and $R_{10}$ independently of one another are hydrogen, $C_1$-$C_{12}$alkyl, phenyl or benzyl, where the alkyl groups in their turn are unsubstituted or substituted by $C_1$-$C_{12}$alkoxy or $C_3$-$C_8$cycloalkyl;
$R_6$, $R_7$ and $R_8$ independently of one another are $C_1$-$C_{12}$alkyl, $C_1$-$C_{12}$perfluoroalkyl, phenyl or benzyl;

M is an alkali metal and $M_1$ is an alkaline earth metal; and
u is 0 or 1 ;
where the alicyclic ring formed with $Q_1$ may contain further non-aromatic double bonds;
$Q_2$ is hydrogen, $C_1$-$C_{20}$alkyl, $C_1$-$C_{20}$haloalkyl, $C_1$-$C_{12}$alkoxy, halogen, -CN, $R_{11}$-$X_2$-;
$R_{11}$ is $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl or $C_7$-$C_{16}$aralkyl;
$X_2$ is -C(O)-O- or -C(O)-NR12-;
$R_{12}$ is hydrogen, $C_1$-$C_{12}$alkyl, phenyl or benzyl;
where the abovementioned cycloalkyl, heterocycloalkyl, aryl, heteroaryl, aralkyl and heteroaralkyl groups are unsubstituted or substituted by $C_1$-$C_{12}$alkyl,
$C_1$ $C_{12}$alkoxy, $-NO_2$, -CN or halogen and where the heteroatoms of the abovementioned heterocycloalkyl, heteroaryl and heteroaralkyl groups are chosen from the group consisting of -O-, -S-, $-NR_9-$ and -N=; and
$R_9$ is hydrogen, $C_1$-$C_{12}$alkyl, phenyl or benzyl.

**58.** A composition according to claim 56, wherein U is

(a) a divalent bridge group of the formula (f5)

$$-X_5-R_{028}-X_6- \qquad (f5),$$

in which

$X_5$ and $X_6$ independently of one another are a direct bond, -O-, $-CH_2$-O-, -C(O)O-, -O(O)C-, $-CH_2$-O(O)C-, -C(O)-$NR_{029}$-, -$R_{029}$N-(O)C-, -NH-C(O)-$NR_{029}$-, -O-C(O)-NH-, $-CH_2$-O-C(O)-NH- or -NH-C(O)-O-, and
$R_{028}$ is $C_2$-$C_{18}$alkylene, $C_5$-$C_8$cycloalkylene which is unsubstituted or substituted by $C_1$-$C_4$alkyl or $C_1$-$C_4$alkoxy, $C_6$-$C_{18}$arylene or $C_7$-$C_{19}$aralkylene which are unsubstituted or
substituted by $C_1$-$C_4$alkyl or $C_1$-$C_4$alkoxy, or polyoxaalkylene having 2 to 12 oxaalkylene units and 2 to 6 C atoms in the alkylene, and $R_{029}$ is H or $C_1$-$C_6$alkyl; or

(b) a trivalent bridge group of the formula (f6)

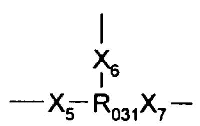

**(f6),**

in which

$X_5$, $X_6$ and $X_7$ are -O-, $-CH_2$-O-, -C(O)O-, -O(O)C-, $-CH_2$-O(O)C-, -C(O)-$NR_{029}$-, -$R_{029}$N-(O)C-, -NH-C(O)-$NR_{029}$-, -O-C(O)-NH-, $-CH_2$-O-C(O)-NH- or -NH-C(O)-O-, and
$R_{031}$ is a trivalent aliphatic hydrocarbon radical having 3 to 20 C atoms, a trivalent cycloaliphatic radical which has 3 to 8 ring C atoms and is unsubstituted or substituted by $C_1$-$C_4$alkyl or $C_1$-$C_4$alkoxy, or a trivalent aromatic radical having 6 to 18 C atoms, which is unsubstituted or substituted by $C_1$-$C_4$alkyl or $C_1$-$C_4$alkoxy, a trivalent araliphatic radical having 7 to 19 C atoms, which is unsubstituted or substituted by $C_1$-$C_4$alkyl or $C_1$-$C_4$alkoxy, or a trivalent heteroaromatic radical having 3 to 13 C atoms and 1 to 3 heteroatoms from the group consisting of -O-, -N- and -S-, which is unsubstituted or substituted by $C_1$-$C_4$alkyl or $C_1$-$C_4$alkoxy, and $R_{031}$ is H or $C_1$-$C_6$alkyl; or

(c) a tetravalent bridge group of the formula (f7)

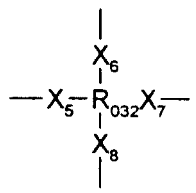

(f7),

in which

$X_5$, $X_6$, $X_7$ and $X_8$ are -C(O)O-, -$CH_2$-O(O)C- or -C(O)-$NR_{029}$-, and

$R_{032}$ is a tetravalent aliphatic hydrocarbon radical having 4 to 20 C atoms, a tetravalent cycloaliphatic radical having 4 to 8 ring C atoms, which is unsubstituted or substituted by $C_1$-$C_4$alkyl or $C_1$-$C_4$alkoxy, or a tetravalent aromatic radical having 6 to 18 C atoms, which is unsubstituted or substituted by $C_1$-$C_4$alkyl or $C_1$-$C_4$alkoxy, a tetravalent araliphatic radical having 7 to 19 C atoms, which is unsubstituted or substituted by $C_1$-$C_4$alkyl or $C_1$-$C_4$alkoxy, or a tetravalent heteroaromatic radical having 3 to 13 C atoms and 1 to three heteroatoms from the group consisting of -O-, -N- and -S-, which is unsubstituted or substituted by $C_1$-$C_4$alkyl or $C_1$-$C_4$alkoxy, and

$R_{029}$ is H or $C_1$-$C_6$alkyl.

**59.** A composition according to claim 1, which comprises polymers and, if desired, monomers which are built up only from carbon and hydrogen.

**60.** A composition according to claim 1, which comprises the one-component catalyst in an amount of 0.001 to 20 mol %, based on the amount of the monomer.

**61.** A composition according to claim 60, which comprises the one-component catalyst in an amount of 0.01 to 10 mol %, based on the amount of the monomer.

**62.** A composition according to claim 1, wherein the photolabile ligands are nitrogen ($N_2$), monocyclic, polycyclic or fused arenes having 6 to 24 C atoms, which are unsubstituted or substituted by OH, $C_1$-$C_4$alkyl, $C_1$-$C_4$alkoxy, $C_6$-$C_{12}$aryl or halogen, or monocyclic heteroarenes, fused heteroarenes or fused arene-heteroarenes having 3 to 22 C atoms and 1 to 3 heteroatoms chosen from the group consisting of O, S and N, which are unsubstituted or substituted by $C_1$-$C_4$-alkyl, $C_1$-$C_4$alkoxy or halogen; or aliphatic, cycloaliphatic, aromatic or araliphatic nitriles having 1 to 22 C atoms, which are unsubstituted or substituted by $C_1$-$C_4$alkyl, $C_1$-$C_4$alkoxy or halogen.

**63.** A composition according to claim 1, wherein the non-photolabile ligands are $H_2O$, $H_2S$, $NH_3$; halogenated or unhalogenated, aliphatic or cycloaliphatic alcohols or mercaptans having 1 to 18 C atoms, aromatic alcohols or thiols having 6 to 18 C atoms, and araliphatic alcohols or thiols having 7 to 18 C atoms; aliphatic, cycloaliphatic, araliphatic or aromatic ethers, thioethers, sulfoxides, sulfones, ketones, aldehydes, carboxylic acid esters, lactones, optionally N-$C_1$-$C_4$mono- or -dialkylated carboxylic acid amides having 2 to 20 C atoms and optionally N-$C_1$-$C_4$alkylated lactams; aliphatic, cycloaliphatic, araliphatic or aromatic, primary, secondary and tertiary amines having 1 to 20 C atoms; and unsubstituted or substituted cyclopentadienyls.

**64.** Compound according to claim 1, wherein the molybdenum or tungsten compound is that of one of the formulae XII to XIIc

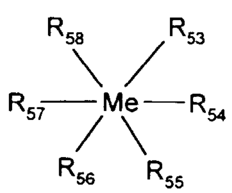

(XII),

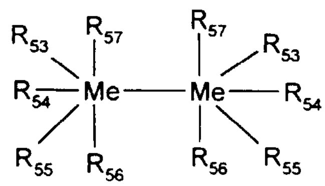

(XIIa),

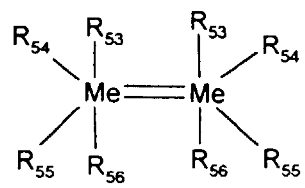

(XIIb),

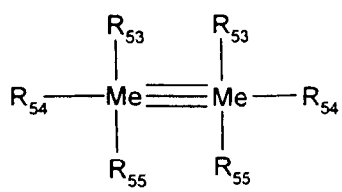

(XIIc),

in which

Me is Mo(VI) or W(VI);
at least two of the radicals $R_{53}$ to $R_{58}$ are a radical $-CH_2-R$ of the formula XI

$$-CH_2-R \quad (XI),$$

in each case two of the other radicals of $R_{53}$ to $R_{58}$ are =O or $=N-R_{44}$, and $R_{44}$ is linear or branched $C_1$-$C_{18}$alkyl which is unsubstituted or substituted by $C_1$-$C_6$alkoxy, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl, or halogen, or benzyl or phenylethyl which are unsubstituted or substituted by $C_1$-$C_6$alkyl, $C_1$-$C_6$alkoxy, $C_1$-$C_6$alkoxymethyl, $C_1$-$C_6$alkoxyethyl or halogen; and/or the other radicals of $R_{53}$ to $R_{58}$ are secondary amino having 2 to 18 C atoms, $R_{45}O$- or $R_{45}S$-, halogen, cyclopentadienyl or bridged biscyclopentadienyl or a neutral ligand, in which $R_{45}$ is linear or branched $C_1$-$C_{18}$alkyl which is unsubstituted or substituted by $C_1$-$C_6$alkoxy or halogen, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl or halogen, or benzyl or phenylethyl which are unsubstituted or substituted by $C_1$-$C_6$alkyl, $C_1$-$C_6$alkoxy, $C_1$-$C_6$alkoxymethyl, $C_1$-$C_6$alkoxyethyl or halogen.

**65.** A composition according to claim 1, wherein the silylmethyl group is that of the formula XIV

$$-CH_2-SiR_{38}R_{39}R_{40} \quad (XIV),$$

in which

$R_{38}$, $R_{39}$ and $R_{40}$ independently of one another are $C_1$-$C_{18}$alkyl, $C_5$- or $C_6$cycloalkyl or phenyl or benzyl which

are unsubstituted or substituted by $C_1$-$C_6$alkyl or $C_1$-$C_6$alkoxy.

**66.** A composition according to claim 1, wherein the titanium, niobium, tantalum, molybdenum or tungsten compound is that of one of the formulae XV, XVa or XVb

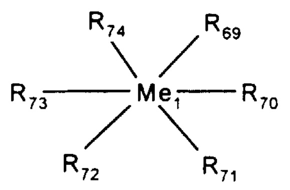

(XV),

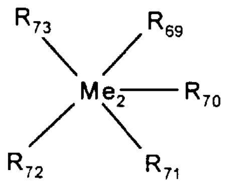

(Xva),

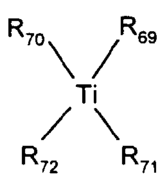

(XVb),

in which

$Me_1$ is Mo(VI) or W(VI);
$Me_2$ is Nb(V) or Ta(V);
one of the radicals $R_{69}$ to $R_{74}$ is a radical $-CH_2-SiR_{38}R_{39}R_{40}$ of the formula XIV according to claim 65;
at least one of the radicals $R_{69}$ to $R_{74}$ is F, Cl or Br;
$R_{38}$, $R_{39}$ and $R_{40}$ independently of one another are $C_1$-$C_6$alkyl, $C_5$- or $C_6$cycloalkyl, or phenyl or benzyl which are unsubstituted or substituted by $C_1$-$C_6$alkyl or $C_1$-$C_6$alkoxy;
in formula XV two or in each case two, and in formula XVa two of the other radicals of $R_{69}$ to $R_{74}$ each together are =O or $=N-R_{44}$, and $R_{44}$ is linear or branched $C_1$-$C_{18}$alkyl which is unsubstituted or substituted by $C_1$-$C_6$alkoxy, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or benzyl or phenylethyl which are unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, and
the other radicals are secondary amino having 2 to 18 C atoms, $R_{45}O$- or $R_{45}S$-, halogen, unsubstituted or substituted cyclopentadienyl or bridged biscyclopentadienyl or a neutral ligand, in which the $R_{45}$ independently of one another are linear or branched $C_1$-$C_{18}$alkyl which is unsubstituted or substituted by $C_1$-$C_6$alkoxy or halogen, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$-alkyl)amino, di($C_1$-

C6-alkyl)amino-$C_1$-C3alkyl or halogen, or benzyl or phenylethyl which are unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$-alkyl)amino, di($C_1$-$C_6$-alkyl)amino$C_1$-$C_3$alkyl or halogen; or in the formulae XV, XVa and XVb, the other radicals independently of one another are secondary amino having 2 to 18 C atoms, $R_{45}$O- or $R_{45}$S-, halogen, unsubstituted or substituted cyclopentadienyl or bridged biscyclopentadienyl or a neutral ligand, in which the $R_{45}$ independently of one another are linear or branched $C_1$-$C_{18}$alkyl which is unsubstituted or substituted by $C_1$-$C_6$alkoxy or halogen, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$-alkyl)amino, di($C_1$-$C_6$-alkyl)amino-$C_1$-$C_3$alkyl or halogen, or benzyl or phenylethyl which are unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$-alkyl)amino, di($C_1$-$C_6$-alkyl)amino-$C_1$-$C_3$-alkyl or halogen.

**67.** A composition according to claim 1, wherein the niobium or tantalum compound is that of the formula XVIII

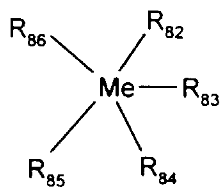

(XVIII),

in which

Me is Nb(V) or Ta(V), at least two of the radicals $R_{82}$ to $R_{86}$ are a radical -$CH_2$-R of the formula XI according to claim 64; two of the other radicals of $R_{82}$ to $R_{86}$ together are =O or =N-$R_{44}$, and $R_{44}$ is linear or branched $C_1$-$C_{18}$alkyl which is unsubstituted or substituted by $C_1$-$C_6$-alkoxy, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$-alkoxy, $C_1$-$C_6$alkoxymethyl, $C_1$-$C_6$alkoxyethyl, di($C_1$-$C_6$-alkyl)amino, di($C_1$-$C_6$-alkyl)amino-$C_1$-$C_3$alkyl or halogen, or benzyl or phenylethyl which are unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$-alkyl)amino, di($C_1$-$C_6$alkyl)amino-$C_1$-$C_3$alkyl or halogen; and/or the other radicals of $R_{82}$ to $R_{86}$ independently of one another are secondary amino having 2 to 18 C atoms, $R_{45}$O-, $R_{45}$S-, halogen, cyclopentadienyl or bridged biscyclopentadienyl or a neutral ligand, in which the $R_{45}$ independently of one another are linear or branched $C_1$-$C_{18}$alkyl which is unsubstituted or substituted by $C_1$-$C_6$alkoxy or halogen, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or benzyl or phenylethyl which are unsubstituted or substituted by $C_1$-$C_6$alkyl, $C_1$-$C_6$alkoxy, $C_1$-$C_6$alkoxymethyl, $C_1$-$C_6$alkoxyethyl, di ($C_1$-$C_6$alkyl)amino, di($C_1$-$C_6$alkyl)amino-$C_1$-$C_3$alkyl or halogen.

**68.** A composition according to claim 1, wherein the titanium(IV) compound is that of the formula XX

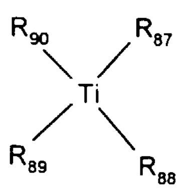

(XX),

in which

at least two of the radicals $R_{87}$ to $R_{90}$ are a radical $-CH_2-R$ of the formula XI according to claim 64; and the other radicals $R_{87}$ to $R_{90}$ are secondary amino having 2 to 18 C atoms, $R_{45}O-$, $R_{45}S-$, halogen, cyclopentadienyl or bridged biscyclopentadienyl or a neutral ligand, in which the $R_{45}$ independently of one another are linear or branched $C_1$-$C_{18}$alkyl which is unsubstituted or substituted by $C_1$-$C_6$alkoxy or halogen, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino$C_1$-$C_3$alkyl or halogen, or benzyl or phenylethyl which are unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen.

**69.** A composition according to claim 1, wherein the phosphine ligands correspond to the formulae XXIII or XXIIIa

$$PR_{91}R_{92}R_{93} \qquad (XXIII)$$

$$R_{91}R_{92}P\text{-}Z_1\text{-}PR_{91}R_{92} \qquad (XXIIIA),$$

in which $R_{91}$, $R_{92}$ and $R_{93}$ independently of one another are H, $C_1$-$C_{20}$-alkyl, $C_1$-$C_{20}$alkoxy, $C_4$-$C_{12}$cycloalkyl or cycloalkoxy which are unsubstituted or substituted by $C_1$-$C_6$alkyl, $C_1$-$C_6$haloalkyl or $C_1$-$C_6$alkoxy or $C_6$-$C_{16}$aryl or $C_6$-$C_{16}$aryloxy which are unsubstituted or substituted by $C_1$-$C_6$alkyl, $C_1$-$C_6$haloalkyl or $C_1$-$C_6$alkoxy, or $C_7$-$C_{16}$aralkyl or $C_7$-$C_{16}$aralkyloxy which are unsubstituted or substituted by $C_1$-$C_6$alkyl, $C_1$-$C_6$haloalkyl or $C_1$-$C_6$alkoxy; the radicals $R_{91}$ and $R_{92}$ together are tetra- or pentamethylene or tetra- or pentamethylenedioxyl which are unsubstituted or substituted by $C_1$-$C_6$alkyl, $C_1$-$C_6$haloalkyl or $C_1$-$C_6$alkoxy, or tetra- or pentamethylene or tetra- or pentamethylenedioxyl which are unsubstituted or substituted by $C_1$-$C_6$alkyl, $C_1$-$C_6$haloalkyl or $C_1$-$C_6$alkoxy and fused with 1 or 2 1,2-phenylene, or tetramethylenedioxyl which is unsubstituted or substituted by $C_1$-$C_6$alkyl, $C_1$-$C_6$haloalkyl or $C_1$-$C_6$alkoxy and is fused in the 1,2- and 3,4-positions with 1,2-phenylene, and $R_{93}$ has the abovementioned meaning; and $Z_1$ is linear or branched $C_2$-$C_{12}$alkylene which is unsubstituted or substituted by $C_1$-$C_4$alkoxy, 1,2- or 1,3-cycloalkylene having 4 to 8 C atoms, which is unsubstituted or substituted by $C_1$-$C_4$alkyl or $C_1$-$C_4$alkoxy, or 1,2- or 1,3-heterocycloalkylene having 5 or 6 ring members and one heteroatom from the group consisting of O or N, which is unsubstituted or substituted by $C_1$-$C_4$alkyl or $C_1$-$C_4$alkoxy.

**70.** A composition according to claim 1, wherein the ruthenium or osmium compound is that of one of the formulae XXV to XXVf

$$(R_{94}R_{95}R_{96}P)L_8Me^{2+}(Z^{1-})_2 \qquad (XXV),$$

$$(R_{94}R_{95}R_{96}P)_2L_9Me^{2+}(Z^{1-})_2 \qquad (XXVa),$$

$$(R_{94}R_{95}R_{96}P)L_9L_{10}Me^{2+}(Z^{1-})_2 \qquad (XXVb),$$

$$(R_{94}R_{95}R_{96}P)_3L_9Me^{2+}(Z^{1-})_2 \qquad (XXVc),$$

$$(R_{94}R_{95}R_{96}P)L_9L_9Me^{2+}(Z^{1-})_2 \qquad (XXVd),$$

$$(R_{94}R_{95}R_{96}P)L_8L_{10}Me^{2+}(Z^{1-})_2 \qquad (XXVe),$$

$$(R_{94}R_{95}R_{96}P)L_8(L_9)_mMe^{2+}(Z^{1-})_2 \qquad (XXVf),$$

in which

Me is Ru or Os;
Z in formulae XXV to XXVe is $H^-$, cyclopentadienyl, $Cl^-$, $Br^-$, $BF_4^-$, $PF_6^-$, $SbF_6^-$, $ASF_6^-$, $CF_3SO_3^-$, $C_6H_5$-$SO_3^-$, 4-methyl-$C_6H_5$-$SO_3^-$, 3,5-dimethyl-$C_6H_5$-$SO_3^-$, 2,4,6-trimethyl-$C_6H_5$-$SO_3^-$ and 4-$CF_3$-$C_6H_5$-$SO_3^-$ and in formula XXVf is $H^-$,
cyclopentadienyl, $BF_4^-$, $PF_6^-$, $SbF_6^-$, $ASF_6^-$, $CF_3SO_3^-$, $C_6H_5$-$SO_3^-$, 4-methyl-$C_6H_5$-$SO_3^-$, 2,6-dimethyl-$C_6H_5$-$SO_3^-$, 2,4,6-trimethyl-$C_6H_5$-$SO_3^-$ or 4-$CF_3$-$C_6H_5$-$SO_3^-$; $R_{94}$, $R_{95}$ and $R_{92}$ independently of one another are $C_1$-$C_6$alkyl, or cyclopentyl or cyclohexyl or cyclopentyloxy or cyclohexyloxy which are unsubstituted or substituted by 1 to 3 $C_1$-$C_4$alkyl, or phenyl or benzyl or phenyloxy or benzyloxy which are unsubstituted or substituted by 1 to 3 $C_1$-$C_4$alkyl;
$L_8$ is $C_6$-$C_{16}$arene or $C_5$-$C_{16}$heteroarene which are unsubstituted or substituted by 1 to 3 $C_1$-$C_4$alkyl, $C_1$-$C_4$alkoxy, -OH, -F or Cl;
$L_9$ is $C_1$-$C_6$alkyl-CN, benzonitrile or benzylnitrile; and
$L_{10}$ is $H_2O$ or $C_1$-$C_6$alkanol.

**71.** A composition according to claim 1, wherein the ruthenium or osmium compound is that of one of the formulae XXVI, XXVIa, XXVIb, XXVIc and XXVId

$$Me^{2+}(L_{11})_2(L_{12})(Y_1^-)_2 \quad \text{(XXVI)},$$

$$Me^{2+}(L_{11})_3(Y_1^-)_2 \quad \text{(XXVIa)},$$

$$Me^{2+}(L_{11})_2L_{13}(Y_1^-) \quad \text{(XXVIb)},$$

$$Me^{2+}(L_{11})_3L_{14}(Y_1^-)_2 \quad \text{(XXVIc)},$$

$$Me^{2+}L_{11}(L_{12})_3(Y_1^-)_2 \quad \text{(XXVId)},$$

in which

Me is Ru or Os;
$Y_1$ is the anion of a monobasic acid;
$L_{11}$ is a phosphine of the formula XXIII or XXIIIa according to claim 69,
$L_{12}$ is a neutral ligand;
$L_{13}$ is cyclopentadienyl which is unsubstituted or substituted by $C_1$-$C_4$alkyl;
and $L_{14}$ is CO.

**72.** A process for the preparation of crosslinked polymers by metathesis polymerization, wherein a composition according to claim 1 of

(a) a catalytic amount of a one-component catalyst for metathesis polymerization and
(b) at least one polymer with strained cycloalkenylene radicals bonded in the polymer backbone, alone or mixed with strained cycloolefins,
(c) is polymerized by heating,
(d) is polymerized by irradiation,
(e) is polymerized by heating and irradiation,
(f) the one-component catalyst is activated by brief heating and the polymerization is brought to completion by irradiation, or
(g) the one-component catalyst is activated by brief irradiation and the polymerization is brought to completion by heating.

**73.** A process according to claim 72, wherein the heating is carried out at a temperature of 50 to 300°C.

**74.** A crosslinked metathesis polymer of at least one polymer with strained cycloalkenylene radicals bonded in the polymer backbone, alone or mixed with strained cycloolefins, prepared by the process according to claim 72.

**75.** A coated carrier material, wherein a layer of a composition according to claim 1 is applied to a substrate.

**76.** A coated carrier material with a crosslinked layer of a composition according to claim 1.

**77.** A shaped article of crosslinked metathesis polymers of at least one polymer with strained cycloalkenylene radicals bonded in the polymer backbone, alone or mixed with strained cycloolefins, prepared by the process according to claim 72.

**78.** A process for the preparation of coated materials or relief images on carrier materials, in which a composition according to claim 1 and, if desired, a solvent are applied as a layer to a carrier, if desired the solvent is removed, and the layer is irradiated or heated for polymerization, or the layer is irradiated through a photomask and the non-irradiated portions are then removed with a solvent, and, if desired, the resulting relief image is after-heated.

## Revendications

**1.** Composition contenant des quantités catalytiques d'un catalyseur à un composant pour la polymérisation par métathèse et au moins un polymère avec des groupes cycloalkylène sous tension liés à un squelette polymérique seul ou en mélange avec des cyclooléfines sous tension, caractérisée en ce qu'elle contient comme catalyseur à un composant

(a) un dérivé du ruthénium ou de l'osmium choisi parmi les composés $Ru(CH_3CN)_6(tos)_2$, $Ru(CH_3CH_2CN)_6(tos)_2$, $Ru(CH_3CN)_6(CF_3SO_3)_2$, $Ru(CH_3CH_2CN)_6(CF_3SO_3)_2$, $Ru(C_6H_6)_2(tos)_2$, $[Ru(C_6H_6)(C_6H_5OCH_3)](BF_4)_2$, $[Ru(C_6H_6)(C_6H_5$i-propyl$)](BF_4)_2$, $[Ru(C_6H_6)($1,3,5-triméthylphénol$)](BF_4)_2$, $[Ru(C_6H_6)$ (hexaméthylbenzène$)](BF_4)_2$, $[Ru(C_6H_6)($biphényle$)](BF_4)_2$, $[Ru(C_6H_6)($chrysène$)](BF_4)_2$, $[Ru(C_6H_6)($naphtalène$)](BF_4)_2$, [Ru(cyclopentadiényle)(4-méthylcumyle)$PF_6$, Ru(cyanophényl)$_6$(tos)$_2$, Ru(cyanophényl)$_6(CF_3SO_3)_2$, $[Ru(C_6H_6)($tétraméthylthiophène$)_3](tos)_2$, $[Ru(C_6H_6)(CH_3CN)_3](tos)_2$, $[Ru(C_6H_6)($tétraméthylthiophène$)_3](CF_3SO_3)_2$, $[Ru(C_6H_6)(CH_3CN)_3](CF_3SO_3)_2$, $[Ru(C_6H_6)(CH_3OH)_3](tos)_2$, $[Ru(C_{6H6})$ $(CH_3OH)_3](tis)_2$, [Os $(NH_3)_5N_2]$ $(PF_6)_2$, $[Ru(NH_3)_5N_2](PF_6)_2$, $[Ru(NH_3)_5(CH_3CN)]BF_4$, $[Ru(C_6H_6)(NH_3)_3](tis)_2$, $[Ru(C_6H_6)($tétrahydrothiophène$)_3](CF_3SO_3)_2$, $Ru((CH_3)_3S)_3C_6H_6](PF_6)_2$, [Ru(diméthylsulfoxyde)$_3C_6H_6](PF_6)_2$, [Ru(diméthylformamide)$_3C_6H_6](PF_6)_2$, $[Ru(C_6H_6)Cl_2]_2$ et $[Os(C_6H_6)Cl_2]_2$ ou
(b) un dérivé du molybdène (VI) ou du tungstène (VI), qui a au moins deux groupes méthyle ou deux groupes méthyle monosubsitués liés au métal, le substituant ne contenant pas d'atome d'hydrogène en position a; ou
(c) contient un dérivé du titane (IV), niobium (V), tantale (V), molybdène (VI) ou tungstène (VI), dans lequel un groupe silylméthyle et au moins un atome d'halogène sont liés au métal; ou
(d) contient un dérivé du niobium (V) ou du tantale (V), qui a deux groupes méthyle ou deux groupes méthyle monosubstitués liés au métal, le substituant ne contenant pas d'atome d'hydrogène en position $\alpha$; ou
(e) un dérivé du titane (IV), qui a deux groupes méthyle ou deux groupes méthyle monosubstitués liés au métal, le substituant ne contenant pas d'atome d'hydrogène en position $\alpha$; ou
(f) un dérivé du ruthénium ou de l'osmium, qui contient au moins un groupe phosphine, au moins un ligand photolabile, et éventuellement des ligands neutres liés à l'atome de métal, dans lequel 2 à 6 ligands sont liés en tout, et les anions d'acide pour l'équilibrage de la charge; ou
(g) contient un dérivé cationique bivalent du ruthénium ou de l'osmium, avec un atome de métal, auquel sont liés 1 à 3 ligands phosphine avec dans le cas du dérivé du ruthénium des substituants exigeants sur le plan stérique, éventuellement des ligands neutres non photolabiles et des anions pour l'équilibrage de la charge, à la condition que dans les dihalogénures ou les hydrure-halogénures de ruthénium(triphénylphosphine) les groupes phényle soient substitués avec un groupe alkyle en $C_1$-$C_{18}$, halogénoalkyle en $C_1$-$C_{18}$ ou alcoxy en $C_1$-$C_{18}$.

**2.** Composition selon la revendication 1, caractérisée en ce qu'il s'agit des polymères avec des motifs de structure de répétition de formule (a) dans le squelette polymérique

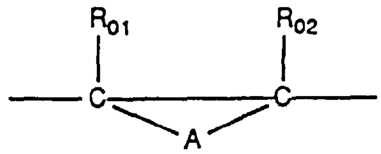

(a),

dans laquelle $R_{01}$ et $R_{02}$ représentent indépendamment l'un de l'autre un atome d'hydrogène ou un groupe alkyle en $C_1$-$C_6$ ou $R_{01}$ et $R_{02}$ représentent ensemble une liaison, et A forme avec le groupe C-C un cycle cyclooléfinique sous tension non substitué ou substitué.

**3.** Composition selon la revendication 2, caractérisée en ce que les motifs de structure de formule (a) sont liés directement ou par l'intermédiaire de groupements pontants.

**4.** Composition selon la revendication 2, caractérisée en ce que $R_{01}$ et $R_{02}$ représentent un atome d'hydrogène.

**5.** Composition selon la revendication 2, caractérisée en ce qu'il s'agit pour les substituants pour le cycle oléfinique d'un groupe un groupe alkyle ou alcoxy en $C_1$-$C_8$; halogénoalkyle ou -alcoxy en $C_1$-$C_4$; d'un atome d'halogène; du groupe -CN; $-NH_2$; amine secondaire avec 2 à 18 atomes de carbone; amine tertiaire avec 3 à 18 atomes de carbone; $-C(O)-OR_{03}$ ou $-C(O)-NR_{03}R_{04}$ dans lesquelles $R_{03}$ et $R_{04}$ représentent indépendamment l'un de l'autre un atome d'hydrogène, un groupe alkyle en $C_1$-$C_{18}$, phényle ou benzyle.

**6.** Composition selon la revendication 2, caractérisée en ce que dans la formule (a)

$R_{01}$ et $R_{02}$ représentent tous les deux une liaison et A un groupe alkylène en $C_1$-$C_{12}$ non substitué ou substitué; hétéroalkylène en $C_2$-$C_{12}$ non substitué ou substitué, avec au moins un hétéroatome choisi parmi O, S et N; cycloalkylène en $C_5$-$C_{12}$ non substitué ou substitué; hétérocycloalkylène en $C_4$-$C_{12}$ non substitué ou substitué, avec au moins un hétéroatome choisi parmi O, S et N; alcénylène en $C_2$-$C_{12}$ non substitué ou substitué; hétéroalcénylène en $C_3$-$C_{12}$ non substitué ou substitué avec au moins un hétéroatome choisi parmi O, S et N; cycloalcénylène en $C_5$-$C_{12}$ non substitué ou substitué; ou hétérocycloalcénylène en $C_4$-$C_{12}$ non substitué ou substitué, avec au moins un hétéroatome choisi parmi O, S et N; ou

$R_{01}$ et $R_{02}$ représentent indépendamment l'un de l'autre un atome d'hydrogène ou un groupe alkyle en $C_1$-$C_6$ et A un groupe cycloalcénylène en $C_5$-$C_{12}$ non substitué ou substitué; hétérocycloalcénylène en $C_4$-$C_{12}$ non substitué ou substitué, avec au moins un hétéroatome choisi parmi O, S et N; ou cycloalcdiénylène en $C_5$-$C_{12}$ non substitué ou substitué; ou

$R_{01}$ représente une double liaison avec un atome de carbone en bout de chaîne du groupe A; $R_{02}$ représente un atome d'hydrogène ou un groupe alkyle en $C_1$-$C_6$; et A représente un groupe hétéroarylène en $C_3$-$C_{12}$, avec au moins un hétéroatome choisi parmi O, S et N;

cycloalkylène en $C_5$-$C_{12}$ non substitué ou substitué; hétérocycloalkylène en $C_4$-$C_{12}$ non substitué ou substitué, avec au moins un hétéroatome choisi parmi O, S et N; alcénylène en $C_2$-$C_{12}$ non substitué ou substitué; hétéroalcénylène en $C_3$-$C_{12}$ non substitué ou substitué, avec au moins un hétéroatome choisi parmi O, S et N; cycloalcénylène en $C_5$-$C_12$ non substitué ou substitué; hétérocycloalcénylène en $C_4$-$C_{12}$ non substitué ou substitué, avec au moins un hétéroatome choisi parmi O, S et N; ou

$R_{01}$ et $R_{02}$ représentent ensemble respectivement une double liaison avec un atome de carbone en bout de chaîne du groupe A et A un groupe alkylène en $C_3$-$C_{12}$ non substitué ou substitué; hétéroalkylène en $C_3$-$C_{12}$ non substitué ou substitué, avec au moins un hétéroatome choisi parmi O, S et N; cycloalkylène en $C_5$-$C_{12}$ non substitué ou substitué; hétérocycloalkylène en $C_4$-$C_{12}$ non substitué ou substitué, avec au moins un hétéroatome choisi parmi O, S et N; dans laquelle les groupes alkylène, hétéroalkylène, cycloalkylène, hétérocycloalkylène, alcénylène, hétéroalcénylène, cycloalcénylène, hétérocycloalcénylène, alcdiénylène, hétéroalcdiénylène, cycloalcdiénylène et hétérocycloalcdiénylène étant éventuellement condensés à un groupe phénylène, cycloalkylène en $C_4$-$C_8$ ou hétérocycloalkylène en $C_4$-$C_8$.

**7.** Composition selon la revendication 6, caractérisée en ce que

$R_{01}$ et $R_{02}$ représentent ensemble une liaison et A un groupe alkylène en $C_2$-$C_6$ non substitué ou substitué, cycloalkylène en $C_3$-$C_7$ non substitué ou substitué, alcénylène en $C_2$-$C_6$ non substitué ou substitué, cycloalcénylène en $C_5$-$C_7$ non substitué ou substitué; ou $R_{01}$ et $R_{02}$ représentent indépendamment l'un de l'autre un

atome d'hydrogène ou un groupe alkyle en $C_1$-$C_4$ et A un groupe cycloalcénylène en $C_5$-$C_7$ non substitué ou substitué; ou

$R_{01}$ représente une double liaison avec un atome en bout de chaîne du groupe A; $R_{02}$ représente un atome d'hydrogène ou un groupe alkyle en $C_1$-$C_4$; et A un groupe alcénylène en $C_2$-$C_6$ non substitué ou substitué, cycloalkylène en $C_5$-$C_7$ non substitué ou substitué, alcénylène en $C_2$-$C_6$ non substitué ou substitué ou cycloalcénylène en $C_5$-$C_7$ non substitué ou substitué; ou

$R_{01}$ et $R_{02}$ représentent respectivement ensemble avec un atome de carbone en bout de chaîne du groupe A une double liaison et A représente un groupe alkylène en $C_3$-$C_6$ non substitué ou substitué, cycloalkylène en $C_5$-$C_7$ non substitué ou substitué.

**8.** Composition selon la revendication 1, caractérisée en ce que les polymères sont des homo ou des copolymères.

**9.** Composition selon la revendication 2, caractérisée en ce que les éléments de structure de formule (a) sont contenus dans le polymère à au moins 5% en mole, par rapport au polymère.

**10.** Composition selon la revendication 9, caractérisée en ce que les éléments de structure de formule (a) sont contenus dans le polymère jusqu'à 5 à 100% en mole.

**11.** Composition selon la revendication 1, caractérisée en ce que les polymères sont choisis parmi les homo et copolymères des polyépoxydes, polyesters, polyamides, polyesteramides, polyuréthannes et polyurées linéaires, dans lesquels les groupes divalents diépoxyde, acide dicarboxylique ou diisocyanate, ou dans lesquels les groupes diol ou diamine divalents ou ces deux groupes contiennent des groupes cyclooléfine sous tension, et qui contiennent dans le cas des copolymères de ces groupes bivalents différents groupes diépoxyde, acide dicarboxylique ou diisocyanate, diol ou diamine.

**12.** Composition selon la revendication 1, caractérisée en ce que les polyépoxydes contiennent des motifs de structure de répétition choisis parmi les éléments de structure de formules (b), (c), (d) et (e)

$$[-CH_2\text{-}CH(OH)\text{-}CH_2\text{-}O\text{-}R_{05}\text{-}O\text{-}CH_2\text{-}CH(OH)\text{-}CH_2\text{-}O\text{-} \quad (b),$$

$$-R_{06}\text{-}O\text{-} \quad (c),$$

$$[-CH_2\text{-}CH(OH)\text{-}CH_2\text{-}O\text{-}R_{07}\text{-}O\text{-}CH_2\text{-}CH(OH)\text{-}CH_2\text{-}O\text{-} \quad (d),$$

$$-R_{08}\text{-}O\text{-} \quad (e),$$

avec la condition qu'au moins des éléments de structure de formule (b) ou (c) ou des deux soient présents, formules dans lesquelles $R_{05}$ et $R_{06}$ représentent indépendamment l'un de l'autre un groupe bivalent d'une cyclooléfine sous tension ou un groupe bivalent avec une cyclooléfine sous tension, $R_{07}$ est un groupe bivalent d'un éther de diglycidyle minorant la charge autour des groupes glycidyloxy et $R_{08}$ un groupe bivalent d'un diol minorant la charge autour des groupes hydroxyle.

**13.** Composition selon la revendication 12, caractérisée en ce que $R_{05}$ et $R_{06}$ représentent indépendamment l'un de l'autre un groupe cycloalkylène en $C_5$-$C_8$ une ou deux fois oléfiniquement insaturé ou cycloalkylène polycyclique condensé en $C_7$-$C_8$.

**14.** Composition selon la revendication 12, caractérisée en ce que $R_{05}$ et $R_{06}$ représentent indépendamment l'un de l'autre un groupe un groupe norbornène de formule (nr1) ou (nr2)

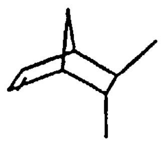 (nr1) 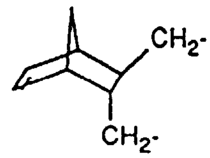 (nr2).

**15.** Composition selon la revendication 12, caractérisée en ce que $R_{07}$ et $R_{08}$ représentent un groupe alkylène en $C_2$-$C_{18}$, polyoxaalkylène avec 2 à 50, et de 2 à 6, atomes de carbone dans le groupe oxyalkylène, cycloalkylène en $C_3$-$C_{12}$, cycloalkylène en $C_5$-$C_8$-$CH_2$-, $CH_2$- (cycloalkylène en $C_5$-$C_8$) -$CH_2$-, arylène en $C_6$-$C_{14}$, bisphénylène, benzylène, xylylène, -$C_6H_4$-$X_{01}$-$C_6H_4$- avec $X_{01}$ égal à O, S, SO, $SO_2$, CO, $CO_2$, NH, N(alkyle en $C_1$-$C_4$), alkylidène avec 1 à 18 atomes de carbone, ou cycloalkylidène en $C_5$-$C_7$.

**16.** Composition selon la revendication 11, caractérisée en ce que les polyesters contiennent des motifs de structure identiques ou différents choisis parmi les éléments de structure de formules (f), (g), (h) et (i), dans laquelle au moins les éléments de structure de formules (f) ou (g) ou les deux doivent être présents,

$$-C(O)-R_{09}-C(O)- \qquad (f),$$

$$-O-R_{010}-O- \qquad (g),$$

$$-C(O)-R_{011}-C(O)- \qquad (h),$$

$$-O-R_{012}-O- \qquad (i),$$

dans lesquelles $R_{09}$ et $R_{010}$ représentent indépendamment l'un de l'autre un groupe bivalent d'une cyclooléfine sous tension ou un groupe bivalent avec une cyclooléfine sous tension, $R_{011}$ est un groupe bivalent d'un acide dicarboxylique minorant la charge autour des groupes carboxyle et $R_{012}$ un groupe bivalent d'un diol minorant la charge autour des groupes hydroxyle.

**17.** Composition selon la revendication 16, caractérisée en ce que $R_{09}$ et $R_{010}$ représentent indépendamment l'un de l'autre un groupe cycloalkylène en $C_5$-$C_8$ une ou deux fois oléfiniquement insaturé ou un groupe cycloalkylène polycyclique condensé en $C_7$-$C_{18}$.

**18.** Composition selon la revendication 16, caractérisée en ce que $R_{09}$ et $R_{010}$ représentent indépendamment l'un de l'autre un groupe norbornène de formule (nr1) ou (nr2)

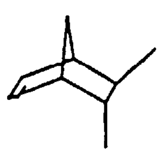 (nr1) 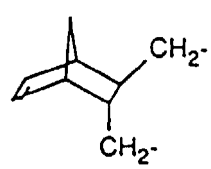 (nr2).

**19.** Composition selon la revendication 16, caractérisée en ce que $R_{011}$ représente un groupe alkylène ou alcénylène en $C_2$-$C_{18}$, cycloalkylène ou cycloalcénylène en $C_3$-$C_{12}$, cycloalkylène en $C_5$-$C_8$-$CH_2$-, $CH_2$-(cycloalkylène en $C_5$-$C_8$)-$CH_2$-, arylène en $C_6$-$C_{18}$, bisphénylène, benzylène, xylylène, -$C_6H_4$-$X_{01}$-$C_6H_4$- avec $X_{01}$ égal à O, S, SO, $SO_2$, CO, $CO_2$, NH, N(alkyle en $C_1$-$C_4$), alkylidène avec 1 à 18 atomes de carbone, ou cycloalkylidène en $C_5$-$C_7$.

**20.** Composition selon la revendication 16, caractérisée en ce que $R_{012}$ représente un groupe alkylène en $C_2$-$C_{18}$, polyoxaalkylène avec 2 à 50 motifs oxaalkylène, et de 2 à 6, atomes de carbone dans le groupe oxyalkylène, cycloalkylène en $C_3$-$C_{12}$, cycloalkylène en $C_5$-$C_8$-$CH_2$-, $CH_2$- (cycloalkylène en $C_5$-$C_8$) -$CH_2$-, arylène en $C_6$-$C_{14}$, bisphénylène, benzylène, xylylène, -$C_6H_4$-$X_{01}$-$C_6H_4$- avec $X_{01}$ égal à O, S, SO, $SO_2$, CO, $CO_2$, NH, N(alkyle en $C_1$-$C_4$), alkylidène avec 1 à 18 atomes de carbone, ou cycloalkylidène en $C_5$-$C_7$.

**21.** Composition selon la revendication 11, caractérisée en ce que les polyamides contiennent des motifs de structure identiques ou différents choisis parmi les éléments de structure de formules (j), (k), (l) et (m), dans laquelle au moins les éléments de structure des formules (j) ou (k) ou les deux doivent être présents,

$$-C(O)-R_{013}-C(O)- \quad (j),$$

$$-NH-R_{014}-NH- \quad (k),$$

$$-C(O)-R_{015}-C(O)- \quad (l),$$

$$-NH-R_{016}-NH- \quad (m),$$

dans lesquelles $R_{013}$ et $R_{014}$ représentent indépendamment l'un de l'autre un groupe bivalent d'une cyclooléfine sous tension ou un groupe bivalent avec une cyclooléfine sous tension, $R_{015}$ est un groupe bivalent d'un acide dicarboxylique minorant la charge autour des groupes carboxyle et $R_{016}$ un groupe bivalent d'une diamine minorant la charge autour des groupes amino.

**22.** Composition selon la revendication 21, caractérisée en ce que $R_{013}$ et $R_{014}$ représentent indépendamment l'un de l'autre un groupe cycloalkylène en $C_5$-$C_8$ une ou deux fois oléfiniquement insaturé ou un groupe cycloalkylène polycyclique condensé en $C_7$-$C_{18}$.

**23.** Composition selon la revendication 21, caractérisée en ce que $R_{013}$ et $R_{014}$ représentent indépendamment l'un de l'autre un groupe norbornène de formule (nr1) ou (nr2)

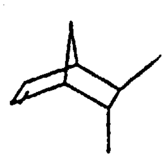 $(nr_1)$ 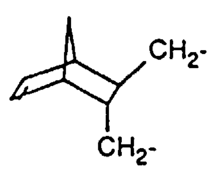 $(nr_2)$.

**24.** Composition selon la revendication 21, caractérisée en ce que $R_{015}$ représente un groupe alkylène ou alcénylène en $C_2$-$C_{18}$, cycloalkylène ou cycloalcénylène en $C_3$-$C_{12}$, cycloalkylène en $C_5$-$C_8$-$CH_2$-, $CH_2$-(cycloalkyléne en $C_5$-$C_8$)-$CH_2$-, arylène en $C_6$-$C_{18}$, bisphénylène, benzylène, xylylène, -$C_6H_4$-$X_{01}$-$C_6H_4$- avec $X_{01}$ égal à O, S, SO, $SO_2$, CO, $CO_2$, NH, N(alkyle en $C_1$-$C_4$), alkylidène avec 1 à 18 atomes de carbone, ou cycloalkylidène en $C_5$-$C_7$.

**25.** Composition selon la revendication 21, caractérisée en ce que $R_{016}$ représente un groupe alkylène en $C_2$-$C_{18}$, cycloalkylène en $C_3$-$C_{12}$, cycloalkylène en $C_5$-$C_8$-$CH_2$-, $CH_2$-(cycloalkylène en $C_5$-$C_8$)-$CH_2$-, arylène en $C_6$-$C_{14}$, bisphénylène, benzylène, xylylène, -$C_6H_4$-$X_{01}$-$C_6H_4$- avec $X_{01}$ égal à O, S, SO, $SO_2$, CO, $CO_2$, NH, N(alkyle en $C_1$-$C_4$), alkylidène avec 1 à 18 atomes de carbone, ou cycloalkylidène en $C_5$-$C_7$.

**26.** Composition selon la revendication 11, caractérisée en ce que les polyuréthannes et polyurées contiennent des motifs de structure identiques ou différents choisis parmi les éléments de structure de formules (n), (o), (p) et (q), dans lesquelles au moins les éléments de structure des formules (n) ou (o) ou les deux doivent être présents,

$$-C(O)-NH-R_{017}-NH-C(O)- \quad (n)$$

$$-X_{02}-R_{018}-X_{02}- \quad (o),$$

$$-C(O)-NH-R_{019}-NH-C(O)- \quad (p),$$

$$-X_{02}-R_{020}-X_{02}- \quad (q),$$

dans lesquelles $R_{017}$ et $R_{018}$ représentent indépendamment l'un de l'autre un groupe bivalent d'une cyclooléfine sous tension ou un groupe bivalent avec une cyclooléfine sous tension, $R_{019}$ est un groupe bivalent d'un diisocyanate minorant la charge autour des groupes cyanate et $R_{020}$ un groupe bivalent d'une diamine ou d'un diol minorant la charge autour des groupes hydroxyle et les $X_{02}$ représentent indépendamment les uns des autres -O- ou -NH-.

**27.** Composition selon la revendication 26, caractérisée en ce que $R_{017}$ et $R_{018}$ représentent indépendamment l'un de l'autre un groupe cycloalkylène en $C_5$-$C_8$ une ou deux fois oléfiniquement insaturé ou un groupe cycloalkylène polycyclique condensé en $C_7$-$C_{18}$.

**28.** Composition selon la revendication 27, caractérisée en ce que $R_{017}$ et $R_{018}$ représentent indépendamment l'un de l'autre un groupe cyclopenténylène, cyclohepténylène, cycloocténylène ou norbornène de formule (nr1) ou (nr2)

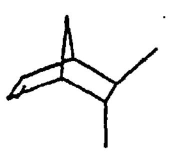 (nr1) 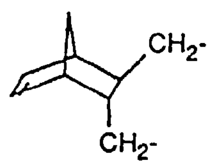 (nr2).

**29.** Composition selon la revendication 26, caractérisée en ce que $R_{019}$ représente un groupe alkylène ou alcénylène en $C_2$-$C_{18}$, cycloalkylène ou cycloalcénylène en $C_3$-$C_{12}$, cycloalkylène en $C_5$-$C_8$-$CH_2$-, $CH_2$- (cycloalkylène en $C_5$-$C_8$) -$CH_2$-, arylène en $C_6$-$C_{18}$, bisphénylène, benzylène, xylylène, $-C_6H_4-x_{01}-C_6H_4-$ avec $X_{01}$ égal à O, S, SO, $SO_2$, CO, $CO_2$, NH, N(alkyle en $C_1$-$C_4$), alkylidène avec 1 à 18 atomes de carbone, ou cycloalkylidène en $C_5$-$C_7$.

**30.** Composition selon la revendication 26, caractérisée en ce que $R_{020}$ représente un groupe alkylène en $C_2$-$C_{18}$, polyoxaalkylène avec 2 à 50 motifs oxaalkylène, et de 2 à 6, atomes de carbone dans le groupe oxyalkylène, cycloalkylène en $C_3$-$C_{12}$, cycloalkylène en $C_5$-$C_8$-$CH_2$-, $CH_2$- (cycloalkylène en $C_5$-$C_8$)-$CH_2$-, arylène en $C_6$-$C_{14}$, bisphénylène, benzylène, xylylène, $-C_6H_4-X_{01}-C_6H_4-$ avec $X_{01}$ égal à O, S, SO, $SO_2$, CO, $CO_2$, NH, N(alkyle en $C_1$-$C_4$), alkylidène avec 1 à 18 atomes de carbone, ou cycloalkylidène en $C_5$-$C_7$.

**31.** Composition selon la revendication 1, caractérisée en ce qu'il s'agit des polymères avec un squelette carboné.

**32.** Composition selon la revendication 31, caractérisée en ce que les polymères sont des composés de polymérisation par métathèse essentiellement ou complètement linéaires de diènes cycloaliphatiques au moins bicycliques, qui contiennent deux double liaisons oléfiniques dans différents cycles.

**33.** Composition selon la revendication 31, caractérisée en ce que les polymères contiennent des éléments de structure de répétition de formule (r),

$$=CH-R_{021}-CH= \quad (r)$$

dans laquelle $R_{021}$ représente un groupe alkylène en $C_2$-$C_{10}$, auquel est lié un groupe cycloalcénylène avec en tout 5 à 8 atomes de carbone condensés directement ou par l'intermédiaire d'un autre groupe cycloalkylène condensé avec 5 à 8 atomes de carbone.

**34.** Composition selon la revendication 31, caractérisée en ce que le polymère représente un polynorbornadiène linéaire avec des motifs de structure de répétition de formule (r')

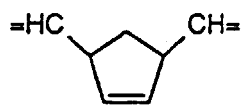

(r'),

ou le polydicyclopentadiène linéaire avec des motifs de structure de répétition de formule (r")

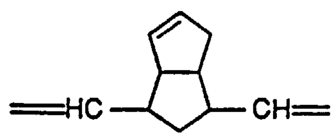

(r"),

ou des copolymères avec ces deux éléments de structure de répétition.

**35.** Composition selon la revendication 34, caractérisée en ce que le polymère est un copolymère linéaire avec un élément de structure de répétition de formule (r), respectivement un ou deux des éléments de structure (r') et (r") et des éléments de structure de formule (r"')

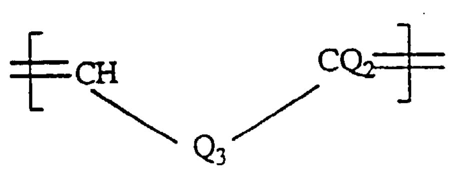

(r"')

forme une cyclooléfine sous tension, dans laquelle

$Q_3$ représente un groupe alkylène en $C_1$-$C_{18}$ linéaire ou ramifié qui est éventuellement substitué par un atome d'halogène, =O, -CN, $-NO_2$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, $R_1R_2R_3Si-(O)_u-$, hydroxyalkyle en $C_1$-$C_{20}$, halogénoalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_4X$-; ou dans lequel deux atomes de carbone voisins sont substitués avec -CO-O-CO- ou $-CO-NR_5-CO-$; ou dans lequel est éventuellement condensé sur des atomes de carbone voisins un cycle alicyclique, aromatique ou hétéroaromatique, qui est non substitué ou substitué avec un atome d'halogène, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, halogénoalkyle en $C_1$-$C_{20}$, hydroxyalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_{13}X_1$-.

X et $X_1$ représentent indépendamment l'un de l'autre -O-, -S-, -CO-, -SO-, $-SO_2-$, -O-C(O)-, -C(O)-O-, $-C(O)-NR_5-$, $-NR_{10}-C(O)-$, $-SO_2-O-$ ou $-O-SO_2-$;

$R_1$, $R_2$ et $R_3$ représentent indépendamment les uns des autres un groupe alkyle en $C_1$-$C_{12}$, perfluoroalkyle en $C_1$-$C_{12}$, phényle ou benzyle;

$R_4$ et $R_{13}$ représentent indépendamment un groupe alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$, aralkyle en $C_7$-$C_{16}$;

$R_5$ et $R_{10}$ représentent indépendamment les uns des autres un atome d'hydrogène, un groupe alkyle en $C_1$-$C_{12}$, phényle ou benzyle, dans lesquels les groupes alkyle sont quant à eux non substitués ou substitués avec

un groupe alcoxy en $C_1$-$C_{12}$ ou cycloalkyle en $C_3$-$C_8$;
$R_6$, R7 et $R_8$ représentent indépendamment les uns des autres un groupe alkyle en $C_1$-$C_{12}$, perfluoroalkyle en $C_1$-$C_{12}$, phényle ou benzyle;
M représente un métal alcalin et $M_1$ un métal alcalinoterreux; et
n représente 0 ou 1;
le noyau alicyclique formé avec $Q_3$ contenant éventuellement d'autres double liaisons non aromatiques;
$Q_2$ représente un atome d'hydrogène, un groupe alkyle en $C_1$-$C_{20}$, halogénoalkyle en $C_1$-$C_{20}$, alcoxy en $C_1$-$C_{12}$, un atome d'halogène, -CN, $R_{11}X_2$-;
$R_{11}$ représente un groupe alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$ ou aralkyle en $C_7$-$C_{16}$;
$X_2$ représente -C(O)-O- ou -C(O)-$NR_{12}$-;
$R_{12}$ représente un atome d'hydrogène, un groupe alkyle en $C_1$-$C_{12}$, phényle ou benzyle;

formules dans lesquelles les groupes cycloalkyle, hétérocycloalkyle, aryle, hétéroaryle, aralkyle et hétéroalkyle précités sont non substitués ou substitués avec un groupe alkyle en $C_1$-$C_{12}$, alcoxy en $C_1$-$C_{12}$, -$NO_2$, -CN ou un atome d'halogène, et dans lesquelles les hétéroatomes des groupes hétérocycloalkyle, hétéroaryle, et hétéroaralkyle précités sont choisis parmi -O-, -S-,-$NR_9$- et -N=; et

$R_9$ représente un atome d'hydrogène, un groupe alkyle en $C_1$-$C_{12}$, phényle ou benzyle.

**36.** Composition selon la revendication 35, caractérisée en ce que $Q_2$ représente un atome d'hydrogène.

**37.** Composition selon la revendication 31, caractérisée en ce que les polymères avec un squelette carboné sont des copolymères de cyclooléfines sous tension avec des diènes cycloaliphatiques condensés au moins bicycliques, qui contiennent au moins deux doubles liaisons oléfiniques dans des cycles différents, et des comonomères éthyléniquement insaturés.

**38.** Composition selon la revendication 31, caractérisée en ce que les polymères contiennent des éléments de structure de répétition de formule (r) et de formule (s),

$$=CH-R_{021}-CH= \qquad (r)$$

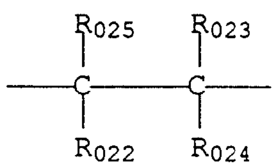

(s),

dans lesquelles $R_{021}$ représente un groupe alkylène en $C_2$-$C_{10}$, auquel est lié un groupe alcénylène avec 2 à 6 atomes de carbone, directement ou par l'intermédiaire d'un cycle cycloalkylène condensé avec 5 à 8 atomes de carbone; $R_{022}$ représente H, F, un groupe alkyle en $C_1$-$C_{12}$, -COOH, -C(O)-O-alkyle en $C_1$-$C_{12}$, -C(O)-$NH_2$, ou -C(O)-NH-alkyle en $C_1$-$C_{12}$; $R_{023}$ représente H, F, Cl, CN ou un groupe alkyle en $C_1$-$C_{12}$; $R_{024}$ représente H, F, Cl, CN, OH, un groupe alkyle en $C_1$-$C_{12}$, alcoxy en $C_1$-$C_{12}$, phényle non substitué ou substitué avec OH, Cl, Br, un groupe alkyle en $C_1$-$C_4$, alcoxy en $C_1$-$C_4$, -COOH, -C(O)O-alkyle en $C_1$-$C_{12}$, -C(O)-$NH_2$, -C(O)-NH-alkyle en $C_1$-$C_{12}$, -$SO_3$H ou -$SO_3$-alkyle en $C_1$-$C_{12}$, -C(O)OH, -C(O)O-hydroxyalkyle en $C_2$-$C_{12}$, C(O)O-alkyle en $C_1$-$C_{12}$, -C(O)-$NH_2$ ou -C(O)-NH-alkyle en $C_1$-$C_{12}$; et $R_{025}$ représente H, F ou un groupe alkyle en $C_1$-$C_{12}$.

**39.** Composition selon la revendication 38, caractérisée en ce que $R_{022}$ représente H, F, un groupe alkyle en $C_1$-$C_4$, -COOH ou -C(O)-O-alkyle en $C_1$-$C_6$.

**40.** Composition selon la revendication 38, caractérisée en ce que $R_{023}$ représente H, F, Cl ou un groupe alkyle en $C_1$-$C_4$.

**41.** Composition selon la revendication 38, caractérisée en ce que $R_{024}$ représente H, F, Cl, CN, OH, un groupe alkyle

en $C_1$-$C_4$, alcoxy en $C_1$-$C_4$, phényle non substitué ou substitué avec OH, Cl, Br, un groupe alkyle en $C_1$-$C_4$, alcoxy en $C_1$-$C_4$, -COOH, -C(O)O-alkyle en $C_1$-$C_{14}$, -C(O)-$NH_2$, -C(O)-NH-alkyle en $C_1$-$C_4$, -$SO_3H$ ou -$SO_3$-alkyle en $C_1$-$C_4$, un groupe -COOH, C(O)O-alkyle en $C_1$-$C_4$, -C(O)-$NH_2$, -C(O)O-hydroxyalkyle en $C_2$-$C_6$ ou -C(O)-NH-alkyle en $C_1$-$C_4$.

**42.** Composition selon la revendication 38, caractérisée en ce que $R_{025}$ représente H ou F.

**43.** Composition selon la revendication 37, caractérisée en ce que les éléments de structure de formule (r) sont choisis parmi les éléments de structure de formules (r) et (r')

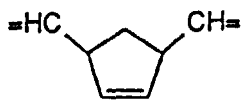

(r'),

et

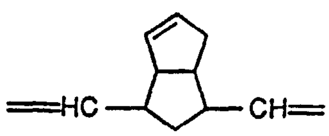

(r''),

**44.** Composition selon la revendication 21, caractérisée en ce que les polymères avec un squelette carboné sont des composés de polymérisation par métathèse ou des copolymères decyclooléfines sous tension avec une double liaison dans le cycle et des comonomères oléfiniquement insaturés, dont les double liaisons oléfiniques dans le squelette carboné du polymère sont mises à réagir partiellement ou totalement avec des 1,3-diènes à chaîne ouverte ou cycliques ayant 4 à 12 atomes de carbone dans une réaction de Diels-Alder pour donner des groupes cycloalcényle ayant 6 à 14 atomes de carbone.

**45.** Composition selon la revendication 44, caractérisée en ce qu'on fait réagir 5 à 80% des double liaisons.

**46.** Composition selon la revendication 44, caractérisée en ce les composés de polymérisation par métathèse contiennent des éléments de structure de répétition de formule (t),

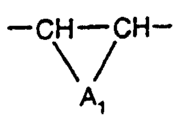

(t),

dans laquelle $A_1$ représente un groupe cycloalcénylène en $C_5$-$C_8$ mono ou bicyclique.

**47.** Composition selon la revendication 46, caractérisée en ce que l'élément de structure de formule (t) représente le norborn-1,2-énylène de formule (nr3)

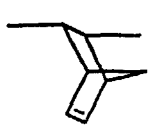

($nr_3$)

**48.** Composition selon la revendication 44, caractérisée en ce que le polymère par métathèse contient des motifs de structure de répétition de formule (u)

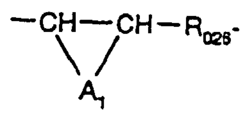

(u),

et des motifs de structure de répétition de formule (w)

$$-CH=CH-R_{026}- \quad (w),$$

dans lesquelles $A_1$ représente ensemble avec le groupe -CH-CH- un groupe cycloalcénylène en $C_5$-$C_8$ et $R_{026}$ représente un groupe alkylène en $C_1$-$C_{12}$, et éventuellement des éléments de structure de répétition de formule (s),

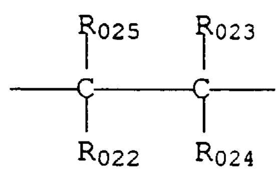

(s),

dans laquelle $R_{022}$ représente H, F, un groupe alkyle en $C_1$-$C_{12}$, -COOH, -C(O)-O-alkyle en $C_1$-$C_{12}$, -C(O)-$NH_2$, ou -C(O)-NH-alkyle en $C_1$-$C_{12}$; $R_{023}$ représente H, F, Cl, CN ou un groupe alkyle en $C_1$-$C_{12}$; $R_{024}$ représente H, F, Cl, CN, OH, un groupe alkyle en $C_1$-$C_{12}$, alcoxy en $C_1$-$C_{12}$, phényle non substitué ou substitué avec OH, Cl, Br, un groupe alkyle en $C_1$-$C_4$, alcoxy en $C_1$-$C_4$, -COOH, -C(O)O-alkyle en $C_1$-$C_{12}$, -C(O)-$NH_2$, -C(O)-NH-alkyle en $C_1$-$C_{12}$, -$SO_3$H ou -$SO_3$-alkyle en $C_1$-$C_{12}$, un groupe -C (O) OH, -C(O)O-hydroxyalkyle en $C_2$-$C_{12}$, C(O)O-alkyle en $C_1$-$C_{12}$, -C(O)-$NH_2$ ou -C(O)-NH-alkyle en $C_1$-$C_{12}$; et $R_{025}$ représente H, F ou un groupe alkyle en $C_1$-$C_{12}$.

**49.** Composition selon la revendication 31, caractérisée en ce que les polymères avec un squelette carboné sont des composés d'homo et de copolymérisation de 1,3-diènes et éventuellement de monomères oléfiniquement insaturés, dont les double liaisons oléfiniques dans le squelette du polymère sont mises à réagir partiellement ou totalement avec des 1,3-diènes à chaîne ouverte ou cycliques ayant 4 à 12 atomes de carbone dans une réaction de Diels-Alder pour donner des groupes cycloalcénylène ayant 6 à 14 atomes de carbone.

**50.** Composition selon la revendication 49, caractérisée en ce qu'on fait réagir 5 à 80% des double liaisons.

**51.** Composition selon la revendication 49, caractérisée en ce les 1,3-diènes sont choisis entre le 1,3-butadiène, l'isoprène et le chloroprène.

**52.** Composition selon la revendication 49, caractérisée en ce les polymères contiennent des éléments de structure de répétition de formule (t),

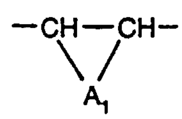

(t),

dans laquelle $A_1$ représente un groupe cycloalcénylène en $C_5$-$C_8$ mono ou bicyclique.

**53.** Composition selon la revendication 52, caractérisée en ce que l'élément de structure de formule (t) représente le norborn-1,2-énylène de formule (nr3)

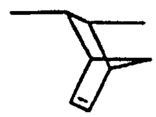

(nr$_3$)

**54.** Composition selon la revendication 49, caractérisée en ce que le polymère contient des motifs de structure de répétition de formule (y)

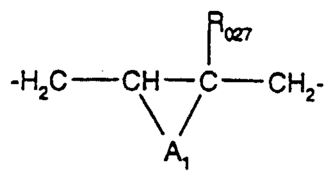

(y),

et des motifs de structure de répétition de formule (z)

$$-CH_2-CH=CR_{027}-CH_2- \quad (z),$$

dans lesquelles $A_1$ représente ensemble avec le groupe $-CH=CR_{027}-$ un groupe cycloalcénylène bicyclique en $C_5$-$C_8$ et $R_{027}$ représente H, Cl ou un groupe alkyle en $C_1$-$C_{12}$, et éventuellement des éléments de structure de répétition de formule (s),

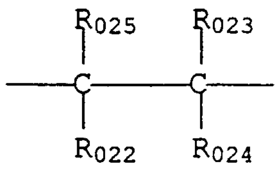

(s),

dans laquelle $R_{022}$ représente H, F, un groupe alkyle en $C_1$-$C_{12}$, -COOH, -C(O)-O-alkyle en $C_1$-$C_{12}$, $-C(O)-NH_2$, ou -C(O)-NH-alkyle en $C_1$-$C_{12}$; $R_{023}$ représente H, F, Cl, CN ou un groupe alkyle en $C_1$-$C_{12}$; $R_{024}$ représente H, F, Cl, CN, OH, un groupe alkyle en $C_1$-$C_{12}$, alcoxy en $C_1$-$C_{12}$, phényle non substitué ou substitué avec OH, Cl, Br, un groupe alkyle en $C_1$-$C_4$, alcoxy en $C_1$-$C_4$, -COOH, -C(O)O-alkyle en $C_1$-$C_{12}$, $-C(O)-NH_2$, -C(O)-NH-alkyle en $C_1$-$C_{12}$, $-SO_3H$ ou $-SO_3$-alkyle en $C_1$-$C_{12}$, un groupe -C(O)OH, -C(O)O-hydroxyalkyle en $C_2$-$C_{12}$, C(O)O-alkyle en $C_1$-$C_{12}$, $-C(O)-NH_2$ ou -C(O)-NH-alkyle en $C_1$-$C_{12}$; et $R_{025}$ représente H, F ou un groupe alkyle en $C_1$-$C_{12}$.

**55.** Composition selon la revendication 1, caractérisée en ce que les cyclooléfines comonomères sous tension correspondent à la formule I,

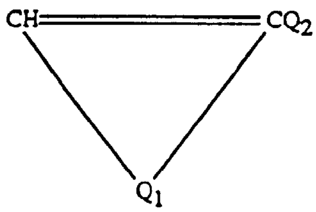

(I),

dans laquelle

$Q_1$ représente un groupe avec au moins un atome de carbone, qui forme ensemble avec le groupe $-CH=CQ_2$ un noyau alicyclique d'au moins 3 chaînons, qui contient éventuellement un ou plusieurs hétéroatomes choisis parmi le silicium, le phosphore, l'oxygène, l'azote et le soufre; et qui est non substitué ou substitué avec un atome d'halogène, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, hydroxyalkyle en $C_1$-$C_{20}$, halogénoalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3C_6$, hétéroaryle en $C_3$-$C_{16}$, hétéroaralkyle en $C_4$-$C_{16}$ ou $R_4X$-; ou dans lequel deux atomes de carbone voisins sont substitués avec -CO-O-CO- ou $-CO-NR_5-CO-$; ou dans lequel est éventuellement condensé sur des atomes de carbone voisins du noyau alicyclique un cycle alicyclique, aromatique ou hétéroaromatique, qui est non substitué ou substitué avec un atome d'halogène, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, halogénoalkyle en $C_1$-$C_{20}$, hydroxyalkyle en $C_1$-$C_{20}$, cyanoalkyle en $C_1$-$C_6$, cycloalkyle en C3-C8, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_{13}X_1$-;

X et X1 représentent indépendamment l'un de l'autre -O-, -S-, -CO-, -SO-, $-SO_2-$, -O-C(O)-, -C(O)-O-, $-C(O)-NR_5-$, $-NR_{10}-C(O)-$, $-SO_2-O-$ ou $-O-SO_2-$;

$R_1$, $R_2$ et $R_3$ représentent indépendamment les uns des autres un groupe alkyle en $C_1$-$C_{12}$, perfluoroalkyle en $C_1$-$C_{12}$, phényle ou benzyle;

$R_4$ et $R_{13}$ représentent indépendamment un groupe alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$, aralkyle en $C_7$-$C_{16}$;

$R_5$ et $R_{10}$ représentent indépendamment l'un de l'autre un atome d'hydrogène, un groupe alkyle en $C_1$-$C_{12}$, phényle ou benzyle, dans lesquels les groupes alkyle sont quant à eux non substitués ou substitués avec un groupe alcoxy en $C_1$-$C_{12}$ ou cycloalkyle en $C_3$-$C_8$;

$R_6$, $R_7$ et $R_8$ représentent indépendamment les uns des autres un groupe alkyle en $C_1$-$C_{12}$, perfluoroalkyle en $C_1$-$C_{12}$, phényle ou benzyle;

M représente un métal alcalin et $M_1$ un métal alcalino-terreux; et u représente 0 ou 1;

le noyau alicyclique formé avec $Q_1$ contenant éventuellement d'autres double liaisons non aromatiques;

$Q_2$ représente un atome d'hydrogène, un groupe alkyle en $C_1$-$C_{20}$, halogénoalkyle en $C_1$-$C_{20}$, alcoxy en $C_1$-$C_{12}$, un atome d'halogène, -CN, $R_{11}X_2$-;

$R_{11}$ représente un groupe alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$ ou aralkyle en $C_7$-$^{C}16$;

$X_2$ représente -C(O)-O- ou $-C(O)-NR_{12}-$;

$R_{12}$ représente un atome d'hydrogène, un groupe alkyle en $C_1$-$C_{12}$, phényle ou benzyle;

formules dans lesquelles les groupes cycloalkyle, hétérocycloalkyle, aryle, hétéroaryle, aralkyle et hétéroalkyle précités sont non substitués ou substitués avec un groupe alkyle en $C_1$-$C_{12}$, alcoxy en $C_1$-$C_{12}$, $-NO_2$, -CN ou un atome d'halogène, et dans lesquelles les hétéroatomes des groupes hétérocycloalkyle, hétéroaryle et hétéroaralkyle précités sont choisis parmi -O-, -S-, $-NR_9-$ et -N=; et

$R_9$ représente un atome d'hydrogène, un groupe alkyle en $C_1$-$C_{12}$, phényle ou benzyle.

**56.** Composition selon la revendication 1, caractérisée en ce qu'elle contient des cyclooléfines comonomères polyfonctionnelles, qui correspondent à la formule (f1),

$$(T)_n\text{-}U \qquad (f1)$$

dans laquelle T représente le groupe d'une cyclooléfine sous tension, U représente une simple liaison ou un groupement pontant de valence n, et n un nombre entier de 2 à 8.

**57.** Composition selon la revendication 56, caractérisée en ce que les groupes cyclooléfine T correspondent à la formule (f2),

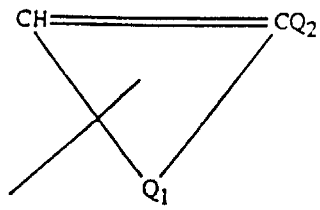

(f2),

dans laquelle

$Q_1$ représente un groupe avec au moins un atome de carbone, qui forme ensemble avec le groupe $-CH=CQ_2$ un noyau alicyclique d'au moins 3 chaînons, qui contient éventuellement un ou plusieurs hétéroatomes choisis parmi le silicium, le phosphore, l'oxygène, l'azote et le soufre; et qui est non substitué ou substitué avec un atome d'halogène, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, hydroxyalkyle en $C_1$-$C_{20}$, halogénoalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_4X$-; ou dans lequel deux atomes de carbone voisins sont substitués avec -CO-O-CO- ou $-CO-NR_5-CO-$; ou dans lequel est éventuellement condensé sur des atomes de carbone voisins du noyau alicyclique un cycle alicyclique, aromatique ou hétéroaromatique, qui est non substitué ou substitué avec un atome d'halogène, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, halogénoalkyle en $C_1$-$C_{20}$, hydroxyalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_{13}X_1$-;

X et $X_1$ représentent indépendamment l'un de l'autre -O-, -S-, -CO-, -SO-, $-SO_2-$, -O-C(O)-, -C(O)-O-, $-C(O)-NR_5-$, $-NR_{10}-C(O)-$, $-SO_2-O-$ ou $-O-SO_2-$;

$R_1$, $R_2$ et $R_3$ représentent indépendamment les uns des autres un groupe alkyle en $C_1$-$C_{12}$, perfluoroalkyle en $C_1$-$C_{12}$, phényle ou benzyle;

$R_4$ et $R_{13}$ représentent indépendamment un groupe alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$, aralkyle en $C_7$-$C_{16}$;

$R_5$ et $R_{10}$ représentent indépendamment l'un de l'autre un atome d'hydrogène, un groupe alkyle en $C_1$-$C_{12}$, phényle ou benzyle, dans lesquels les groupes alkyle sont quant à eux non substitués ou substitués avec un groupe alcoxy en $C_1$-$C_{12}$ ou cycloalkyle en $C_3$-$C_8$;

$R_6$, $R_7$ et $R_8$ représentent indépendamment les uns des autres un groupe alkyle en $C_1$-$C_{12}$, perfluoroalkyle en $C_1$-$C_{12}$, phényle ou benzyle;

M représente un métal alcalin et $M_1$ un métal alcalino-terreux; et

u représente 0 ou 1;

le noyau alicyclique formé avec $Q_1$ contenant éventuellement d'autres double liaisons non aromatiques;

$Q_2$ représente un atome d'hydrogène, un groupe alkyle en $C_1$-$C_{20}$, halogénoalkyle en $C_1$-$C_{20}$, alcoxy en $C_1$-$C_{12}$, un atome d'halogène, -CN, $R_{11}X_2$-;

$R_{11}$ représente un groupe alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$ ou aralkyle en $C_7$-$C_{16}$;

$X_2$ représente -C(O)-O- ou $-C(O)-NR_{12}-$;

$R_{12}$ représente un atome d'hydrogène, un groupe alkyle en $C_1$-$C_{12}$, phényle ou benzyle;

formules dans lesquelles les groupes cycloalkyle, hétérocycloalkyle, aryle, hétéroaryle, aralkyle et hétéroalkyle précités sont non substitués ou substitués avec un groupe alkyle en $C_1$-$C_{12}$, alcoxy en $C_1$-$C_{12}$, $-NO_2$, -CN ou un atome d'halogène, et dans lesquelles les hétéroatomes des groupes hétérocycloalkyle, hétéroaryle et hétéroaralkyle précités sont choisis parmi -O-, -S-, $-NR_9-$ et -N=; et

$R_9$ représente un atome d'hydrogène, un groupe alkyle en $C_1$-$C_{12}$, phényle ou benzyle.

**58.** Composition selon la revendication 56, caractérisée en ce que U représente (a) un groupement pontant divalent de formule (f5)

$$-X_5-R_{028}-X_6- \qquad (f5)$$

dans laquelle

$X_5$ et $X_6$ représentent indépendamment l'un de l'autre une simple liaison, -O-, -$CH_2$-O, -C(O)O-, -O(O)C-, -$CH_2$-O (O) C-, -C (O) -$NR_{029}$-, -$R_{029}$N-(O)C-, -NH-C- (O) -$NR_{029}$-, -O-C(O)-NH-, -$CH_2$-O-C(O)-NH-, ou -NH-C(O)-O-, et

$R_{028}$ représente un groupe alkylène en $C_2$-$C_{18}$, cycloalkylène en $C_5$-$C_8$ non substitué ou substitué avec un groupe alkyle en $C_1$-$C_4$ ou alcoxy en $C_1$-$C_4$, arylène en $C_6$-$C_{18}$ ou aralkylène en $C_7$-$C_{19}$ non substitué ou substitué avec un groupe alkyle en $C_1$-$C_4$ ou alcoxy en $C_1$-$C_4$, ou

polyoxaalkylène avec 2 à 12 motifs oxaalkylène et 2 à 6 atomes de carbone dans le groupe alkylène, et

$R_{029}$ est un atome d'hydrogène ou un groupe alkyle en $C_1$-$C_8$; ou

(b) un groupement pontant trivalent de formule (f6)

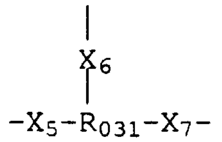

(f6),

dans laquelle

$X_5$, $X_6$ et $X_7$ représentent -O-, $CH_2$-O-, -C(O)O-, -O(O)C-, -$CH_2$-O(O)C-, -C(O)-$NR_{029}$-, -$R_{029}$N-(O)C-, -NH-C(O)-$NR_{029}$-, -O-C(O)-NH-, $CH_2$-O-C(O)-NH- ou -NH-C(O)O-, et

$R_{031}$ représente un groupe hydrocarboné aliphatique trivalent avec 3 à 20 atomes de carbone, un groupe cycloaliphatique trivalent non substitué ou substitué avec un groupe alkyle en $C_1$-$C_4$ ou alcoxy en $C_1$-$C_4$, ayant 3 à 8, de préférence 5 ou 6 atomes de carbone dans le cycle, ou un groupe aromatique trivalent non substitué ou substitué avec un groupe alkyle en $C_1$-$C_4$ ou alcoxy en $C_1$-$C_4$, ayant 6 à 18 atomes de carbone, un groupe araliphatique trivalent non substitué ou substitué avec un groupe alkyle en $C_1$-$C_4$, ou alcoxy en $C_1$-$C_4$, ayant 7 à 19 atomes de carbone, ou un groupe hétéroaromatique trivalent non substitué ou substitué avec un groupe alkyle en $C_1$-$C_4$, ou alcoxy en $C_1$-$C_4$, ayant 3 à 13 atomes de carbone et 1 à 3 hétéroatomes choisis parmi -O-, -N- et -S-, et

$R_{031}$ représente un atome d'hydrogène ou un groupe alkyle en $C_1$-$C_6$; ou

(c) un groupement pontant tétravalent de formule (f7),

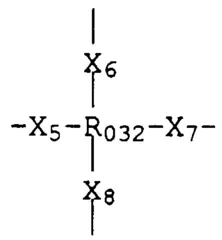

(f7),

dans laquelle

$X_5$, $X_6$, $X_7$ et $X_8$ représentent -C(O)O-, -$CH_2$-O(O)C- ou -C(O)-$NR_{029}$-, et

$R_{032}$ représente un groupe hydrocarboné aliphatique tétravalent avec 4 à 20 atomes de carbone, un groupe cycloaliphatique tétravalent non substitué ou substitué avec un groupe alkyle en $C_1$-$C_4$, ou alcoxy en $C_1$-$C_4$, ayant 4 à 8 atomes de carbone dans le cycle, ou un groupe aromatique tétravalent non substitué ou substitué avec un groupe alkyle en $C_1$-$C_4$, ou alcoxy en $C_1$-$C_4$, ayant 6 à 18 atomes de carbone, un groupe araliphatique tétravalent non substitué ou substitué avec un groupe alkyle en $C_1$-$C_4$, ou alcoxy en $C_1$-$C_4$, ayant 7 à 19 atomes de carbone, ou un groupe hétéroaromatique tétravalent non substitué ou substitué avec un groupe alkyle en $C_1$-$C_4$, ou alcoxy en $C_1$-$C_4$, ayant 3 à 13 atomes de carbone et 1 à 3

hétéroatomes choisis parmi -O-, -N- et -S-, et
$R_{029}$ représente un atome d'hydrogène ou un groupe alkyle en $C_1$-$C_6$.

**59.** Composition selon la revendication 1, caractérisée en ce qu'elle contient des polymères et éventuellement des monomères qui sont construits seulement à partir de carbone et d'hydrogène.

**60.** Composition selon la revendication 1, caractérisée en ce qu'elle contient le catalyseur à un composant en une quantité de 0,001 à 20% en mole, par rapport à la quantité du monomère.

**61.** Composition selon la revendication 60, caractérisée en ce qu'elle contient le catalyseur à un composant en une quantité de 0,01 à 10% en mole, par rapport à la quantité du monomère.

**62.** Composition selon la revendication 1, caractérisée en ce que les ligands photolabiles sont par exemple de l'azote ($N_2$), des arènes monocycliques, polycycliques ou condensés, non substitués ou substitués avec OH, un groupe alkyle en $C_1$-$C_4$, alcoxy en $C_1$-$C_4$, aryle en $C_6$-$C_{12}$ ou un atome d'halogène, ayant 6 à 24 atomes de carbone ou des hétéroarènes monocycliques, des hétéroarènes condensés ou des hétéroarènes-arènes condensés non substitués ou substitués avec un groupe alkyle en $C_1$-$C_4$, alcoxy en $C_1$-$C_4$, aryle en $C_6$-$C_{12}$ ou un atome d'halogène, ayant 3 à 22 atomes de carbone et 1 à 3 hétéroatomes choisis parmi O, S et N; ou des nitriles aliphatiques, cycloaliphatiques, aromatiques ou araliphatiques non substitués ou substitués avec un groupe alkyle en $C_1$-$C_4$, alcoxy en $C_1$-$C_4$, aryle en $C_6$-$C_{12}$, ou un atome d'halogène, ayant 1 à 22 atomes de carbone.

**63.** Composition selon la revendication 1, caractérisée en ce que les ligands non photolabiles sont $H_2O$, $H_2S$, $NH_3$; des alcools ou de mercaptans aliphatiques ou cycloaliphatiques éventuellement halogénés ayant 1 à 18 atomes de carbone, des alcools ou des thiols aromatiques avec 6 à 18 atomes de carbone; des éthers, thioéthers, sulfoxydes, sulfones, cétones, aldéhydes, esters carboxyliques, lactones, carboxamides éventuellement mono ou dialkylés en $C_1$-$C_4$ sur l'azote aliphatiques, cycloaliphatiques, araliphatiques ou aromatiques, ayant 2 à 20 atomes de carbone, et des lactames éventuellement alkylés en $C_1$-$C_4$ sur l'azote; des amines primaires, secondaires ou tertiaires aliphatiques, cycloaliphatiques, araliphatiques ou aromatiques, ayant 1 à 20 atomes de carbone; et des cyclopentadiènyles éventuellement substitués.

**64.** Composition selon la revendication 1, caractérisée en ce que le dérivé du molybdène ou du tungstène correspond à l'une des formules XII à XIIc

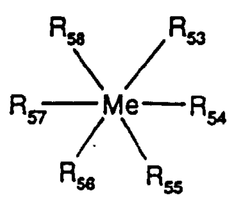

(XII),

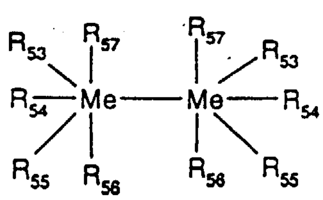

(XIIa),

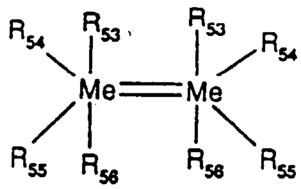

(XIIb),

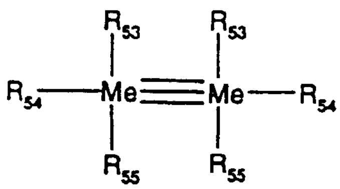

(XIIc),

dans lesquelles

Me représente Mo(VI) ou W(VI);

au moins deux des groupes $R_{53}$ à $R_{68}$ représentent un groupe $CH_2$-R de formule XI selon la revendication 66; respectivement deux des groupes restants de $R_{53}$ à $R_{68}$ représentent =O ou =$NR_{44}$ et $R_{44}$ représente un groupe alkyle en $C_1$-$C_{18}$, linéaire ou ramifié, non substitué ou substitué avec un groupe alcoxy en $C_1$-$C_6$, cycloalkyle en $C_5$ ou $C_6$ non substitué avec un groupe alkyle en $C_1$-$C_6$, alcoxy en $C_1$-$C_6$ ou un atome d'halogène, phényle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di(alkyle en $C_1$-$C_6$)aminoalkyle en $C_1$-$C_3$, ou un atome d'halogène, ou benzyle ou phényléthyle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$ ou un atome d'halogène; et/ou les groupes restants de $R_{53}$ à $R_{68}$ représentent un groupe amino secondaire avec 2 à 18 atomes de carbone, $R_{45}$O- ou $R_{45}$S-, un atome d'halogène, un groupe cyclopentadiényle ou biscyclopentadiényle ponté ou un ligand neutre, formules dans lesquelles $R_{45}$ représente un groupe alkyle en $C_1$-$C_{18}$, linéaire ou ramifié, non substitué ou substitué avec un groupe alcoxy en $C_1$-$C_6$ ou un atome d'halogène ou un groupe cycloalkyle en $C_5$ ou $C_6$ non substitué ou substitué avec un groupe alkyle en $C_1$-$C_6$, alcoxy en $C_1$-$C_6$ ou un atome d'halogène, phényle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$ ou un atome d'halogène, ou benzyle ou phényléthyle non substitué ou substitué un groupe alkyle en $C_1$-$C_6$, alcoxy en $C_1$-$C_6$, alcoxyméthyle en $C_1$-$C_6$, alcoxyéthyle en $C_1$-$C_6$ ou un atome d'halogène.

**65.** Composition selon la revendication 1, caractérisée en ce que le groupe silylméthyle correspond à la formule XIV

$$-CH_2-SiR_{38}R_{39}R_{40} \quad (XIV),$$

dans laquelle
$R_{38}$, $R_{39}$ et $R_{40}$ représentent indépendamment les uns des autres un groupe alkyle en $C_1$-$C_{18}$, cycloalkyle en $C_5$ ou $C_6$ ou phényle ou benzyle non substitué ou substitué avec un groupe alkyle en $C_1$-$C_6$ ou alcoxy en $C_1$-$C_6$.

**66.** Composition selon la revendication 1, caractérisée en ce que le dérivé du titane, du niobium, du tantale, du molybdène ou du tungstène correspond à l'une des formules XV, XVa ou XVb

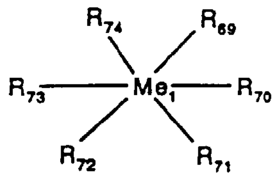 (XV),

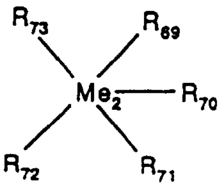 (XVa), 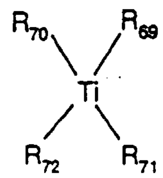 (XVb),

dans lesquelles

$Me_1$ représente Mo(VI) ou W(VI);
$Me_2$ représente Nb(V) ou Ta(V);

un des groupes $R_{69}$ à $R_{74}$ représente un groupe $-CH_2-SiR_{38}R_{39}R_{40}$ de formule XIV selon la revendication 68;
un des groupes $R_{69}$ à $R_{74}$ représente un groupe $-CH_2-SiR_{38}R_{39}R_{40}$ de formule XIV selon la revendication 68; au moins un des groupes R69 à R74 représente F, Cl ou Br; $R_{38}$, $R_{39}$ et $R_{40}$ représentent indépendamment les uns des autres un groupe alkyle en $C_1$-$C_6$, cycloalkyle en $C_5$ ou $C_6$, ou phényle ou benzyle non substitué ou substitué avec un groupe alkyle en $C_1$-$C_6$ ou alcoxy en $C_1$-$C_6$;
deux dans la formule XV, ou respectivement deux dans la formule XV et deux dans la formule XVa des groupes restants de $R_{69}$ à $R_{74}$ représentent respectivement en même temps =O ou $=N-R_{44}$, et $R_{44}$ représente un groupe alkyle en $C_1$-$C_{18}$, linéaire ou ramifié, non substitué ou substitué avec un groupe alcoxy en $C_1$-$C_6$, cycloalkyle en $C_5$ ou $C_6$ non substitué ou substitué avec un groupe alkyle en $C_1$-$C_6$, alcoxy en $C_1$-$C_6$ ou un atome d'halogène, phényle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di(alkyle en $C_1$-$C_6$)aminoalkyle en $C_1$-$C_3$ ou un atome d'halogène, ou benzyle ou phényléthyle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di(alkyle en $C_1$-$C_6$)amino-alkyle en $C_1$-$C_3$ ou un atome d'halogène, et les groupes restants représentent des groupes amino secondaires avec 2 à 18 atomes de carbone, $R_{45}O$- ou $R_{45}S$-, un atome d'halogène, un groupe cyclopentadiényle ou biscyclopentadiényle ponté ou un ligand neutre non substitué ou substitué, dans lesquels les groupes $R_{45}$ représentent indépendamment les uns des autres un groupe alkyle en $C_1$-$C_{18}$, linéaire ou ramifié, non substitué ou substitué avec un groupe alcoxy en $C_1$-$C_6$ ou un atome d'halogène ou un groupe cycloalkyle en $C_5$ ou $C_6$ non substitué avec un groupe alkyle en $C_1$-$C_6$, alcoxy en $C_1$-$C_6$ ou un atome d'halogène, phényle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di (alkyle en $C_1$-$C_6$)amino-alkyle en $C_1$-$C_3$, ou un atome d'halogène, ou benzyle ou phényléthyle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di (alkyle en $C_1$-$C_6$)amino, di(alkyle en $C_1$-$C_6$)aminoalkyle en $C_1$-$C_3$, ou
dans les formules XV, XVa et XVb les groupes restants représentent indépendamment les uns des autres un groupe amino secondaire avec 2 à 18 atomes de carbone, $R_{45}O$- ou $R_{45}S$-, un atome d'halogène, un groupe cyclopentadiényle ou biscyclopentadiényle ponté ou un ligand neutre non substitué ou substitué, formules dans lesquelles les groupes $R_{45}$ représentent indépendamment les uns des autres un groupe alkyle en $C_1$-$C_{18}$, linéaire ou ramifié, non substitué ou substitué avec un groupe alcoxy en $C_1$-$C_6$ ou un atome d'halogène ou un groupe cycloalkyle en $C_5$ ou $C_6$ non substitué avec un groupe alkyle en $C_1$-$C_6$, alcoxy en $C_1$-$C_6$ ou un atome d'halogène, phényle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di(alkyle en $C_1$-$C_6$)amino-alkyle en $C_1$-$C_3$, ou un atome d'halogène, ou benzyle ou phényléthyle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di(alkyle en $C_1$-$C_6$)aminoalkyle en $C_1$-$C_3$ ou un atome d'halogène.

**67.** Composition selon la revendication 1, caractérisée en ce que le dérivé du niobium ou du tantale correspond à la

formule XVIII

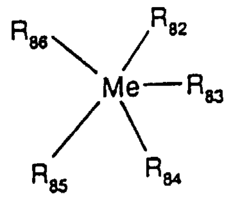

(XVIII),

dans laquelle

Me représente Nb(V) ou Ta(V),

au moins deux des groupes $R_{82}$ à $R_{86}$ représentent un groupe $-CH_2-R$ de formule XI selon la revendication 66; deux des groupes restants de $R_{82}$ à $R_{86}$ représentent ensemble =O ou $=N-R_{44}$, et $R_{44}$ représente un groupe alkyle en $C_1$-$C_{18}$, linéaire ou ramifié, non substitué ou substitué avec un groupe alcoxy en $C_1$-$C_6$, cycloalkyle en $C_5$ ou $C_6$ non substitué avec un groupe alkyle en $C_1$-$C_6$, alcoxy en $C_1$-$C_6$ ou un atome d'halogène, phényle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di(alkyle en $C_1$-$C_6$)aminoalkyle en $C_1$-$C_3$, ou un atome d'halogène, ou un groupe benzyle ou phényléthyle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di(alkyle en $C_1$-$C_6$)amino-alkyle en $C_1$-$C_3$ ou un atome d'halogène, et/ou
les groupes restants de $R_{82}$ à $R_{86}$ représentent indépendamment les uns des autres un groupe amino secondaire avec 2 à 18 atomes de carbone, $R_{45}O$- ou $R_{45}S$-, un atome d'halogène, un groupe cyclopentadiényle ou biscyclopentadiényle ponté ou un ligand neutre, dans lesquels les groupes $R_{45}$ représentent indépendamment les uns des autres un groupe alkyle en $C_1$-$C_{18}$, linéaire ou ramifié, non substitué ou substitué avec un groupe alcoxy en $C_1$-$C_6$ ou un atome d'halogène ou un groupe cycloalkyle en $C_5$ ou $C_6$ non substitué avec un groupe alkyle en $C_1$-$C_6$, alcoxy en $C_1$-$C_6$ ou un atome d'halogène, phényle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di(alkyle en $C_1$-$C_6$)aminoalkyle en $C_1$-$C_3$ ou un atome d'halogène, ou benzyle ou phényléthyle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$) amino, di(alkyle en $C_1$-$C_6$)amino-alkyle en $C_1$-$C_3$ ou un atome d'halogène.

**68.** Composition selon la revendication 1, caractérisée en ce que le dérivé du titane (IV) correspond à la formule XX

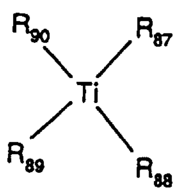

(XX),

dans laquelle

au moins deux, de préférence 2 ou 3, des groupes $R_{87}$ à $R_{90}$ représentent un groupe $-CH_2-R$ de formule XI selon la revendication 66,; et
les groupes restants $R_{87}$ à $R_{90}$ représentent un groupe amino secondaire avec 2 à 18 atomes de carbone, $R_{45}O$-, $R_{45}S$-, un atome d'halogène, un groupe cyclopentadiényle ou biscyclopentadiényle ponté ou un ligand neutre, dans lesquels les groupes $R_{45}$ représentent indépendamment les uns des autres un groupe alkyle en $C_1$-$C_{18}$, linéaire ou ramifié, non substitué ou substitué avec un groupe alcoxy en $C_1$-$C_6$ ou un atome d'halogène ou un groupe cycloalkyle en $C_5$ ou $C_6$ non substitué avec un groupe alkyle en $C_1$-$C_6$, alcoxy en $C_1$-$C_6$ ou un atome d'halogène, phényle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di(alkyle en $C_1$-$C_6$)aminoalkyle en

$C_1$-$C_3$, ou un atome d'halogène, ou benzyle ou phényléthyle non substitué ou substitué avec un groupe alkyle en $C_1$-$C_6$, alcoxy en $C_1$-$C_6$, alcoxyméthyle en $C_1$-$C_6$, alcoxyéthyle en $C_1$-$C_6$, di(alkyle en $C_1$-$C_6$)amino, di (alkyle en $C_1$-$C_6$)amino-alkyle en $C_1$-$C_3$ ou un atome d'halogène.

**69.** Composition selon la revendication 1, caractérisée en ce que les ligands phosphine correspondent aux formules XXIII ou XXIIIa

$$PR_{91}R_{92}R_{93} \qquad (XXIII),$$

$$R_{91}R_{92}P\text{-}Z_1\text{-}PR_{91}R_{92} \qquad (XXIIIa),$$

dans lesquelles

$R_{91}$, $R_{92}$ et $R_{93}$ représentent indépendamment les uns des autres un atome d'hydrogène, un groupe alkyle en $C_1$-$C_{20}$, alcoxy en $C_1$-$C_{20}$, cycloalkyle ou cycloalcoxy en $C_4$-$C_{12}$ non substitué ou substitué avec un groupe alkyle en $C_1$-$C_6$, halogénoalkyle en $C_1$-$C_6$ ou alcoxy en $C_1$-$C_6$, aryle en $C_6$-$C_{16}$ ou aryloxy en $C_6$-$C_{16}$ non substitué ou substitué avec un groupe alkyle en $C_1$-$C_6$, halogénoalkyle en $C_1$-$C_6$ ou alcoxy en $C_1$-$C_6$, ou aralkyle en $C_7$-$C_{16}$ ou aralkyloxy en $C_7$-$C_{16}$ non substitué ou substitué avec un groupe alkyle en $C_1$-$C_6$, halogénoalkyle en $C_1$-$C_6$ ou alcoxy en $C_1$-$C_6$; les groupes $R_{92}$ et $R_{93}$ représentent ensemble un groupe tétra ou pentaméthylène ou tétra ou pentaméthylènedioxyle non substitué ou substitué avec un groupe alkyle en $C_1$-$C_6$, halogénoalkyle en $C_1$-$C_6$ ou alcoxy en $C_1$-$C_6$, ou un groupe tétra ou pentaméthylène, ou tétra ou pentaméthylènedioxyle non substitué ou substitué avec un groupe alkyle en $C_1$-$C_6$, halogénoalkyle en $C_1$-$C_6$ ou alcoxy en $C_1$-$C_6$, et condensé avec 1 ou 2 groupes 1,2-phénylène, ou tétraméthylènedioxyle non substitué ou substitué avec un groupe alkyle en $C_1$-$C_6$, halogénoalkyle en $C_1$-$C_6$ ou alcoxy en $C_1$-$C_6$, et condensé en positions 1,2 et 3,4 avec un groupe 1,2-phénylène, et $R_{93}$ a la signification indiquée précédemment; et
$Z_1$ représente un groupe alkylène en $C_2$-$C_{12}$, linéaire ou ramifié, non substitué ou substitué avec un groupe alcoxy en $C_1$-$C_4$, 1,2- ou 1,3-cycloalkylène non substitué ou substitué avec un groupe alkyle en $C_1$-$C_4$ ou alcoxy en $C_1$-$C_4$ ou, ayant 4 à 8 atomes de carbone, ou un groupe 1,2-ou 1,3-hétérocycloalkylène non substitué ou substitué avec un groupe alkyle en $C_1$-$C_4$ ou alcoxy en $C_1$-$C_4$ ayant 5 ou 6 chaînons par cycle et un hétéroatome choisi entre O ou N.

**70.** Composition selon la revendication 1, caractérisée en ce que le dérivé du ruthénium ou de l'osmium correspond à l'une des formules XXV à XXVf

$$(R_{94}R_{95}R_{96}P)L_8Me^{2+}(Z^{1-})_2 \qquad (XXV),$$

$$(R_{94}R_{95}R_{96}P)_2L_9Me^{2+}(Z^{1-})_2 \qquad (XXVa),$$

$$(R_{94}R_{95}R_{96}P)L_9L_{10}Me^{2+}(Z^{1-})_2 \qquad (XXVb),$$

$$(R_{94}R_{95}R_{96}P)_3L_9Me^{2+}(Z^{1-})_2 \qquad (XXVc),$$

$$(R_{94}R_{95}R_{96}P)L_9L_9Me^{2+}(Z^{1-})_2 \qquad (XXVd),$$

$$(R_{94}R_{95}R_{96}P)L_8L_{10}Me^{2+}(Z^{1-})_2 \qquad (XXVe),$$

$$(R_{94}R_{95}R_{96}P)L_8(L_9)_mMe^{2+}(Z^{1-})_2 \qquad (XXVf),$$

dans lesquelles

Me représente Ru ou Os;
Z dans les formules XXV à XXVe représente $H^-$, un groupe cyclopentadiényle, $Cl^-$, $Br^-$, $BF_4^-$, $PF_6^-$, $SbF_6^-$, $AsF_6^-$, $CF_3SO_3^-$, $C_6H_5$-$SO_3^-$, 4-méthyl-$C_6H_5$-$SO_3^-$, 3,5-diméthyl-$C_6H_5$-$SO_3^-$, 2,4,6-triméthyl-$C_6H_5$-$SO_3^-$ et 4-$CF_3$-$C_6H_5$-$SO_3^-$ et dans la formule XXVf $H^-$, un groupe cyclopentdiényle, $BF_4^-$, $PF_6^-$, $SbF_6^-$, $AsF_6^-$, $CF_3SO_3^-$, $C_6H_5$-$SO_3^-$, 4-méthyl-$C_6H_5$-$SO_3^-$, 2, 6-diméthyl-$C_6H_5$-$SO_3^-$, 2,4, 6-triméthyl-$C_6H_5$-$SO_3^-$ ou 4-$CF_3$-$C_6H_5$-$SO_3^-$ ;
$R_{94}$, $R_{95}$ et $R_{96}$ représentent indépendamment les uns des autres un groupe alkyle en $C_1$-$C_6$, cyclopentyle ou cyclohexyle ou cyclopentyloxy ou cyclohexyloxy non substitué ou substitué avec 1 à 3 groupes alkyle en $C_1$-$C_4$, ou phényle ou phényloxy ou benzyle ou benzyloxy non substitué ou substitué avec 1 à 3 groupes alkyle en $C_1$-$C_4$;
$L_8$ représente un groupe arène en $C_6$-$C_{16}$ ou hétéroarène en $C_5$-$C_{16}$ non substitué ou substitué avec 1 à 3 groupes alkyle en $C_1$-$C_4$, alcoxy en $C_1$-$C_4$, -OH, -F ou Cl;
$L_9$ représente un groupe alkyle en $C_1$-$C_6$-CN, benzonitrile ou benzylnitrile; et
$L_{10}$ est $H_2O$ ou un groupe alcanol en $C_1$-$C_6$.

**71.** Composition selon la revendication 1, caractérisée en ce que le dérivé du ruthénium ou de l'osmium correspond à l'une des formules XXVI, XXVIa, XXVIb, XXVIc et XXVId

$$Me^{2+}(L_{11})_2(L_{12})(Y_1^-)_2 \quad \text{(XXVI)},$$

$$Me^{2+}(L_{11})_3(Y_1^-)_2 \quad \text{(XXVIa)},$$

$$Me^{2+}(L_{11})_2L_{13}(Y_1^-) \quad \text{(XXVIb)},$$

$$Me^{2+}(L_{11})_3L_{14}(Y_1^-)_2 \quad \text{(XXVIc)},$$

$$Me^{2+}L_{11}(L_{12})_3(Y_1^-)_2 \quad \text{(XXVId)},$$

dans lesquelles

Me représente Ru ou Os;
$Y_1$ l'anion d'un acide monofonctionnel;
$L_{11}$ une phosphine de formule XXIII ou XXIIIa selon la revendication 72,
$L_{12}$ un ligand neutre;
$L_{13}$ représente un groupe cyclopentadiènyle non substitué ou substitué avec un groupe alkyle en $C_1$-$C_4$,; et
$L_{13}$ représente CO.

**72.** Procédé de préparation de polymères réticulés par polymérisation par métathèse, qui est caractérisé en ce qu'à partir d'une composition selon la revendication 1, constituée

(a) d'une quantité catalytique d'un catalyseur à un composant pour la polymérisation par métathèse et
(b) d'au moins un polymère avec des groupes cycloalcénylène sous tension liés chimiquement dans le squelette de base, seul ou en mélange avec des cyclooléfines sous tension,
(c) on réalise la polymérisation par chauffage,
(d) on réalise la polymérisation par irradiation,
(e) on réalise la polymérisation par chauffage et irradiation,
(f) on active le catalyseur à un composant par chauffage de courte durée et on termine la polymérisation par irradiation, ou
(g) on active le catalyseur à un composant par irradiation de courte durée et on termine la polymérisation par chauffage.

**73.** Procédé selon la revendication 72, caractérisé en ce que le chauffage est réalisé à une température de 50 à 300°C.

**74.** Composés de polymérisation par métathèse réticulés constitués d'au moins un polymère avec des groupes cyclalcénylène sous tension liés chimiquement dans le squelette du polymère, seuls ou en mélange avec des cyclooléfines sous tension, préparé conformément au procédé selon la revendication 72.

**75.** Matériau support revêtu, caractérisé en ce qu'on dépose sur un substrat une couche constituée d'une composition selon la revendication 1.

**76.** Matériau support revêtu avec une couche réticulée d'une composition selon la revendication 1;

**77.** Pièces formées à partir de polymères réticulés par métathèse constituées d'au moins un polymère avec des groupes cyclalcénylène sous tension liés chimiquement dans le squelette du polymère, seuls ou en mélange avec des cyclooléfines sous tension, préparées conformément au procédé selon la revendication 72.

**78.** Procédé de préparation de matériaux revêtus ou d'images en relief sur des matériaux support, dans lequel on dépose une composition selon la revendication 1 et éventuellement un solvant comme couche sur un substrat, on élimine éventuellement le solvant, et on insole ou chauffe la couche pour la polymérisation, ou on insole la couche à travers un photomasque et ensuite on élimine les parties non insolées avec un solvant, et on réalise éventuellement un post-traitement thermique de l'image en relief obtenue.